# EUROPÄISCHE PATENTANMELDUNG

(11) **EP 2 191 719 A1**
(43) Veröffentlichungstag der Anmeldung: **02.06.2010**
(21) Anmeldenummer: 08020782.2
(22) Anmeldetag: 29.11.2008
(51) Int. Cl.: A01N 43/40, A01N 43/56, A01N 43/653, A01N 43/713, A01N 43/76, A01N 43/82, A01N 25/32, A01P 13/00

(54) **Herbizid-Safener-Kombination**

(71) Anmelder: Bayer CropScience AG, 40789 Monheim (DE)
(72) Erfinder: Rosinger, Christopher, Hugh, Dr., 65719 Hofheim (DE); Hacker, Erwin, Dr., 65239 Hochheim (DE); Ahrens, Hartmut, Dr., 63329 Egelsbach (DE); Dietrich, Hansjörg, Dr., 65835 Liederbach (DE); Ziemer, Frank, Dr., 65830 Kriftel (DE)

(57) **Zusammenfassung**

Beschrieben wird eine Zusammensetzung, enthaltend
(A) eine oder mehrere Verbindungen der Formel (I) oder deren Salze, 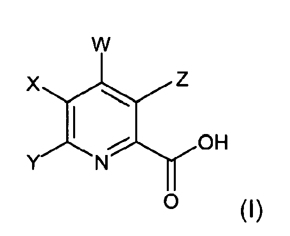 worin die einzelnen Indizes die in der Beschreibung definierte Bedeutung aufweisen
sowie
(B) einen oder mehrere Safener.

## Beschreibung

Die vorliegende Erfindung betrifft agrochemisch wirksame Herbizid-Safener-Kombinationen, Verfahren zu deren Herstellung sowie deren Verwendung zur Bekämpfung von Schadpflanzen.

Aus verschiedenen Schriften ist bekannt, dass bestimmte Pyridin-Derivate herbizide Eigenschaften besitzen. So sind in WO 2003/011853, WO 2006/062979 und WO 2007/082098 Pyridin-Derivate beschrieben, die ein breites Spektrum von Unkräutern bekämpfen. Allerdings sind diese Wirkstoffe zum Teil nicht voll verträglich mit einigen wichtigen Kulturpflanzen wie z.B. verschiedenen Getreidearten, Mais oder Reis. Sie können deshalb in manchen Kulturen nicht so eingesetzt werden, dass die erwünschte breite herbizide Wirksamkeit gegenüber Schadpflanzen gewährleistet ist.

Aufgabe der vorliegenden Erfindung ist es daher, herbizide Mittel zu finden, in welchen die Selektivität der oben genannten Herbizide gegenüber wichtigen Kulturpflanzen erhöht ist. Diese Aufgabe wird überraschend durch die erfindungsgemäßen Herbizid-Safener-Kombination gelöst.

Gegenstand der vorliegenden Erfindung ist daher eine Zusammensetzung, enthaltend
(A) eine oder mehrere Verbindungen der Formel (I) oder deren Salze, 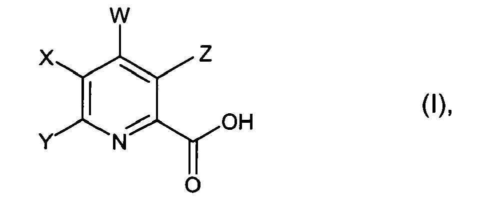 in welchen
   - X: für Wasserstoff, Halogen, C₁-C₆-Alkyl, C₁-C₆-Alkoxy, C₁-C₆-Alkylthio, Aryloxy, Nitro, C₁-C₆-Haloalkyl, C₁-C₆-Haloalkoxy, Thiocyano oder Cyano steht;
   - Y: für eine Aryl-Gruppe, ausgewählt aus einer Gruppe, bestehend aus Phenyl, Indanyl und Naphthyl, oder für eine Heteroaryl-Gruppe, ausgewählt aus der Gruppe 5- und 6-gliedriger heteroaromatischer Ringe, enthaltend ein oder mehrere Heteroatome, wobei die heteroaromatischen Ringe optional mit einem anderen aromatischen System annelliert sein können, steht; die Aryl-Gruppe oder die Heteroaryl-Gruppe kann unsubstituiert oder substituiert sein mit einem oder mehreren Substituenten aus einer Gruppe bestehend aus Halogen, Hydroxy, Nitro, Cyano, Aryloxy, Formyl, C₁-C₆-Alkyl, Cyclopropyl, C₂-C₆-Alkenyl, C₂-C₆-Alkinyl, C₁-C₆-Alkoxy, halogeniertes C₁-C₆-Alkyl, C₁-C₄-Alkoxy-substituiertes C₁-C₄-Alkyl, halogeniertes C₁-C₆-Alkoxy, C₁-C₄-Alkoxy-substituiertes C₁-C₄-Alkoxy, C₁-C₆-Acyl, fluoriertes Acetyl, fluoriertes Propionyl, wobei die beiden letztgenannten Gruppen jeweils mehrere Fluoratome im Alkylrest enthalten können, C₁-C₆-Alkylthio, C₁-C₆-Alkylsulfinyl, C₁-C₆-Alkylsulfonyl, halogeniertes C₁-C₆-Alkylthio, Aryl, Amino, C₁-C₄-Monoalkylamino, C₂-C₈-Dialkylamino, C₁-C₆-Alkylcarbonyloxy, C₁-C₆-Alkylcarbonylamino, (C=O)OH, C₁-C₆-Alkoxycarbonyl, (C=O)NH₂, C₁-C₆-Alkylaminocarbonyl, C₁-C₆-Dialkylaminocarbonyl, -CH₂CH₂O-,-CH₂CH₂CH₂O-, -OCH₂O-, -O(CH₂)₂O-;
   - Z: für Halogen, C₁-C₆-Alkyl, C₁-C₆-Alkoxy, C₁-C₆-Alkylthio, Aryloxy, Nitro, C₁-C₆-Haloalkyl, C₁-C₆-Haloalkoxy, Thiocyano oder Cyano steht;
   - W: für NO₂, N₃, NR¹R², N=CR³R⁴ oder NHN=CR³R⁴ steht;
   - R¹ und R²: unabhängig voneinander für Wasserstoff, C₁-C₆-Alkyl, C₃-C₆-Alkenyl, C₃-C₆-Alkinyl, Aryl, Heteroaryl, Hydroxy, C₁-C₆-Alkoxy, Amino, C₁-C₆-Acyl, C₁-C₆-Alkoxycarbonyl, C₁-C₆-Alkylaminocarbonyl, C₁-C6-Alkylsulfonyl, C₁-C₆-Trialkylsilyl oder C₁-C₆-Dialkylphosphonyl stehen; oder
   - R¹ und R²: zusammen mit N für einen fünf- oder sechsgliedrigen gesättigten oder ungesättigten Ring, der optional zusätzlich O-, S- oder N-Heteroatome enthalten kann, stehen;
   - R³ und R⁴: unabhängig voneinander für Wasserstoff, C₁-C₆-Alkyl, C₃-C₆-Alkenyl, C₃-C₆-Alkinyl, Aryl oder Heteroaryl stehen; oder
   - R³ und R⁴: zusammen mit =C für einen fünf- oder sechsgliedrigen gesättigten Ring stehen;
   oder herbizid-aktive Derivate der Carbonsäure-Gruppe,
   sowie
(B) einen oder mehrere Safener.

Die erfindungsgemäßen Herbizid-Safener-Kombinationen können zusätzliche weitere Komponenten, beispielsweise Pflanzenschutzmittelwirkstoffe anderer Art und/oder im Pflanzenschutz übliche Zusatzstoffe und/oder Formulierungshilfsmittel, enthalten oder zusammen mit diesen eingesetzt werden.

Die Herbizide (A) und die Safener (B) können auf bekannte Weise angewendet werden, beispielsweise gemeinsam (beispielsweise als Co-Formulierung oder als Tank-Mischung) oder auch zeitlich versetzt (Splitting), z.B. auf die Pflanzen, Pflanzenteile, Pflanzensamen oder die Fläche, auf der die Pflanzen wachsen. Möglich ist z.B. die Anwendung der Einzelwirkstoffe oder der Herbizid-Safener-Kombination in mehreren Portionen (Sequenzanwendung), z. B. nach Anwendungen im Vorauflauf, gefolgt von Nachauflauf-Applikationen oder nach frühen Nachauflaufanwendungen, gefolgt von Applikationen im mittleren oder späten Nachauflauf. Bevorzugt ist dabei die gemeinsame oder die zeitnahe Anwendung der Wirkstoffe der jeweiligen Kombination. Möglich ist auch die Anwendung der Einzelwirkstoffe oder der Herbizid-Safener-Kombination zur Saatgutbehandlung.

### Verbindung der allgemeinen Formel (I)

Die genannte Formel (I) umfasst alle Stereoisomeren und deren Gemische, insbesondere auch racemische Gemische, und - soweit Enantiomere möglich sind - beide Enantiomere und insbesondere das jeweils biologisch wirksame Enantiomer.

In einer ersten Ausführungsform der vorliegenden Erfindung sind als Herbizid (A) Verbindungen der allgemeinen Formel (I) und deren Salze bevorzugt, worin der Rest
- X: für Wasserstoff oder Fluor
steht.

In einer zweiten Ausführungsform der vorliegenden Erfindung sind als Herbizid (A) Verbindungen der Formel (I) und deren Salze bevorzugt, worin der Rest
- Y: für eine Phenyl-Gruppe oder für eine Pyridinyl-, Benzofuranyl-, Benzothienyl-, Thienyl- oder Thiazolylgruppe steht, wobei die Phenyl-Gruppe oder die Heteroaryl-Gruppe substituiert sein kann mit einem oder mehreren Substituenten, ausgewählt aus der Gruppe, bestehend aus Halogen, C₁-C₂-Alkyl, C₁-C₂-Alkoxy, C₁-C₂-Halogenalkyl und C₁-C₂-Halogenalkoxy.

Als Herbizid (A) besonders bevorzugt sind in dieser zweiten Ausführungsform Verbindungen der Formel (I) und deren Salze, worin der Rest
- Y: für eine Phenyl-Gruppe oder für eine Pyridinyl-, Benzofuranyl-, Benzothienyl-, Thienyl- oder Thiazolylgruppe steht, wobei die Phenyl-Gruppe oder die Heteroaryl-Gruppe substituiert ist mit einem oder mehreren Substituenten, ausgewählt aus der Gruppe, bestehend aus Halogen, C₁-C₂-Alkyl, C₁-C₂-Alkoxy, C₁-C₂-Halogenalkyl und C₁-C₂-Halogenalkoxy.

Als Herbizid (A) noch weiter bevorzugt sind in dieser zweiten Ausführungsform Verbindungen der Formel (I) und deren Salze, worin der Rest
- Y: für eine drei- oder vierfach substituierte Phenyl-Gruppe steht, wobei die Phenyl-Gruppe substituiert ist mit Substituenten, unabhängig voneinander ausgewählt aus der Gruppe, bestehend aus Halogen, C₁-C₂-Alkyl, C₁-C₂-Alkoxy, C₁-C₂-Halogenalkyl und C₁-C₂-Halogenalkoxy.

In einer dritten Ausführungsform der vorliegenden Erfindung sind als Herbizid (A) Verbindungen der Formel (I) und deren Salze bevorzugt, worin der Rest
- Z: für Halogen
steht.

Als Herbizid (A) besonders bevorzugt sind in dieser dritten Ausführungsform Verbindungen der Formel (I) und deren Salze, worin der Rest
- Z: für Chlor
steht.

In einer vierten Ausführungsform der vorliegenden Erfindung sind als Herbizid (A) Verbindungen der Formel (I) und deren Salze bevorzugt, worin der Rest
- W: für NH₂ oder N(R¹)(R²)
steht, wobei

R¹ und R², jeweils unabhängig voneinander, für Wasserstoff oder C₁-C₆-Alkyl stehen.

Die Aminogruppe an der 4-Position kann unsubstituiert oder mit einem oder mehreren C₁-C₆-Alkyl-, C₃-C₆-Alkenyl-, C₃-C₆-Alkinyl-, Aryl-, Heteroaryl-, Hydroxy-, C₁-C₆-Alkoxy- oder Amino-Substituenten substituiert sein. Die Aminogruppe kann ferner als ein Amid, ein Carbamat, ein Harnstoff, ein Sulfonamid, ein Silylamin, ein Phosphoramidat, ein Imin oder ein Hydrazon derivatisiert sein. Diese Derivate können zu dem Amin gespalten werden. Bevorzugt ist eine unsubstituierte oder eine mit ein oder zwei Alkylsubstituenten substituierte Aminogruppe.

Man nimmt an, dass die Carbonsäuren der allgemeinen Formel (I) die Verbindungen sind, die tatsächlich die unerwünschte Vegetation töten oder kontrollieren und diese werden üblicherweise bevorzugt. Analoga dieser Verbindungen, in denen die Säuregruppe der Picolinsäure derivatisiert wurde um einen verwandten Substituenten zu bilden der in den Pflanzen oder in der Umwelt in eine Säure umgewandelt werden kann, besitzen im Wesentlichen die gleiche herbizide Wirkung und liegen im Rahmen der Erfindung. Daher ist ein "herbizid-aktives Derivat" ein beliebiges Salz, Ester, Acylhydrazid, Imidat, Thioimidat, Amidin, Amid, Orthoester, Acylcyanid, Acylhalogenid, Thioester, Thionester, Dithiolester, Nitril oder ein beliebig anderes dem Fachmann bekanntes Säurederivat, das (a) die herbizide Wirkung des aktiven Wirkstoffs, nämlich der 6-Aryl- oder Heteroaryl-4-aminopicolinsäure, nicht wesentlich beeinträchtigt, und (b) in Pflanzen oder im Erdboden zur Picolinsäure der allgemeinen Formel (I) hydrolysiert, oxidiert oder metabolisiert wird oder werden kann, die abhängig vom pH-Wert in der dissoziierten oder in der undissoziierten Form vorliegt. Die bevorzugten herbizid-aktiven Derivate der Carbonsäure sind landwirtschaftlich annehmbare Salze, Ester und Amide. Ebenso ist ein "herbizid-aktives Derivat" hinsichtlich der Amin-Funktionalität in der 4-Position ein beliebiges Salz, Silylamin, Phosphorylamin, Phosphinimin, Phosphoramidat, Sulfonamid, Sulfilimin, Sulfoximin, Aminal, Hemiaminal, Amid, Thioamid, Carbamat, Thiocarbamat, Amidin, Harnstoff, Imin, Nitro, Nitroso, Azid, oder ein beliebig anderes dem Fachmann bekanntes stickstoffhaltiges Derivat, das (a) die herbizide Wirkung des aktiven Wirkstoffs, nämlich der 6-Aryl- oder Heteroaryl-4-aminopicolinsäure, nicht wesentlich beeinträchtigt, und (b) in Pflanzen oder im Erdboden zu einem freien Amin der Formel allgemeinen Formel (I) hydrolysiert wird oder werden kann. N-Oxide, die ebenfalls zu dem Ausgangs-Pyridin der Formel I gespalten werden können, sind ebenfalls im Rahmen der Erfindung umfasst.

Geeignete Salze umfassen jene die von Alkali- oder Erdalkalimetallen abgeleitet sind und jene die von Ammoniak und Aminen abgeleitet sind. Bevorzugte Kationen umfassen Natrium, Kalium, Magnesium, und Ammonium-Kationen der Formel:

R₅R₆R₇NH

worin R₅, R₆ und R₇ jeweils unabhängig voneinander Wasserstoff oder C₁-C₁₂-Alkyl, C₃-C₁₂-Alkenyl oder C₃-C₁₂-Alkinyl darstellen, wobei jedes gegebenenfalls mit einem oder mehreren Hydroxy-, C₁-C₄-Alkoxy-, C₁-C₄-Alkylthio- oder Phenyl-Gruppen substituiert ist, mit der Maßgabe, dass R₅, R₆ und R₇ sterisch kompatibel sind. Zusätzlich können jeweils zwei aus R₅, R₆ und R₇ zusammen eine aliphatische difunktionale Einheit darstellen, die 1 bis 12 Kohlenstoffatome und bis zu zwei Sauerstoff-'oder Schwefelatome enthält. Salze der Verbindungen der allgemeinen Formel (I) können durch Behandlung der Verbindungen der allgemeinen Formel (I) mit einem Metallhydroxid, wie z.B. Natriumhydroxid, oder einem Amin, wie z.B. Ammoniak, Trimethylamin, Diethanolamin, 2-Methylthiopropylamin, Bisallylamin, 2-Butoxyethylamin, Morpholin, Cyclododecylamin, oder Benzylamin hergestellt werden. Die Aminsalze sind oft die bevorzugten Formen der Verbindungen der allgemeinen Formel (I), da sie wasserlöslich sind und sich für die Herstellung der gewünschten Herbizidzusammensetzungen auf Wasser Basis eignen.

Geeignete Ester umfassen jene, die von C₁-C₁₂-Alkyl-, C₃-C₁₂-Alkenyl- oder C₃-C₁₂-Alkinylalkoholen, wie z.B. Methanol, iso-Propanol, Butanol, 2-Ethylhexanol, Butoxyethanol, Methoxypropanol, Allylalkohol, Propargylalkohol oder Cyclohexanol, abgeleitet sind. Ester können durch Kopplung der Picolinsäure mit dem Alkohol unter Verwendung einer beliebigen Anzahl geeigneter Aktivierungsmittel wie z.B. jene, die in den Peptidkopplungen verwendet werden, wie z.B. Dicyclohexylcarbodiimid (DCC) oder Carbonyldiimidazol (CDI), durch Umsetzten des entsprechenden Säurechlorids einer Picolinsäure der allgemeinen Formel (I) mit einem geeigneten Alkohol oder durch Umsetzen der entsprechenden Picolinsäure der allgemeinen Formel (I) mit einem geeigneten Alkohol in Anwesenheit eines Säurekatalysators hergestellt werden. Geeignete Amide umfassen jene, die von Ammoniak oder von C₁-C₁₂-Alkyl, C₃-C₁₂-Alkenyl oder C₃-C₁₂-Alkinyl mono- oder disubstituierten Aminen, wie z.B., aber nicht begrenzt auf, Dimethylamin, Diethanolamin, 2-Methylthiopropylamin, Bisallylamin, 2-Butoxyethylamin, Cyclododecylamin, Benzylamin oder zyklischen oder aromatischen Aminen mit oder ohne zusätzlichen Heteroatomen wie z.B., aber nicht begrenzt auf, Aziridin, Azetidin, Pyrrolidin, Pyrrol, Imidazol, Tetrazol oder Morpholin, abgeleitet sind. Amide können durch Umsetzen des entsprechenden Picolinsäurechlorids, gemischten Anhydrids, oder Carbonsäureesters der allgemeinen Formel (I) mit Ammoniak oder einem geeigneten Amin hergestellt werden.

Die Verbindungen der allgemeinen Formel (I) können ferner durch Anlagerung einer geeigneten anorganischen oder organischen Säure, wie beispielsweise HCl, HBr, H₂SO₄ oder HNO₃, aber auch Oxalsäure oder Sulfonsäuren an eine basische Gruppe, wie z.B. Amino oder Alkylamino, Salze bilden. Geeignete Substituenten, die in deprotonierter Form, wie z.B. Sulfonsäuren oder Carbonsäuren, vorliegen, können innere Salze mit ihrerseits protonierbaren Gruppen, wie Aminogruppen bilden. Salze können ebenfalls dadurch gebildet werden, dass bei geeigneten Substituenten, wie z.B. Sulfonsäuren oder Carbonsäuren, der Wasserstoff durch ein für die Landwirtschaft geeignetes Kation ersetzt wird. Diese Salze sind beispielsweise Metallsalze, insbesondere Alkalimetallsalze oder Erdalkalimetallsalze, insbesondere Natrium- und Kaliumsalze, oder auch Ammoniumsalze, Salze mit organischen Aminen oder quartäre (quaternäre) Ammoniumsalze mit Kationen der Formel [NRR'R"R"']⁺, worin R bis R"' jeweils unabhängig voneinander einen organischen Rest, insbesondere Alkyl, Aryl, Aralkyl oder Alkylaryl darstellen.

Insbesondere können die Verbindungen der allgemeinen Formel (I) auch N-Oxide umfassen. Entsprechende Pyridin-N-Oxide sind über eine Oxidation der entsprechenden Pyridine zugänglich. Geeignete Oxidationsmethoden sind beispielsweise in Houben-Weyl, Methoden der organischen Chemie, Erweiterungs- und Folgebände zur 4. Auflage, Band E 7b, S. 565 f. beschrieben.

Sofern es im Einzelnen nicht anders definiert wird, gelten für die Reste der Formel (I) im Allgemeinen die folgenden Definitionen.

In Formel (I) können die Reste Alkyl, Alkoxyalkyl, Hydroxyalkyl und Alkoxyalkoxyalkyl jeweils geradkettig oder verzweigt sein.

Im Rahmen der vorliegenden Erfindung versteht man unter dem Begriff "Alkyl" insbesondere die Reste Methyl; Ethyl; n-Propyl; iso-Propyl; n-Butyl; sec.-Butyl; tert.-Butyl; oder die verschiedenen Isomere von Pentyl oder Hexyl.

Im Rahmen der vorliegenden Erfindung versteht man unter dem Begriff "Alkoxyalkyl" mit einem Alkoxysubstituenten versehenes Alkyl. Beispiele für den Rest "Alkoxyalkyl" umfassen CH₃OCH₂, CH₃OCH₂CH₂, CH₃CH₂OCH₂, CH₃CH₂CH₂CH₂OCH₂, CH₃CH₂OCH₂CH₂, CH₃CH₂CH₂CH₂OCH₂CH₂ oder CH₃CH₂CH₂CH₂OCH₂CHMe.

Im Rahmen der vorliegenden Erfindung versteht man unter dem Begriff "Alkoxyalkoxy" mit einem Alkoxysubstituenten versehenes Alkoxy.

Im Rahmen der vorliegenden Erfindung versteht man unter dem Begriff "Alkoxyalkoxyalkyl" einen Rest, bei welchem ein Alkoxyalkoxysubstituent an einem Alkylrest gebunden ist. Beispiele für "Alkoxyalkoxyalkyl" umfassen CH₃OCH₂OCH₂, CH₃OCH₂OCH₂CH₂, CH₃CH₂OCH₃OCH₂ und CH₃OCH₃CH₂OCH₂CH₂.

Im Rahmen der vorliegenden Erfindung versteht man unter dem Begriff "Hydroxyalkyl" mit einem Hydroxysubstituenten versehenes Alkyl. Beispiele für "Hydroxyalkyl" umfassen HOCH₂CH₂, HOCH₂CH₂CH₂ und HOCH₂CH₂CH₂CH₂.

Bei Resten mit Kohlenstoff-Atomen sind grundsätzlich solche mit 1 bis 6 Kohlenstofftomen-Atomen, vorzugsweise 1 bis 4 Kohlenstofftomen-Atomen, insbesondere 1 oder 2 Kohlenstofftomen-Atomen, bevorzugt.

Gegenstand der vorliegenden Erfindung sind auch Mischungen, umfassend Stereoisomere, die von Formel (I) oder von den Formeln der Komponente B (Safener) umfasst sind. Solche Verbindungen der Formel (I) oder der Formeln der Komponente B (Safener) enthalten beispielsweise ein oder mehrere asymmetrisch substituierte Kohlenstoff-Atome oder Sulfoxide. Die durch ihre spezifische Raumform definierten möglichen Stereoisomeren, wie Enantiomere und Diastereomere, sind alle von der Formel (I) oder von den Formeln der Komponente B (Safener) umfasst und können nach üblichen Methoden aus Gemischen der Stereoisomeren erhalten oder auch durch stereoselektive Reaktionen in Kombination mit dem Einsatz von stereochemisch reinen Ausgangs- oder Hilfsstoffen hergestellt werden.

Beispiele für als Herbizid (A) verwendete Verbindungen sind im Folgenden aufgeführt:
Methyl-4-amino-3-chlor-6-(5-brom-2-thiazolyl)pyridin-2-carboxylat (Verbindung I-1)
Methyl-4-amino-3,5-dichlor-6-(5-chlor-2-furanyl)pyridin-2-carboxylat (Verbindung I-2)
Methyl-4-amino-3-chlor-6-(1-methyl-1H-pyrazol-3-yl)pyridin-2-carboxylat (Verbindung I-3)
Methyl-4-amino-3-chlor-6-(1-methyl-1H-pyrazol-5-yl)pyridin-2-carboxylat (Verbindung I-4)
Methyl-4-amino-3-chlor-6-(3-pyrazolyl)pyridin-2-carboxylat (Verbindung I-5)
Methyl-4-amino-3-chlor-6-(4-triazolyl)pyridin-2-carboxylat (Verbindung I-6)
Methyl-4-amino-3-chlor-6-(5-oxazolyl)pyridin-2-carboxylat (Verbindung I-7)
Methyl-4-amino-3-chlor-6-(2-(5-methyl-1,3,4-thiadiazolyl))pyridin-2-carboxylat (Verbindung I-8)
Methyl-4-amino-3-chlor-6-(2-benzthiazolyl)pyridin-2-carboxylat (Verbindung I-9)
Methyl-4-amino-3-chlor-6-(1-methyl-1H-tetrazol-5-yl)pyridin-2-carboxylat (Verbindung I-10)
Methyl-4-amino-3-chlor-6-(2-methyl-2H-tetrazol-5-yl)pyridin-2-carboxylat (Verbindung I-11)
Methyl-4-amino-3-chlor-6-(3,4-dimethylphenyl)pyridin-2-carboxylat (Verbindung I-12)
Methyl-4-amino-3-chlor-6-(2,4-dichlorphenyl)pyridin-2-carboxylat (Verbindung I-13)
Methyl-4-amino-3-chlor-5-fluor-6-(4-chlorphenyl)pyridin-2-carboxylat (Verbindung I-14)
Mehyl-4-amino-3,5-dichlor-6-(4-methoxyphenyl)pyridin-2-carboxylat (Verbindung I-15)
Methyl-4-amino-3-chlor-6-phenylpyridin-2-carboxylat (Verbindung I-16)
Methyl-4-amino-3-chlor-6-(4-methoxyphenyl)pyridin-2-carboxylat (Verbindung I-17)
Methyl-4-amino-6-(4-methylphenyl)-3-(trifluormethyl)pyridin-2-carboxylat (Verbindung I-18)
Methyl-4-amino-3-chlor-6-(4-chlorphenyl)pyridin-2-carboxylat (Verbindung I-19)
Methyl-4-amino-3-chlor-6-(4-methylphenyl)pyridin-2-carboxylat (Verbindung I-20)
Methyl-4-amino-3-chlor-6-(3-methylphenyl)pyridin-2-carboxylat (Verbindung I-21)
Methyl-4-amino-3-chlor-6-(4-thiomethoxyphenyl)pyridin-2-carboxylat (Verbindung I-22)
Methyl-4-amino-3-chlor-6-(2-methoxyphenyl)pyridin-2-carboxylat (Verbindung I-23)
Methyl-4-amino-3-chlor-6-(3-methoxyphenyl)pyridin-2-carboxylat (Verbindung I-24)
Methyl-4-amino-3-chlor-6-(2-methylphenyl)pyridin-2-carboxylat (Verbindung I-25)
Methyl-4-amino-3-chlor-6-(2-chlorphenyl)pyridin-2-carboxylat (Verbindung I-26)
Methyl-4-amino-3-chlor-6-(3-chlorphenyl)pyridin-2-carboxylat (Verbindung I-27)
Methyl-4-amino-3-chlor-6-[4-(trifluormethyl)phenyl]pyridin-2-carboxylat (Verbindung I-28)
Methyl-4-amino-3-chlor-6-(3,4-methylendioxyphenyl)pyridin-2-carboxylat (Verbindung I-29)
Methyl-4-amino-3-chlor-6-(4-ethylphenyl)pyridin-2-carboxylat (Verbindung I-30)
Methyl-4-amino-3-chlor-6-(4-acetylphenyl)pyridin-2-carboxylat (Verbindung I-31)
Methyl-4-amino-3-chlor-6-(5-brom-2-methoxyphenyl)pyridin-2-carboxylat (Verbindung I-32)
Methyl-4-amino-3-chlor-6-(2-fluorphenyl)pyridin-2-carboxylat (Verbindung I-33)
Methyl-4-amino3-chlor-6-(3,5-difluorphenyl)pyridin-2-carboxylat (Verbindung I-34)
Methyl-4-amino-3-chlor-6-(4-isopropylphenyl)pyridin-2-carboxylat (Verbindung I-35)
Methyl-4-amino-3-chlor-6-(4-biphenyl)pyridin-2-carboxylat (Verbindung I-36)
Methyl-4-amino-3-chlor-6-(2-fluorphenyl)pyridin-2-carboxylat (Verbindung I-37)
Methyl-4-amino-3-chlor-6-(4-chlor-3-methylphenyl)pyridin-2-carboxylat (Verbindung I-38)
Methyl-4-amino-3-chlor-6-(3-chlor-4-fluorphenyl)pyridin-2-carboxylat (Verbindung I-39)
Methyl-4-amino-3-chlor-6-(3,4-dichlorphenyl)pyridin-2-carboxylat (Verbindung I-40)
Methyl-4-amino-3-chlor-6-(4-formylphenyl)pyridin-2-carboxylat (Verbindung I-41)
Methyl-4-amino-3-chlor-6-(3-cyanophenyl)pyridin-2-carboxylat (Verbindung I-42)
Methyl-4-amino-3-chlor-6-(4-fluorphenyl)pyridin-2-carboxylat (Verbindung I-43)
Methyl-4-amino-3,5-dichlor-6-[4-(trifluormethyl)phenyl]pyridin-2-carboxylat (Verbindung I-44)
Methyl-4-amino-3-chlor-6-(4-chlor-2-methylphenyl)pyridin-2-carboxylat (Verbindung I-45)
Methyl-4-amino-3-chlor-6-(3,5-bis-(trifluormethyl)phenyl)pyridin-2-carboxylat (Verbindung I-46)
Methyl-4-amino-3-chlor-6-(2-naphthyl)pyridin-2-carboxylat (Verbindung I-47)
Methyl-4-amino-3-chlor-5-fluor-6-(4-methylphenyl)-pyridin-2-carboxylat (Verbindung I-48)
Methyl-4-acetamido-3-chlor-5-fluor-6-(2,4-dichlorphenyl)pyridin-2-carboxylat (Verbindung I-49)
Methyl-4-amino-3-chlor-6-(3,4-difluormethylendioxyphenyl)pyridin-2-carboxylat (Verbindung I-50)
Methyl-4-amino-3-chlor-6-(3,5-difluorphenyl)pyridin-2-carboxylat (Verbindung I-51)
Methyl-4-acetamido-3-chlor-6-(4-chlor-2-fluorphenyl)pyridin-2-carboxylat (Verbindung I-52)
Methyl-4-acetamido-3-chlor-6-(4-chlorphenyl)pyridin-2-carboxylat (Verbindung I-53)
Methyl-4-acetamido-3-chlor-6-(2-chlor-4-fluorphenyl)pyridin-2-carboxylat (Verbindung I-54)
Methyl-4-acetamido-3-chlor-6-(2,6-difluorphenyl)pyridin-2-carboxylat (Verbindung I-55)
Methyl-4-amino-3-chlor-6-[4-(trifluormethoxy)phenyl]pyridin-2-carboxylat (Verbindung I-56)
Methyl-4-acetamido-3-chlor-6-(2,5-dichlorphenyl)pyridin-2-carboxylat (Verbindung I-57)
Methyl-4-amino-3-chlor-6-(2-chlor-4-fluorphenyl)pyridin-2-carboxylat (Verbindung I-58)
Methyl-4-amino-3-chlor-6-(4-chlor-2-fluorphenyl)pyridin-2-carboxylat (Verbindung I-59)
Methyl-4-acetamido-3-chlor-6-(4-chlor-3-fluorphenyl)pyridin-2-carboxylat (Verbindung I-60)
Methyl-4-amino-3-chlor-6-(4-chlor-3-fluorphenyl)pyridin-2-carboxylat (Verbindung I-61)
Methyl-4-amino-3-chlor-6-[2-chlor-4-(trifluormethyl)phenyl]pyridin-2-carboxylat (Verbindung I-62)
Methyl-4-acetamido-3-chlor-6-(3,4-dimethoxyphenyl)pyridin-2-carboxylat (Verbindung I-63)
Methyl-4-amino-3-chlor-6-(3,4-dimethoxyphenyl)pyridin-2-carboxylat (Verbindung I-64)
Methyl-4-amino-3-chlor-5-fluor-6-(4-chlorphenyl)pyridin-2-carboxylat (Verbindung I-65)
Methyl-4-acetamido-3-chlor-6-(4-chlor-2-methoxyphenyl)pyridin-2-carboxylat (Verbindung I-66)
Methyl-4-amino-3-chlor-6-(3,4-ethylenedioxyphenyl)pyridin-2-carboxylat (Verbindung I-67)
Methyl-4-amino-3-chlor-6-(4-chlor-2-methoxyphenyl)pyridin-2-carboxylat (Verbindung I-68)
Methyl-4-acetamido-3-chlor-6-(3,4-methylendioxyphenyl)pyridin-2-carboxylat (Verbindung I-69)
Methyl-4-acetamdo-3-chlor-6-(4-chlor-3-methoxymethylphenyl)pyridin-2-carboxylat (Verbindung I-70)
Methyl-4-amino-3-chlor-6-(4-chlor-3-methoxymethylphenyl)pyridin-2-carboxylat (Verbindung I-71)
Methyl-4-acetamido-3-chlor-6-(2-chlor-3,4-methylendioxyphenyl)pyridin-2-carboxylat (Verbindung I-72)
Methyl-4-amino-3-chlor-6-(2-chlor-3,4-methylendioxyphenyl)pyridin-2-carboxylat (Verbindung I-73)
Methyl-4-acetamido-3-chlor-6-(5-indanyl)pyrdin-2-carboxylat (Verbindung I-74)
Methyl-4-amino-3-chlor-6-(5-indanyl)pyridin-2-carboxylat (Verbindung I-75)
Methyl-4-acetamido-3-chlor-6-(2,3-dihydro-5-benzofuranyl)pyridin-2-carboxylat (Verbindung I-76)
Methyl-4-amino-3-chlor-6-(2,3-dihydro-5-benzofuranyl)pyridin-2-carboxylat (Verbindung I-77)
Methyl-4-acetamido-3-chlor-6-(5-chlor-2-fluor-4-methylphenyl)pyridin-2-carboxylat (Verbindung I-78)
Methyl-4-amino-3-chlor-6-(5-chlor-2-fluor-4-methylphenyl)pyridin-2-carboxylat (Verbindung I-79)
Methyl-4-amino-3-chlor-6-(4-methoxy-3-methylphenyl)pyridin-2-carboxylat (Verbindung I-80)
Methyl-4-acetamido-3-chlor-6-(2,5-dimethoxyphenyl)pyridin-2-carboxylat (Verbindung I-81)
Methyl-4-amino-3-chlor-6-(2,5-dimethoxyphenyl)pyridin-2-carboxylat (Verbindung I-82)
Methyl-4-acetamido-3-chlor-6-(4-methylphenyl)pyridin-2-carboxylat (Verbindung I-83)
Methyl-4-amino-3-chlor-5-fluor-6-(3,4-methylendioxyphenyl)pyridin-2-carboxylat (Verbindung I-84)
Methyl-4-amino-3-chlor-5-fluor-6-(2,3-dihydro-5-benzofuranyl)pyridin-2-carboxylat (Verbindung I-85)
Methyl-4-amino-3,5-dichlor-6-(4-chlorphenyl)pyridin-2-carboxylat (Verbindung I-86)
Methyl-4-acetamido-3-chlor-6-(1-methyl-1H-pyrazol-4-yl)pyridin-2-carboxylat (Verbindung I-87)
Methyl-4-amino-3-chlor-5-fluoro-6-(2,4-dichlorphenyl)pyridin-2-carboxylat (Verbindung I-88)
Methyl-4-N-pyrrolyl-3-chlor-6-(4-methylphenyl)pyridin-2-carboxylat (Verbindung I-89)
Methyl-4-amino-3,5-difluor-6-(4-chlorphenyl)pyridin-2-carboxylat (Verbindung I-90)
Methyl-4-amino-3,5-difluor-6-(4-methylphenyl)pyridin-2-carboxylat (Verbindung I-91)
Methyl-4-amino-3,5-difluor-6-(2-chlor-4-methylphenyl)pyridin-2-carboxylat (Verbindung I-92)
Methyl-4-amino-3,5-difluor-6-(4-chlor-2-fluorphenyl)pyridin-2-carboxylat (Verbindung I-93)
Methyl-4-amino-3,5-difluor-6-[4-(trifluormethyl)phenyl]pyridin-2-carboxylat (Verbindung I-94)
Methyl-4-amino-3,5-difluor-6-(3,4-methylendioxyphenyl)pyridin-2-carboxylat (Verbindung I-95)
Methyl-4-amino-3-chlor-6-(2-benzofuranyl)pyridin-2-carboxylat (Verbindung I-96)
Methyl-4-acetamido-3-chlor-6-(2-benzothienyl)pyridin-2-carboxylat (Verbindung I-97)
Methyl-4-amino-3-chlor-6-(5-chlor-2-thienyl)pyridin-2-carboxylat (Verbindung I-98)
Methyl-4-acetamido-6-(2-benzofuranyl)-3-chlorpyridin-2-carboxylat (Verbindung I-99)
Methyl-4-amino-3-chlor-6-(3,5-dimethyl-4-isoxazolyl)pyridin-2-carboxylat (Verbindung I-100)
Methyl-4-acetamido-3-chlor-6-(3-thienyl)pyridin-2-carboxylat (Verbindung I-101)
Methyl-4-amino-3-chlor-6-(3-pyridyl)pyridin-2-carboxylat (Verbindung I-102)
Methyl-4-acetamido-3-chlor-6-(2-thiazolyl)pyridin-2-carboxylat (Verbindung I-103)
Methyl-4-amino-3,5-dichlor-6-(2-furanyl)pyridin-2-carboxylat (Verbindung I-104)
Methyl-4-amino-3,5-dichlor-6-(2-thienyl)pyridin-2-carboxylat (Verbindung I-105)
Methyl-4-amino-3-chlor-6-(2-thienyl)pyridin-2-carboxylat (Verbindung I-106)
Methyl-4-amino-3-chlor-6-(6-methoxy-4-pyridinyl)pyridin-2-carboxylat (Verbindung I-107)
Methyl-4-amino-3-chlor-6-(6-hydroxy-3-pyridinyl)pyridin-2-carboxylat (Verbindung I-108)
Methyl-4-amino-3-chlor-6-(2-pyridinyl)pyridin-2-carboxylat (Verbindung I-109)
Methyl-4-amino-3-chlor-6-(2-furanyl)pyridin-2-carboxylat (Verbindung I-110)
Methyl-4-amino-3-chlor-6-(5-chlor-2-pyridyl)pyridin-2-carboxylat (Verbindung I-111)
Methyl-4-acetamido-3-chlor-6-(3-(6-methyl)pyridazyl)pyridin-2-carboxylat (Verbindung I-112)
Methyl-4-amino-3-chlor-5-fluor-6-(2-thiazolyl)pyridin-2-carboxylat (Verbindung I-113)
Methyl-4-amino-3-chlor-6-(2-(5-methylthiazolyl))pyridin-2-carboxylat (Verbindung I-114)
Methyl-4-amino-3,5-dichlor-6-(5-thiazolyl)pyridin-2-carboxylat (Verbindung I-115)
Methyl-4-acetamido-3-chlor-6-(5-(2-chlor)pyrimidinyl)-pyridin-2-carboxylat (Verbindung I-116)
Methyl-4-acetamido-3-chlor-6-(5-pyrimidinyl)pyridin-2-carboxylat (Verbindung I-117)
Methyl-4-acetamido-3-chlor-6-(3-(6-methyl)pyridazinyl)pyridin-2-carboxylat (Verbindung I-118)
Methyl-4-acetamido-3-chlor-6-(3-brom-5-isoxazoyl)pyridin-2-carboxylat (Verbindung I-119)
Methyl-4-acetamido-3-chlor-6-(3-brom-4-isoxazoyl)pyridin-2-carboxylat (Verbindung I-120)
Methyl-4-amino-3-chlor-6-(3-(6-methyl)pyridazinyl)pyridin-2-carboxylat (Verbindung I-121)
Methyl-4-amino-3-chlor-6-(3-thienyl)pyridin-2-carboxylat (Verbindung I-122)
Methyl-4-amino-3-chlor-6-(2-thiazolyl)pyridin-2-carboxylat (Verbindung I-123)
Methyl-4-amino-3-chlor-6-(1-methyl-1H-pyrazol-4-yl)pyridin-2-carboxylat (Verbindung I-124)
Methyl-4-amino-3-chlor-6-(2-benzothienyl)pyridin-2-carboxylat (Verbindung I-125)
Methyl-4-amino-3-chlor-6-(5-pyrimidinyl)pyridin-2-carboxylat (Verbindung I-126)
Methyl-4-amino-3-chlor-6-(6-hydroxy-3-pyridinyl)pyridin-2-carboxylat (Verbindung I-127)
Methyl-4-amino-3-chlor-6-(6-chloro-3-pyridinyl)pyridin-2- carboxylat (Verbindung I-128)
Methyl-4-amino-3-chlor-6-(4-(2-methylthiazolyl))pyridin-2-carboxylat (Verbindung I-129)
Methyl-4-amino-3-chlor-6-(3-brom-5-isoxazoyl)pyridin-2-carboxylat (Verbindung I-130)
Methyl-4-amino-3-chlor-6-(3-brom-4-isoxazoyl)pyridin-2-carboxylat (Verbindung I-131 )
4-Amino-3-chlor-6-(3,4-dimethylphenyl)pyridin-2-carbonsäure (Verbindung I-132)
4-Amino-3,5-dichlor-6-(phenyl)pyridin-2-carbonsäure (Verbindung I-133)
4-Amino-3,5-dichlor-6-(4-methoxyphenyl)pyridin-2-carbonsäure (Verbindung I-134)
4-Amino-3-chlor-6-(phenyl)pyridin-2-carbonsäure (Verbindung I-135)
4-Amino-3-chlor-6-(4-methylphenyl)pyridin-2-carbonsäure (Verbindung I-136)
4-Amino-3-chlor-6-(4-thiomethylphenyl)pyridin-2-carbonsäure (Verbindung I-137)
4-Amino-3-chlor-6-(3-methylphenyl)pyridin-2-carbonsäure (Verbindung I-138)
4-Amino-3-chlor-6-(2-methoxyphenyl)pyridin-2-carbonsäure (Verbindung I-139)
4-Amino-3-chlor-6-(2-chlorphenyl)pyridin-2-carbonsäure (Verbindung I-140)
4-Amino-3-chlor-6-(4-methoxyphenyl)pyridin-2-carbonsäure (Verbindung I-141)
4-Amino-3-chlor-6-(2-fluorphenyl)pyridin-2-carbonsäure (Verbindung 142)
4-Amino-3-chlor-6-(3-chlorphenyl)pyridin-2-carbonsäure (Verbindung I-143)
4-Amino-3-chlor-6-(4-acetylphenyl)pyridin-2-carbonsäure (Verbindung I-144)
4-Amino-3-chlor-6-(2,4-difluorphenyl)pyridin-2-carbonsäure (Verbindung I-145)
4-Amino-3-chlor-6-(2,4-dichlorphenyl)pyridin-2-carbonsäure (Verbindung I-146)
4-Amino-3-chlor-6-(4-isopropylphenyl)pyridin-2-carbonsäure (Verbindung I-147)
4-Amino-3-chlor-6-(4-biphenyl)pyridin-2-carbonsäure (Verbindung I-148)
4-Amino-3-chlor-6-(4-chlor-3-methylphenyl)pyridin-2-carbonsäure (Verbindung I-149)
4-Amino-3-chlor-6-(3,4-dichlorphenyl)pyridin-2-carbonsäure (Verbindung I-150)
4-Amino-3-chlor-6-(3-chlor-4-fluorphenyl)pyridin-2-carbonsäure (Verbindung I-151)
4-Amino-3-chlor-6-[4-(trifluormethyl)phenyl]pyridin-2-carbonsäure (Verbindung I-152)
4-Amino-3-chlor-6-(3,4-methylendioxyphenyl)pyridin-2-carbonsäure (Verbindung I-153)
4-Amino-3-chlor-6-(4-chlorphenyl)pyridin-2-carbonsäure (Verbindung I-154)
4-Amino-3-chlor-6-(4-chlor-2-methylphenyl)pyridin-2-carbonsäure (Verbindung I-155)
4-Amino-3-chlor-6-(4-fluorphenyl)pyridin-2-carbonsäure (Verbindung I-156)
4-Amino-3-chlor-6-[3-(trifluormethyl)phenyl]pyridin-2-carbonsäure (Verbindung I-157)
4-Amino-3-chlor-6-(2-fluor-4-methylphenyl)pyridin-2-carbonsäure (Verbindung I-158)
4-Amino-3-chlor-6-(4-hydroxymethylphenyl)pyridin-2-carbonsäure (Verbindung I-159)
4-Amino-3-chlor-6-[4-(fluormethyl)phenyl]pyridin-2-carbonsäure (Verbindung I-160)
4-Amino-3-chlor-6-[bis-3,5-(trifluormethyl)phenyl]pyridin-2-carbonsäure (Verbindung I-161)
4-Amino-3-chlor-6-(2-napthyl)pyridin-2-carbonsäure (Verbindung I-162)
4-Amino-3-chlor-5-fluor-6-(4-methylphenyl)pyridin-2-carbonsäure (Verbindung I-163)
4-Amino-3-chlor-6-(3-chlor-4-methylphenyl)pyridin-2-carbonsäure (Verbindung I-164)
4-Amino-3-chlor-6-(2-methylphenyl)pyridin-2-carbonsäure (Verbindung I-165)
4-Amino-3-chlor-6-(3,4-difluormethylendioxyphenyl)pyridin-2-carbonsäure (Verbindung I-166)
4-Amino-3-chlor-6-(3,5-difluorphenyl)pyridin-2-carbonsäure (Verbindung I-167)
4-Amino-3-chlor-6-(4-chlor-2-fluorphenyl)pyridin-2-carbonsäure (Verbindung I-168)
4-Amino-3-chlor-6-(2,6-difluorphenyl)pyridin-2-carbonsäure (Verbindung I-169)
4-Amino-3-chlor-6-(2-chlor-4-fluorphenyl)pyridin-2-carbonsäure (Verbindung I-170)
4-Amino-3,5-dichlor-6-[4-(trifluormethyl)phenyl]pyridin-2-carbonsäure (Verbindung I-171)
4-Amino-3-chlor-5-fluor-6-(4-fluorphenyl)pyridin-2-carbonsäure (Verbindung I-172)
4-Amino-3-chlor-5-fluor-6-(4-chlorphenyl)pyridin-2-carbonsäure (Verbindung I-173)
4-Amino-3-chlor-6-[4-(trifluormethoxy)phenyl]pyridin-2-carbonsäure (Verbindung I-174)
4-Amino-3-chlor-6-(4-ethylphenyl)pyridin-2-carbonsäure (Verbindung I-175)
4-Amino-3-chlor-6-(2-fluorphenyl)pyridin-2-carbonsäure (Verbindung I-176)
4-Amino-3-chlor-6-(2,5-dichlorphenyl)pyridin-2-carbonsäure (Verbindung I-177)
4-Amino-3-chlor-6-(2,4-dimethylphenyl)pyridin-2-carbonsäure (Verbindung I-178)
4-Amino-3-chlor-6-(4-chlor-3-(trifluormethyl)phenyl)pyridin-2-carbonsäure (Verbindung I-179)
3-Chlor-6-(4-methylphenyl)-4-(N-pyrrolyl)pyridin-2-carbonsäure (Verbindung I-180)
4-Amino-3-chlor-6-(4-chlor-3-fluorphenyl)pyridin-2-carbonsäure (Verbindung I-181)
4-Amino-3-chlor-6-(4-chlor-2-(trifluormethyl)phenyl)pyridin-2-carbonsäure (Verbindung I-182)
4-Amino-3-chlor-5-fluor-6-(4-chlorphenyl)pyridin-2-carbonsäure (Verbindung I-183)
4-Amino-3-chlor-6-(2-chlor-4-(trifluormethyl)phenyl)pyridin-2-carbonsäure (Verbindung I-184)
4-Amino-3-chlor-6-(3,4-dimethoxyphenyl)pyridin-2-carbonsäure (Verbindung I-185)
4-Amino-3-chlor-6-(4-chlor-2-methoxyphenyl)pyridin-2-carbonsäure (Verbindung I-186)
4-Amino-3-chlor-6-(2-chlor-3,4-methylendioxyphenyl)pyridin-2-carbonsäure (Verbindung I-187)
4-Amino-3-chlor-6-(5-indanyl)pyridin-2-carbonsäure (Verbindung I-188)
4-Amino-3-chlor-5-fluor-6-(4-chlor-2-fluorphenyl)pyridin-2-carbonsäure (Verbindung I-189)
4-Amino-3-chlor-6-(2-chlor-4-methylphenyl)pyridin-2-carbonsäure (Verbindung I-190)
4-Amino-3-chlor-6-(4-methyl-3-thiomethylphenyl)pyridin-2-carbonsäure (Verbindung I-191)
4-Amino-3-chlor-6-(5-chlor-2-fluor-4-methylphenyl)pyridin-2-carbonsäure (Verbindung I-192)
4-Amino-3-chlor-6-(4-methoxy-3-methylphenyl)pyridin-2-carbonsäure (Verbindung 1-193)
4-Amino-3-chlor-6-(2,5-dimethoxyphenyl)pyridin-2-carbonsäure (Verbindung I-194)
4-Amino-3-chlor-6-(4-chlor-3-methoxymethylphenyl)pyridin-2-carbonsäure (Verbindung I-195)
4-Amino-3-chlor-5-fluor-6-(3,4-methylendioxyphenyl)pyridin-2-carbonsäure (Verbindung I-196)
4-Amino-3-chlor-5-fluor-6-(2,3-dihydro-5-benzofuranyl)pyridin-2-carbonsäure (Verbindung I-197)
4-Amino-3,5-dichlor-6-(4-chlorphenyl)pyridin-2-carbonsäure (Verbindung I-198)
4-Amino-3-chlor-5-fluor-6-(2,4-dichlorphenyl)pyridin-2-carbonsäure (Verbindung I-199)
4-Amino-3,5-difluor-6-(4-(trifluormethyl)phenyl)pyridin-2-carbonsäure (Verbindung I-200)
4-Amino-3-chlor-6-(2,3-dihydro-5-benzofuranyl)pyridin-2-carbonsäure (Verbindung I-201)
4-Amino-3,5-difluor-6-(6-chlorphenyl)pyridin-2-carbonsäure (Verbindung I-202)
4-Amino-3,5-difluor-6-(4-methylphenyl)pyridin-2-carbonsäure (Verbindung I-203)
4-Amino-3,5-difluor-6-(2-chlor-4-methylphenyl)pyridin-2-carbonsäure (Verbindung I-204)
4-Amino-3,5-difluor-6-(2,4-dichlorphenyl)pyridin-2-carbonsäure (Verbindung I-205)
4-Amino-3,5-difluor-6-(4-chlor-2-fluorphenyl)pyridin-2-carbonsäure (Verbindung I-206)
4-Amino-3,5-difluor-6-(3,4-methylendioxyphenyl)pyridin-2-carbonsäure (Verbindung I-207)
4-Amino-3,5-dichlor-6-(2-thienyl)pyridin-2-carbonsäure (Verbindung I-208)
4-Amino-3-chlor-6-(4-pyridinyl)pyridin-2-carbonsäure (Verbindung I-209)
4-Amino-3,5-dichlor-6-(2-furfuryl)pyridin-2-carbonsäure (Verbindung I-210)
4-Amino-3-chlor-6-(2-thienyl)pyridin-2-carbonsäure (Verbindung I-211)
4-Amino-3-chlor-6-(2-furfuryl)pyridin-2-carbonsäure (Verbindung I-212)
4-Amino-3-chlor-6-(6-methoxy-3-pyridinyl)pyridin-2-carbonsäure (Verbindung I-213)
4-Amino-3-chlor-6-(2-pyridinyl)pyridin-2-carbonsäure (Verbindung I-214)
4-Amino-3-chlor-6-(5-chlor-2-thienyl)pyridin-2-carbonsäure (Verbindung I-215)
4-Amino-3-chlor-6-(3-thienyl)pyridin-2-carbonsäure (Verbindung I-216)
4-Amino-3-chlor-6-(2,3-dihydro-5-benzofuranyl)pyridin-2-carbonsäure (Verbindung I-217)
4-Amino-3-chlor-6-(5-methyl-2-thienyl)pyridin-2-carbonsäure (Verbindung I-218)
4-Amino-6-(2-benzofuranyl)-3-chlorpyridin-2-carbonsäure (Verbindung I-219)
4-Amino-3-chlor-6-(2-pyrazinyl)pyridin-2-carbonsäure (Verbindung I-220)
4-Amino-3-chlor-5-fluor-6-(6-chlor-3-pyridinyl)pyridin-2-carbonsäure (Verbindung I-221)
4-Amino-3-chlor-6-(2-thiazolyl)pyridin-2-carbonsäure (Verbindung I-222)
4-Amino-3-chlor-6-(1-methyl-1H-pyrazol-5-yl)pyridin-2-carbonsäure (Verbindung I-223)
4-Amino-3-chlor-6-(2-benzothienyl)pyridin-2-carbonsäure (Verbindung I-224)
4-Amino-3-chlor-6-(6-chlor-3-pyridinyl)pyridin-2-carbonsäure (Verbindung I-225)
4-Amino-3-chlor-6-(2-benzoxazolyl)pyridin-2-carbonsäure (Verbindung I-226)
4-Amino-3-chlor-6-(2-(5-methyl-1,3,4-oxadiazolyl))pyridin-2-carbonsäure (Verbindung I-227)
4-Amino-3-chlor-6-(5-pyrimidinyl)pyridin-2-carbonsäure (Verbindung I-228)
4-Amino-3-chlor-6-(2-(5-methyl-1,3,4-thiadiazolyl))pyridin-2-carbonsäure (Verbindung I-229)
4-Amino-3-chlor-6-(2-benzothiazolyl)pyridin-2-carbonsäure (Verbindung I-230)
4-Amino-3-chlor-6-(5-oxazolyl)pyridin-2-carbonsäure (Verbindung I-231)
4-Amino-3-chlor-6-(2-benzoxazolyl)pyridin-2-carbonsäure (Verbindung I-232)
4-Amino-3-chlor-6- (3-(6-methyl)pyridazinyl)pyridin-2-carbonsäure (Verbindung I-233)
4-Amino-3-chlor-6-(3-(6-methyl)pyridazyl)pyridin-2-carbonsäure (Verbindung I-234)
4-Amino-3-chlor-6-(4-(2-methylthiazolyl))pyridin-2-carbonsäure (Verbindung I-235)
4-Amino-3,5-dichlor-6-(4-(2-methylthiazolyl))pyridin-2-carbonsäure (Verbindung I-236)
4-Amino-3,5-dichlor-6-(5-chlor-2-furanyl)pyridin-2-carbonsäure (Verbindung I-237)
4-Amino-3-chlor-5-fluor-6-(4-(2-methylthiazolyl))pyridin-2-carbonsäure (Verbindung I-238)
4-Amino-3-chlor-6-(2-methoxy-5-pyrimidinyl)-2-carbonsäure (Verbindung I-239)
4-Amino-3-chlor-6-(2-(5-methylthiazolyl))pyridin-2-carbonsäure (Verbindung I-240)
4-Amino-3,5-dichlor-6-(5-thiazolyl)pyridin-2-carbonsäure (Verbindung I-241)
Methyl-4-amino-3-chlor-6-(4-hydroxymethylphenyl)pyridin-2-carboxylat (Verbindung I-242)
Methyl-4-amino-3-chlor-6-[4-(fluormethyl)phenyl]pyridin-2-carboxylat (Verbindung I-243)
n-Decyl-4-amino-3-chlor-5-fluor-6-(4-chlorphenyl)pyridin-2-carboxylat (Verbindung I-244)
(2-Butoxyethyl)-4-amino-3-chlor-5-fluor-6-(4-chlorphenyl)pyridin-2-carboxylat (Verbindung I-245)
(2-Ethylhexyl)-4-amino-3-chlor-5-fluor-6-(4-chlorphenyl)pyridin-2-carboxylat (Verbindung I-246)
(2-Methylheptyl)-4-amino-3-chlor-5-fluor-6-(4-chlorphenyl)pyridin-2-carboxylat (Verbindung I-247)
(2-Butoxyethyl)-4-amino-3-chlor-6-(4-methylphenyl)pyridin-2-carboxylat (Verbindung I-248)
n-Butyl-4-amino-3-chlor-6-(4-methylphenyl)pyridin-2-carboxylat (Verbindung I-249)
(Ethoxybutyl)-4-amino-3-chlor-6-(4-methylphenyl)pyridin-2-carboxylat (Verbindung I-250)
(2-Ethylbutyl)-4-amino-3-chlor-6-(4-methylphenyl)pyridin-2-carboxylat (Verbindung I-251)
Ethyl-4-amino-3-chlor-5-fluor-6-(4-chlorphenyl)pyridin-2-carboxylat (Verbindung I-252)
(Butoxyethyl)-4-amino-3-chlor-5-fluor-6-(4-chlorphenyl)pyridin-2-carboxylat (Verbindung I-253)
(2-Ethylhexyl)-4-amino-3-chlor-5-fluor-6-(4-chlorphenyl)pyridin-2-carboxylat (Verbindung I-254)
Ethyl-4-amino-3-chlor-6-(2,4-dichlorphenyl)pyridin-2-carboxylat (Verbindung I-255) n-Propyl-4-amino-3-chlor-6-(2,4-dichlorphenyl)pyridin-2-carboxylat (Verbindung I-256)
n-Butyl-4-amino-3-chlor-6-(2,4-dichlorphenyl)pyridin-2-carboxylat (Verbindung I-257)
n-Pentyl-4-amino-3-chlor-6-(2,4-dichlorphenyl)pyridin-2-carboxylat (Verbindung I-258)
(2-Ethylhexyl)-4-amino-3-chlor-6-(2,4-dichlorphenyl)pyridin-2-carboxylat (Verbindung I-259)
n-Decyl-4-amino-3-chlor-6-(2,4-dichlorphenyl)pyridin-2-carboxylat (Verbindung I-260)
(2-Methylethyl)-4-amino-3-chlor-6-(2,4-dichlorphenyl)pyridin-2-carboxylat (Verbindung I-261)
n-Hexyl-4-amino-3-chlor-6-(2,4-dichlorphenyl)pyridin-2-carboxylat (Verbindung I-262)
Ethyl-4-amino-3-chlor-6-(4-methylphenyl)pyridin-2-carboxylat (Verbindung I-263)
4-Amino-3-chlor-5-fluor-6-(4-chlorphenyl)-2-(N-benzyl)picolinamid (Verbindung I-264)
Methyl-4-N-methylamino-3-chlor-5-fluor-6-(4-chlorphenyl)pyridin-2-carboxylat (Verbindung I-265)
Methyl-4-acetamido-3-chlor-6-(4-(2-methylthiazolyl))pyridin-2-carboxylat (Verbindung I-266)
Methyl-4-amino-3,5-dichlor-6-(4-(2-methylthiazolyl))pyridin-2-carboxylat (Verbindung I-267)
Methyl-4-amino-3-chlor-5-fluor-6-(4-(2-methylthiazolyl))pyridin-2-carboxylat (Verbindung I-268)
Methyl-4-amino-3-chlor-6-(4-(2,2,2-trifluormethylthiazolyl))pyridin-2-carboxylat (Verbindung I-269)
Methyl-4-amino-3-chlor-5-fluor-6-(4-(2,2,2-trifluormethylthiazolyl))pyridin-2-carboxylat (Verbindung I-270)
4-Amino-3-chlor-6-(4-chlor-2-fluor-3-thiomethylphenyl)pyridin-2-carbonsäuremethylester (Verbindung I-271)
4-Amino-3-chlor-6-(4-chlor-3-cyano-2-fluorophenyl)pyridin-2-carbonsäuremethylester carbonsäuremethylester (Verbindung I-272)
4-Amino-3-chlor-6-(4-chlor-2-fluor-3-methoxymethylphenyl)pyridin-2-carbonsäuremethylester (Verbindung I-273)
4-Amino-3-chlor-6-(4-chlor-2-fluor-3-difluormethylphenyl)pyridin-2-carbonsäuremethylester (Verbindung I-274)
4-Amino-3-chlor-6-(4-chlor-2-fluor-3-fluormethylphenyl)pyridin-2-carbonsäuremethylester (Verbindung I-275)
4-Amino-3-chlor-6-(4-cyano-2-fluor-3-methoxyphenyl)pyridin-2-carbonsäuremethylester (Verbindung I-276)
4-Amino-3-chlor-6-(2,4-dichlor-3-ethoxyphenyl)pyridin-2-carbonsäuremethylester (Verbindung I-277)
4-Amino-3-chlor-6-[4-chlor-2-fluor-3-(2,2-difluorethoxy)phenyl]pyridin-2-carbonsäuremethylester (Verbindung I-278)
4-Amino-3-chlor-6-(4-chlor-2-fluor-5-ethoxyphenyl)pyridin-2-carbonsäuremethylester (Verbindung I-279)
4-Amino-3-chlor-6-[2,4-dichlor-3-(2,2-difluorethoxy)phenyl]pyridin-2-carbonsäuremethylester (Verbindung I-280)
4-Amino-3-chlor-6-[4-chlor-2-fluor-3-(methoxyethoxy)phenyl]pyridin-2-carbonsäuremethylester (Verbindung I-281)
4-Amino-3-chlor-5-fluor-6-(2-fluor-3,4-methylendioxyphenyl)pyridin-2-carbonsäuremethylester (Verbindung I-282)
4-Amino-3-chlor-6-(2,4-dichlor-3-methylthiophenyl)pyridin-2-carbonsäuremethylester (Verbindung I-283)
4-Amino-3-chlor-5-fluor-6-(4-chlor-2-fluor-3-methoxyphenyl)pyridin-2-carbonsäuremethylester (Verbindung I-284)
4-Amino-3-chlor-5-fluor-6-(4-chlor-2-fluor-5-methoxyphenyl)pyridin-2-carbonsäuremethylester (Verbindung I-285)
4-Amino-3-chlor-6-(4-chlor-3-dimethylamino-2-fluorphenyl)pyridin-2-carbonsäuremethylester (Verbindung I-286)
4-Amino-3-chlor-6-[4-chlor-3-(diethylamino)-2-fluorphenyl]pyridin-2-carbonsäuremethylester (Verbindung I-287)
4-Acetylamino-3-chlor-6-(4-chlor-2-fluor-5-methoxyphenyl)pyridin-2-carbonsäuremethylester (Verbindung I-288)
4-Acetylamino-3-chlor-6-(4-chlor-2-fluor-3-methylphenyl)pyridin-2-carbonsäuremethylester (Verbindung I-289)
4-Acetylamino-3-chlor-6-(4-chlor-2-fluor-3-methoxyphenyl)pyridin-2-carbonsäuremethylester (Verbindung I-290)
4-Acetylammo-3-chlor-6-(4-chlor-2-fluor-3-ethoxyphenyl)pyridin-2-carbonsäuremethylester (Verbindung I-291)
4-Acetylamino-3-chlor-6-(2,4-dichlor-3-methoxyphenyl)pyridin-2-carbonsäuremethylester (Verbindung I-292)
4-Acetylamino-3-chlor-6-(2,4-difluor-3-methylphenyl)-pyridin-2-carbonsäuremethylester (Verbindung I-293)
4-Acetylamino-3-chlor-6-(2,4-dichlor-3-methylphenyl)pyridin-2-carbonsäuremethylester (Verbindung I-294)
4-Amino-3-chlor-6-[4-chlor-2-fluor-3-(1-fluor-1-methylethyl)phenyl]-pyridin-2-carbonsäuremethylester (Verbindung I-295)
4-Amino-3-chlor-6-(4-chlor-5-dimethylamino-2-fluorphenyl)pyridin-2-carbonsäuremethylester (Verbindung I-296)
4-Amino-6-(4-brom-2-fluor-3-methoxyphenyl)-3-chlor-pyridin-2-carbonsäuremethylester (Verbindung I-297)
4-Acetylamino-3-chlor-6-(2,4-difluor-3-methoxyphenyl)pyridin-2-carbonsäuremethylester (Verbindung I-298)
4-Acetylamino-3-chlor-6-(2-chlor-4-fluor-3-methoxyphenyl)pyridin-2-carbonsäuremethylester (Verbindung I-299)
4-Acetylamino-3-chlor-6-[2,4-dichlor-3-(difluormethyl)phenyl]pyridin-2-carbonsäuremethylester (Verbindung I-300)
4-Acetylamino-3-chlor-6-[4-chlor-2-fluor-3-(1,2,2,2-tetrafluorethyl)phenyl)pyridin-2-carbonsäuremethylester (Verbindung I-301)
4-Acetylamino-3-chlor-6-[4-chlor-2-fluoro-3-(1-fluorpropyl)phenyl]pyridin-2-carbonsäuremethylester (Verbindung I-302)
4-Acetylamino-3-chlor-6-(2,3,4-trifluorphenyl)pyridin-2-carbonsäuremethylester (Verbindung I-303)
4-Acetylamino-3-chlor-6-(4-chlor-2-fluor-3-methoxymethoxyphenyl)pyridin-2-carbonsäuremethylester (Verbindung I-304)
4-Acetylamino-3-chlor-6-(4-chlor-2-fluor-3-difluormethoxyphenyl)pyridine-2-carbonsäuremethylester (Verbindung I-305)
4-Amino-3-chloro-6-(2-fluor-3-methoxy-4-methylphenyl)pyridin-2-carbonsäuremethylester (Verbindung I-306)
4-Amino-3-chlor-6-[2,4-dichlor-3-(dimethylamino)phenyl]pyridin-2-carbonsäuremethylester (Verbindung I-307)
4-Amino-3-chlor-6-[4-chlor-2-fluor-3-(methylamino)phenyl]pyridin-2-carbonsäuremethylester (Verbindung I-308)
4-Amino-3-chlor-6-[4-chlor-2-fluor-3-(methoxycarbonyl)phenyl]pyridin-2-carbonsäuremethylester (Verbindung I-309)
4-Acetylamino-3-chlor-6-(4-chlor-2,6-difluor-3-methoxyphenyl)pyridin-2-carbonsäuremethylester (Verbindung I-310)
4-Amino-3-chlor-6-(4-chlor-2-fluor-3-ethoxyphenyl)-pyridin-2-carbonsäuremethylester (Verbindung I-311)
4-Amino-3-chlor-6-(4-chlor-2-fluor-3-methoxyphenyl)pyridin-2-carbonsäuremethylester (Verbindung I-312)
4-Amino-3-chlor-6-(4-chlor-2-fluor-5-methoxyphenyl)pyridin-2-carbonsäuremethylester (Verbindung I-313)
4-Amino-3-chlor-6-(2,4-dichlor-3-methoxyphenyl)pyridin-2-carbonsäuremethylester (Verbindung I-314)
4-Amino-3-chlor-6-(2-fluor-3-methoxy-4-trifluormethylphenyl)pyridin-2-carbonsäuremethylester (Verbindung I-315)
4-Amino-3-chlor-6-(2-fluor-3,4-methylendioxyphenyl)pyridin-2-carbonsäuremethylester (Verbindung I-316)
4-Amino-3-chlor-6-(2,4-difluor-3-methylphenyl)pyridin-2-carbonsäuremethylester (Verbindung I-317)
4-Amino-3-chlor-6-(2,4-dichlor-3-methylphenyl)pyridin-2-carbonsäuremethylester (Verbindung I-318)
4-Amino-3-chlor-6-(4-chlor-2-fluor-3-methylphenyl)pyridin-2-carbonsäuremethylester (Verbindung I-319)
4-Amino-3-chlor-6-[4-chlor-3-(dimethylamino)-2,6-difluorphenyl]pyridin-2-carbonsäuremethylester (Verbindung I-320)
4-Amino-3-chlor-6-(2,6-difluor-3-methoxy-4-methylphenyl)pyridin-2-carbonsäuremethylester (Verbindung I-321)
4-Amino-6-(4-bromo-2-chlor-3-methoxyphenyl)-3-chlorpyridin-2-carbonsäuremethylester (Verbindung I-322)
4-Amino-3-chlor-6-(2-chlor-4-difluormethyl-6-fluor-3-methoxyphenyl)pyridin-2-carbonsäuremethylester (Verbindung I-323)
4-Amino-3-chlor-6-(4-chlor-3-difluormethyl-2,6-difluorphenyl)pyridin-2-carbonsäure methylester (Verbindung I-324)
4-Amino-3-chlor-6-(2-chlor-4,6-difluor-3-methoxyphenyl)pyridin-2-carbonsäuremethylester (Verbindung I-325)
4-Amino-3-chlor-6-(2,4,6-trifluor-3-methoxyphenyl)pyridin-2-carbonsäuremethylester (Verbindung I-326)
4-Amino-3-chlor-6-(2,4-dichlor-6-fluor-3-methoxyphenyl)pyridin-2-carbonsäuremethylester (Verbindung I-327)
4-Amino-3-chlor-6-(4-chlor-2,6-difluor-3-methoxyphenyl)pyridin-2-carbonsäuremethylester (Verbindung I-328)
4-Amino-3-chlor-6-(4-chlor-2,6-difluor-3-ethoxyphenyl)pyridin-2-carbonsäuremethylester (Verbindung I-329)
4-Amino-3-chlor-6-(4-chlor-3-butoxy-2-fluorphenyl)pyridin-2-carbonsäuremethylester (Verbindung I-330)
4-Amino-3-chlor-6-[4-chlor-2-fluor-3-(1-fluorethyl)phenyl]pyridin-2-carbonsäuremethylester (Verbindung I-331)
4-Amino-3-chlor-6-(2,4-dichlor-3-difluormethylphenyl)pyridin-2-carbonsäuremethylester (Verbindung I-332)
4-Amino-3-chlor-6-[2,4-dichlor-3-(1-fluor-1-ethyl)phenyl]pyridin-2-carbonsäuremethylester (Verbindung I-333)
4-Amino-3-chlor-6-(4-chlor-3-ethyl-2-fluorphenyl)pyridin-2-carbonsäuremethylester (Verbindung I-334)
4-Amino-3-chlor-6-[4-chlor-2-fluor-3-(1,2,2,2-tetrafluorethyl)phenyl]-pyridin-2-carbonsäuremethylester (Verbindung I-335)
4-Amino-3-chlor-6-[4-chlor-2-fluor-3-(1-fluorpropyl)phenyl]pyridin-2-carbonsäuremethylester (Verbindung I-336)
4-Amino-3-chlor-6-(2,3,4-trifluorphenyl)pyridin-2-carbonsäuremethylester (Verbindung I-337)
4-Amino-3-chlor-6-(4-chlor-2-fluor-3-methoxymethoxyphenyl)pyridin-2-carbonsäuremethylester (Verbindung I-338)
4-Amino-3-chlor-6-(4-chlor-2-fluor-3-difluormethoxyphenyl)pyridin-2-carbonsäuremethyl ester (Verbindung I-339)
4-Amino-3-chlor-6-(2,4-difluor-3-methoxyphenyl)pyridin-2-carbonsäuremethylester (Verbindung I-340)
4-Amino-3-chlor-6-(4-difluormethyl-2-fluor-3-methoxyphenyl)pyridin-2-carbonsäuremethylester (Verbindung I-341)
4-Amino-3-chlor-6-(2-fluor-4-fluormethyl-3-methoxyphenyl)pyridin-2-carbonsäuremethylester (Verbindung I-342)
4-Amino-3-chlor-6-(2,4-difluor-5-methoxyphenyl)pyridin-2-carbonsäuremethylester (Verbindung I-343)
4-Amino-3-chlor-6-(2-chlor-4-fluor-3-methoxyphenyl)pyridin-2-carbonsäuremethylester (Verbindung I-344)
4-Amino-3-chlor-6-(4-chlor-2,6-difluor-3-methylphenyl)pyridin-2-carbonsäuremethylester (Verbindung I-345)
4-Amino-6-(2-brom-4-chlor-3-methoxyphenyl)-3-chtorpyridin-2-carbonsäuremethylester (Verbindung I-346)
4-Amino-6-(4-brom-2,6-difluor-3-methoxyphenyl)-3-chlorpyridin-2-carbonsäuremethylester (Verbindung I-347)
4-Amino-3-chlor-6-(3-difluormethyl-2,4,6-trifluorphenyl)pyridin-2-carbonsäuremethylester (Verbindung I-348)
4-Amino-3-chlor-6-(2-chlor-4-difluormethyl-3-methoxyphenyl)pyridin-2-carbonsäuremethylester (Verbindung I-349)
4-Amino-3-chlor-6-(2,4-difluor-3-ethoxyphenyl)pyridin-2-carbonsäuremethylester (Verbindung I-350)
4-Amino-3-chlor-6-(4-chlor-3-cyclopropyl-2-fluorphenyl)pyridin-2-carbonsäuremethylester (Verbindung I-351)
4-Amino-3-chlor-6-[4-chlor-2-fluor-3-(2,2,2-trifluoracetyl)phenyl]pyridin-2-carbonsäuremethylester (Verbindung I-352)
4-Amino-3-chlor-6-(4-chlor-2-fluor-3-methansulfinylphenyl)pyridin-2-carbonsäuremethylester (Verbindung I-353)
4-Amino-3-chlor-6-(4-chlor-2-fluor-3-methansulfonylphenyl)pyridin-2-carbonsäuremethylester (Verbindung I-354)
4-Amino-3-chlor-6-(4-chlor-2-fluor-3-fluormethylthiophenyl)pyridin-2-carbonsäuremethylester (Verbindung I-355)
4-Amino-3-chlor-6-(4-chlor-2-fluor-3-methoxyphenyl)pyridin-2-carbonsäureethylester (Verbindung I-356)
4-Amino-3-chlor-6-(4-chlor-2-fluor-3-methoxyphenyl)pyridin-2-carbonsäure-(2-butoxy-ethyl)ester (Verbindung I-357)
4-Amino-3-chlor-6-(4-chlor-2,6-difluor-3-methoxyphenyl)pyridin-2-carbonsäure-n-butylester (Verbindung I-358)
4-Amino-3-chlor-6-(2,4-dichlor-3-methoxyphenyl)pyridin-2-carbonsäure-n-butylester (Verbindung I-359)
4-Amino-3-chlor-6-(4-brom-2-fluor-3-methoxyphenyl)pyridin-2-carbonsäure-n-butylester (Verbindung I-360)
4-Amino-3-chlor-6-[4-chlor-2-fluor-3-(1-fluorethyl)phenyl]pyridin-2-carbonsäure-n-butylester (Verbindung I-361)
4-Amino-3-chlor-6-(4-chlor-2-fluor-3-methoxyphenyl)pyridin-2-carbonsäure-(2-butoxy-ethyl)ester (Verbindung I-362)
4-Amino-3-chlor-6-(2,6-difluor-3-methoxy-4-methylphenyl)pyridin-2-carbonsäure (Verbindung I-363)
4-Amino-3-chlor-6-(4-chlor-2,6-difluor-3-dimethylaminophenyl)pyridin-2-carbonsäure (Verbindung I-364)
4-Amino-3-chlor-6-(4-cyano-2,6-difluor-3-methoxyphenyl)pyridin-2-carbonsäuremethylester (Verbindung I-365)
4-Amino-3-chlor-6-(4-chlor-2-fluor-3-(2,2-difluorethoxy)phenyl)pyridin-2-carbonsäure (Verbindung I-366)
4-Amino-3-chlor-6-(2,4-difluor-3-methylphenyl)pyridin-2-carbonsäure (Verbindung I-367)
4-Amino-3-chlor-6-(2,4-dichlor-3-methylphenyl)pyridin-2-carbonsäure (Verbindung I-368)
4-Amino-3-chlor-6-(4-chlor-2-fluor-3-methylphenyl)pyridin-2-carbonsäure (Verbindung I-369)
4-Amino-3-chlor-6-(4-chlor-2-fluor-3-methoxyphenyl)pyridin-2-carbonsäure (Verbindung I-370)
4-Amino-3-chlor-6-(4-chlor-2-fluor-5-methoxyphenyl)pyridin-2-carbonsäure (Verbindung I-371)
4-Amino-3-chlor-6-(4-chlor-2-fluor-3-ethoxyphenyl)pyridin-2-carbonsäure (Verbindung I-372)
4-Amino-3-chlor-6-(2,4-dichlor-3-methoxyphenyl)pyridin-2-carbonsäure (Verbindung I-373)
4-Amino-3-chlor-6-(4-chlor-2-fluor-3-methylthiophenyl)pyridin-2-carbonsäure (Verbindung I-374)
4-Amino-3-chlor-6-(4-chlor-2-fluor-3 -methoxymethylphenyl)pyridin-2-carbonsäure (Verbindung I-375)
4-Amino-3-chlor-6-(4-chlor-2-fluor-3-difluormethylphenyl)pyridin-2-carbonsäure (Verbindung I-376)
4-Amino-3-chlor-6-(2-fluor-3-methoxy-4-trifluormethylphenyl)pyridin-2-carbonsäure (Verbindung I-377)
4-Amino-3-chlor-6-(2-fluor-3,4-methylendioxyphenyl)pyridin-2-carbonsäure (Verbindung I-378)
4-Amino-3-chlor-6-(4-chlor-2-fluor-5-ethoxyphenyl)pyridin-2-carbonsäure (Verbindung I-379)
4-Amino-3-chlor-6-(2,4-dichlor-3-methoxyphenyl)pyridin-2-carbonsäure (Verbindung I-380)
4-Amino-3-chlor-6-(4-chlor-5-dimethylamino-2-fluorphenyl)pyridin-2-carbonsäure (Verbindung I-381)
4-Amino-3-chlor-6-(4-chlor-3-dimethylamino-2-fluorphenyl)pyridin-2-carbonsäure (Verbindung I-382)
4-Amino-3-chlor-6-(4-chlor-2-fluor-3-methoxyethoxyphenyl)pyridin-2-carbonsäure (Verbindung I-383)
4-Amino-3-chlor-6-(4-chlor-2-fluor-3-fluormethylphenyl)pyridin-2-carbonsäure (Verbindung I-384)
4-Amino-3-chlor-5-fluor-6-(2-fluor-3,4-methylendioxyphenyl)pyridin-2-carbonsäure (Verbindung I-385)
4-Amino-3-chlor-6-[4-chlor-3-(diethylamino)-2-fluorphenyl]pyridin-2-carbonsäure (Verbindung I-386)
4-Amino-3-chlor-6-[2,4-dichlor-3-(dimethylamino)phenyl]pyridin-2-carbonsäure (Verbindung I-387)
4-Amino-3-chlor-6-[4-chlor-2-fluor-3-(methylamino)phenyl]pyridin-2-carbonsäure (Verbindung I-388)
4-Amino-3-chlor-6-(2-fluor-3-methoxy-4-methylphenyl)pyridin-2-carbonsäure (Verbindung I-389)
4-Amino-6-(4-brom-2-fluor-3-methoxyphenyl)-3-chlorpyridin-2-carbonsäure (Verbindung I-390)
4-Amino-6-(4-brom-2-chlor-3-methoxyphenyl)-3-chlorpyridin-2-carbonsäure (Verbindung I-391)
4-Amino-3-chlor-6-(4-chlor-2-fluor-5-methoxyphenyl)-5-fluorpyridin-2-carbonsäure (Verbindung I-392)
4-Amino-3-chlor-6-(4-chlor-2-fluor-3-methoxyphenyl)-5-fluorpyridin-2-carbonsäure (Verbindung I-393)
4-Amino-3-chlor-6-(4-chlor-3-butoxy-2-fluorphenyl)pyridin-2-carbonsäure (Verbindung I-394)
4-Amino-6-[2,4-dichlor-3-(1-fluorethyl)phenyl]pyridin-2-carbonsäure (Verbindung I-395)
4-Amino-3-chlor-6-(2,4-dichlor-3-difluormethylphenyl)pyridin-2-carbonsäure (Verbindung I-396)
4-Amino-3-chlor-6-[2,4-dichlor-3-(1-fluor-1-methylethyl)phenyl]pyridin-2-carbonsäure (Verbindung I-397)
4-Amino-3-chlor-6-(4-chlor-3-ethyl-2-fluorphenyl)pyridin-2-carbonsäure (Verbindung I-398)
4-Amino-3-chlor-6-[4-chlor-2-fluor-3-(1,2,2,2-tetrafluorethyl)phenyl]pyridin-2-carbonsäure (Verbindung I-399)
4-Amino-3-chlor-6-[4-chlor-2-fluor-3-(1-fluorpropyl)phenyl]pyridin-2-carbonsäuremethylester (Verbindung I-400)
4-Amino-3-chlor-6-(2,3,4-trifluorphenyl)pyridin-2-carbonsäure (Verbindung I-401)
4-Amino-3-chlor-6-(4-chlor-2-fluor-3-methoxymethoxyphenyl)pyridin-2-carbonsäure (Verbindung I-402)
4-Amino-3-chlor-6-(4-chlor-2,6-difluor-3-methoxyphenyl)pyridin-2-carbonsäure (Verbindung I-403)
4-Amino-3-chlor-6-(4-chlor-3-difluormethoxy-2-fluorphenyl)pyridin-2-carbonsäure (Verbindung I-404)
4-Amino-3-chlor-6-(4-chlor-2-fluor-3-methoxyphenyl)pyridin-2-carbonsäure, Triethylamin-Salz (Verbindung I-405)
4-Amino-3-chlor-6-(2,4-dichlor-3-methoxyphenyl)pyridin-2-carbonsäure, Triethylamin-Salz (Verbindung I-406)

Die Aufwandmenge der Herbizide der allgemeinen Formel (I) (A) kann mit den äußeren Bedingungen wie Temperatur, Feuchtigkeit, der Art des verwendeten Herbizids in einem weiten Bereich variieren, beispielsweise zwischen 0,001 g und 2000 g a.i./ha (ai/ha bedeutet dabei im folgenden .Aktivsubstanz pro Hektar" = bezogen auf 100%igen Wirkstoff).

Bei Anwendungen mit Aufwandmengen von 0,01 g bis 1000 g a.i./ha der Herbizide der allgemeinen Formel (I) (A) wird im Vor- und Nachauflaufverfahren ein relativ breites Spektrum an Schadpflanzen bekämpft, z.B. annuellen und perennierenden mono- oder dikotylen Unkräutern sowie an unerwünschten Kulturpflanzen. Bei den erfindungsgemäßen Kombinationen liegen die Aufwandmengen in der Regel niedriger, z. B. im Bereich von 0,1 g bis 800 g a.i./ha, vorzugsweise 1 g bis 500 g a.i./ha, besonders bevorzugt 10 g bis 400 g a.i./ha.

Die Herbizide der allgemeinen Formel (I) sind zur Bekämpfung von Schadpflanzen, z.B. in Pflanzenkulturen geeignet, beispielsweise in wirtschaftlich bedeutenden Ackerbaukulturen z.B. monokotylen Ackerbaukulturen wie Getreide (z.B. Weizen, Gerste, Roggen, Hafer), Reis, Mais, Hirse, oder dikotylen Ackerbaukulturen wie Zuckerrübe, Raps, Baumwolle, Sonnenblume und Leguminosen z.B. der Gattungen Glycine (z.B. Glycine max. (Soja) wie nicht-transgene Glycine max. (z.B. konventionelle Sorten wie STS-Sorten) oder transgene Glycine max. (z.B. RR-Soja oder LL-Soja) und deren Kreuzungen), Phaseolus, Pisum, Vicia und Arachis, oder Gemüsekulturen aus verschiedenen botanischen Gruppen wie Kartoffel, Lauch, Kohl, Karotte, Tomate, Zwiebel, sowie Dauer- und Plantagenkulturen wie Kern- und Steinobst, Beerenobst, Wein, Hevea, Bananen, Zuckerrohr, Kaffee, Tee, Citrus, Nussplantagen, Rasen, Palmenkulturen und Forstkulturen. Für die Anwendung der erfindungsgemäßen Herbizid-Safener-Kombinationen (A)+(B) sind diese Kulturen ebenfalls bevorzugt, besonders bevorzugt ist der Einsatz in Getreide (z.B. Weizen, Gerste, Roggen, Hafer), Reis, Mais, Hirse, Zuckerrübe, Zuckerrohr, Sonnenblume, Raps und Baumwolle. Die Herbizid-Safener-Kombinationen (A)+(B) sind auch einsetzbar in toleranten und nicht toleranten Mutantenkulturen und toleranten und nicht toleranten transgenen Kulturen, vorzugsweise von Mais, Reis, Getreide, Raps und Soja, z.B. solche die gegen Imidazolinon-Herbizide, Atrazin, Glufosinate oder Glyphosate resistent sind.

Die Verbindungen der allgemeinen Formel (I) sind aus der WO 03/011853 A bekannt und können nach den dort beschriebenen Verfahren erhalten werden.

### Safener (B):

Unter den als Komponente (B) enthaltenen Safenern werden Verbindungen verstanden, die geeignet sind, phytotoxische Wirkungen von Pflanzenschutzmittelwirkstoffen wie Herbiziden an Kulturpflanzen zu reduzieren.

Im Rahmen der vorliegenden Erfindung werden die Verbindungen der allgemeinen Formel (I) mit folgenden Safener-Verbindungen kombiniert:
- S1): Verbindungen aus der Gruppe heterocyclischer Carbonsäurederivate:
- S1^{a}): Verbindungen vom Typ der Dichlorphenylpyrazolin-3-carbonsäure (S1^{a}), vorzugsweise Verbindungen wie
1-(2,4-Dichlorphenyl)-5-(ethoxycarbonyl)-5-methyl-2-pyrazolin-3-carbonsäure,
1-(2,4-Dichlorphenyl)-5-(ethoxycarbonyl)-5-methyl-2-pyrazolin-3-carbonsäure-ethylester (S1-1) ("Mefenpyr-diethyl"), und verwandte Verbindungen, wie sie in der WO-A-91/07874 beschrieben sind;
- S1^{b}): Derivate der Dichlorphenylpyrazolcarbonsäure (S1^{b}), vorzugsweise Verbindungen wie 1-(2,4-Dichlorphenyl)-5-methylpyrazol-3-carbonsäureethylester (S1-2), 1-(2,4-Dichlorphenyl)-5-isopropylpyrazol-3-carbonsäureethylester (S1-3), 1-(2,4-Dichlorphenyl)-5-(1,1-dimethyl-ethyl)pyrazol-3-carbonsäure-ethylester (S1-4) und verwandte Verbindungen, wie sie in EP-A-333 131 und EP-A-269 806 beschrieben sind;
- S1^{c}): Derivate der 1,5-Diphenylpyrazol-3-carbonsäure (S1^{c}), vorzugsweise Verbindungen wie
1-(2,4-Dichlorphenyl)-5-phenylpyrazol-3-carbonsäure-ethylester (S1-5),
1-(2-Chlorphenyl)-5-phenylpyrazol-3-carbonsäuremethylester (S1-6) und verwandte Verbindungen wie sie beispielsweise in der EP-A-268554 beschrieben sind;
- S1^{d}): Verbindungen vom Typ der Triazolcarbonsäuren (S1^{d}), vorzugsweise Verbindungen wie Fenchlorazol(-ethylester), d.h.
1-(2,4-Dichlorphenyl)-5-trichlormethyl-(1H)-1,2,4-triazol-3-carbonsäure-ethylester (S1-7), und verwandte Verbindungen, wie sie in EP-A-174 562 und EP-A-346 620 beschrieben sind;
- S1^{e}): Verbindungen vom Typ der 5-Benzyl- oder 5-Phenyl-2-isoxazolin-3- carbonsäure, oder der 5,5-Diphenyl-2-isoxazolin-3-carbonsäure(S1^{e}), vorzugsweise Verbindungen wie 5-(2,4-Dichlorbenzyl)-2-isoxazolin-3-carbonsäureethylester (S1-8) oder 5-Phenyl-2-isoxazolin-3-carbonsäureethylester (S1-9) und verwandte Verbindungen, wie sie in WO-A-91/08202 beschrieben sind, bzw. 5,5-Diphenyl-2-isoxazolin-carbonsäure (S1-10) oder 5,5-Diphenyl-2-isoxazolin-carbonsäureethylester (S1-11) ("Isoxadifen-ethyl") oder -n-propylester (S1-12) oder der 5-(4-Fluorphenyl)-5-phenyl-2-isoxazolin-3-carbonsäureethylester (S1-13), wie sie in der Patentanmeldung WO-A-95/07897 beschrieben sind.
- S2): Verbindungen aus der Gruppe der 8-Chinolinyloxyderivate (S2):
- S2^{a}): Verbindungen vom Typ der 8-Chinolinoxyessigsäure (S2^{a}), vorzugsweise (5-Chlor-8-chinolinoxy)essigsäure-(1-methylhexyl)-ester ("Cloquintocet-mexyl") (S2-1), (5-Chlor-8-chinolinoxy)essigsäure-(1,3-dimethyl-but-1-yl)-ester (S2-2), (5-Chlor-8-chinolinoxy)essigsäure-4-allyl-oxy-butylester (S2-3), (5-Chlor-8-chinolinoxy)essigsäure-1-allyloxy-prop-2-ylester (S2-4), (5-Chlor-8-chinolinoxy)essigsäureethylester (S2-5), (5-Chlor-8-chinolinoxy)essigsäuremethylester (S2-6), (5-Chlor-8-chinolinoxy)essigsäureallylester (S2-7), (5-Chlor-8-chinolinoxy)essigsäure-2-(2-propyliden-iminoxy)-1-ethylester (S2-8), (5-Chlor-8-chinolinoxy)essigsäure-2-oxo-prop-1-ylester (S2-9) und verwandte Verbindungen, wie sie in EP-A-86 750, EP-A-94 349 und EP-A-191 736 oder EP-A-0 492 366 beschrieben sind, sowie (5-Chlor-8-chinolinoxy)essigsäure (S2-10), deren Hydrate und Salze, beispielsweise deren Lithium-, Natrium- Kalium-, Kalzium-, Magnesium-, Aluminium-, Eisen-, Ammonium-, quartäre Ammonium-, Sulfonium-, oder Phosphoniumsalze wie sie in der WO-A-2002/34048 beschrieben sind;
- S2^{b}): Verbindungen vom Typ der (5-Chlor-8-chinolinoxy)malonsäure (S2^{b}), vorzugsweise Verbindungen wie (5-Chlor-8-chinolinoxy)malonsäurediethylester, (5-Chlor-8-chinolinoxy)malonsäurediallylester, (5-Chlor-8-chinolinoxy)malonsäure-methyl-ethylester und verwandte Verbindungen, wie sie in EP-A-0 582 198 beschrieben sind.
- S3): Wirkstoffe vom Typ der Dichloracetamide (S3), die häufig als Vorauflaufsafener (bodenwirksame Safener) angewendet werden, wie z. B.
"Dichlormid" (N,N-Diallyl-2,2-dichloracetamid) (S3-1),
"R-29148" (3-Dichloracetyl-2,2,5-trimethyl-1,3-oxazolidin) der Firma Stauffer (S3-2),
"R-28725" (3-Dichloracetyl-2,2,-dimethyl-1,3-oxazolidin) der Firma Stauffer (S3-3),
"Benoxacor" (4-Dichloracetyl-3,4-dihydro-3-methyl-2H-1,4-benzoxazin) (S3-4),
"PPG-1292" (N-Allyl-N-[(1,3-dioxolan-2-yl)-methyl]-dichloracetamid) der Firma PPG Industries (S3-5),
"DKA-24" (N-Allyl-N-[(allylaminocarbonyl)methyl]-dichloracetamid) der Firma Sagro-Chem (S3-6),
"AD-67" oder "MON 4660" (3-Dichloracetyl-1-oxa-3-aza-spiro[4,5]decan) der Firma Nitrokemia bzw. Monsanto (S3-7),
"TI-35" (1-Dichloracetyl-azepan) der Firma TRI-Chemical RT (S3-8), "Diclonon" (Dicyclonon) (synonym: "BAS145138" oder "LAB145138") (RS)-1-Dichloracetyl-3,3,8a-trimethylperhydropyrrolo[1,2-a]pyrimidin-6-on der Firma BASF (S3-9),
"Furilazol" oder "MON 13900" ((RS)-3-Dichloracetyl-5-(2-furyl)-2,2-dimethyloxazolidin) (S3-10), sowie dessen (R)-Isomer (S3-11).
- S4): Verbindungen aus der Klasse der Acylsulfonamide (S4):
- S4^{a}): N-Acylsulfonamide der Formel (S4^{a}) und deren Salze wie sie in der WO-A-97/45016 beschrieben sind, 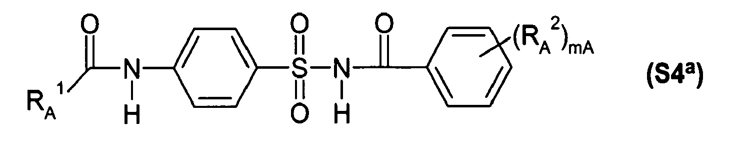 worin
R_{A}¹ (C₁-C₆)Alkyl, (C₃-C₆)Cycloalkyl, wobei die 2 letztgenannten Reste durch V_{A} Substituenten aus der Gruppe Halogen, (C₁-C₄)Alkoxy, (C₁-C₆)Haloalkoxy und (C₁-C₄)Alkylthio und im Falle cyclischer Reste auch durch (C₁-C₄)Alkyl und (C₁-C₄)Haloalkyl substituiert sind;
R_{A}² Halogen, (C₁-C₄)Alkyl, (C₁-C₄)Alkoxy, CF₃;
m_{A} 1 oder 2;
v_{A} ist 0, 1, 2 oder 3 bedeuten;
- S4^{b}): Verbindungen vom Typ der 4-(Benzoylsulfamoyl)benzamide der Formel (S4^{b}) und deren Salze, wie sie in der WO-A-99/16744 beschrieben sind, 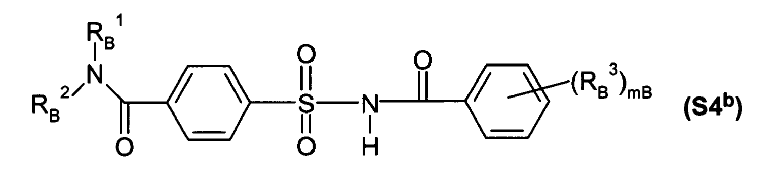 worin
R_{B}¹, R_{B}² unabhängig voneinander Wasserstoff, (C₁-C₆)Alkyl, (C₃-C₆)Cycloalkyl, (C₃-C₆)Alkenyl, (C₃-C₆)Alkinyl,
R_{B}³ Halogen, (C₁-C₄)Alkyl, (C₁-C₄)Haloalkyl oder (C₁-C₄)Alkoxy und
m_{B} 1 oder 2 bedeuten, z.B. solche worin
R_{B}¹ = Cyclopropyl, R_{B}² = Wasserstoff und (R_{B}³) = 2-OMe ist (S4-1, "Cyprosulfamide"),
R_{B}¹ = Cyclopropyl, R_{B}² = Wasserstoff und (R_{B}³) = 5-CI-2-OMe ist (S4-2),
R_{B}¹ = Ethyl, R_{B}² = Wasserstoff und (R_{B}³) = 2-OMe ist (S4-3),
R_{B}¹ = Isopropyl, R_{B}² = Wasserstoff und (R_{B}³) = 5-CI-2-OMe ist (S4-4) und
R_{B}¹ = Isopropyl, R_{B}² = Wasserstoff und (R_{B}³) = 2-OMe ist (S4-5).
- S4^{c}): Verbindungen aus der Klasse der Benzoylsulfamoylphenylharnstoffe der Formel (S4^{c}), wie sie in der EP-A-365484 beschrieben sind 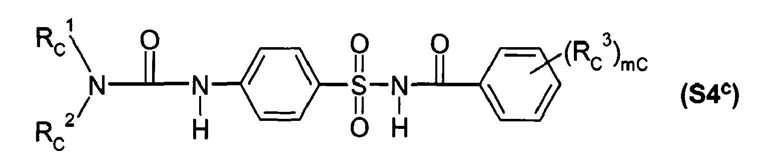 worin
R_{C}¹, R_{C}² unabhängig voneinander Wasserstoff, (C₁-C₈)Alkyl, (C₃-C₈)Cycloalkyl, (C₃-C₆)Alkenyl, (C₃-C₆)Alkinyl,
R_{C}³ Halogen, (C₁-C₄)Alkyl, (C₁-C₄)Alkoxy, CF₃
m_{C} 1 oder 2 bedeuten; beispielsweise
1-[4-(N-2-Methoxybenzoylsulfamoyl)phenyl]-3-methylharnstoff,
1-[4-(N-2-Methoxybenzoylsulfamoyl)phenyl]-3,3-dimethylharnstoff,
1-[4-(N-4,5-Dimethylbenzoylsulfamoyl)phenyl]-3-methylharnstoff.
- S5): Wirkstoffe aus der Klasse der Hydroxyaromaten und der aromatischaliphatischen Carbonsäurederivate (S5), z.B. 3,4,5-Triacetoxybenzoesäureethylester, 3,5-Dimethoxy-4-hydroxybenzoesäure, 3,5-Dihydroxybenzoesäure, 4-Hydroxysalicylsäure, 4-Fluorsalicyclsäure, 2-Hydroxyzimtsäure, 2,4-Dichlorzimtsäure, wie sie in der WO-A-2004/084631, WO-A-2005/015994, WO-A-2005/016001 beschrieben sind.
- S6): Wirkstoffe aus der Klasse der 1,2-Dihydrochinoxalin-2-one (S6), z.B. 1-Methyl-3-(2-thienyl)-1,2-dihydrochinoxalin-2-on, 1-Methyl-3-(2-thienyl)-1,2-dihydrochinoxalin-2-thion, 1-(2-Aminoethyl)-3-(2-thienyl)-1,2-dihydrochinoxalin-2-on-hydrochlorid, 1-(2-Methylsulfonylaminoethyl)-3-(2-thienyl)-1,2-dihydro-chinoxalin-2-on, wie sie in der WO-A-2005/112630 beschrieben sind.
- S7): Verbindungen aus der Klasse der Diphenylmethoxyessigsäurederivate (S7), z.B. Diphenylmethoxyessigsäuremethylester (CAS-Reg.Nr. 41858-19-9) (S7-1), Diphenylmethoxyessigsäureethylester oder Diphenylmethoxyessigsäure wie sie in der WO-A-98/38856 beschrieben sind.
- S8): Verbindungen der Formel (S8),wie sie in der WO-A-98/27049 beschrieben sind 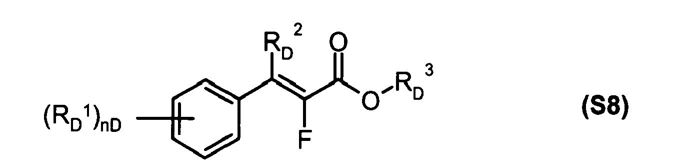 worin die Symbole und Indizes folgende Bedeutungen haben:
R_{D}¹ ist Halogen, (C₁-C₄)Alkyl, (C₁-C₄)Haloalkyl, (C₁-C₄)Alkoxy, (C₁-C₄)Haloalkoxy,
R_{D}² ist Wasserstoff oder (C₁-C₄)Alkyl
R_{D}³ ist Wasserstoff, (C₁-C₈)Alkyl, (C₂-C₄)Alkenyl, (C₂-C₄)Alkinyl, oder Aryl, wobei jeder der vorgenannten C-haltigen Reste unsubstituiert oder durch einen oder mehrere, vorzugsweise bis zu drei gleiche oder verschiedene Reste aus der Gruppe, bestehend aus Halogen und Alkoxy substituiert ist; oder deren Salze
n_{D} ist eine ganze Zahl von 0 bis 2.
- S9): Wirkstoffe aus der Klasse der 3-(5-Tetrazolylcarbonyl)-2-chinolone (S9), z.B. 1,2-Dihydro-4-hydroxy-1-ethyl-3-(5-tetrazolylcarbonyl)-2-chinolon (CAS-Regno: 219479-18-2), 1,2-Dihydro-4-hydroxy-1-methyl-3-(5-tetrazolylcarbonyl)-2-chinolon (CAS-Reg.Nr. 95855-00-8), wie sie in der WO-A-1999/000020 beschrieben sind.
- S10): Verbindungen der Formeln (S10^{a}) oder (S10^{b}) wie sie in der WO-A-2007/023719 und WO-A-2007/023764 beschrieben sind 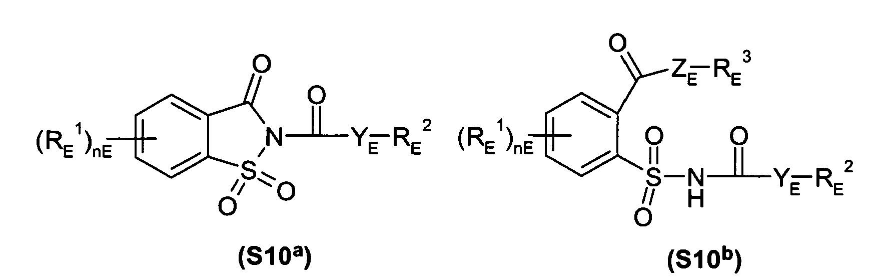 worin
R_{E}¹ Halogen, (C₁-C₄)Alkyl, Methoxy, Nitro, Cyano, CF₃, OCF₃
Y_{E}, Z_{E} unabhängig voneinander O oder S,
n_{E} eine ganze Zahl von 0 bis 4,
R_{E}² (C₁-C₁₆)Alkyl, (C₂-C₆)Alkenyl, (C₃-C₆)Cycloalkyl, Aryl; Benzyl, Halogenbenzyl,
R_{E}³ Wasserstoff oder (C₁-C₆)Alkyl bedeuten.
- S11): Wirkstoffe vom Typ der Oxyimino-Verbindungen (S11), die als Saatbeizmittel bekannt sind, wie z. B.
"Oxabetrinil" ((Z)-1,3-Dioxolan-2-ylmethoxyimino(phenyl)acetonitril) (S11-1), das als Saatbeiz-Safener für Hirse gegen Schäden von Metolachlor bekannt ist,
"Fluxofenim" (1-(4-Chlorphenyl)-2,2,2-trifluor-1-ethanon-O-(1,3-dioxolan-2-ylmethyl)-oxim) (S11-2), das als Saatbeiz-Safener für Hirse gegen Schäden von Metolachlor bekannt ist, und
"Cyometrinil" oder "CGA-43089" ((Z)-Cyanomethoxyimino(phenyl)acetonitril) (S11-3), das als Saatbeiz-Safener für Hirse gegen Schäden von Metolachlor bekannt ist.
- S12): Wirkstoffe aus der Klasse der Isothiochromanone (S12), wie z.B. Methyl-[(3-oxo-1H-2-benzothiopyran-4(3H)-yliden)methoxy]acetate (CAS-Reg.Nr. 205121-04-6) (S12-1) und verwandte Verbindungen aus WO-A-1998/13361.
- S13): Eine oder mehrere Verbindungen aus Gruppe (S13): "Naphthalic anhydrid" (1,8-Naphthalindicarbonsäureanhydrid) (S13-1), das als Saatbeiz-Safener für Mais gegen Schäden von Thiocarbamatherbiziden bekannt ist,
"Fenclorim" (4,6-Dichlor-2-phenylpyrimidin) (S13-2), das als Safener für Pretilachlor in gesätem Reis bekannt ist,
"Flurazole" (Benzyl-2-chlor-4-trifluormethyl-1,3-thiazol-5-carboxylat) (S13-3), das als Saatbeiz-Safener für Hirse gegen Schäden von Alachlor und Metolachlor bekannt ist,
"CL 304415" (CAS-Reg.Nr. 31541-57-8)
(4-Carboxy-3,4-dihydro-2H-1-benzopyran-4-essigsäure) (S13-4) der Firma American Cyanamid, das als Safener für Mais gegen Schäden von Imidazolinonen bekannt ist,
"MG 191" (CAS-Reg.Nr. 96420-72-3) (2-Dichlormethyl-2-methyl-1,3-dioxolan) (S13-5) der Firma Nitrokemia, das als Safener für Mais bekannt ist,
"MG-838" (CAS-Reg.Nr. 133993-74-5)
(2-propenyl 1-oxa-4-azaspiro[4.5]decane-4-carbodithioate) (S13-6) der Firma Nitrokemia
"Disulfoton" (O,O-Diethyl S-2-ethylthioethyl phosphordithioat) (S13-7),
"Dietholate" (O,O-Diethyl-O-phenylphosphorotioat) (S13-8),
"Mephenate" (4-Chlorphenyl-methylcarbamat) (S13-9).
- S14): Wirkstoffe, die neben einer herbiziden Wirkung gegen Schadpflanzen auch Safenerwirkung an Kulturpflanzen wie Reis aufweisen, wie z. B.
"Dimepiperate" oder "MY-93" (S-1-Methyl-1-phenylethyl-piperidin-1-carbothioat), das als Safener für Reis gegen Schäden des Herbizids Molinate bekannt ist,
"Daimuron" oder "SK 23" (1-(1-Methyl-1-phenylethyl)-3-p-tolyl-harnstoff), das als Safener für Reis gegen Schäden des Herbizids Imazosulfuron bekannt ist (S14-1),
"Cumyluron" = "JC-940" (3-(2-Chlorphenylmethyl)-1-(1-methyl-1-phenylethyl)hamstoff, siehe JP-A-60087254), das als Safener für Reis gegen Schäden einiger Herbizide bekannt ist,
"Methoxyphenon" oder "NK 049" (3,3'-Dimethyl-4-methoxy-benzophenon), das als Safener für Reis gegen Schäden einiger Herbizide bekannt ist,
"CSB" (1-Brom-4-(chlormethylsulfonyl)benzol) von Kumiai, (CAS-Reg.Nr. 54091-06-4), das als Safener gegen Schäden einiger Herbizide in Reis bekannt ist.

Die zitierten Schriften enthalten ausführliche Angaben zu Herstellungsverfahren und Ausgangsmaterialien und nennen bevorzugte Verbindungen. Auf diese Schriften wird ausdrücklich Bezug genommen, sie gelten durch Zitat als Bestandteil dieser Beschreibung.

Beispiele für bevorzugte Kombinationen von herbiziden Wirkstoffen (A) und Safenern (B) sind in der folgenden Tabelle dargestellt:
(I-1) + (S1-1); (I-1) + (S1-2); (I-1) + (S1-3); (I-1) + (S1-4); (I-1) + (S1-5); (I-1) + (S1-6); (I-1) + (S1-7); (I-1) + (S1-8); (I-1) + (S1-9); (I-1) + (S1-10); (I-1) + (S1-11); (I-1) + (S1-12); (I-1) + (S1-13); (I-1) + (S2-1); (I-1) + (S2-2); (I-1) + (S2-3); (I-1) + (S2-4); (I-1) + (S2-5); (I-1) + (S2-6); (I-1) + (S2-7); (I-1) + (S2-8); (I-1) + (S2-9); (I-1) + (S2-10); (I-1) + (S3-1); (I-1) + (S3-2); (I-1) + (S3-3); (I-1) + (S3-4); (I-1) + (S3-5); (I-1) + (S3-6); (I-1) + (S3-7); (I-1) + (S3-8); (I-1) + (S3-9); (I-1) + (S3-10); (I-1) + (S3-11); (I-1) + (S4-1); (I-1) + (S4-2); (I-1) + (S4-3); (I-1) + (S4-4); (I-1) + (S4-5); (I-1) + (S7-1); (I-1) + (S11-1); (I-1) + (S11-2); (I-1) + (S11-3); (I-1) + (S12-1); (I-1) + (S13-1); (I-1) + (S13-2); (I-1) + (S13-3); (I-1) + (S13-4): (I-1) + (S13-5); (I-1) + (S13-6); (I-1) + (S13-7); (I-1) + (S13-8); (I-1) + (S13-9); (I-1) + (S14-1)
(I-2) + (S1-1); (I-2) + (S1-2); (I-2) + (S1-3); (I-2) + (S1-4); (I-2) + (S1-5); (I-2) + (S1-6); (I-2) + (S1-7); (I-2) + (S1-8); (I-2) + (S1-9); (I-2) + (S1-10); (I-2) + (S1-11); (I-2) + (S1-12); (I-2) + (S1-13); (I-2) + (S2-1); (I-2) + (S2-2); (I-2) + (S2-3); (I-2) + (S2-4); (I-2) + (S2-5); (I-2) + (S2-6); (I-2) + (S2-7); (I-2) + (S2-8); (I-2) + (S2-9); (I-2) + (S2-10); (I-2) + (S3-1); (I-2) + (S3-2); (I-2) + (S3-3); (I-2) + (S3-4); (I-2) + (S3-5); (I-2) + (S3-6); (I-2) + (S3-7); (I-2) + (S3-8); (I-2) + (S3-9); (I-2) + (S3-10); (I-2) + (S3-11); (I-2) + (S4-1); (I-2) + (S4-2); (I-2) + (S4-3); (I-2) + (S4-4); (I-2) + (S4-5); (I-2) + (S7-1); (I-2) + (S11-1); (I-2) + (S11-2); (I-2) + (S11-3); (I-2) + (S12-1); (I-2) + (S13-1); (I-2) + (S13-2); (I-2) + (S13-3); (I-2) + (S13-4): (I-2) + (S13-5); (I-2) + (S13-6); (I-2) + (S13-7); (I-2) + (S13-8); (I-2) + (S13-9); (I-2) + (S14-1)
(I-3) + (S1-1); (I-3) + (S1-2); (I-3) + (S1-3); (I-3) + (S1-4); (I-3) + (S1-5); (I-3) + (S1-6); (I-3) + (S1-7); (I-3) + (S1-8); (I-3) + (S1-9); (I-3) + (S1-10); (I-3) + (S1-11); (I-3) + (S1-12); (I-3) + (S1-13); (I-3) + (S2-1); (I-3) + (S2-2); (I-3) + (S2-3); (I-3) + (S2-4); (I-3) + (S2-5); (I-3) + (S2-6); (I-3) + (S2-7); (I-3) + (S2-8); (I-3) + (S2-9); (I-3) + (S2-10); (I-3) + (S3-1); (I-3) + (S3-2); (I-3) + (S3-3); (I-3) + (S3-4); (I-3) + (S3-5); (I-3) + (S3-6); (I-3) + (S3-7); (I-3) + (S3-8); (I-3) + (S3-9); (I-3) + (S3-10); (I-3) + (S3-11); (I-3) + (S4-1); (I-3) + (S4-2); (I-3) + (S4-3); (I-3) + (S4-4); (I-3) + (S4-5); (I-3) + (S7-1); (I-3) + (S11-1); (I-3) + (S11-2); (I-3) + (S11-3); (I-3) + (S12-1); (I-3) + (S13-1); (I-3) + (S13-2); (I-3) + (S13-3); (I-3) + (S13-4): (I-3) + (S13-5); (I-3) + (S13-6); (I-3) + (S13-7); (I-3) + (S13-8); (i-3) + (S13-9); (I-3) + (S14-1)
(I-4) + (S1-1); (I-4) + (S1-2); (I-4) + (S1-3); (I-4) + (S1-4); (I-4) + (S1-5); (I-4) + (S1-6); (I-4) + (S1-7); (I-4) + (S1-8); (I-4) + (S1-9); (I-4) + (S1-10); (I-4) + (S1-11); (I-4) + (S1-12); (I-4) + (S1-13); (I-4) + (S2-1); (I-4) + (S2-2); (I-4) + (S2-3); (I-4) + (S2-4); (I-4) + (S2-5); (I-4) + (S2-6); (I-4) + (S2-7); (I-4) + (S2-8); (I-4) + (S2-9); (I-4) + (S2-10); (I-4) + (S3-1); (I-4) + (S3-2); (I-4) + (S3-3); (I-4) + (S3-4); (I-4) + (S3-5); (I-4) + (S3-6); (I-4) + (S3-7); (I-4) + (S3-8); (I-4) + (S3-9); (I-4) + (S3-10); (I-4) + (S3-11); (I-4) + (S4-1); (I-4) + (S4-2); (I-4) + (S4-3); (I-4) + (S4-4); (I-4) + (S4-5); (I-4) + (S7-1); (I-4) + (S11-1); (I-4) + (S11-2); (I-4) + (S11-3); (I-4) + (S12-1); (I-4) + (S13-1); (I-4) + (S13-2); (I-4) + (S13-3); (I-4) + (S13-4): (I-4) + (S13-5); (I-4) + (S13-6); (I-4) + (S13-7); (I-4) + (S13-8); (I-4) + (S13-9); (I-4) + (S14-1)
(I-5) + (S1-1); (I-5) + (S1-2); (I-5) + (S1-3); (I-5) + (S1-4); (I-5) + (S1-5); (I-5) + (S1-6); (I-5) + (S1-7); (I-5) + (S1-8); (I-5) + (S1-9); (I-5) + (S1-10); (I-5) + (S1-11); (I-5) + (S1-12); (I-5) + (S1-13); (I-5) + (S2-1); (I-5) + (S2-2); (I-5) + (S2-3); (I-5) + (S2-4); (I-5) + (S2-5); (I-5) + (S2-6); (I-5) + (S2-7), (I-5) + (S2-8); (I-5) + (S2-9); (I-5) + (S2-10); (I-5) + (S3-1); (I-5) + (S3-2); (I-5) + (S3-3); (I-5) + (S3-4); (I-5) + (S3-5); (I-5) + (S3-6); (I-5) + (S3-7); (I-5) + (S3-8); (I-5) + (S3-9); (I-5) + (S3-10); (I-5) + (S3-11); (I-5) + (S4-1); (I-5) + (S4-2); (I-5) + (S4-3); (I-5) + (S4-4); (I-5) + (S4-5); (I-5) + (S7-1); (I-5) + (S11-1); (I-5) + (S11-2); (I-5) + (S11-3); (I-5) + (S12-1); (I-5) + (S13-1); (I-5) + (S13-2); (I-5) + (S13-3); (I-5) + (S13-4): (I-5) + (S13-5); (I-5) + (S13-6); (I-5) + (S13-7); (I-5) + (S13-8); (I-5) + (S13-9); (I-5) + (S14-1)
(I-6) + (S1-1); (I-6) + (S1-2); (I-6) + (S1-3); (I-6) + (S1-4); (I-6) + (S1-5); (I-6) + (S1-6); (I-6) + (S1-7); (I-6) + (S1-8); (I-6) + (S1-9); (I-6) + (S1-10); (I-6) + (S1-11); (I-6) + (S1-12); (I-6) + (S1-13); (I-6) + (S2-1); (I-6) + (S2-2); (I-6) + (S2-3); (I-6) + (S2-4); (I-6) + (S2-5); (I-6) + (S2-6); (I-6) + (S2-7); (I-6) + (S2-8); (I-6) + (S2-9); (I-6) + (S2-10); (I-6) + (S3-1); (I-6) + (S3-2); (I-6) + (S3-3); (I-6) + (S3-4); (I-6) + (S3-5); (I-6) + (S3-6); (I-6) + (S3-7); (I-6) + (S3-8); (I-6) + (S3-9); (I-6) + (S3-10); (I-6) + (S3-11); (I-6) + (S4-1); (I-6) + (S4-2); (I-6) + (S4-3); (I-6) + (S4-4); (I-6) + (S4-5); (I-6) + (S7-1); (I-6) + (S11-1); (I-6) + (S11-2); (I-6) + (S11-3); (I-6) + (S12-1); (I-6) + (S13-1); (I-6) + (S13-2); (I-6) + (S13-3); (I-6) + (S13-4): (I-6) + (S13-5); (I-6) + (S13-6); (I-6) + (S13-7); (I-6) + (S13-8); (I-6) + (S13-9); (I-6) + (S14-1)
(I-7) + (S1-1); (I-7) + (S1-2); (I-7) + (S1-3); (I-7) + (S1-4); (I-7) + (S1-5); (I-7) + (S1-6); (I-7) + (S1-7); (I-7) + (S1-8); (I-7) + (S1-9); (I-7) + (S1-10); (I-7) + (S1-11); (I-7) + (S1-12); (I-7) + (S1-13); (I-7) + (S2-1); (I-7) + (S2-2); (I-7) + (S2-3); (I-7) + (S2-4); (I-7) + (S2-5); (I-7) + (S2-6); (I-7) + (S2-7); (I-7) + (S2-8); (I-7) + (S2-9); (I-7) + (S2-10); (I-7) + (S3-1); (I-7) + (S3-2); (I-7) + (S3-3); (I-7) + (S3-4); (I-7) + (S3-5); (I-7) + (S3-6); (I-7) + (S3-7); (I-7) + (S3-8); (I-7) + (S3-9); (I-7) + (S3-10); (I-7) + (S3-11); (I-7) + (S4-1); (I-7) + (S4-2); (I-7) + (S4-3); (I-7) + (S4-4); (I-7) + (S4-5); (I-7) + (S7-1); (I-7) + (S11-1); (I-7) + (S11-2); (I-7) + (S11-3); (I-7) + (S12-1); (I-7) + (S13-1); (I-7) + (S13-2); (I-7) + (S13-3); (I-7) + (S13-4): (I-7) + (S13-5); (I-7) + (S13-6); (I-7) + (S13-7); (I-7) + (S13-8); (I-7) + (S13-9); (I-7) + (S14-1)
(I-8) + (S1-1); (I-8) + (S1-2); (I-8) + (S1-3); (I-8) + (S1-4); (I-8) + (S1-5); (I-8) + (S1-6); (I-8) + (S1-7); (I-8) + (S1-8); (I-8) + (S1-9); (I-8) + (S1-10); (I-8) + (S1-11); (I-8) + (S1-12); (I-8) + (S1-13); (I-8) + (S2-1); (I-8) + (S2-2); (I-8) + (S2-3); (I-8) + (S2-4); (I-8) + (S2-5); (I-8) + (S2-6); (I-8) + (S2-7); (I-8) + (S2-8); (I-8) + (S2-9); (I-8) + (S2-10); (I-8) + (S3-1); (I-8) + (S3-2); (I-8) + (S3-3); (I-8) + (S3-4); (I-8) + (S3-5); (I-8) + (S3-6); (I-8) + (S3-7); (I-8) + (S3-8); (I-8) + (S3-9); (I-8) + (S3-10); (I-8) + (S3-11); (I-8) + (S4-1); (I-8) + (S4-2); (I-8) + (S4-3); (I-8) + (S4-4); (I-8) + (S4-5); (I-8) + (S7-1); (I-8) + (S11-1); (I-8) + (S11-2); (I-8) + (S11-3); (I-8) + (S12-1); (I-8) + (S13-1); (I-8) + (S13-2); (I-8) + (S13-3); (I-8) + (S13-4): (I-8) + (S13-5); (I-8) + (S13-6); (I-8) + (S13-7); (I-8) + (S13-8); (I-8) + (S13-9); (I-8) + (S14-1)
(I-9) + (S1-1); (I-9) + (S1-2); (I-9) + (S1-3); (I-9) + (S1-4); (I-9) + (S1-5); (I-9) + (S1-6); (I-9) + (S1-7); (I-9) + (S1-8); (I-9) + (S1-9); (I-9) + (S1-10); (I-9) + (S1-11); (I-9) + (S1-12); (I-9) + (S1-13); (I-9) + (S2-1); (I-9) + (S2-2); (I-9) + (S2-3); (I-9) + (S2-4); (I-9) + (S2-5); (I-9) + (S2-6); (I-9) + (S2-7); (I-9) + (S2-8); (I-9) + (S2-9); (I-9) + (S2-10); (I-9) + (S3-1); (I-9) + (S3-2); (I-9) + (S3-3); (I-9) + (S3-4); (I-9) + (S3-5); (I-9) + (S3-6); (I-9) + (S3-7); (I-9) + (S3-8); (I-9) + (S3-9); (I-9) + (S3-10); (I-9) + (S3-11); (I-9) + (S4-1); (I-9) + (S4-2); (I-9) + (S4-3); (I-9) + (S4-4); (I-9) + (S4-5); (I-9) + (S7-1); (I-9) +(S11-1); (I-9) + (S11-2); (I-9) + (S11-3); (I-9) + (S12-1); (I-9) + (S13-1); (I-9) + (S13-2); (I-9) + (S13-3); (I-9) + (S13-4): (I-9) + (S13-5); (I-9) + (S13-6); (I-9) + (S13-7); (I-9) + (S13-8); (I-9) + (S13-9); (I-9) + (S14-1)
(I-10) + (S1-1); (I-10) + (S1-2); (I-10) + (S1-3); (I-10) + (S1-4); (I-10) + (S1-5); (I-10) + (S1-6); (I-10) + (S1-7); (I-10) + (S1-8); (I-10) + (S1-9); (I-10) + (S1-10); (I-10) + (S1-11); (I-10) + (S1-12); (I-10) + (S1-13); (I-10) + (S2-1); (I-10) + (S2-2); (I-10) + (S2-3); (I-10) + (S2-4); (I-10) + (S2-5); (I-10) + (S2-6); (I-10) + (S2-7); (I-10) + (S2-8); (I-10) + (S2-9); (I-10) + (S2-10); (I-10) + (S3-1); (I-10) + (S3-2); (I-10) + (S3-3); (I-10) + (S3-4); (I-10) + (S3-5); (I-10) + (S3-6); (I-10) + (S3-7); (I-10) + (S3-8); (I-10) + (S3-9); (I-10) + (S3-10); (I-10) + (S3-11); (I-10) + (S4-1); (I-10) + (S4-2); (I-10) + (S4-3); (I-10) + (S4-4); (I-10) + (S4-5); (I-10) + (S7-1); (I-10) + (S11-1); (I-10) + (S11-2); (I-10) + (S11-3); (I-10) + (S12-1); (I-10) + (S13-1); (I-10) + (S13-2); (I-10) + (S13-3); (I-10) + (S13-4): (I-10) + (S13-5); (I-10) + (S13-6); (I-10) + (S13-7); (I-10) + (S13-8); (I-10) + (S13-9); (I-10) + (S14-1)
(I-11) + (S1-1); (I-11) + (S1-2); (I-11) + (S1-3); (I-11) + (S1-4); (I-11) + (S1-5); (I-11) + (S1-6); (I-11) + (S1-7); (I-11) + (S1-8); (I-11) + (S1-9); (I-11) + (S1-10); (I-11) + (S1-11); (I-11) + (S1-12); (I-11) + (S1-13); (I-11) + (S2-1); (I-11) + (S2-2); (I-11) + (S2-3); (I-11) + (S2-4); (I-11) + (S2-5); (I-11) + (S2-6); (I-11) + (S2-7); (I-11) + (S2-8); (I-11) + (S2-9); (I-11) + (S2-10); (I-11) + (S3-1); (I-11) + (S3-2); (I-11) + (S3-3); (I-11) + (S3-4); (I-11) + (S3-5); (I-11) + (S3-6); (I-11) + (S3-7); (I-11) + (S3-8); (I-11) + (S3-9); (I-11) + (S3-10); (I-11) + (S3-11); (I-11) + (S4-1); (I-11) + (S4-2); (I-11) + (S4-3); (I-11) + (S4-4); (I-11) + (S4-5); (I-11) + (S7-1); (I-11) + (S11-1); (I-11) + (S11-2); (I-11) + (S11-3); (I-11) + (S12-1); (I-11) + (S13-1); (I-11) + (S13-2); (I-11) + (S13-3); (I-11) + (S13-4): (I-11) + (S13-5); (I-11) + (S13-6); (I-11) + (S13-7); (I-11) + (S13-8); (I-11) + (S13-9); (I-11) + (S14-1)
(I-12) + (S1-1); (I-12) + (S1-2); (I-12) + (S1-3); (I-12) + (S1-4); (I-12) + (S1-5); (I-12) + (S1-6); (I-12) + (S1-7); (I-12) + (S1-8); (I-12) + (S1-9); (I-12) + (S1-10); (I-12) + (S1-11); (I-12) + (S1-12); (I-12) + (S1-13); (I-12) + (S2-1); (I-12) + (S2-2); (I-12) + (S2-3); (I-12) + (S2-4); (I-12) + (S2-5); (I-12) + (S2-6); (I-12) + (S2-7); (I-12) + (S2-8); (I-12) + (S2-9); (I-12) + (S2-10); (I-12) + (S3-1); (I-12) + (S3-2); (I-12) + (S3-3); (I-12) + (S3-4); (I-12) + (S3-5); (I-12) + (S3-6); (I-12) + (S3-7); (I-12) + (S3-8); (I-12) + (S3-9); (I-12) + (S3-10); (I-12) + (S3-11); (I-12) + (S4-1); (I-12) + (S4-2); (I-12) + (S4-3); (I-12) + (S4-4); (I-12) + (S4-5); (I-12) + (S7-1); (I-12) + (S11-1); (I-12) + (S11-2); (I-12) + (S11-3); (I-12) + (S12-1); (I-12) + (S13-1); (I-12) + (S13-2); (I-12) + (S13-3); (I-12) + (S13-4): (I-12) + (S13-5); (I-12) + (S13-6); (I-12) + (S13-7); (I-12) + (S13-8); (I-12) + (S13-9); (I-12) + (S14-1)
(I-13) + (S1-1); (I-13) + (S1-2); (I-13) + (S1-3); (I-13) + (S1-4); (I-13) + (S1-5); (I-13) + (S1-6); (I-13) + (S1-7); (I-13) + (S1-8); (I-13) + (S1-9); (I-13) + (S1-10); (I-13) + (S1-11); (I-13) + (S1-12); (I-13) + (S1-13); (I-13) + (S2-1); (I-13) + (S2-2); (I-13) + (S2-3); (I-13) + (S2-4); (I-13) + (S2-5); (I-13) + (S2-6); (I-13) + (S2-7); (I-13) + (S2-8); (I-13) + (S2-9); (I-13) + (S2-10); (I-13) + (S3-1); (I-13) + (S3-2); (I-13) + (S3-3); (I-13) + (S3-4); (I-13) + (S3-5); (I-13) + (S3-6); (I-13) + (S3-7); (I-13) + (S3-8); (I-13) + (S3-9); (I-13) + (S3-10); (I-13) + (S3-11); (I-13) + (S4-1); (I-13) + (S4-2); (I-13) + (S4-3); (I-13) + (S4-4); (I-13) + (S4-5); (I-13) + (S7-1); (I-13) + (S11-1); (I-13) + (S11-2); (I-13) + (S11-3); (I-13) + (S12-1); (I-13) + (S13-1); (I-13) + (S13-2); (I-13) + (S13-3); (I-13) + (S13-4): (I-13) + (S13-5); (I-13) + (S13-6); (I-13) + (S13-7); (I-13) + (S13-8); (I-13) + (S13-9); (I-13) + (S14-1)
(I-14) + (S1-1); (I-14) + (S1-2); (I-14) + (S1-3); (I-14) + (S1-4); (I-14) + (S1-5); (I-14) + (S1-6); (I-14) + (S1-7); (I-14) + (S1-8); (I-14) + (S1-9); (I-14) + (S1-10); (I-14) + (S1-11); (I-14) + (S1-12); (I-14) + (S1-13); (I-14) + (S2-1); (I-14) + (S2-2); (I-14) + (S2-3); (I-14) + (S2-4); (I-14) + (S2-5); (I-14) + (S2-6); (I-14) + (S2-7); (I-14) + (S2-8); (I-14) + (S2-9); (I-14) + (S2-10); (I-14) + (S3-1); (I-14) + (S3-2); (I-14) + (S3-3); (I-14) + (S3-4); (I-14) + (S3-5); (I-14) + (S3-6); (I-14) + (S3-7); (I-14) + (S3-8); (I-14) + (S3-9); (I-14) + (S3-10); (I-14) + (S3-11); (I-14) + (S4-1); (I-14) + (S4-2); (I-14) + (S4-3); (I-14) + (S4-4); (I-14) + (S4-5); (I-14) + (S7-1); (I-14) + (S11-1); (I-14) + (S11-2); (I-14) + (S11-3); (I-14) + (S12-1); (I-14) + (S13-1); (I-14) + (S13-2); (I-14) + (S13-3); (I-14) + (S13-4): (I-14) + (S13-5); (I-14) + (S13-6); (I-14) + (S13-7); (I-14) + (S13-8); (I-14) + (S13-9); (I-14) + (S14-1)
(I-15) + (S1-1); (I-15) + (S1-2); (I-15) + (S1-3); (I-15) + (S1-4); (I-15) + (S1-5); (I-15) + (S1-6); (I-15) + (S1-7); (I-15) + (S1-8); (I-15) + (S1-9); (I-15) + (S1-10); (I-15) + (S1-11); (I-15) + (S1-12); (I-15) + (S1-13); (I-15) + (S2-1); (I-15) + (S2-2); (I-15) + (S2-3); (I-15) + (S2-4); (I-15) + (S2-5); (I-15) + (S2-6); (I-15) + (S2-7); (I-15) + (S2-8); (I-15) + (S2-9); (I-15) + (S2-10); (I-15) + (S3-1); (I-15) + (S3-2); (I-15) + (S3-3); (I-15) + (S3-4); (I-15) + (S3-5); (I-15) + (S3-6); (I-15) + (S3-7); (I-15) + (S3-8); (I-15) + (S3-9); (I-15) + (S3-10); (I-15) + (S3-11); (I-15) + (S4-1); (I-15) + (S4-2); (I-15) + (S4-3); (I-15) + (S4-4); (I-15) + (S4-5); (I-15) + (S7-1); (I-15) + (S11-1); (I-15) + (S11-2); (I-15) + (S11-3); (I-15) + (S12-1); (I-15) + (S13-1); (I-15) + (S13-2); (I-15) + (S13-3); (I-15) + (S13-4): (I-15) + (S13-5); (I-15) + (S13-6); (I-15) + (S13-7); (I-15) + (S13-8); (I-15) + (S13-9); (I-15) + (S14-1)
(I-16) + (S1-1); (I-16) + (S1-2); (I-16) + (S1-3); (I-16) + (S1-4); (I-16) + (S1-5); (I-16) + (S1-6); (I-16) + (S1-7); (I-16) + (S1-8); (I-16) + (S1-9); (I-16) + (S1-10); (I-16) + (S1-11); (I-16) + (S1-12); (I-16) + (S1-13); (I-16) + (S2-1); (I-16) + (S2-2); (I-16) + (S2-3); (I-16) + (S2-4); (I-16) + (S2-5); (I-16) + (S2-6); (I-16) + (S2-7); (I-16) + (S2-8); (I-16) + (S2-9); (I-16) + (S2-10); (I-16) + (S3-1); (I-16) + (S3-2); (I-16) + (S3-3); (I-16) + (S3-4); (I-16) + (S3-5); (I-16) + (S3-6); (I-16) + (S3-7); (I-16) + (S3-8); (I-16) + (S3-9); (I-16) + (S3-10); (I-16) + (S3-11); (I-16) + (S4-1); (I-16) + (S4-2); (I-16) + (S4-3); (I-16) + (S4-4); (I-16) + (S4-5); (I-16) + (S7-1); (I-16) + (S11-1); (I-16) + (S11-2); (I-16) + (S11-3); (I-16) + (S12-1); (I-16) + (S13-1); (I-16) + (S13-2); (I-16) + (S13-3); (I-16) + (S13-4): (I-16) + (S13-5); (I-16) + (S13-6); (I-16) + (S13-7); (I-16) + (S13-8); (I-16) + (S13-9); (I-16) + (S14-1)
(I-17) + (S1-1); (I-17) + (S1-2); (I-17) + (S1-3); (I-17) + (S1-4); (I-17) + (S1-5); (I-17) + (S1-6); (I-17) + (S1-7); (I-17) + (S1-8); (I-17) + (S1-9); (I-17) + (S1-10); (I-17) + (S1-11); (I-17) + (S1-12); (I-17) + (S1-13); (I-17) + (S2-1); (I-17) + (S2-2); (I-17) + (S2-3); (I-17) + (S2-4); (I-17) + (S2-5); (I-17) + (S2-6); (I-17) + (S2-7); (I-17) + (S2-8); (I-17) + (S2-9); (I-17) + (S2-10); (I-17) + (S3-1); (I-17) + (S3-2); (I-17) + (S3-3); (I-17) + (S3-4); (I-17) + (S3-5); (I-17) + (S3-6); (I-17) + (S3-7); (I-17) + (S3-8); (I-17) + (S3-9); (I-17) + (S3-10); (I-17) + (S3-11); (I-17) + (S4-1); (I-17) + (S4-2); (I-17) + (S4-3); (I-17) + (S4-4); (I-17) + (S4-5); (I-17) + (S7-1); (I-17) + (S11-1); (I-17) + (S11-2); (I-17) + (S11-3); (I-17) + (S12-1); (I-17) + (S13-1); (I-17) + (S13-2); (I-17) + (S13-3); (I-17) + (S13-4): (I-17) + (S13-5); (I-17) + (S13-6); (I-17) + (S13-7); (I-17) + (S13-8); (I-17) + (S13-9); (I-17) + (S14-1)
(I-18) + (S1-1); (I-18) + (S1-2); (I-18) + (S1-3); (I-18) + (S1-4); (I-18) + (S1-5); (I-18) + (S1-6); (I-18) + (S1-7); (I-18) + (S1-8); (I-18) + (S1-9); (I-18) + (S1-10); (I-18) + (S1-11); (I-18) + (S1-12); (I-18) + (S1-13); (I-18) + (S2-1); (I-18) + (S2-2); (I-18) + (S2-3); (I-18) + (S2-4); (I-18) + (S2-5); (I-18) + (S2-6); (I-18) + (S2-7); (I-18) + (S2-8); (I-18) + (S2-9); (I-18) + (S2-10); (I-18) + (S3-1); (I-18) + (S3-2); (I-18) + (S3-3); (I-18) + (S3-4); (I-18) + (S3-5); (I-18) + (S3-6); (I-18) + (S3-7); (I-18) + (S3-8); (I-18) + (S3-9); (I-18) + (S3-10); (I-18) + (S3-11); (I-18) + (S4-1); (I-18) + (S4-2); (I-18) + (S4-3); (I-18) + (S4-4); (I-18) + (S4-5); (I-18) + (S7-1); (I-18) + (S11-1); (I-18) + (S11-2); (I-18) + (S11-3); (I-18) + (S12-1); (I-18) + (S13-1); (I-18) + (S13-2); (I-18) + (S13-3); (I-18) + (S13-4): (I-18) + (S13-5); (I-18) + (S13-6); (I-18) + (S13-7); (I-18) + (S13-8); (I-18) + (S13-9); (I-18) + (S14-1)
(I-19) + (S1-1); (I-19) + (S1-2); (I-19) + (S1-3); (I-19) + (S1-4); (I-19) + (S1-5); (I-19) + (S1-6); (I-19) + (S1-7); (I-19) + (S1-8); (I-19) + (S1-9); (I-19) + (S1-10); (I-19) + (S1-11); (I-19) + (S1-12); (I-19) + (S1-13); (I-19) + (S2-1); (I-19) + (S2-2); (I-19) + (S2-3); (I-19) + (S2-4); (I-19) + (S2-5); (I-19) + (S2-6); (I-19) + (S2-7); (I-19) + (S2-8); (I-19) + (S2-9); (I-19) + (S2-10); (I-19) + (S3-1); (I-19) + (S3-2); (I-19) + (S3-3); (I-19) + (S3-4); (I-19) + (S3-5); (I-19) + (S3-6); (I-19) + (S3-7); (I-19) + (S3-8); (I-19) + (S3-9); (I-19) + (S3-10); (I-19) + (S3-11); (I-19) + (S4-1); (I-19) + (S4-2); (I-19) + (S4-3); (I-19) + (S4-4); (I-19) + (S4-5); (I-19) + (S7-1); (I-19) + (S11-1); (I-19) + (S11-2); (I-19) + (S11-3); (I-19) + (S12-1); (I-19) + (S13-1); (I-19) + (S13-2); (I-19) + (S13-3); (I-19) + (S13-4): (I-19) + (S13-5); (I-19) + (S13-6); (I-19) + (S13-7); (I-19) + (S13-8); (I-19) + (S13-9); (I-19) + (S14-1)
(I-20) + (S1-1); (I-20) + (S1-2); (I-20) + (S1-3); (I-20) + (S1-4); (I-20) + (S1-5); (I-20) + (S1-6); (I-20) + (S1-7); (I-20) + (S1-8); (I-20) + (S1-9); (I-20) + (S1-10); (I-20) + (S1-11); (I-20) + (S1-12); (I-20) + (S1-13); (I-20) + (S2-1); (I-20) + (S2-2); (I-20) + (S2-3); (I-20) + (S2-4); (I-20) + (S2-5); (I-20) + (S2-6); (I-20) + (S2-7); (I-20) + (S2-8); (I-20) + (S2-9); (I-20) + (S2-10); (I-20) + (S3-1); (I-20) + (S3-2); (I-20) + (S3-3); (I-20) + (S3-4); (I-20) + (S3-5); (I-20) + (S3-6); (I-20) + (S3-7); (I-20) + (S3-8); (I-20) + (S3-9); (I-20) + (S3-10); (I-20) + (S3-11); (I-20) + (S4-1); (I-20) + (S4-2); (I-20) + (S4-3); (I-20) + (S4-4); (I-20) + (S4-5); (I-20) + (S7-1); (I-20) + (S11-1); (I-20) + (S11-2); (I-20) + (S11-3); (I-20) + (S12-1); (I-20) + (S13-1); (I-20) + (S13-2); (I-20) + (S13-3); (I-20) + (S13-4): (I-20) + (S13-5); (I-20) + (S13-6); (I-20) + (S13-7); (I-20) + (S13-8); (I-20) + (S13-9); (I-20) + (S14-1)
(I-21) + (S1-1); (I-21) + (S1-2); (I-21) + (S1-3); (I-21) + (S1-4); (I-21) + (S1-5); (I-21) + (S1-6); (I-21) + (S1-7); (I-21) + (S1-8); (I-21) + (S1-9); (I-21) + (S1-10); (I-21) + (S1-11); (I-21) + (S1-12); (I-21) + (S1-13); (I-21) + (S2-1); (I-21) + (S2-2); (I-21) + (S2-3); (I-21) + (S2-4); (I-21) + (S2-5); (I-21) + (S2-6); (I-21) + (S2-7); (I-21) + (S2-8); (I-21) + (S2-9); (I-21) + (S2-10); (I-21) + (S3-1); (I-21) + (S3-2); (I-21) + (S3-3); (I-21) + (S3-4); (I-21) + (S3-5); (I-21) + (S3-6); (I-21) + (S3-7); (I-21) + (S3-8); (I-21) + (S3-9); (I-21) + (S3-10); (I-21) + (S3-11); (I-21) + (S4-1); (I-21) + (S4-2); (I-21) + (S4-3); (I-21) + (S4-4); (I-21) + (S4-5); (I-21) + (S7-1); (I-21) + (S11-1); (I-21) + (S11-2); (I-21) + (S11-3); (I-21) + (S12-1); (I-21) + (S13-1); (I-21) + (S13-2); (I-21) + (S13-3); (I-21) + (S13-4): (I-21) + (S13-5); (I-21) + (S13-6); (I-21) + (S13-7); (I-21) + (S13-8); (I-21) + (S13-9); (I-21) + (S14-1)
(I-22) + (S1-1); (I-22) + (S1-2); (I-22) + (S1-3); (I-22) + (S1-4); (I-22) + (S1-5); (I-22) + (S1-6); (I-22) + (S1-7); (I-22) + (S1-8); (I-22) + (S1-9); (I-22) + (S1-10); (I-22) + (S1-11); (I-22) + (SI-12); (I-22) + (S1-13); (I-22) + (S2-1); (I-22) + (S2-2); (I-22) + (S2-3); (I-22) + (S2-4); (I-22) + (S2-5); (I-22) + (S2-6); (I-22) + (S2-7); (I-22) + (S2-8); (I-22) + (S2-9); (I-22) + (S2-10); (I-22) + (S3-1); (I-22) + (S3-2); (I-22) + (S3-3); (I-22) + (S3-4); (I-22) + (S3-5); (I-22) + (S3-6); (I-22) + (S3-7); (I-22) + (S3-8); (I-22) + (S3-9); (I-22) + (S3-10); (I-22) + (S3-11); (I-22) + (S4-1); (I-22) + (S4-2); (I-22) + (S4-3); (I-22) + (S4-4); (I-22) + (S4-5); (I-22) + (S7-1); (I-22) + (S11-1); (I-22) + (S11-2); (I-22) + (S11-3); (I-22) + (S12-1); (I-22) + (S13-1); (I-22) + (S13-2); (I-22) + (S13-3); (I-22) + (S13-4): (I-22) + (S13-5); (I-22) + (S13-6); (I-22) + (S13-7); (I-22) + (S13-8); (I-22) + (S13-9); (I-22) + (S14-1)
(I-23) + (S1-1); (I-23) + (S1-2); (I-23) + (S1-3); (I-23) + (S1-4); (I-23) + (S1-5); (I-23) + (S1-6); (I-23) + (S1-7); (I-23) + (S1-8); (I-23) + (S1-9); (I-23) + (S1-10); (I-23) + (S1-11); (I-23) + (S1-12); (I-23) + (S1-13); (I-23) + (S2-1); (I-23) + (S2-2); (I-23) + (S2-3); (I-23) + (S2-4); (I-23) + (S2-5); (I-23) + (S2-6); (I-23) + (S2-7); (I-23) + (S2-8); (I-23) + (S2-9); (I-23) + (S2-10); (I-23) + (S3-1); (I-23) + (S3-2); (I-23) + (S3-3); (I-23) + (S3-4); (I-23) + (S3-5); (I-23) + (S3-6); (I-23) + (S3-7); (I-23) + (S3-8); (I-23) + (S3-9); (I-23) + (S3-10); (I-23) + (S3-11); (I-23) + (S4-1); (I-23) + (S4-2); (I-23) + (S4-3); (I-23) + (S4-4); (I-23) + (S4-5); (I-23) + (S7-1); (I-23) + (S11-1); (I-23) + (S11-2); (I-23) + (S11-3); (I-23) + (S12-1); (I-23) + (S13-1); (I-23) + (S13-2); (I-23) + (S13-3); (I-23) + (S13-4): (I-23) + (S13-5); (I-23) + (S13-6); (I-23) + (S13-7); (I-23) + (S13-8); (I-23) + (S13-9); (I-23) + (S14-1)
(I-24) + (S1-1); (I-24) + (S1-2); (I-24) + (S1-3); (I-24) + (S1-4); (I-24) + (S1-5); (I-24) + (S1-6); (I-24) + (S1-7); (I-24) + (S1-8); (I-24) + (S1-9); (I-24) + (S1-10); (I-24) + (S1-11); (I-24) + (S1-12); (I-24) + (S1-13); (I-24) + (S2-1); (I-24) + (S2-2); (I-24) + (S2-3); (I-24) + (S2-4); (I-24) + (S2-5); (I-24) + (S2-6); (I-24) + (S2-7); (I-24) + (S2-8); (I-24) + (S2-9); (I-24) + (S2-10); (I-24) + (S3-1); (I-24) + (S3-2); (I-24) + (S3-3); (I-24) + (S3-4); (I-24) + (S3-5); (I-24) + (S3-6); (I-24) + (S3-7); (I-24) + (S3-8); (I-24) + (S3-9); (I-24) + (S3-10); (I-24) + (S3-11); (I-24) + (S4-1); (I-24) + (S4-2); (I-24) + (S4-3); (I-24) + (S4-4); (I-24) + (S4-5); (I-24) + (S7-1); (I-24) + (S11-1); (I-24) + (S11-2); (I-24) + (S11-3); (I-24) + (S12-1); (I-24) + (S13-1); (I-24) + (S13-2); (I-24) + (S13-3); (I-24) + (S13-4): (I-24) + (S13-5), (I-24) + (S13-6); (I-24) + (S13-7); (I-24) + (S13-8); (I-24) + (S13-9); (I-24) + (S14-1)
(I-25) + (S1-1); (I-25) + (S1-2); (I-25) + (S1-3); (I-25) + (S1-4); (I-25) + (S1-5); (I-25) + (S1-6); (I-25) + (S1-7); (I-25) + (S1-8); (I-25) + (S1-9); (I-25) + (S1-10); (I-25) + (S1-11); (I-25) + (S1-12); (I-25) + (S1-13); (I-25) + (S2-1); (I-25) + (S2-2); (I-25) + (S2-3); (I-25) + (S2-4); (I-25) + (S2-5); (I-25) + (S2-6); (I-25) + (S2-7); (I-25) + (S2-8); (I-25) + (S2-9); (I-25) + (S2-10); (I-25) + (S3-1); (I-25) + (S3-2); (I-25) + (S3-3); (I-25) + (S3-4); (I-25) + (S3-5); (I-25) + (S3-6); (I-25) + (S3-7); (I-25) + (S3-8); (I-25) + (S3-9); (I-25) + (S3-10); (I-25) + (S3-11); (I-25) + (S4-1); (I-25) + (S4-2); (I-25) + (S4-3); (I-25) + (S4-4); (I-25) + (S4-5); (I-25) + (S7-1); (I-25) + (S11-1); (I-25) + (S11-2); (I-25) + (S11-3); (I-25) + (S12-1); (I-25) + (S13-1); (I-25) + (S13-2); (I-25) + (S13-3); (I-25) + (S13-4): (I-25) + (S13-5); (I-25) + (S13-6); (I-25) + (S13-7); (I-25) + (S13-8); (I-25) + (S13-9); (I-25) + (S14-1)
(I-26) + (S1-1); (I-26) + (S1-2); (I-26) + (S1-3); (I-26) + (S1-4); (I-26) + (S1-5); (I-26) + (S1-6); (I-26) + (S1-7); (I-26) + (S1-8); (I-26) + (S1-9); (I-26) + (S1-10); (I-26) + (S1-11); (I-26) + (S1-12); (I-26) + (S1-13); (I-26) + (S2-1); (I-26) + (S2-2); (I-26) + (S2-3); (I-26) + (S2-4); (I-26) + (S2-5); (I-26) + (S2-6); (I-26) + (S2-7); (I-26) + (S2-8); (I-26) + (S2-9); (I-26) + (S2-10); (I-26) + (S3-1); (I-26) + (S3-2); (I-26) + (S3-3); (I-26) + (S3-4); (I-26) + (S3-5); (I-26) + (S3-6); (I-26) + (S3-7); (I-26) + (S3-8); (I-26) + (S3-9); (I-26) + (S3-10); (I-26) + (S3-11); (I-26) + (S4-1); (I-26) + (S4-2); (I-26) + (S4-3); (I-26) + (S4-4); (I-26) + (S4-5); (I-26) + (S7-1); (I-26) + (S11-1); (I-26) + (S11-2); (I-26) + (S11-3); (I-26) + (S12-1); (I-26) + (S13-1); (I-26) + (S13-2); (I-26) + (S13-3); (I-26) + (S13-4): (I-26) + (S13-5); (I-26) + (S13-6); (I-26) + (S13-7); (I-26) + (S13-8); (I-26) + (S13-9); (I-26) + (S14-1)
(I-27) + (S1-1); (I-27) + (S1-2); (I-27) + (S1-3); (I-27) + (S1-4); (I-27) + (S1-5); (I-27) + (S1-6); (I-27) + (S1-7); (I-27) + (S1-8); (I-27) + (S1-9); (I-27) + (S1-10); (I-27) + (S1-11); (I-27) + (S1-12); (I-27) + (S1-13); (I-27) + (S2-1); (I-27) + (S2-2); (I-27) + (S2-3); (I-27) + (S2-4); (I-27) + (S2-5); (I-27) + (S2-6); (I-27) + (S2-7); (I-27) + (S2-8), (I-27) + (S2-9); (I-27) + (S2-10); (I-27) + (S3-1); (I-27) + (S3-2); (I-27) + (S3-3); (I-27) + (S3-4); (I-27) + (S3-5); (I-27) + (S3-6); (I-27) + (S3-7); (I-27) + (S3-8); (I-27) + (S3-9); (I-27) + (S3-10); (I-27) + (S3-11); (I-27) + (S4-1); (I-27) + (S4-2); (I-27) + (S4-3); (I-27) + (S4-4); (I-27) + (S4-5); (I-27) + (S7-1); (I-27) + (S11-1); (I-27) + (S11-2); (I-27) + (S11-3); (I-27) + (S12-1); (I-27) + (S13-1); (I-27) + (S13-2); (I-27) + (S13-3); (I-27) + (S13-4): (I-27) + (S13-5); (I-27) + (S13-6); (I-27) + (S13-7); (I-27) + (S13-8); (I-27) + (S13-9); (I-27) + (S14-1)
(I-28) + (S1-1); (I-28) + (S1-2); (I-28) + (S1-3); (I-28) + (S1-4); (I-28) + (S1-5); (I-28) + (S1-6); (I-28) + (S1-7); (I-28) + (S1-8); (I-28) + (S1-9); (I-28) + (S1-10); (I-28) + (S1-11); (I-28) + (S1-12); (I-28) + (S1-13); (I-28) + (S2-1); (I-28) + (S2-2); (I-28) + (S2-3); (I-28) + (S2-4); (I-28) + (S2-5); (I-28) + (S2-6); (I-28) + (S2-7); (I-28) + (S2-8); (I-28) + (S2-9); (I-28) + (S2-10); (I-28) + (S3-1); (I-28) + (S3-2); (I-28) + (S3-3); (I-28) + (S3-4); (I-28) + (S3-5); (I-28) + (S3-6); (I-28) + (S3-7); (I-28) + (S3-8); (I-28) + (S3-9); (I-28) + (S3-10); (I-28) + (S3-11); (I-28) + (S4-1); (I-28) + (S4-2); (I-28) + (S4-3); (I-28) + (S4-4); (I-28) + (S4-5); (I-28) + (S7-1); (I-28) + (S11-1); (I-28) + (S11-2); (I-28) + (S11-3); (I-28) + (S12-1); (I-28) + (S13-1); (I-28) + (S13-2); (I-28) + (S13-3); (I-28) + (S13-4): (I-28) + (S13-5); (I-28) + (S13-6); (I-28) + (S13-7); (I-28) + (S13-8); (I-28) + (S13-9); (I-28) + (S14-1)
(I-29) + (S1-1); (I-29) + (S1-2); (I-29) + (S1-3); (I-29) + (S1-4); (I-29) + (S1-5); (I-29) + (S1-6); (I-29) + (S1-7); (I-29) + (S1-8); (I-29) + (S1-9); (I-29) + (S1-10), (I-29) + (S1-11); (I-29) + (S1-12); (I-29) + (S1-13); (I-29) + (S2-1); (I-29) + (S2-2); (I-29) + (S2-3); (I-29) + (S2-4); (I-29) + (S2-5); (I-29) + (S2-6); (I-29) + (S2-7); (I-29) + (S2-8); (I-29) + (S2-9); (I-29) + (S2-10); (I-29) + (S3-1); (I-29) + (S3-2); (I-29) + (S3-3); (I-29) + (S3-4); (I-29) + (S3-5); (I-29) + (S3-6); (I-29) + (S3-7); (I-29) + (S3-8); (I-29) + (S3-9); (I-29) + (S3-10); (I-29) + (S3-11); (I-29) + (S4-1); (I-29) + (S4-2); (I-29) + (S4-3); (I-29) + (S4-4); (I-29) + (S4-5); (I-29) + (S7-1); (I-29) + (S11-1); (I-29) + (S11-2); (I-29) + (S11-3); (I-29) + (S12-1); (I-29) + (S13-1); (I-29) + (S13-2); (I-29) + (S13-3); (I-29) + (S13-4): (I-29) + (S13-5); (I-29) + (S13-6); (I-29) + (S13-7); (I-29) + (S13-8); (I-29) + (S13-9); (I-29) + (S14-1)
(I-30) + (S1-1); (I-30) + (S1-2); (I-30) + (S1-3); (I-30) + (S1-4); (I-30) + (S1-5); (I-30) + (S1-6); (I-30) + (S1-7); (I-30) + (S1-8); (I-30) + (S1-9); (I-30) + (S1-10); (I-30) + (S1-11); (I-30) + (S1-12); (I-30) + (S1-13); (I-30) + (S2-1); (I-30) + (S2-2); (I-30) + (S2-3); (I-30) + (S2-4); (I-30) + (S2-5); (I-30) + (S2-6); (I-30) + (S2-7); (I-30) + (S2-8); (I-30) + (S2-9); (I-30) + (S2-10); (I-30) + (S3-1); (I-30) + (S3-2); (I-30) + (S3-3); (I-30) + (S3-4); (I-30) + (S3-5); (I-30) + (S3-6); (I-30) + (S3-7); (I-30) + (S3-8); (I-30) + (S3-9); (I-30) + (S3-10); (I-30) + (S3-11); (I-30) + (S4-1); (I-30) + (S4-2); (I-30) + (S4-3); (I-30) + (S4-4); (I-30) + (S4-5); (I-30) + (S7-1); (I-30) + (S11-1); (I-30) + (S11-2); (I-30) + (S11-3); (I-30) + (S12-1); (I-30) + (S13-1); (I-30) + (S13-2); (I-30) + (S13-3); (I-30) + (S13-4): (I-30) + (S13-5); (I-30) + (S13-6); (I-30) + (S13-7); (I-30) + (S13-8); (I-30) + (S13-9); (I-30) + (S14-1)
(I-31) + (S1-1); (I-31) + (S1-2); (I-31) + (S1-3); (I-31) + (S1-4); (I-31) + (S1-5); (I-31) + (S1-6); (I-31) + (S1-7); (I-31) + (S1-8); (I-31) + (S1-9); (I-31) + (S1-10); (I-31) + (S1-11); (I-31) + (S1-12); (I-31) + (S1-13); (I-31) + (S2-1); (I-31) + (S2-2); (I-31) + (S2-3); (I-31) + (S2-4); (I-31) + (S2-5); (I-31) + (S2-6); (I-31) + (S2-7); (I-31) + (S2-8); (I-31) + (S2-9); (I-31) + (S2-10); (I-31) + (S3-1); (I-31) + (S3-2); (I-31) + (S3-3); (I-31) + (S3-4); (I-31) + (S3-5); (I-31) + (S3-6); (I-31) + (S3-7); (I-31) + (S3-8); (I-31) + (S3-9); (I-31) + (S3-10); (I-31) + (S3-11); (I-31) + (S4-1); (I-31) + (S4-2); (I-31) + (S4-3); (I-31) + (S4-4); (I-31) + (S4-5); (I-31) + (S7-1); (I-31) + (S11-1); (I-31) + (S11-2); (I-31) + (S11-3); (I-31) + (S12-1); (I-31) + (S13-1); (I-31) + (S13-2); (I-31) + (S13-3); (I-31) + (S13-4): (I-31) + (S13-5); (I-31) + (S13-6); (I-31) + (S13-7); (I-31) + (S13-8); (I-31) + (S13-9); (I-31) + (S14-1)
(I-32) + (S1-1); (I-32) + (S1-2); (I-32) + (S1-3); (I-32) + (S1-4); (I-32) + (S1-5); (I-32) + (S1-6); (I-32) + (S1-7); (I-32) + (S1-8); (I-32) + (S1-9); (I-32) + (S1-10); (I-32) + (S1-11); (I-32) + (S1-12); (I-32) + (S1-13); (I-32) + (S2-1); (I-32) + (S2-2); (I-32) + (S2-3); (I-32) + (S2-4); (I-32) + (S2-5); (I-32) + (S2-6); (I-32) + (S2-7); (I-32) + (S2-8); (I-32) + (S2-9); (I-32) + (S2-10); (I-32) + (S3-1); (I-32) + (S3-2); (I-32) + (S3-3); (I-32) + (S3-4); (I-32) + (S3-5); (I-32) + (S3-6); (I-32) + (S3-7); (I-32) + (S3-8); (I-32) + (S3-9); (I-32) + (S3-10); (I-32) + (S3-11); (I-32) + (S4-1); (I-32) + (S4-2); (I-32) + (S4-3); (I-32) + (S4-4); (I-32) + (S4-5); (I-32) + (S7-1); (I-32) + (S11-1); (I-32) + (S11-2); (I-32) + (S11-3); (I-32) + (S12-1); (I-32) + (S13-1); (I-32) + (S13-2); (I-32) + (S13-3); (I-32) + (S13-4): (I-32) + (S13-5); (I-32) + (S13-6); (I-32) + (S13-7); (I-32) + (S13-8); (I-32) + (S13-9); (I-32) + (S14-1)
(i-33) + (S1-1); (I-33) + (S1-2); (I-33) + (S1-3); (I-33) + (S1-4); (I-33) + (S1-5); (I-33) + (S1-6); (I-33) + (S1-7); (I-33) + (S1-8); (I-33) + (S1-9); (I-33) + (S1-10); (I-33) + (S1-11); (I-33) + (S1-12); (I-33) + (S1-13); (I-33) + (S2-1); (I-33) + (S2-2); (I-33) + (S2-3); (I-33) + (S2-4); (I-33) + (S2-5); (I-33) + (S2-6); (I-33) + (S2-7); (I-33) + (S2-8); (I-33) + (S2-9); (I-33) + (S2-10); (I-33) + (S3-1); (I-33) + (S3-2); (I-33) + (S3-3); (I-33) + (S3-4); (I-33) + (S3-5); (I-33) + (S3-6); (I-33) + (S3-7); (I-33) + (S3-8); (I-33) + (S3-9); (I-33) + (S3-10); (I-33) + (S3-11); (I-33) + (S4-1); (I-33) + (S4-2); (I-33) + (S4-3); (I-33) + (S4-4); (I-33) + (S4-5); (I-33) + (S7-1); (I-33) + (S11-1); (I-33) + (S11-2); (I-33) + (S11-3); (I-33) + (S12-1); (I-33) + (S13-1); (I-33) + (S13-2); (I-33) + (S13-3); (I-33) + (S13-4): (I-33) + (S13-5); (I-33) + (S13-6); (I-33) + (S13-7); (I-33) + (S13-8); (I-33) + (S13-9); (I-33) + (S14-1)
(I-34) + (S1-1); (I-34) + (S1-2); (I-34) + (S1-3); (I-34) + (S1-4); (I-34) + (S1-5); (I-34) + (S1-6); (I-34) + (S1-7); (I-34) + (S1-8); (I-34) + (S1-9); (I-34) + (S1-10); (I-34) + (S1-11); (I-34) + (S1-12); (I-34) + (S1-13); (I-34) + (S2-1); (I-34) + (S2-2); (I-34) + (S2-3); (I-34) + (S2-4); (I-34) + (S2-5); (I-34) + (S2-6); (I-34) + (S2-7); (I-34) + (S2-8); (I-34) + (S2-9); (I-34) + (S2-10); (I-34) + (S3-1); (I-34) + (S3-2); (I-34) + (S3-3); (I-34) + (S3-4); (I-34) + (S3-5); (I-34) + (S3-6); (I-34) + (S3-7); (I-34) + (S3-8); (I-34) + (S3-9); (I-34) + (S3-10); (I-34) + (S3-11); (I-34) + (S4-1); (I-34) + (S4-2); (I-34) + (S4-3); (I-34) + (S4-4); (I-34) + (S4-5); (I-34) + (S7-1); (I-34) + (S11-1); (I-34) + (S11-2); (I-34) + (S11-3); (I-34) + (S12-1); (I-34) + (S13-1); (I-34) + (S13-2); (I-34) + (S13-3); (I-34) + (S13-4): (I-34) + (S13-5); (I-34) + (S13-6); (I-34) + (S13-7); (I-34) + (S13-8); (I-34) + (S13-9); (I-34) + (S14-1)
(I-35) + (S1-1); (I-35) + (S1-2); (I-35) + (S1-3); (I-35) + (S1-4); (I-35) + (S1-5); (I-35) + (S1-6); (I-35) + (S1-7); (I-35) + (S1-8); (I-35) + (S1-9); (I-35) + (S1-10); (I-35) + (S1-11); (I-35) + (S1-12); (I-35) + (S1-13); (I-35) + (S2-1); (I-35) + (S2-2); (I-35) + (S2-3); (I-35) + (S2-4); (I-35) + (S2-5); (I-35) + (S2-6); (I-35) + (S2-7); (I-35) + (S2-8); (I-35) + (S2-9); (I-35) + (S2-10); (I-35) + (S3-1); (I-35) + (S3-2); (I-35) + (S3-3); (I-35) + (S3-4); (I-35) + (S3-5); (I-35) + (S3-6); (I-35) + (S3-7); (I-35) + (S3-8); (I-35) + (S3-9); (I-35) + (S3-10); (I-35) + (S3-11); (I-35) + (S4-1); (I-35) + (S4-2); (I-35) + (S4-3); (I-35) + (S4-4); (I-35) + (S4-5); (I-35) + (S7-1); (I-35) + (S11-1); (I-35) + (S11-2); (I-35) + (S11-3); (I-35) + (S12-1); (I-35) + (S13-1); (I-35) + (S13-2); (I-35) + (S13-3); (I-35) + (S13-4): (I-35) + (S13-5), (I-35) + (S13-6); (I-35) + (S13-7); (I-35) + (S13-8); (I-35) + (S13-9); (I-35) + (S14-1)
(I-36) + (S1-1); (I-36) + (S1-2); (I-36) + (S1-3); (I-36) + (S1-4); (I-36) + (S1-5); (I-36) + (S1-6); (I-36) + (S1-7); (I-36) + (S1-8); (I-36) + (S1-9); (I-36) + (S1-10); (I-36) + (S1-11); (I-36) + (S1-12); (I-36) + (S1-13); (I-36) + (S2-1); (I-36) + (S2-2); (I-36) + (S2-3); (I-36) + (S2-4); (I-36) + (S2-5); (I-36) + (S2-6); (I-36) + (S2-7); (I-36) + (S2-8), (I-36) + (S2-9); (I-36) + (S2-10); (I-36) + (S3-1); (I-36) + (S3-2); (I-36) + (S3-3); (I-36) + (S3-4); (I-36) + (S3-5); (I-36) + (S3-6); (I-36) + (S3-7); (I-36) + (S3-8); (I-36) + (S3-9); (I-36) + (S3-10); (I-36) + (S3-11); (I-36) + (S4-1); (I-36) + (S4-2); (I-36) + (S4-3); (I-36) + (S4-4); (I-36) + (S4-5); (I-36) + (S7-1); (I-36) + (S11-1); (I-36) + (S11-2); (I-36) + (S11-3); (I-36) + (S12-1); (I-36) + (S13-1); (I-36) + (S13-2); (I-36) + (S13-3); (I-36) + (S13-4): (I-36) + (S13-5), (I-36) + (S13-6); (I-36) + (S13-7); (I-36) + (S13-8); (I-36) + (S13-9); (I-36) + (S14-1)
(I-37) + (S1-1); (I-37) + (S1-2); (I-37) + (S1-3); (I-37) + (S1-4); (I-37) + (S1-5); (I-37) + (S1-6); (I-37) + (S1-7); (I-37) + (S1-8); (I-37) + (S1-9); (I-37) + (S1-10); (I-37) + (S1-11); (I-37) + (S1-12), (I-37) + (S1-13); (I-37) + (S2-1); (I-37) + (S2-2); (I-37) + (S2-3); (I-37) + (S2-4); (I-37) + (S2-5); (I-37) + (S2-6); (I-37) + (S2-7); (I-37) + (S2-8); (I-37) + (S2-9); (I-37) + (S2-10); (I-37) + (S3-1); (I-37) + (S3-2); (I-37) + (S3-3); (I-37) + (S3-4); (I-37) + (S3-5); (I-37) + (S3-6); (I-37) + (S3-7); (I-37) + (S3-8); (I-37) + (S3-9); (I-37) + (S3-10); (I-37) + (S3-11); (I-37) + (S4-1); (I-37) + (S4-2); (I-37) + (S4-3); (I-37) + (S4-4); (I-37) + (S4-5); (I-37) + (S7-1); (I-37) + (S11-1); (I-37) + (S11-2); (I-37) + (S11-3); (I-37) + (S12-1); (I-37) + (S13-1); (I-37) + (S13-2); (I-37) + (S13-3); (I-37) + (S13-4): (I-37) + (S13-5); (I-37) + (S13-6); (I-37) + (S13-7); (I-37) + (S13-8); (I-37) + (S13-9); (I-37) + (S14-1)
(I-38) + (S1-1); (I-38) + (S1-2); (I-38) + (S1-3); (I-38) + (S1-4); (I-38) + (S1-5); (I-38) + (S1-6); (I-38) + (S1-7); (I-38) + (S1-8); (I-38) + (S1-9); (I-38) + (S1-10); (I-38) + (S1-11); (I-38) + (S1-12); (I-38) + (S1-13); (I-38) + (S2-1); (I-38) + (S2-2); (I-38) + (S2-3); (I-38) + (S2-4); (I-38) + (S2-5); (I-38) + (S2-6); (I-38) + (S2-7); (I-38) + (S2-8); (I-38) + (S2-9); (I-38) + (S2-10); (I-38) + (S3-1); (I-38) + (S3-2); (I-38) + (S3-3); (I-38) + (S3-4); (I-38) + (S3-5); (I-38) + (S3-6); (I-38) + (S3-7); (I-38) + (S3-8); (I-38) + (S3-9); (I-38) + (S3-10); (I-38) + (S3-11); (I-38) + (S4-1); (I-38) + (S4-2); (I-38) + (S4-3); (I-38) + (S4-4); (I-38) + (S4-5); (I-38) + (S7-1); (I-38) + (S11-1); (I-38) + (S11-2); (I-38) + (S11-3); (I-38) + (S12-1); (I-38) + (S13-1); (I-38) + (S13-2); (I-38) + (S13-3); (I-38) + (S13-4): (I-38) + (S13-5); (I-38) + (S13-6); (I-38) + (S13-7); (I-38) + (S13-8); (I-38) + (S13-9); (I-38) + (S14-1)
(I-39) + (S1-1); (I-39) + (S1-2), (I-39) + (S1-3); (I-39) + (S1-4); (I-39) + (S1-5); (I-39) + (S1-6); (I-39) + (S1-7); (I-39) + (S1-8); (I-39) + (S1-9); (I-39) + (S1-10); (I-39) + (S1-11); (I-39) + (S1-12); (I-39) + (S1-13); (I-39) + (S2-1); (I-39) + (S2-2); (I-39) + (S2-3); (I-39) + (S2-4); (I-39) + (S2-5); (I-39) + (S2-6); (I-39) + (S2-7); (I-39) + (S2-8); (I-39) + (S2-9); (I-39) + (S2-10); (I-39) + (S3-1); (I-39) + (S3-2); (I-39) + (S3-3); (I-39) + (S3-4); (I-39) + (S3-5); (I-39) + (S3-6); (I-39) + (S3-7); (I-39) + (S3-8); (I-39) + (S3-9); (I-39) + (S3-10); (I-39) + (S3-11); (I-39) + (S4-1); (I-39) + (S4-2); (I-39) + (S4-3); (I-39) + (S4-4); (I-39) + (S4-5); (I-39) + (S7-1); (I-39) + (S11-1); (I-39) + (S11-2); (I-39) + (S11-3); (I-39) + (S12-1); (I-39) + (S13-1); (I-39) + (S13-2); (I-39) + (S13-3); (I-39) + (S13-4): (I-39) + (S13-5); (I-39) + (S13-6); (I-39) + (S13-7); (I-39) + (S13-8); (I-39) + (S13-9); (I-39) + (S14-1)
(I-40) + (S1-1); (I-40) + (S1-2); (I-40) + (S1-3); (I-40) + (S1-4); (I-40) + (S1-5); (I-40) + (S1-6); (I-40) + (S1-7); (I-40) + (S1-8); (I-40) + (S1-9); (I-40) + (S1-10); (I-40) + (S1-11); (I-40) + (S1-12); (I-40) + (S1-13); (I-40) + (S2-1); (I-40) + (S2-2); (I-40) + (S2-3); (I-40) + (S2-4); (I-40) + (S2-5); (I-40) + (S2-6); (I-40) + (S2-7); (I-40) + (S2-8); (I-40) + (S2-9); (I-40) + (S2-10); (I-40) + (S3-1); (I-40) + (S3-2); (I-40) + (S3-3); (I-40) + (S3-4); (I-40) + (S3-5); (I-40) + (S3-6); (I-40) + (S3-7); (I-40) + (S3-8); (I-40) + (S3-9); (I-40) + (S3-10); (I-40) + (S3-11); (I-40) + (S4-1); (I-40) + (S4-2); (I-40) + (S4-3); (I-40) + (S4-4); (I-40) + (S4-5); (I-40) + (S7-1); (I-40) + (S11-1); (I-40) + (S11-2); (I-40) + (S11-3); (I-40) + (S12-1); (I-40) + (S13-1); (I-40) + (S13-2); (I-40) + (S13-3); (I-40) + (S13-4): (I-40) + (S13-5); (I-40) + (S13-6); (I-40) + (S13-7); (I-40) + (S13-8); (I-40) + (S13-9); (I-40) + (S14-1)
(I-41) + (S1-1); (I-41) + (S1-2); (I-41) + (S1-3); (I-41) + (S1-4); (I-41) + (S1-5); (I-41) + (S1-6); (I-41) + (S1-7); (I-41) + (S1-8); (I-41) + (S1-9); (I-41) + (S1-10); (I-41) + (S1-11); (I-41) + (S1-12); (I-41) + (S1-13); (I-41) + (S2-1); (I-41) + (S2-2); (I-41) + (S2-3); (I-41) + (S2-4); (I-41) + (S2-5); (I-41) + (S2-6); (I-41) + (S2-7); (I-41) + (S2-8); (I-41) + (S2-9); (I-41) + (S2-10); (I-41) + (S3-1); (I-41) + (S3-2); (I-41) + (S3-3); (I-41) + (S3-4); (I-41) + (S3-5); (I-41) + (S3-6); (I-41) + (S3-7); (I-41) + (S3-8); (I-41) + (S3-9); (I-41) + (S3-10); (I-41) + (S3-11); (I-41) + (S4-1); (I-41) + (S4-2); (I-41) + (S4-3); (I-41) + (S4-4); (I-41) + (S4-5); (I-41) + (S7-1); (I-41) + (S11-1); (I-41) + (S11-2); (I-41) + (S11-3); (I-41) + (S12-1); (I-41) + (S13-1); (I-41) + (S13-2); (I-41) + (S13-3); (I-41) + (S13-4): (I-41) + (S13-5); (I-41) + (S13-6); (I-41) + (S13-7); (I-41) + (S13-8); (I-41) + (S13-9); (I-41) + (S14-1)
(I-42) + (S1-1); (I-42) + (S1-2); (I-42) + (S1-3); (I-42) + (S1-4); (I-42) + (S1-5); (I-42) + (S1-6); (I-42) + (S1-7); (I-42) + (S1-8); (I-42) + (S1-9); (I-42) + (S1-10); (I-42) + (S1-11); (I-42) + (S1-12); (I-42) + (S1-13); (I-42) + (S2-1); (I-42) + (S2-2); (I-42) + (S2-3); (I-42) + (S2-4); (I-42) + (S2-5); (I-42) + (S2-6); (I-42) + (S2-7); (I-42) + (S2-8); (I-42) + (S2-9); (I-42) + (S2-10); (I-42) + (S3-1); (I-42) + (S3-2); (I-42) + (S3-3); (I-42) + (S3-4); (I-42) + (S3-5); (I-42) + (S3-6); (I-42) + (S3-7); (I-42) + (S3-8); (I-42) + (S3-9); (I-42) + (S3-10); (I-42) + (S3-11); (I-42) + (S4-1); (I-42) + (S4-2); (I-42) + (S4-3); (I-42) + (S4-4); (I-42) + (S4-5); (I-42) + (S7-1); (I-42) + (S11-1); (I-42) + (S11-2); (I-42) + (S11-3); (I-42) + (S12-1); (I-42) + (S13-1); (I-42) + (S13-2); (I-42) + (S13-3); (I-42) + (S13-4): (I-42) + (S13-5); (I-42) + (S13-6); (I-42) + (S13-7); (I-42) + (S13-8); (I-42) + (S13-9); (I-42) + (S14-1)
(I-43) + (S1-1); (I-43) + (S1-2); (I-43) + (S1-3); (I-43) + (S1-4); (I-43) + (S1-5); (I-43) + (S1-6); (I-43) + (S1-7); (I-43) + (S1-8); (I-43) + (S1-9); (I-43) + (S1-10); (I-43) + (S1-11); (I-43) + (S1-12); (I-43) + (S1-13); (I-43) + (S2-1); (I-43) + (S2-2); (I-43) + (S2-3); (I-43) + (S2-4); (I-43) + (S2-5); (I-43) + (S2-6); (I-43) + (S2-7); (I-43) + (S2-8); (I-43) + (S2-9); (I-43) + (S2-10); (I-43) + (S3-1); (I-43) + (S3-2); (I-43) + (S3-3); (I-43) + (S3-4); (I-43) + (S3-5); (I-43) + (S3-6); (I-43) + (S3-7); (I-43) + (S3-8); (I-43) + (S3-9); (I-43) + (S3-10); (I-43) + (S3-11); (I-43) + (S4-1); (I-43) + (S4-2); (I-43) + (S4-3); (I-43) + (S4-4); (I-43) + (S4-5); (I-43) + (S7-1); (I-43) + (S11-1); (I-43) + (S11-2); (I-43) + (S11-3); (I-43) + (S12-1); (I-43) + (S13-1); (I-43) + (S13-2); (I-43) + (S13-3); (I-43) + (S13-4): (I-43) + (S13-5); (I-43) + (S13-6); (I-43) + (S13-7); (I-43) + (S13-8); (I-43) + (S13-9); (I-43) + (S14-1)
(I-44) + (S1-1); (I-44) + (S1-2); (I-44) + (S1-3); (I-44) + (S1-4); (I-44) + (S1-5); (I-44) + (S1-6); (I-44) + (S1-7); (I-44) + (S1-8); (I-44) + (S1-9); (I-44) + (S1-10); (I-44) + (S1-11); (I-44) + (S1-12); (I-44) + (S1-13); (I-44) + (S2-1); (I-44) + (S2-2); (I-44) + (S2-3); (I-44) + (S2-4); (I-44) + (S2-5); (I-44) + (S2-6); (I-44) + (S2-7); (I-44) + (S2-8); (I-44) + (S2-9); (I-44) + (S2-10); (I-44) + (S3-1); (I-44) + (S3-2); (I-44) + (S3-3); (I-44) + (S3-4); (I-44) + (S3-5); (I-44) + (S3-6); (I-44) + (S3-7); (I-44) + (S3-8); (I-44) + (S3-9); (I-44) + (S3-10); (I-44) + (S3-11); (I-44) + (S4-1); (I-44) + (S4-2); (I-44) + (S4-3); (I-44) + (S4-4); (I-44) + (S4-5); (I-44) + (S7-1); (I-44) + (S11-1); (I-44) + (S11-2); (I-44) + (S11-3); (I-44) + (S12-1); (I-44) + (S13-1); (I-44) + (S13-2); (I-44) + (S13-3); (I-44) + (S13-4): (I-44) + (S13-5); (I-44) + (S13-6); (I-44) + (S13-7); (I-44) + (S13-8); (I-44) + (S13-9); (I-44) + (S14-1)
(I-45) + (S1-1); (I-45) + (S1-2); (I-45) + (S1-3); (I-45) + (S1-4); (I-45) + (S1-5); (I-45) + (S1-6); (I-45) + (S1-7); (I-45) + (S1-8); (I-45) + (S1-9); (I-45) + (S1-10); (I-45) + (S1-11); (I-45) + (S1-12); (I-45) + (S1-13); (I-45) + (S2-1); (I-45) + (S2-2); (I-45) + (S2-3); (I-45) + (S2-4); (I-45) + (S2-5); (I-45) + (S2-6); (I-45) + (S2-7); (I-45) + (S2-8); (I-45) + (S2-9); (I-45) + (S2-10); (I-45) + (S3-1); (I-45) + (S3-2); (I-45) + (S3-3); (I-45) + (S3-4); (I-45) + (S3-5); (I-45) + (S3-6); (I-45) + (S3-7); (I-45) + (S3-8); (I-45) + (S3-9); (I-45) + (S3-10); (I-45) + (S3-11); (I-45) + (S4-1); (I-45) + (S4-2); (I-45) + (S4-3); (I-45) + (S4-4); (I-45) + (S4-5); (I-45) + (S7-1); (I-45) + (S11-1); (I-45) + (S11-2); (I-45) + (S11-3); (I-45) + (S12-1); (I-45) + (S13-1); (I-45) + (S13-2); (I-45) + (S13-3); (I-45) + (S13-4): (I-45) + (S13-5); (I-45) + (S13-6); (I-45) + (S13-7); (I-45) + (S13-8); (I-45) + (S13-9); (I-45) + (S14-1)
(I-46) + (S1-1); (I-46) + (S1-2); (I-46) + (S1-3); (I-46) + (S1-4); (I-46) + (S1-5); (I-46) + (S1-6); (I-46) + (S1-7); (I-46) + (S1-8); (I-46) + (S1-9); (I-46) + (S1-10); (I-46) + (S1-11); (I-46) + (S1-12); (I-46) + (S1-13); (I-46) + (S2-1); (I-46) + (S2-2); (I-46) + (S2-3); (I-46) + (S2-4); (I-46) + (S2-5); (I-46) + (S2-6); (I-46) + (S2-7); (I-46) + (S2-8); (I-46) + (S2-9); (I-46) + (S2-10); (I-46) + (S3-1); (I-46) + (S3-2); (I-46) + (S3-3); (I-46) + (S3-4); (I-46) + (S3-5); (I-46) + (S3-6); (I-46) + (S3-7); (I-46) + (S3-8); (I-46) + (S3-9); (I-46) + (S3-10); (I-46) + (S3-11); (I-46) + (S4-1); (I-46) + (S4-2); (I-46) + (S4-3); (I-46) + (S4-4); (I-46) + (S4-5); (I-46) + (S7-1); (I-46) + (S11-1); (I-46) + (S11-2); (I-46) + (S11-3); (I-46) + (S12-1); (I-46) + (S13-1); (I-46) + (S13-2); (I-46) + (S13-3); (I-46) + (S13-4): (I-46) + (S13-5); (I-46) + (S13-6); (I-46) + (S13-7); (I-46) + (S13-8); (I-46) + (S13-9); (I-46) + (S14-1)
(I-47) + (S1-1); (I-47) + (S1-2); (I-47) + (S1-3); (I-47) + (S1-4); (I-47) + (S1-5); (I-47) + (S1-6); (I-47) + (S1-7); (I-47) + (S1-8); (I-47) + (S1-9); (I-47) + (S1-10); (I-47) + (S1-11); (I-47) + (S1-12); (I-47) + (S1-13); (I-47) + (S2-1); (I-47) + (S2-2); (I-47) + (S2-3); (I-47) + (S2-4); (I-47) + (S2-5); (I-47) + (S2-6); (I-47) + (S2-7); (I-47) + (S2-8); (I-47) + (S2-9); (I-47) + (S2-10); (I-47) + (S3-1); (I-47) + (S3-2); (I-47) + (S3-3); (I-47) + (S3-4); (I-47) + (S3-5); (I-47) + (S3-6); (I-47) + (S3-7); (I-47) + (S3-8); (I-47) + (S3-9); (I-47) + (S3-10); (I-47) + (S3-11); (I-47) + (S4-1); (I-47) + (S4-2); (I-47) + (S4-3); (I-47) + (S4-4); (I-47) + (S4-5); (I-47) + (S7-1); (I-47) + (S11-1); (I-47) + (S11-2); (I-47) + (S11-3); (I-47) + (S12-1); (I-47) + (S13-1); (I-47) + (S13-2); (I-47) + (S13-3); (I-47) + (S13-4): (I-47) + (S13-5); (I-47) + (S13-6); (I-47) + (S13-7); (I-47) + (S13-8); (I-47) + (S13-9); (I-47) + (S14-1)
(I-48) + (S1-1); (I-48) + (S1-2); (I-48) + (S1-3); (I-48) + (S1-4); (I-48) + (S1-5); (I-48) + (S1-6); (I-48) + (S1-7); (I-48) + (S1-8); (I-48) + (S1-9); (I-48) + (S1-10); (I-48) + (S1-11); (I-48) + (S1-12); (I-48) + (S1-13); (I-48) + (S2-1); (I-48) + (S2-2); (I-48) + (S2-3); (I-48) + (S2-4); (I-48) + (S2-5); (I-48) + (S2-6); (I-48) + (S2-7); (I-48) + (S2-8); (I-48) + (S2-9); (I-48) + (S2-10); (I-48) + (S3-1); (I-48) + (S3-2); (I-48) + (S3-3); (I-48) + (S3-4); (I-48) + (S3-5); (I-48) + (S3-6); (I-48) + (S3-7); (I-48) + (S3-8); (I-48) + (S3-9); (I-48) + (S3-10); (I-48) + (S3-11); (I-48) + (S4-1); (I-48) + (S4-2); (I-48) + (S4-3); (I-48) + (S4-4); (I-48) + (S4-5); (I-48) + (S7-1); (I-48) + (S11-1); (I-48) + (S11-2); (I-48) + (S11-3); (I-48) + (S12-1); (I-48) + (S13-1); (I-48) + (S13-2); (I-48) + (S13-3); (I-48) + (S13-4): (I-48) + (S13-5); (I-48) + (S13-6); (I-48) + (S13-7); (I-48) + (S13-8); (I-48) + (S13-9); (I-48) + (S14-1)
(I-49) + (S1-1); (I-49) + (S1-2); (I-49) + (S1-3); (I-49) + (S1-4); (I-49) + (S1-5); (I-49) + (S1-6); (I-49) + (S1-7); (I-49) + (S1-8); (I-49) + (S1-9); (I-49) + (S1-10); (I-49) + (S1-11); (I-49) + (S1-12); (I-49) + (S1-13); (I-49) + (S2-1); (I-49) + (S2-2); (I-49) + (S2-3); (I-49) + (S2-4); (I-49) + (S2-5); (I-49) + (S2-6); (I-49) + (S2-7); (I-49) + (S2-8); (I-49) + (S2-9); (I-49) + (S2-10); (I-49) + (S3-1); (I-49) + (S3-2); (I-49) + (S3-3); (I-49) + (S3-4); (I-49) + (S3-5); (I-49) + (S3-6); (I-49) + (S3-7); (I-49) + (S3-8); (I-49) + (S3-9); (I-49) + (S3-10); (I-49) + (S3-11); (I-49) + (S4-1); (I-49) + (S4-2); (I-49) + (S4-3); (I-49) + (S4-4); (I-49) + (S4-5); (I-49) + (S7-1); (I-49) + (S11-1); (I-49) + (S11-2); (I-49) + (S11-3); (I-49) + (S12-1); (I-49) + (S13-1); (I-49) + (S13-2); (I-49) + (S13-3); (I-49) + (S13-4): (I-49) + (S13-5); (I-49) + (S13-6); (I-49) + (S13-7); (I-49) + (S13-8); (I-49) + (S13-9); (I-49) + (S14-1)
(I-50) + (S1-1); (I-50) + (S1-2); (I-50) + (S1-3); (I-50) + (S1-4); (I-50) + (S1-5); (I-50) + (S1-6); (I-50) + (S1-7); (I-50) + (S1-8); (I-50) + (S1-9); (I-50) + (S1-10); (I-50) + (S1-11); (I-50) + (S1-12); (I-50) + (S1-13); (I-50) + (S2-1); (I-50) + (S2-2); (I-50) + (S2-3); (I-50) + (S2-4); (I-50) + (S2-5); (I-50) + (S2-6); (I-50) + (S2-7); (I-50) + (S2-8); (I-50) + (S2-9); (I-50) + (S2-10); (I-50) + (S3-1); (I-50) + (S3-2); (I-50) + (S3-3); (I-50) + (S3-4); (I-50) + (S3-5); (I-50) + (S3-6); (I-50) + (S3-7); (I-50) + (S3-8); (I-50) + (S3-9); (I-50) + (S3-10); (I-50) + (S3-11); (I-50) + (S4-1); (I-50) + (S4-2); (I-50) + (S4-3); (I-50) + (S4-4); (I-50) + (S4-5); (I-50) + (S7-1); (I-50) + (S11-1); (I-50) + (S11-2); (I-50) + (S11-3); (I-50) + (S12-1); (I-50) + (S13-1); (I-50) + (S13-2); (I-50) + (S13-3); (I-50) + (S13-4): (I-50) + (S13-5); (I-50) + (S13-6); (I-50) + (S13-7); (I-50) + (S13-8); (I-50) + (S13-9); (I-50) + (S14-1)
(I-51) + (S1-1); (I-51) + (S1-2); (I-51) + (S1-3); (I-51) + (S1-4); (I-51) + (S1-5); (I-51) + (S1-6); (I-51) + (S1-7); (I-51) + (S1-8); (I-51) + (S1-9); (I-51) + (S1-10); (I-51) + (S1-11); (I-51) + (S1-12); (I-51) + (S1-13); (I-51) + (S2-1); (I-51) + (S2-2); (I-51) + (S2-3); (I-51) + (S2-4); (I-51) + (S2-5); (I-51) + (S2-6); (I-51) + (S2-7); (I-51) + (S2-8); (I-51) + (S2-9); (I-51) + (S2-10); (I-51) + (S3-1); (I-51) + (S3-2); (I-51) + (S3-3); (I-51) + (S3-4); (I-51) + (S3-5); (I-51) + (S3-6); (I-51) + (S3-7); (I-51) + (S3-8); (I-51) + (S3-9); (I-51) + (S3-10); (I-51) + (S3-11); (I-51) + (S4-1); (I-51) + (S4-2); (I-51) + (S4-3); (I-51) + (S4-4); (I-51) + (S4-5); (I-51) + (S7-1); (I-51) + (S11-1); (I-51) + (S11-2); (I-51) + (S11-3); (I-51) + (S12-1); (I-51) + (S13-1); (I-51) + (S13-2); (I-51) + (S13-3); (I-51) + (S13-4): (I-51) + (S13-5); (I-51) + (S13-6); (I-51) + (S13-7); (I-51) + (S13-8); (I-51) + (S13-9); (I-51) + (S14-1)
(I-52) + (S1-1); (I-52) + (S1-2); (I-52) + (S1-3); (I-52) + (S1-4); (I-52) + (S1-5); (I-52) + (S1-6); (I-52) + (S1-7); (I-52) + (S1-8); (I-52) + (S1-9); (I-52) + (S1-10); (I-52) + (S1-11); (I-52) + (S1-12); (I-52) + (S1-13); (I-52) + (S2-1); (I-52) + (S2-2); (I-52) + (S2-3); (I-52) + (S2-4); (I-52) + (S2-5); (I-52) + (S2-6); (I-52) + (S2-7); (I-52) + (S2-8); (I-52) + (S2-9); (I-52) + (S2-10); (I-52) + (S3-1); (I-52) + (S3-2); (I-52) + (S3-3); (I-52) + (S3-4); (I-52) + (S3-5); (I-52) + (S3-6); (I-52) + (S3-7); (I-52) + (S3-8); (I-52) + (S3-9); (I-52) + (S3-10); (I-52) + (S3-11); (I-52) + (S4-1); (I-52) + (S4-2); (I-52) + (S4-3); (I-52) + (S4-4); (I-52) + (S4-5); (I-52) + (S7-1); (I-52) + (S11-1); (I-52) + (S11-2); (I-52) + (S11-3); (I-52) + (S12-1); (I-52) + (S13-1); (I-52) + (S13-2); (I-52) + (S13-3); (I-52) + (S13-4): (I-52) + (S13-5); (I-52) + (S13-6); (I-52) + (S13-7); (I-52) + (S13-8); (I-52) + (S13-9); (I-52) + (S14-1)
(I-53) + (S1-1); (I-53) + (S1-2); (I-53) + (S1-3); (I-53) + (S1-4); (I-53) + (S1-5); (I-53) + (S1-6); (I-53) + (S1-7); (I-53) + (S1-8); (I-53) + (S1-9); (I-53) + (S1-10); (I-53) + (S1-11); (I-53) + (S1-12); (I-53) + (S1-13); (I-53) + (S2-1); (I-53) + (S2-2); (I-53) + (S2-3); (I-53) + (S2-4); (I-53) + (S2-5); (I-53) + (S2-6); (I-53) + (S2-7); (I-53) + (S2-8); (I-53) + (S2-9); (I-53) + (S2-10); (I-53) + (S3-1); (I-53) + (S3-2); (I-53) + (S3-3); (I-53) + (S3-4); (I-53) + (S3-5); (I-53) + (S3-6); (I-53) + (S3-7); (I-53) + (S3-8); (I-53) + (S3-9); (I-53) + (S3-10); (I-53) + (S3-11); (I-53) + (S4-1); (I-53) + (S4-2); (I-53) + (S4-3); (I-53) + (S4-4); (I-53) + (S4-5); (I-53) + (S7-1); (I-53) + (S11-1); (I-53) + (S11-2); (I-53) + (S11-3); (I-53) + (S12-1); (I-53) + (S13-1); (I-53) + (S13-2); (I-53) + (S13-3); (I-53) + (S13-4): (I-53) + (S13-5); (I-53) + (S13-6); (I-53) + (S13-7); (I-53) + (S13-8); (I-53) + (S13-9); (I-53) + (S14-1)
(I-54) + (S1-1); (I-54) + (S1-2); (I-54) + (S1-3); (I-54) + (S1-4); (I-54) + (S1-5); (I-54) + (S1-6); (I-54) + (S1-7); (I-54) + (S1-8); (I-54) + (S1-9); (I-54) + (S1-10); (I-54) + (S1-11); (I-54) + (S1-12); (I-54) + (S1-13); (I-54) + (S2-1); (I-54) + (S2-2); (I-54) + (S2-3); (I-54) + (S2-4); (I-54) + (S2-5); (I-54) + (S2-6); (I-54) + (S2-7); (I-54) + (S2-8); (I-54) + (S2-9); (I-54) + (S2-10); (I-54) + (S3-1); (I-54) + (S3-2); (I-54) + (S3-3); (I-54) + (S3-4); (I-54) + (S3-5); (I-54) + (S3-6); (I-54) + (S3-7); (I-54) + (S3-8); (I-54) + (S3-9); (I-54) + (S3-10); (I-54) + (S3-11); (I-54) + (S4-1); (I-54) + (S4-2); (I-54) + (S4-3); (I-54) + (S4-4); (I-54) + (S4-5); (I-54) + (S7-1); (I-54) + (S11-1); (I-54) + (S11-2); (I-54) + (S11-3); (I-54) + (S12-1); (I-54) + (S13-1); (I-54) + (S13-2); (I-54) + (S13-3); (I-54) + (S13-4): (I-54) + (S13-5); (I-54) + (S13-6); (I-54) + (S13-7); (I-54) + (S13-8); (I-54) + (S13-9); (I-54) + (S14-1)
(I-55) + (S1-1); (I-55) + (S1-2); (I-55) + (S1-3); (I-55) + (S1-4); (I-55) + (S1-5); (I-55) + (S1-6); (I-55) + (S1-7); (I-55) + (S1-8); (I-55) + (S1-9); (I-55) + (S1-10); (I-55) + (S1-11); (I-55) + (S1-12); (I-55) + (S1-13); (I-55) + (S2-1); (I-55) + (S2-2); (I-55) + (S2-3); (I-55) + (S2-4); (I-55) + (S2-5); (I-55) + (S2-6); (I-55) + (S2-7); (I-55) + (S2-8); (I-55) + (S2-9); (I-55) + (S2-10); (I-55) + (S3-1); (I-55) + (S3-2); (I-55) + (S3-3); (I-55) + (S3-4); (I-55) + (S3-5); (I-55) + (S3-6); (I-55) + (S3-7); (I-55) + (S3-8); (I-55) + (S3-9); (I-55) + (S3-10); (I-55) + (S3-11); (I-55) + (S4-1); (I-55) + (S4-2); (I-55) + (S4-3); (I-55) + (S4-4); (I-55) + (S4-5); (I-55) + (S7-1); (I-55) + (S11-1); (I-55) + (S11-2); (I-55) + (S11-3); (I-55) + (S12-1); (I-55) + (S13-1); (I-55) + (S13-2); (I-55) + (S13-3); (I-55) + (S13-4): (I-55) + (S13-5); (I-55) + (S13-6); (I-55) + (S13-7); (I-55) + (S13-8); (I-55) + (S13-9); (I-55) + (S14-1)
(I-56) + (S1-1); (I-56) + (S1-2); (I-56) + (S1-3); (I-56) + (S1-4); (I-56) + (S1-5); (I-56) + (S1-6); (I-56) + (S1-7); (I-56) + (S1-8); (I-56) + (S1-9); (I-56) + (S1-10); (I-56) + (S1-11); (I-56) + (S1-12); (I-56) + (S1-13); (I-56) + (S2-1); (I-56) + (S2-2); (I-56) + (S2-3); (I-56) + (S2-4); (I-56) + (S2-5); (I-56) + (S2-6); (I-56) + (S2-7); (I-56) + (S2-8); (I-56) + (S2-9); (I-56) + (S2-10); (I-56) + (S3-1); (I-56) + (S3-2); (I-56) + (S3-3); (I-56) + (S3-4); (I-56) + (S3-5); (I-56) + (S3-6); (I-56) + (S3-7); (I-56) + (S3-8); (I-56) + (S3-9); (I-56) + (S3-10); (I-56) + (S3-11); (I-56) + (S4-1); (I-56) + (S4-2); (I-56) + (S4-3); (I-56) + (S4-4); (I-56) + (S4-5); (I-56) + (S7-1); (I-56) + (S11-1); (I-56) + (S11-2); (I-56) + (S11-3); (I-56) + (S12-1); (I-56) + (S13-1); (I-56) + (S13-2); (I-56) + (S13-3); (I-56) + (S13-4): (I-56) + (S13-5); (I-56) + (S13-6); (I-56) + (S13-7); (I-56) + (S13-8); (I-56) + (S13-9); (I-56) + (S14-1)
(I-57) + (S1-1); (I-57) + (S1-2); (I-57) + (S1-3); (I-57) + (S1-4); (I-57) + (S1-5); (I-57) + (S1-6); (I-57) + (S1-7); (I-57) + (S1-8); (I-57) + (S1-9); (I-57) + (S1-10); (I-57) + (S1-11); (I-57) + (S1-12); (I-57) + (S1-13); (I-57) + (S2-1); (I-57) + (S2-2); (I-57) + (S2-3); (I-57) + (S2-4); (I-57) + (S2-5); (I-57) + (S2-6); (I-57) + (S2-7); (I-57) + (S2-8); (I-57) + (S2-9); (I-57) + (S2-10); (I-57) + (S3-1); (I-57) + (S3-2); (I-57) + (S3-3); (I-57) + (S3-4); (I-57) + (S3-5); (I-57) + (S3-6); (I-57) + (S3-7); (I-57) + (S3-8); (I-57) + (S3-9); (I-57) + (S3-10); (I-57) + (S3-11); (I-57) + (S4-1); (I-57) + (S4-2); (I-57) + (S4-3); (I-57) + (S4-4); (I-57) + (S4-5); (I-57) + (S7-1); (I-57) + (S11-1); (I-57) + (S11-2); (I-57) + (S11-3); (I-57) + (S12-1); (I-57) + (S13-1); (I-57) + (S13-2); (I-57) + (S13-3); (I-57) + (S13-4): (I-57) + (S13-5); (I-57) + (S13-6); (I-57) + (S13-7); (I-57) + (S13-8); (I-57) + (S13-9); (I-57) + (S14-1)
(I-58) + (S1-1); (I-58) + (S1-2); (I-58) + (S1-3); (I-58) + (S1-4); (I-58) + (S1-5); (I-58) + (S1-6); (I-58) + (S1-7); (I-58) + (S1-8); (I-58) + (S1-9); (I-58) + (S1-10); (I-58) + (S1-11); (I-58) + (S1-12); (I-58) + (S1-13); (I-58) + (S2-1); (I-58) + (S2-2); (I-58) + (S2-3); (I-58) + (S2-4); (I-58) + (S2-5); (I-58) + (S2-6); (I-58) + (S2-7); (I-58) + (S2-8); (I-58) + (S2-9); (I-58) + (S2-10); (I-58) + (S3-1); (I-58) + (S3-2); (I-58) + (S3-3); (I-58) + (S3-4); (I-58) + (S3-5); (I-58) + (S3-6); (I-58) + (S3-7); (I-58) + (S3-8); (I-58) + (S3-9); (I-58) + (S3-10); (I-58) + (S3-11); (I-58) + (S4-1); (I-58) + (S4-2); (I-58) + (S4-3); (I-58) + (S4-4); (I-58) + (S4-5); (I-58) + (S7-1); (I-58) + (S11-1); (I-58) + (S11-2); (I-58) + (S11-3); (I-58) + (S12-1); (I-58) + (S13-1); (I-58) + (S13-2); (I-58) + (S13-3); (I-58) + (S13-4):(I-58) + (S13-5); (I-58) + (S13-6); (I-58) + (S13-7); (I-58) + (S13-8); (I-58) + (S13-9); (I-58) + (S14-1)
(I-59) + (S1-1); (I-59) + (S1-2); (I-59) + (S1-3); (I-59) + (S1-4); (I-59) + (S1-5); (I-59) + (S1-6); (I-59) + (S1-7); (I-59) + (S1-8); (I-59) + (S1-9); (I-59) + (S1-10); (I-59) + (S1-11); (I-59) + (S1-12); (I-59) + (S1-13); (I-59) + (S2-1); (I-59) + (S2-2); (I-59) + (S2-3); (I-59) + (S2-4); (I-59) + (S2-5); (I-59) + (S2-6); (I-59) + (S2-7); (I-59) + (S2-8); (I-59) + (S2-9); (I-59) + (S2-10); (I-59) + (S3-1); (I-59) + (S3-2); (I-59) + (S3-3); (I-59) + (S3-4); (I-59) + (S3-5); (I-59) + (S3-6); (I-59) + (S3-7); (I-59) + (S3-8); (I-59) + (S3-9); (I-59) + (S3-10); (I-59) + (S3-11); (I-59) + (S4-1); (I-59) + (S4-2); (I-59) + (S4-3); (I-59) + (S4-4); (I-59) + (S4-5); (I-59) + (S7-1); (I-59) + (S11-1); (I-59) + (S11-2); (I-59) + (S11-3); (I-59) + (S12-1); (I-59) + (S13-1); (I-59) + (S13-2); (I-59) + (S13-3); (I-59) + (S13-4): (I-59) + (S13-5); (I-59) + (S13-6); (I-59) + (S13-7); (I-59) + (S13-8); (I-59) + (S13-9); (I-59) + (S14-1)
(I-60) + (S1-1); (I-60) + (S1-2); (I-60) + (S1-3); (I-60) + (S1-4); (I-60) + (S1-5); (I-60) + (S1-6); (I-60) + (S1-7); (I-60) + (S1-8); (I-60) + (S1-9); (I-60) + (S1-10); (I-60) + (S1-11); (I-60) + (S1-12); (I-60) + (S1-13); (I-60) + (S2-1); (I-60) + (S2-2); (I-60) + (S2-3); (I-60) + (S2-4); (I-60) + (S2-5); (I-60) + (S2-6); (I-60) + (S2-7); (I-60) + (S2-8); (I-60) + (S2-9); (I-60) + (S2-10); (I-60) + (S3-1); (I-60) + (S3-2); (I-60) + (S3-3); (I-60) + (S3-4); (I-60) + (S3-5); (I-60) + (S3-6); (I-60) + (S3-7); (I-60) + (S3-8); (I-60) + (S3-9); (I-60) + (S3-10); (I-60) + (S3-11); (I-60) + (S4-1); (I-60) + (S4-2); (I-60) + (S4-3); (I-60) + (S4-4); (I-60) + (S4-5); (I-60) + (S7-1); (I-60) + (S11-1); (I-60) + (S11-2); (I-60) + (S11-3); (I-60) + (S12-1); (I-60) + (S13-1); (I-60) + (S13-2); (I-60) + (S13-3); (I-60) + (S13-4): (I-60) + (S13-5); (I-60) + (S13-6); (I-60) + (S13-7); (I-60) + (S13-8); (I-60) + (S13-9); (I-60) + (S14-1)
(I-61) + (S1-1); (I-61) + (S1-2); (I-61) + (S1-3); (I-61) + (S1-4); (I-61) + (S1-5); (I-61) + (S1-6); (I-61) + (S1-7); (I-61) + (S1-8); (I-61) + (S1-9); (I-61) + (S1-10); (I-61) + (S1-11); (I-61) + (S1-12); (I-61) + (S1-13); (I-61) + (S2-1); (I-61) + (S2-2); (I-61) + (S2-3); (I-61) + (S2-4); (I-61) + (S2-5); (I-61) + (S2-6); (I-61) + (S2-7); (I-61) + (S2-8); (I-61) + (S2-9); (I-61) + (S2-10); (I-61) + (S3-1); (I-61) + (S3-2); (I-61) + (S3-3); (I-61) + (S3-4); (I-61) + (S3-5); (I-61) + (S3-6); (I-61) + (S3-7); (I-61) + (S3-8); (I-61) + (S3-9); (I-61) + (S3-10); (I-61) + (S3-11); (I-61) + (S4-1); (I-61) + (S4-2); (I-61) + (S4-3); (I-61) + (S4-4); (I-61) + (S4-5); (I-61) + (S7-1); (I-61) + (S11-1); (I-61) + (S11-2); (I-61) + (S11-3); (I-61) + (S12-1); (I-61) + (S13-1); (I-61) + (S13-2); (I-61) + (S13-3); (I-61) + (S13-4): (I-61) + (S13-5); (I-61) + (S13-6); (I-61) + (S13-7); (I-61) + (S13-8); (I-61) + (S13-9); (I-61) + (S14-1)
(I-62) + (S1-1); (I-62) + (S1-2); (I-62) + (S1-3); (I-62) + (S1-4); (I-62) + (S1-5); (I-62) + (S1-6); (I-62) + (S1-7); (I-62) + (S1-8); (I-62) + (S1-9); (I-62) + (S1-10); (I-62) + (S1-11); (I-62) + (S1-12); (I-62) + (S1-13); (I-62) + (S2-1); (I-62) + (S2-2); (I-62) + (S2-3); (I-62) + (S2-4); (I-62) + (S2-5); (I-62) + (S2-6); (I-62) + (S2-7); (I-62) + (S2-8); (I-62) + (S2-9); (I-62) + (S2-10); (I-62) + (S3-1); (I-62) + (S3-2); (I-62) + (S3-3); (I-62) + (S3-4); (I-62) + (S3-5); (I-62) + (S3-6); (I-62) + (S3-7); (I-62) + (S3-8); (I-62) + (S3-9); (I-62) + (S3-10); (I-62) + (S3-11); (I-62) + (S4-1); (I-62) + (S4-2); (I-62) + (S4-3); (I-62) + (S4-4); (I-62) + (S4-5); (I-62) + (S7-1); (I-62) + (S11-1); (I-62) + (S11-2); (I-62) + (S11-3); (I-62) + (S12-1); (I-62) + (S13-1); (I-62) + (S13-2); (I-62) + (S13-3); (I-62) + (S13-4): (I-62) + (S13-5); (I-62) + (S13-6); (I-62) + (S13-7); (I-62) + (S13-8); (I-62) + (S13-9); (I-62) + (S14-1)
(I-63) + (S1-1); (I-63) + (S1-2); (I-63) + (S1-3); (I-63) + (S1-4); (I-63) + (S1-5); (I-63) + (S1-6); (I-63) + (S1-7); (I-63) + (S1-8); (I-63) + (S1-9); (I-63) + (S1-10); (I-63) + (S1-11); (I-63) + (S1-12); (I-63) + (S1-13); (I-63) + (S2-1); (I-63) + (S2-2); (I-63) + (S2-3); (I-63) + (S2-4); (I-63) + (S2-5); (I-63) + (S2-6); (I-63) + (S2-7); (I-63) + (S2-8); (I-63) + (S2-9); (I-63) + (S2-10); (I-63) + (S3-1); (I-63) + (S3-2); (I-63) + (S3-3); (I-63) + (S3-4); (I-63) + (S3-5); (I-63) + (S3-6); (I-63) + (S3-7); (I-63) + (S3-8); (I-63) + (S3-9); (I-63) + (S3-10); (I-63) + (S3-11); (I-63) + (S4-1); (I-63) + (S4-2); (I-63) + (S4-3); (I-63) + (S4-4); (I-63) + (S4-5); (I-63) + (S7-1); (I-63) + (S11-1); (I-63) + (S11-2); (I-63) + (S11-3); (I-63) + (S12-1); (I-63) + (S13-1); (I-63) + (S13-2); (I-63) + (S13-3); (I-63) + (S13-4): (I-63) + (S13-5); (I-63) + (S13-6); (I-63) + (S13-7); (I-63) + (S13-8); (I-63) + (S13-9); (I-63) + (S14-1)
(I-64) + (S1-1); (I-64) + (S1-2); (I-64) + (S1-3); (I-64) + (S1-4); (I-64) + (S1-5); (I-64) + (S1-6); (I-64) + (S1-7); (I-64) + (S1-8); (I-64) + (S1-9); (I-64) + (S1-10); (I-64) + (S1-11); (I-64) + (S1-12); (I-64) + (S1-13); (I-64) + (S2-1); (I-64) + (S2-2); (I-64) + (S2-3); (I-64) + (S2-4); (I-64) + (S2-5); (I-64) + (S2-6); (I-64) + (S2-7); (I-64) + (S2-8); (I-64) + (S2-9); (I-64) + (S2-10); (I-64) + (S3-1); (I-64) + (S3-2); (I-64) + (S3-3); (I-64) + (S3-4); (I-64) + (S3-5); (I-64) + (S3-6); (I-64) + (S3-7); (I-64) + (S3-8); (I-64) + (S3-9); (I-64) + (S3-10); (I-64) + (S3-11); (I-64) + (S4-1); (I-64) + (S4-2); (I-64) + (S4-3); (I-64) + (S4-4); (I-64) + (S4-5); (I-64) + (S7-1); (I-64) + (S11-1); (I-64) + (S11-2); (I-64) + (S11-3); (I-64) + (S12-1); (I-64) + (S13-1); (I-64) + (S13-2); (I-64) + (S13-3); (I-64) + (S13-4): (I-64) + (S13-5); (I-64) + (S13-6); (I-64) + (S13-7); (I-64) + (S13-8); (I-64) + (S13-9); (I-64) + (S14-1)
(I-65) + (S1-1); (I-65) + (S1-2); (I-65) + (S1-3); (I-65) + (S1-4); (I-65) + (S1-5); (I-65) + (S1-6); (I-65) + (S1-7); (I-65) + (S1-8); (I-65) + (S1-9); (I-65) + (S1-10); (I-65) + (S1-11); (I-65) + (S1-12); (I-65) + (SI-13); (I-65) + (S2-1); (I-65) + (S2-2); (I-65) + (S2-3); (I-65) + (S2-4); (I-65) + (S2-5); (I-65) + (S2-6); (I-65) + (S2-7); (I-65) + (S2-8); (I-65) + (S2-9); (I-65) + (S2-10); (I-65) + (S3-1); (I-65) + (S3-2); (I-65) + (S3-3); (I-65) + (S3-4); (I-65) + (S3-5); (I-65) + (S3-6); (I-65) + (S3-7); (I-65) + (S3-8); (I-65) + (S3-9); (I-65) + (S3-10); (I-65) + (S3-11); (I-65) + (S4-1); (I-65) + (S4-2); (I-65) + (S4-3); (I-65) + (S4-4); (I-65) + (S4-5); (I-65) + (S7-1); (I-65) + (S11-1); (I-65) + (S11-2); (I-65) + (S11-3); (I-65) + (S12-1); (I-65) + (S13-1); (I-65) + (S13-2); (I-65) + (S13-3); (I-65) + (S13-4): (I-65) + (S13-5); (I-65) + (S13-6); (I-65) + (S13-7); (I-65) + (S13-8); (I-65) + (S13-9); (I-65) + (S14-1)
(I-66) + (S1-1); (I-66) + (S1-2); (I-66) + (S1-3); (I-66) + (S1-4); (I-66) + (S1-5); (I-66) + (S1-6); (I-66) + (S1-7); (I-66) + (S1-8); (I-66) + (S1-9); (I-66) + (S1-10); (I-66) + (S1 - 11); (I-66) + (S1-12); (I-66) + (S1-13); (I-66) + (S2-1); (I-66) + (S2-2); (I-66) + (S2-3); (I-66) + (S2-4); (I-66) + (S2-5); (I-66) + (S2-6); (I-66) + (S2-7); (I-66) + (S2-8); (I-66) + (S2-9); (I-66) + (S2-10); (I-66) + (S3-1); (I-66) + (S3-2); (I-66) + (S3-3); (I-66) + (S3-4); (I-66) + (S3-5); (I-66) + (S3-6); (I-66) + (S3-7); (I-66) + (S3-8); (I-66) + (S3-9); (I-66) + (S3-10); (I-66) + (S3-11); (I-66) + (S4-1); (I-66) + (S4-2); (I-66) + (S4-3); (I-66) + (S4-4); (I-66) + (S4-5); (I-66) + (S7-1); (I-66) + (S11-1); (I-66) + (S11-2); (I-66) + (S11-3); (I-66) + (S12-1); (I-66) + (S13-1); (I-66) + (S13-2); (I-66) + (S13-3); (I-66) + (S13-4): (I-66) + (S13-5); (I-66) + (S13-6); (I-66) + (S13-7); (I-66) + (S13-8); (I-66) + (S13-9); (I-66) + (S14-1)
(I-67) + (S1-1); (I-67) + (S1-2); (I-67) + (S1-3); (I-67) + (S1-4); (I-67) + (S1-5); (I-67) + (S1-6); (I-67) + (S1-7); (I-67) + (S1-8); (I-67) + (S1-9); (I-67) + (S1-10); (I-67) + (S1-11); (I-67) + (S1-12); (I-67) + (S1-13); (I-67) + (S2-1); (I-67) + (S2-2); (I-67) + (S2-3); (I-67) + (S2-4); (I-67) + (S2-5); (I-67) + (S2-6), (I-67) + (S2-7); (I-67) + (S2-8); (I-67) + (S2-9); (I-67) + (S2-10); (I-67) + (S3-1); (I-67) + (S3-2); (I-67) + (S3-3); (I-67) + (S3-4); (I-67) + (S3-5); (I-67) + (S3-6), (I-67) + (S3-7); (I-67) + (S3-8); (I-67) + (S3-9); (I-67) + (S3-10); (I-67) + (S3-11); (I-67) + (S4-1); (I-67) + (S4-2); (I-67) + (S4-3); (I-67) + (S4-4); (I-67) + (S4-5); (I-67) + (S7-1); (I-67) + (S11-1); (I-67) + (S11-2); (I-67) + (S11-3); (I-67) + (S12-1); (I-67) + (S13-1); (I-67) + (S13-2); (I-67) + (S13-3); (I-67) + (S13-4): (I-67) + (S13-5); (I-67) + (S13-6); (I-67) + (S13-7); (I-67) + (S13-8); (I-67) + (S13-9); (I-67) + (S14-1)
(I-68) + (S1-1); (I-68) + (S1-2); (I-68) + (S1-3); (I-68) + (S1-4); (I-68) + (S1-5); (I-68) + (S1-6); (I-68) + (S1-7); (I-68) + (S1-8); (I-68) + (S1-9); (I-68) + (S1-10); (I-68) + (S1-11); (I-68) + (S1-12); (I-68) + (S1-13); (I-68) + (S2-1); (I-68) + (S2-2); (I-68) + (S2-3); (I-68) + (S2-4); (I-68) + (S2-5); (I-68) + (S2-6); (I-68) + (S2-7); (I-68) + (S2-8); (I-68) + (S2-9); (I-68) + (S2-10); (I-68) + (S3-1); (I-68) + (S3-2), (I-68) + (S3-3); (I-68) + (S3-4); (I-68) + (S3-5); (I-68) + (S3-6); (I-68) + (S3-7); (I-68) + (S3-8); (I-68) + (S3-9); (I-68) + (S3-10); (I-68) + (S3-11); (I-68) + (S4-1); (I-68) + (S4-2); (I-68) + (S4-3); (I-68) + (S4-4); (I-68) + (S4-5); (I-68) + (S7-1); (I-68) + (S11-1); (I-68) + (S11-2); (I-68) + (S11-3); (I-68) + (S12-1); (I-68) + (S13-1); (I-68) + (S13-2); (I-68) + (S13-3); (I-68) + (S13-4): (I-68) + (S13-5); (I-68) + (S13-6); (I-68) + (S13-7); (I-68) + (S13-8); (I-68) + (S13-9); (I-68) + (S14-1)
(I-69) + (S1-1); (I-69) + (S1-2); (I-69) + (S1-3); (I-69) + (S1-4); (I-69) + (S1-5); (I-69) + (S1-6); (I-69) + (S1-7); (I-69) + (S1-8); (I-69) + (S1-9); (I-69) + (S1-10); (I-69) + (S1-11); (I-69) + (S1-12); (I-69) + (S1-13); (I-69) + (S2-1); (I-69) + (S2-2); (I-69) + (S2-3); (I-69) + (S2-4); (I-69) + (S2-5); (I-69) + (S2-6); (I-69) + (S2-7); (I-69) + (S2-8); (I-69) + (S2-9); (I-69) + (S2-10); (I-69) + (S3-1); (I-69) + (S3-2); (I-69) + (S3-3); (I-69) + (S3-4); (I-69) + (S3-5); (I-69) + (S3-6); (I-69) + (S3-7); (I-69) + (S3-8); (I-69) + (S3-9); (I-69) + (S3-10); (I-69) + (S3-11); (I-69) + (S4-1); (I-69) + (S4-2); (I-69) + (S4-3); (I-69) + (S4-4); (I-69) + (S4-5); (I-69) + (S7-1); (I-69) + (S11-1); (I-69) + (S11-2); (I-69) + (S11-3); (I-69) + (S12-1); (I-69) + (S13-1); (I-69) + (S13-2); (I-69) + (S13-3); (I-69) + (S13-4): (I-69) + (S13-5); (I-69) + (S13-6); (I-69) + (S13-7); (I-69) + (S13-8); (I-69) + (S13-9); (I-69) + (S14-1)
(I-70) + (S1-1); (I-70) + (S1-2); (I-70) + (S1-3); (I-70) + (S1-4); (I-70) + (S1-5), (I-70) + (S1-6); (I-70) + (S1-7); (I-70) + (S1-8); (I-70) + (S1-9); (I-70) + (S1-10); (I-70) + (S1-11); (I-70) + (S1-12); (I-70) + (S1-13); (I-70) + (S2-1); (I-70) + (S2-2); (I-70) + (S2-3); (I-70) + (S2-4); (I-70) + (S2-5); (I-70) + (S2-6); (I-70) + (S2-7); (I-70) + (S2-8); (I-70) + (S2-9); (I-70) + (S2-10); (I-70) + (S3-1); (I-70) + (S3-2); (I-70) + (S3-3); (I-70) + (S3-4); (I-70) + (S3-5); (I-70) + (S3-6); (I-70) + (S3-7); (I-70) + (S3-8); (I-70) + (S3-9); (I-70) + (S3-10); (I-70) + (S3-11); (I-70) + (S4-1); (I-70) + (S4-2); (I-70) + (S4-3); (I-70) + (S4-4); (I-70) + (S4-5); (I-70) + (S7-1); (I-70) + (S11-1); (I-70) + (S11-2); (I-70) + (S11-3); (I-70) + (S12-1); (I-70) + (S13-1); (I-70) + (S13-2); (I-70) + (S13-3); (I-70) + (S13-4): (I-70) + (S13-5); (I-70) + (S13-6); (I-70) + (S13-7); (I-70) + (S13-8); (I-70) + (S13-9); (I-70) + (S14-1)
(I-71) + (S1-1); (I-71) + (S1-2); (I-71) + (S1-3); (I-71) + (S1-4); (I-71) + (S1-5); (I-71) + (S1-6); (I-71) + (S1-7); (I-71) + (S1-8); (I-71) + (S1-9); (I-71) + (S1-10); (I-71) + (S1-11); (I-71) + (S1-12); (I-71) + (S1-13); (I-71) + (S2-1); (I-71) + (S2-2); (I-71) + (S2-3); (I-71) + (S2-4); (I-71) + (S2-5); (I-71) + (S2-6); (I-71) + (S2-7); (I-71) + (S2-8); (I-71) + (S2-9); (I-71) + (S2-10); (I-71) + (S3-1); (I-71) + (S3-2); (I-71) + (S3-3); (I-71) + (S3-4); (I-71) + (S3-5); (I-71) + (S3-6); (I-71) + (S3-7); (I-71) + (S3-8); (I-71) + (S3-9); (I-71) + (S3-10); (I-71) + (S3-11); (I-71) + (S4-1); (I-71) + (S4-2); (I-71) + (S4-3); (I-71) + (S4-4); (I-71) + (S4-5); (I-71) + (S7-1); (I-71) + (S11-1); (I-71) + (S11-2); (I-71) + (S11-3); (I-71) + (S12-1); (I-71) + (S13-1); (I-71) + (S13-2); (I-71) + (S13-3); (I-71) + (S13-4): (I-71) + (S13-5); (I-71) + (S13-6); (I-71) + (S13-7); (I-71) + (S13-8); (I-71) + (S13-9); (I-71) + (S14-1)
(I-72) + (S1-1); (I-72) + (S1-2); (I-72) + (S1-3); (I-72) + (S1-4); (I-72) + (S1-5); (I-72) + (S1-6); (I-72) + (S1-7); (I-72) + (S1-8); (I-72) + (S1-9); (I-72) + (S1-10); (I-72) + (S1-11); (I-72) + (S1-12); (I-72) + (S1-13); (I-72) + (S2-1); (I-72) + (S2-2); (I-72) + (S2-3); (I-72) + (S2-4); (I-72) + (S2-5); (I-72) + (S2-6); (I-72) + (S2-7); (I-72) + (S2-8); (I-72) + (S2-9); (I-72) + (S2-10); (I-72) + (S3-1); (I-72) + (S3-2); (I-72) + (S3-3); (I-72) + (S3-4); (I-72) + (S3-5); (I-72) + (S3-6); (I-72) + (S3-7); (I-72) + (S3-8); (I-72) + (S3-9); (I-72) + (S3-10); (I-72) + (S3-11); (I-72) + (S4-1); (I-72) + (S4-2); (I-72) + (S4-3); (I-72) + (S4-4); (I-72) + (S4-5); (I-72) + (S7-1); (I-72) + (S11-1); (I-72) + (S11-2); (I-72) + (S11-3); (I-72) + (S12-1); (I-72) + (S13-1); (I-72) + (S13-2); (I-72) + (S13-3); (I-72) + (S13-4): (I-72) + (S13-5); (I-72) + (S13-6); (I-72) + (S13-7); (I-72) + (S13-8); (I-72) + (S13-9); (I-72) + (S14-1)
(I-73) + (S1-1); (I-73) + (S1-2); (I-73) + (S1-3); (I-73) + (S1-4); (I-73) + (S1-5); (I-73) + (S1-6); (I-73) + (S1-7); (I-73) + (S1-8); (I-73) + (S1-9); (I-73) + (S1-10); (I-73) + (S1-11); (I-73) + (S1-12); (I-73) + (S1-13); (I-73) + (S2-1); (I-73) + (S2-2); (I-73) + (S2-3); (I-73) + (S2-4); (I-73) + (S2-5); (I-73) + (S2-6); (I-73) + (S2-7); (I-73) + (S2-8); (I-73) + (S2-9); (I-73) + (S2-10); (I-73) + (S3-1); (I-73) + (S3-2); (I-73) + (S3-3); (I-73) + (S3-4); (I-73) + (S3-5); (I-73) + (S3-6); (l-73) + (S3-7); (I-73) + (S3-8); (I-73) + (S3-9); (I-73) + (S3-10); (I-73) + (S3-11); (I-73) + (S4-1); (I-73) + (S4-2); (I-73) + (S4-3); (I-73) + (S4-4); (I-73) + (S4-5); (I-73) + (S7-1); (I-73) + (S11 -1); (I-73) + (S11-2); (I-73) + (S11-3); (I-73) + (S12-1); (I-73) + (S13-1); (I-73) + (S13-2); (I-73) + (S13-3); (I-73) + (S13-4): (I-73) + (S13-5); (I-73) + (S13-6); (I-73) + (S13-7); (I-73) + (S13-8); (I-73) + (S13-9); (I-73) + (S14-1)
(I-74) + (S1-1); (I-74) + (S1-2); (I-74) + (S1-3); (I-74) + (S1-4); (I-74) + (S1-5); (I-74) + (S1-6); (I-74) + (S1-7); (I-74) + (S1-8); (I-74) + (S1-9); (I-74) + (S1-10); (I-74) + (S1-11); (I-74) + (S1-12); (I-74) + (S1-13); (I-74) + (S2-1); (I-74) + (S2-2); (I-74) + (S2-3); (I-74) + (S2-4); (I-74) + (S2-5); (I-74) + (S2-6); (I-74) + (S2-7); (I-74) + (S2-8); (I-74) + (S2-9); (I-74) + (S2-10); (I-74) + (S3-1); (I-74) + (S3-2); (I-74) + (S3-3); (I-74) + (S3-4); (I-74) + (S3-5); (I-74) + (S3-6); (I-74) + (S3-7); (I-74) + (S3-8); (I-74) + (S3-9); (I-74) + (S3-10); (I-74) + (S3-11); (I-74) + (S4-1); (I-74) + (S4-2); (I-74) + (S4-3); (I-74) + (S4-4); (I-74) + (S4-5); (I-74) + (S7-1); (I-74) + (S11-1); (I-74) + (S11-2); (I-74) + (S11-3); (I-74) + (S12-1); (I-74) + (S13-1); (I-74) + (S13-2); (I-74) + (S13-3); (I-74) + (S13-4): (I-74) + (S13-5); (I-74) + (S13-6); (I-74) + (S13-7); (I-74) + (S13-8); (I-74) + (S13-9); (I-74) + (S14-1)
(I-75) + (S1-1); (I-75) + (S1-2); (I-75) + (S1-3); (I-75) + (S1-4); (I-75) + (S1-5); (I-75) + (S1-6); (I-75) + (S1-7); (I-75) + (S1-8); (I-75) + (S1-9); (I-75) + (S1-10); (I-75) + (S1-11); (I-75) + (S1-12); (I-75) + (S1-13); (I-75) + (S2-1); (I-75) + (S2-2); (I-75) + (S2-3); (I-75) + (S2-4); (I-75) + (S2-5); (I-75) + (S2-6); (I-75) + (S2-7); (I-75) + (S2-8); (I-75) + (S2-9); (I-75) + (S2-10); (I-75) + (S3-1); (I-75) + (S3-2); (I-75) + (S3-3); (I-75) + (S3-4); (I-75) + (S3-5); (I-75) + (S3-6); (I-75) + (S3-7); (I-75) + (S3-8); (I-75) + (S3-9); (I-75) + (S3-10); (I-75) + (S3-11); (I-75) + (S4-1); (I-75) + (S4-2); (I-75) + (S4-3); (I-75) + (S4-4); (I-75) + (S4-5); (I-75) + (S7-1); (I-75) + (S11-1); (I-75) + (S11-2); (I-75) + (S11-3); (I-75) + (S12-1); (I-75) + (S13-1); (I-75) + (S13-2); (I-75) + (S13-3); (I-75) + (S13-4): (I-75) + (S13-5); (I-75) + (S13-6); (I-75) + (S13-7); (I-75) + (S13-8); (I-75) + (S13-9); (I-75) + (S14-1)
(I-76) + (S1-1); (I-76) + (S1-2); (I-76) + (S1-3); (I-76) + (S1-4); (I-76) + (S1-5); (I-76) + (S1-6); (I-76) + (S1-7); (I-76) + (S1-8); (I-76) + (S1-9); (I-76) + (S1-10); (I-76) + (S1-11); (I-76) + (S1-12); (I-76) + (S1-13); (I-76) + (S2-1); (I-76) + (S2-2); (I-76) + (S2-3); (I-76) + (S2-4); (I-76) + (S2-5); (I-76) + (S2-6); (I-76) + (S2-7); (I-76) + (S2-8); (I-76) + (S2-9); (I-76) + (S2-10); (I-76) + (S3-1); (I-76) + (S3-2); (I-76) + (S3-3); (I-76) + (S3-4); (I-76) + (S3-5); (I-76) + (S3-6); (I-76) + (S3-7); (I-76) + (S3-8); (I-76) + (S3-9); (I-76) + (S3-10); (I-76) + (S3-11); (I-76) + (S4-1); (I-76) + (S4-2); (I-76) + (S4-3); (I-76) + (S4-4); (I-76) + (S4-5); (I-76) + (S7-1); (I-76) + (S11-1); (I-76) + (S11-2); (I-76) + (S11-3); (I-76) + (S12-1); (I-76) + (S13-1); (I-76) + (S13-2); (I-76) + (S13-3); (I-76) + (S13-4): (I-76) + (S13-5); (I-76) + (S13-6); (I-76) + (S13-7); (I-76) + (S13-8); (I-76) + (S13-9); (I-76) + (S14-1)
(I-77) + (S1-1); (I-77) + (S1-2); (I-77) + (S1-3); (I-77) + (S1-4); (I-77) + (S1-5); (I-77) + (S1-6); (I-77) + (S1-7); (I-77) + (S1-8); (I-77) + (S1-9); (I-77) + (S1-10); (I-77) + (S1-11); (I-77) + (S1-12); (I-77) + (S1-13); (I-77) + (S2-1); (I-77) + (S2-2); (I-77) + (S2-3); (I-77) + (S2-4); (I-77) + (S2-5); (I-77) + (S2-6); (I-77) + (S2-7); (I-77) + (S2-8); (I-77) + (S2-9); (I-77) + (S2-10); (I-77) + (S3-1); (I-77) + (S3-2); (I-77) + (S3-3); (I-77) + (S3-4); (I-77) + (S3-5); (I-77) + (S3-6); (I-77) + (S3-7); (I-77) + (S3-8); (I-77) + (S3-9); (I-77) + (S3-10); (I-77) + (S3-11); (I-77) + (S4-1); (I-77) + (S4-2); (I-77) + (S4-3); (I-77) + (S4-4); (I-77) + (S4-5); (I-77) + (S7-1); (I-77) + (S11-1); (I-77) + (S11-2); (I-77) + (S11-3); (I-77) + (S12-1); (I-77) + (S13-1); (I-77) + (S13-2); (I-77) + (S13-3); (I-77) + (S13-4): (I-77) + (S13-5); (I-77) + (S13-6); (I-77) + (S13-7); (I-77) + (S13-8); (I-77) + (S13-9); (I-77) + (S14-1)
(I-78) + (S1-1); (I-78) + (S1-2); (I-78) + (S1-3); (I-78) + (S1-4); (I-78) + (S1-5); (I-78) + (S1-6); (I-78) + (S1-7); (I-78) + (S1-8); (I-78) + (S1-9); (I-78) + (S1-10); (I-78) + (S1 - 11); (I-78) + (S1-12); (I-78) + (S1-13); (I-78) + (S2-1); (I-78) + (S2-2); (I-78) + (S2-3); (I-78) + (S2-4); (I-78) + (S2-5); (I-78) + (S2-6); (I-78) + (S2-7); (I-78) + (S2-8); (I-78) + (S2-9); (I-78) + (S2-10); (I-78) + (S3-1); (I-78) + (S3-2); (I-78) + (S3-3); (I-78) + (S3-4); (I-78) + (S3-5); (I-78) + (S3-6); (I-78) + (S3-7); (I-78) + (S3-8); (I-78) + (S3-9); (I-78) + (S3-10); (I-78) + (S3-11); (I-78) + (S4-1); (I-78) + (S4-2); (I-78) + (S4-3); (I-78) + (S4-4); (I-78) + (S4-5); (I-78) + (S7-1); (I-78) + (S11-1); (I-78) + (S11-2); (I-78) + (S11-3); (I-78) + (S12-1); (I-78) + (S13-1); (I-78) + (S13-2); (I-78) + (S13-3); (I-78) + (S13-4): (I-78) + (S13-5); (I-78) + (S13-6); (I-78) + (S13-7); (I-78) + (S13-8); (I-78) + (S13-9); (I-78) + (S14-1)
(I-79) + (S1-1); (I-79) + (S1-2); (I-79) + (S1-3); (I-79) + (S1-4); (I-79) + (S1-5); (I-79) + (S1-6); (I-79) + (S1-7); (I-79) + (S1-8); (I-79) + (S1-9); (I-79) + (S1-10); (I-79) + (S1-11); (I-79) + (S1-12); (I-79) + (S1-13); (I-79) + (S2-1); (I-79) + (S2-2); (I-79) + (S2-3); (I-79) + (S2-4); (I-79) + (S2-5); (I-79) + (S2-6); (I-79) + (S2-7); (I-79) + (S2-8); (I-79) + (S2-9); (I-79) + (S2-10); (I-79) + (S3-1); (I-79) + (S3-2); (I-79) + (S3-3); (I-79) + (S3-4); (I-79) + (S3-5); (I-79) + (S3-6); (I-79) + (S3-7); (I-79) + (S3-8); (I-79) + (S3-9); (I-79) + (S3-10); (I-79) + (S3-11); (I-79) + (S4-1); (I-79) + (S4-2); (I-79) + (S4-3); (I-79) + (S4-4); (I-79) + (S4-5); (I-79) + (S7-1); (I-79) + (S11-1); (I-79) + (S11-2); (I-79) + (S11-3); (I-79) + (S12-1); (I-79) + (S13-1); (I-79) + (S13-2); (I-79) + (S13-3); (I-79) + (S13-4): (I-79) + (S13-5); (I-79) + (S13-6); (I-79) + (S13-7); (I-79) + (S13-8); (I-79) + (S13-9); (I-79) + (S14-1)
(I-80) + (S1-1); (I-80) + (S1-2); (I-80) + (S1-3); (I-80) + (S1-4); (I-80) + (S1-5); (I-80) + (S1-6); (I-80) + (S1-7); (I-80) + (S1-8); (I-80) + (S1-9); (I-80) + (S1-10); (I-80) + (S1-11); (I-80) + (S1-12); (I-80) + (S1-13); (I-80) + (S2-1); (I-80) + (S2-2); (I-80) + (S2-3); (I-80) + (S2-4); (I-80) + (S2-5); (I-80) + (S2-6); (I-80) + (S2-7); (I-80) + (S2-8); (I-80) + (S2-9); (I-80) + (S2-10); (I-80) + (S3-1); (I-80) + (S3-2); (I-80) + (S3-3); (I-80) + (S3-4); (I-80) + (S3-5); (I-80) + (S3-6); (I-80) + (S3-7); (I-80) + (S3-8); (I-80) + (S3-9); (I-80) + (S3-10); (I-80) + (S3-11); (I-80) + (S4-1); (I-80) + (S4-2); (I-80) + (S4-3); (I-80) + (S4-4); (I-80) + (S4-5); (I-80) + (S7-1); (I-80) + (S11-1); (I-80) + (S11-2); (I-80) + (S11-3); (I-80) + (S12-1); (I-80) + (S13-1); (I-80) + (S13-2); (I-80) + (S13-3); (I-80) + (S13-4): (I-80) + (S13-5); (I-80) + (S13-6); (I-80) + (S13-7); (I-80) + (S13-8); (I-80) + (S13-9); (I-80) + (S14-1)
(I-81) + (S1-1); (I-81) + (S1-2); (I-81) + (S1-3); (I-81) + (S1-4); (I-81) + (S1-5); (I-81) + (S1-6); (I-81) + (S1-7); (I-81) + (S1-8); (I-81) + (S1-9); (I-81) + (S1-10); (I-81) + (S1-11); (I-81) + (S1-12); (I-81) + (S1-13); (I-81) + (S2-1); (I-81) + (S2-2); (I-81) + (S2-3); (I-81) + (S2-4); (I-81) + (S2-5); (I-81) + (S2-6); (I-81) + (S2-7); (I-81) + (S2-8); (I-81) + (S2-9); (I-81) + (S2-10); (I-81) + (S3-1); (I-81) + (S3-2); (I-81) + (S3-3); (I-81) + (S3-4); (I-81) + (S3-5); (I-81) + (S3-6); (I-81) + (S3-7); (I-81) + (S3-8); (I-81) + (S3-9); (I-81) + (S3-10); (I-81) + (S3-11); (I-81) + (S4-1); (I-81) + (S4-2); (I-81) + (S4-3); (I-81) + (S4-4); (I-81) + (S4-5); (I-81) + (S7-1); (I-81) + (S11-1); (I-81) + (S11-2); (I-81) + (S11-3); (I-81) + (S12-1); (I-81) + (S13-1); (I-81) + (S13-2); (I-81) + (S13-3); (I-81) + (S13-4): (I-81) + (S13-5); (I-81) + (S13-6); (I-81) + (S13-7); (I-81) + (S13-8); (I-81) + (S13-9); (I-81) + (S14-1)
(I-82) + (S1-1); (I-82) + (S1-2); (I-82) + (S1-3); (I-82) + (S1-4); (I-82) + (S1-5); (I-82) + (S1-6); (I-82) + (S1-7); (I-82) + (S1-8); (I-82) + (S1-9); (I-82) + (S1-10); (I-82) + (S1-11); (I-82) + (S1-12); (I-82) + (S1-13); (I-82) + (S2-1); (I-82) + (S2-2); (I-82) + (S2-3); (I-82) + (S2-4); (I-82) + (S2-5); (I-82) + (S2-6); (I-82) + (S2-7); (I-82) + (S2-8); (I-82) + (S2-9); (I-82) + (S2-10); (I-82) + (S3-1); (I-82) + (S3-2); (I-82) + (S3-3); (I-82) + (S3-4); (I-82) + (S3-5); (I-82) + (S3-6); (I-82) + (S3-7); (I-82) + (S3-8); (I-82) + (S3-9); (I-82) + (S3-10); (I-82) + (S3-11); (I-82) + (S4-1); (I-82) + (S4-2); (I-82) + (S4-3); (I-82) + (S4-4); (I-82) + (S4-5); (I-82) + (S7-1); (I-82) + (S11-1); (I-82) + (S11-2); (I-82) + (S11-3); (I-82) + (S12-1); (I-82) + (S13-1); (I-82) + (S13-2); (I-82) + (S13-3); (I-82) + (S13-4): (I-82) + (S13-5); (I-82) + (S13-6); (I-82) + (S13-7); (I-82) + (S13-8); (I-82) + (S13-9); (I-82) + (S14-1)
(I-83) + (S1-1); (I-83) + (S1-2); (I-83) + (S1-3); (I-83) + (S1-4); (I-83) + (S1-5); (I-83) + (S1-6); (I-83) + (S1-7); (I-83) + (S1-8); (I-83) + (S1-9); (I-83) + (S1-10); (I-83) + (S1-11); (I-83) + (S1-12); (I-83) + (S1-13); (I-83) + (S2-1); (I-83) + (S2-2); (I-83) + (S2-3); (I-83) + (S2-4); (I-83) + (S2-5); (I-83) + (S2-6); (I-83) + (S2-7); (I-83) + (S2-8); (I-83) + (S2-9); (I-83) + (S2-10); (I-83) + (S3-1); (I-83) + (S3-2); (I-83) + (S3-3); (I-83) + (S3-4); (I-83) + (S3-5); (I-83) + (S3-6); (I-83) + (S3-7); (I-83) + (S3-8); (I-83) + (S3-9); (I-83) + (S3-10); (I-83) + (S3-11); (I-83) + (S4-1); (I-83) + (S4-2); (I-83) + (S4-3); (I-83) + (S4-4); (I-83) + (S4-5); (I-83) + (S7-1); (I-83) + (S11-1); (I-83) + (S11-2); (I-83) + (S11-3); (I-83) + (S12-1); (I-83) + (S13-1); (I-83) + (S13-2); (I-83) + (S13-3); (I-83) + (S13-4): (I-83) + (S13-5); (I-83) + (S13-6); (I-83) + (S13-7); (I-83) + (S13-8), (I-83) + (S13-9); (I-83) + (S14-1)
(I-84) + (S1-1); (I-84) + (S1-2); (I-84) + (S1-3); (I-84) + (S1-4); (I-84) + (S1-5); (I-84) + (S1-6); (I-84) + (S1-7); (I-84) + (S1-8); (I-84) + (S1-9); (I-84) + (S1-10); (I-84) + (S1-11); (I-84) + (S1-12); (I-84) + (S1-13); (I-84) + (S2-1); (I-84) + (S2-2); (I-84) + (S2-3); (I-84) + (S2-4); (I-84) + (S2-5); (I-84) + (S2-6); (I-84) + (S2-7); (I-84) + (S2-8); (I-84) + (S2-9); (I-84) + (S2-10); (I-84) + (S3-1); (I-84) + (S3-2); (I-84) + (S3-3); (I-84) + (S3-4); (I-84) + (S3-5); (I-84) + (S3-6); (I-84) + (S3-7); (I-84) + (S3-8); (I-84) + (S3-9); (I-84) + (S3-10); (i-84) + (S3-11); (I-84) + (S4-1); (I-84) + (S4-2); (I-84) + (S4-3); (I-84) + (S4-4); (I-84) + (S4-5); (I-84) + (S7-1); (I-84) + (S11-1); (I-84) + (S11-2); (I-84) + (S11-3); (I-84) + (S12-1); (I-84) + (S13-1); (I-84) + (S13-2); (I-84) + (S13-3); (I-84) + (S13-4): (I-84) + (S13-5); (I-84) + (S13-6); (I-84) + (S13-7); (I-84) + (S13-8); (I-84) + (S13-9); (I-84) + (S14-1)
(I-85) + (S1-1); (I-85) + (S1-2); (I-85) + (S1-3); (I-85) + (S1-4); (I-85) + (S1-5); (I-85) + (S1-6); (I-85) + (S1-7); (I-85) + (S1-8); (I-85) + (S1-9); (I-85) + (S1-10); (I-85) + (S1-11); (I-85) + (S1-12); (I-85) + (S1-13); (I-85) + (S2-1); (I-85) + (S2-2); (I-85) + (S2-3); (I-85) + (S2-4); (I-85) + (S2-5); (I-85) + (S2-6); (I-85) + (S2-7); (I-85) + (S2-8); (I-85) + (S2-9); (I-85) + (S2-10); (I-85) + (S3-1); (I-85) + (S3-2); (I-85) + (S3-3); (I-85) + (S3-4); (I-85) + (S3-5); (i-85) + (S3-6); (I-85) + (S3-7); (I-85) + (S3-8); (I-85) + (S3-9); (I-85) + (S3-10); (I-85) + (S3-11); (I-85) + (S4-1); (I-85) + (S4-2); (I-85) + (S4-3); (I-85) + (S4-4); (I-85) + (S4-5); (I-85) + (S7-1); (I-85) + (S11-1); (I-85) + (S11 -2); (I-85) + (S11-3); (I-85) + (S12-1); (I-85) + (S13-1); (I-85) + (S13-2); (I-85) + (S13-3); (I-85) + (S13-4): (I-85) + (S13-5); (I-85) + (S13-6); (I-85) + (S13-7); (I-85) + (S13-8); (I-85) + (S13-9); (I-85) + (S14-1)
(I-86) + (S1-1); (I-86) + (S1-2); (I-86) + (S1-3); (I-86) + (S1-4); (I-86) + (S1-5); (I-86) + (S1-6); (I-86) + (S1-7); (I-86) + (S1-8); (I-86) + (S1-9); (I-86) + (S1-10); (I-86) + (S1-11); (I-86) + (S1-12); (I-86) + (S1-13); (I-86) + (S2-1); (I-86) + (S2-2); (I-86) + (S2-3); (I-86) + (S2-4); (I-86) + (S2-5); (I-86) + (S2-6); (I-86) + (S2-7); (I-86) + (S2-8); (I-86) + (S2-9); (I-86) + (S2-10); (I-86) + (S3-1); (I-86) + (S3-2); (I-86) + (S3-3); (I-86) + (S3-4); (I-86) + (S3-5); (I-86) + (S3-6); (I-86) + (S3-7); (I-86) + (S3-8); (I-86) + (S3-9); (I-86) + (S3-10); (I-86) + (S3-11); (I-86) + (S4-1); (I-86) + (S4-2); (I-86) + (S4-3); (I-86) + (S4-4); (I-86) + (S4-5); (I-86) + (S7-1); (I-86) + (S11-1); (I-86) + (S11-2); (I-86) + (S11-3); (I-86) + (S12-1); (I-86) + (S13-1); (I-86) + (S13-2); (I-86) + (S13-3); (I-86) + (S13-4): (I-86) + (S13-5); (I-86) + (S13-6); (I-86) + (S13-7); (I-86) + (S13-8); (I-86) + (S13-9); (I-86) + (S14-1)
(I-87) + (S1-1); (I-87) + (S1-2); (I-87) + (S1-3); (I-87) + (S1-4); (I-87) + (S1-5); (I-87) + (S1-6); (I-87) + (S1-7); (I-87) + (S1-8); (I-87) + (S1-9); (I-87) + (S1-10); (I-87) + (S1-11); (I-87) + (S1-12); (I-87) + (S1-13); (I-87) + (S2-1); (I-87) + (S2-2); (I-87) + (S2-3); (I-87) + (S2-4); (I-87) + (S2-5); (I-87) + (S2-6); (I-87) + (S2-7); (I-87) + (S2-8); (I-87) + (S2-9); (I-87) + (S2-10); (I-87) + (S3-1); (I-87) + (S3-2); (I-87) + (S3-3); (I-87) + (S3-4); (I-87) + (S3-5); (I-87) + (S3-6); (I-87) + (S3-7); (I-87) + (S3-8); (I-87) + (S3-9); (I-87) + (S3-10); (I-87) + (S3-11); (I-87) + (S4-1); (I-87) + (S4-2); (I-87) + (S4-3); (I-87) + (S4-4); (I-87) + (S4-5); (I-87) + (S7-1); (I-87) + (S11-1); (I-87) + (S11-2); (I-87) + (S11-3); (I-87) + (S12-1); (I-87) + (S13-1); (I-87) + (S13-2); (I-87) + (S13-3); (I-87) + (S13-4): (I-87) + (S13-5); (I-87) + (S13-6); (I-87) + (S13-7); (I-87) + (S13-8); (I-87) + (S13-9); (I-87) + (S14-1)
(I-88) + (S1-1); (I-88) + (S1-2); (I-88) + (S1-3); (I-88) + (S1-4); (I-88) + (S1-5); (I-88) + (S1-6); (I-88) + (S1-7); (I-88) + (S1-8); (I-88) + (S1-9); (I-88) + (S1-10); (I-88) + (S1-11); (I-88) + (S1-12); (I-88) + (S1-13); (I-88) + (S2-1); (I-88) + (S2-2); (I-88) + (S2-3); (I-88) + (S2-4); (I-88) + (S2-5); (I-88) + (S2-6); (I-88) + (S2-7); (I-88) + (S2-8); (I-88) + (S2-9); (I-88) + (S2-10); (I-88) + (S3-1); (I-88) + (S3-2); (I-88) + (S3-3); (I-88) + (S3-4); (I-88) + (S3-5); (I-88) + (S3-6); (I-88) + (S3-7); (I-88) + (S3-8); (I-88) + (S3-9); (I-88) + (S3-10); (I-88) + (S3-11); (I-88) + (S4-1); (I-88) + (S4-2); (I-88) + (S4-3); (I-88) + (S4-4); (I-88) + (S4-5); (I-88) + (S7-1); (I-88) + (S11-1); (I-88) + (S11-2); (I-88) + (S11-3); (I-88) + (S12-1); (I-88) + (S13-1); (I-88) + (S13-2); (I-88) + (S13-3); (I-88) + (S13-4): (I-88) + (S13-5); (I-88) + (S13-6); (I-88) + (S13-7); (I-88) + (S13-8); (I-88) + (S13-9); (I-88) + (S14-1)
(I-89) + (S1-1); (I-89) + (S1-2); (I-89) + (S1-3); (I-89) + (S1-4); (I-89) + (S1-5); (I-89) + (S1-6); (I-89) + (S1-7); (I-89) + (S1-8); (I-89) + (S1-9); (I-89) + (S1-10); (I-89) + (S1-11); (I-89) + (S1-12); (I-89) + (S1-13); (I-89) + (S2-1); (I-89) + (S2-2); (I-89) + (S2-3); (I-89) + (S2-4); (I-89) + (S2-5); (I-89) + (S2-6); (I-89) + (S2-7); (I-89) + (S2-8); (I-89) + (S2-9); (I-89) + (S2-10); (I-89) + (S3-1); (I-89) + (S3-2); (I-89) + (S3-3); (I-89) + (S3-4); (I-89) + (S3-5); (I-89) + (S3-6); (I-89) + (S3-7); (I-89) + (S3-8); (I-89) + (S3-9); (I-89) + (S3-10); (I-89) + (S3-11); (I-89) + (S4-1); (I-89) + (S4-2); (I-89) + (S4-3); (I-89) + (S4-4); (I-89) + (S4-5); (I-89) + (S7-1); (I-89) + (S11-1); (I-89) + (S11-2); (I-89) + (S11-3); (I-89) + (S12-1); (I-89) + (S13-1); (I-89) + (S13-2); (I-89) + (S13-3); (I-89) + (S13-4): (I-89) + (S13-5); (I-89) + (S13-6); (I-89) + (S13-7); (I-89) + (S13-8); (I-89) + (S13-9); (I-89) + (S14-1)
(I-90) + (S1-1); (I-90) + (S1-2); (I-90) + (S1-3); (I-90) + (S1-4); (I-90) + (S1-5); (I-90) + (S1-6); (I-90) + (S1-7); (I-90) + (S1-8); (I-90) + (S1-9); (I-90) + (S1-10); (I-90) + (S1-11); (I-90) + (S1-12); (I-90) + (S1-13); (I-90) + (S2-1); (I-90) + (S2-2); (I-90) + (S2-3); (I-90) + (S2-4); (I-90) + (S2-5); (I-90) + (S2-6); (I-90) + (S2-7); (I-90) + (S2-8); (I-90) + (S2-9); (I-90) + (S2-10); (I-90) + (S3-1); (I-90) + (S3-2); (I-90) + (S3-3); (I-90) + (S3-4); (I-90) + (S3-5); (I-90) + (S3-6); (I-90) + (S3-7); (I-90) + (S3-8); (I-90) + (S3-9); (I-90) + (S3-10); (I-90) + (S3-11); (I-90) + (S4-1); (I-90) + (S4-2); (I-90) + (S4-3); (I-90) + (S4-4); (I-90) + (S4-5); (I-90) + (S7-1); (I-90) + (S11-1); (I-90) + (S11-2); (I-90) + (S11-3); (I-90) + (S12-1); (I-90) + (S13-1); (I-90) + (S13-2); (I-90) + (S13-3); (I-90) + (S13-4): (I-90) + (S13-5); (I-90) + (S13-6); (I-90) + (S13-7); (I-90) + (S13-8); (I-90) + (S13-9); (I-90) + (S14-1)
(I-91) + (S1-1); (I-91) + (S1-2); (I-91) + (S1-3); (I-91) + (S1-4); (I-91) + (S1-5); (I-91) + (S1-6); (I-91) + (S1-7); (I-91) + (S1-8); (I-91) + (S1-9); (I-91) + (S1-10); (I-91) + (S1-11); (I-91) + (S1-12); (I-91) + (S1-13); (I-91) + (S2-1); (I-91) + (S2-2); (I-91) + (S2-3); (I-91) + (S2-4); (I-91) + (S2-5); (I-91) + (S2-6); (I-91) + (S2-7); (I-91) + (S2-8); (I-91) + (S2-9); (I-91) + (S2-10); (I-91) + (S3-1); (I-91) + (S3-2); (I-91) + (S3-3); (I-91) + (S3-4); (I-91) + (S3-5); (I-91) + (S3-6); (I-91) + (S3-7); (I-91) + (S3-8); (I-91) + (S3-9); (I-91) + (S3-10); (I-91) + (S3-11); (I-91) + (S4-1); (I-91) + (S4-2); (I-91) + (S4-3); (I-91) + (S4-4); (I-91) + (S4-5); (I-91) + (S7-1); (I-91) + (S11-1); (I-91) + (S11-2); (I-91) + (S11-3); (I-91) + (S12-1); (I-91) + (S13-1); (I-91) + (S13-2); (I-91) + (S13-3); (I-91) + (S13-4): (I-91) + (S13-5); (I-91) + (S13-6); (I-91) + (S13-7); (I-91) + (S13-8); (I-91) + (S13-9); (I-91) + (S14-1)
(I-92) + (S1-1); (I-92) + (S1-2); (I-92) + (S1-3); (I-92) + (S1-4); (I-92) + (S1-5); (I-92) + (S1-6); (I-92) + (S1-7); (I-92) + (S1-8); (I-92) + (S1-9); (I-92) + (S1-10); (I-92) + (S1-11); (I-92) + (S1-12); (I-92) + (S1-13); (I-92) + (S2-1); (I-92) + (S2-2); (I-92) + (S2-3); (I-92) + (S2-4); (I-92) + (S2-5); (I-92) + (S2-6); (I-92) + (S2-7); (I-92) + (S2-8); (I-92) + (S2-9); (I-92) + (S2-10); (I-92) + (S3-1); (I-92) + (S3-2); (I-92) + (S3-3); (I-92) + (S3-4); (I-92) + (S3-5); (I-92) + (S3-6); (I-92) + (S3-7); (I-92) + (S3-8); (I-92) + (S3-9); (I-92) + (S3-10); (I-92) + (S3-11); (I-92) + (S4-1); (I-92) + (S4-2); (I-92) + (S4-3); (I-92) + (S4-4); (I-92) + (S4-5); (I-92) + (S7-1); (I-92) + (S11-1); (I-92) + (S11-2); (I-92) + (S11-3); (I-92) + (S12-1); (I-92) + (S13-1); (I-92) + (S13-2); (I-92) + (S13-3); (I-92) + (S13-4): (I-92) + (S13-5); (I-92) + (S13-6); (I-92) + (S13-7); (I-92) + (S13-8); (I-92) + (S13-9); (I-92) + (S14-1)
(I-93) + (S1-1); (I-93) + (S1-2); (I-93) + (S1-3); (I-93) + (S1-4); (I-93) + (S1-5); (I-93) + (S1-6); (I-93) + (S1-7); (I-93) + (S1-8); (I-93) + (S1-9); (I-93) + (S1-10); (I-93) + (S1-11); (I-93) + (S1-12); (I-93) + (S1-13); (I-93) + (S2-1); (I-93) + (S2-2); (I-93) + (S2-3); (I-93) + (S2-4); (I-93) + (S2-5); (I-93) + (S2-6); (I-93) + (S2-7); (I-93) + (S2-8); (I-93) + (S2-9); (I-93) + (S2-10); (I-93) + (S3-1); (I-93) + (S3-2); (I-93) + (S3-3); (I-93) + (S3-4); (I-93) + (S3-5); (I-93) + (S3-6); (I-93) + (S3-7); (I-93) + (S3-8); (I-93) + (S3-9); (I-93) + (S3-10); (I-93) + (S3-11); (I-93) + (S4-1); (I-93) + (S4-2); (I-93) + (S4-3); (I-93) + (S4-4); (I-93) + (S4-5); (I-93) + (S7-1); (I-93) + (S11-1); (I-93) + (S11-2); (I-93) + (S11-3); (I-93) + (S12-1); (I-93) + (S13-1); (I-93) + (S13-2); (I-93) + (S13-3); (I-93) + (S13-4): (I-93) + (S13-5); (I-93) + (S13-6); (I-93) + (S13-7); (I-93) + (S13-8); (I-93) + (S13-9); (I-93) +(S14-1)
(I-94) + (S1-1); (I-94) + (S1-2); (I-94) + (S1-3); (I-94) + (S1-4); (I-94) + (S1-5); (I-94) + (S1-6); (I-94) + (S1-7); (I-94) + (S1-8); (I-94) + (S1-9); (I-94) + (S1-10); (I-94) + (S1-11); (I-94) + (S1-12); (I-94) + (S1-13); (I-94) + (S2-1); (I-94) + (S2-2); (I-94) + (S2-3); (I-94) + (S2-4); (I-94) + (S2-5); (I-94) + (S2-6); (I-94) + (S2-7); (I-94) + (S2-8); (I-94) + (S2-9); (I-94) + (S2-10); (I-94) + (S3-1); (I-94) + (S3-2); (I-94) + (S3-3); (I-94) + (S3-4); (I-94) + (S3-5); (I-94) + (S3-6); (I-94) + (S3-7); (I-94) + (S3-8); (I-94) + (S3-9); (I-94) + (S3-10); (I-94) + (S3-11); (I-94) + (S4-1); (I-94) + (S4-2); (I-94) + (S4-3); (I-94) + (S4-4); (I-94) + (S4-5); (I-94) + (S7-1); (I-94) + (S11-1); (I-94) + (S11-2); (I-94) + (S11-3); (I-94) + (S12-1); (I-94) + (S13-1); (I-94) + (S13-2); (I-94) + (S13-3); (I-94) + (S13-4): (I-94) + (S13-5); (I-94) + (S13-6); (I-94) + (S13-7); (I-94) + (S13-8); (I-94) + (S13-9); (I-94) + (S14-1)
(I-95) + (S1-1); (I-95) + (S1-2); (I-95) + (S1-3); (I-95) + (S1-4); (I-95) + (S1-5); (I-95) + (S1-6); (I-95) + (S1-7); (I-95) + (S1-8); (I-95) + (S1-9); (I-95) + (S1-10); (I-95) + (S1-11); (I-95) + (S1-12); (I-95) + (S1-13); (I-95) + (S2-1); (I-95) + (S2-2); (I-95) + (S2-3); (I-95) + (S2-4); (I-95) + (S2-5); (I-95) + (S2-6); (I-95) + (S2-7); (I-95) + (S2-8); (I-95) + (S2-9); (I-95) + (S2-10); (I-95) + (S3-1); (I-95) + (S3-2); (I-95) + (S3-3); (I-95) + (S3-4); (I-95) + (S3-5); (I-95) + (S3-6); (I-95) + (S3-7); (I-95) + (S3-8); (I-95) + (S3-9); (I-95) + (S3-10); (I-95) + (S3-11); (I-95) + (S4-1); (I-95) + (S4-2); (I-95) + (S4-3); (I-95) + (S4-4); (I-95) + (S4-5); (I-95) + (S7-1); (I-95) + (S11-1); (I-95) + (S11-2); (I-95) + (S11-3); (I-95) + (S12-1); (I-95) + (S13-1); (I-95) + (S13-2); (I-95) + (S13-3); (I-95) + (S13-4): (I-95) + (S13-5); (I-95) + (S13-6); (I-95) + (S13-7); (I-95) + (S13-8); (I-95) + (S13-9); (I-95) + (S14-1)
(I-96) + (S1-1); (I-96) + (S1-2); (I-96) + (S1-3); (I-96) + (S1-4); (I-96) + (S1-5); (I-96) + (S1-6); (I-96) + (S1-7); (I-96) + (S1-8); (I-96) + (S1-9); (I-96) + (S1-10); (I-96) + (S1-11); (I-96) + (S1-12); (I-96) + (S1-13); (I-96) + (S2-1); (I-96) + (S2-2); (I-96) + (S2-3); (I-96) + (S2-4); (I-96) + (S2-5); (I-96) + (S2-6); (I-96) + (S2-7); (I-96) + (S2-8); (I-96) + (S2-9); (I-96) + (S2-10); (I-96) + (S3-1); (I-96) + (S3-2); (I-96) + (S3-3); (I-96) + (S3-4); (I-96) + (S3-5); (I-96) + (S3-6); (I-96) + (S3-7); (I-96) + (S3-8); (I-96) + (S3-9); (I-96) + (S3-10); (I-96) + (S3-11); (I-96) + (S4-1); (I-96) + (S4-2); (I-96) + (S4-3); (I-96) + (S4-4); (I-96) + (S4-5); (I-96) + (S7-1); (I-96) + (S11-1); (I-96) + (S11-2); (I-96) + (S11-3); (I-96) + (S12-1); (I-96) + (S13-1); (I-96) + (S13-2); (I-96) + (S13-3); (I-96) + (S13-4): (I-96) + (S13-5); (I-96) + (S13-6); (I-96) + (S13-7); (I-96) + (S13-8); (I-96) + (S13-9); (I-96) + (S14-1)
(I-97) + (S1-1); (I-97) + (S1-2); (I-97) + (S1-3); (I-97) + (S1-4); (I-97) + (S1-5); (I-97) + (S1-6); (I-97) + (S1-7); (I-97) + (S1-8); (I-97) + (S1-9); (I-97) + (S1-10); (I-97) + (S1-11); (I-97) + (S1-12); (I-97) + (S1-13); (I-97) + (S2-1); (I-97) + (S2-2); (I-97) + (S2-3); (I-97) + (S2-4); (I-97) + (S2-5); (I-97) + (S2-6); (I-97) + (S2-7); (I-97) + (S2-8); (I-97) + (S2-9); (I-97) + (S2-10); (I-97) + (S3-1); (I-97) + (S3-2); (I-97) + (S3-3); (I-97) + (S3-4); (I-97) + (S3-5); (I-97) + (S3-6); (I-97) + (S3-7); (I-97) + (S3-8); (I-97) + (S3-9); (I-97) + (S3-10); (I-97) + (S3-11); (I-97) + (S4-1); (I-97) + (S4-2); (I-97) + (S4-3); (I-97) + (S4-4); (I-97) + (S4-5); (I-97) + (S7-1); (I-97) + (S11-1); (I-97) + (S11-2); (I-97) + (S11-3); (I-97) + (S12-1); (I-97) + (S13-1); (I-97) + (S13-2); (I-97) + (S13-3); (I-97) + (S13-4): (I-97) + (S13-5); (I-97) + (S13-6); (I-97) + (S13-7); (I-97) + (S13-8); (I-97) + (S13-9); (I-97) + (S14-1)
(I-98) + (S1-1); (I-98) + (S1-2); (I-98) + (S1-3); (I-98) + (S1-4); (I-98) + (S1-5); (I-98) + (S1-6); (I-98) + (S1-7); (I-98) + (S1-8); (I-98) + (S1-9); (I-98) + (S1-10); (I-98) + (S1-11); (I-98) + (S1-12); (I-98) + (S1-13); (I-98) + (S2-1); (I-98) + (S2-2); (I-98) + (S2-3); (I-98) + (S2-4); (I-98) + (S2-5); (I-98) + (S2-6); (I-98) + (S2-7); (I-98) + (S2-8); (I-98) + (S2-9); (I-98) + (S2-10); (I-98) + (S3-1); (I-98) + (S3-2); (I-98) + (S3-3); (I-98) + (S3-4); (I-98) + (S3-5); (I-98) + (S3-6); (I-98) + (S3-7); (I-98) + (S3-8); (I-98) + (S3-9); (I-98) + (S3-10); (I-98) + (S3-11); (I-98) + (S4-1); (I-98) + (S4-2); (I-98) + (S4-3); (I-98) + (S4-4); (I-98) + (S4-5); (I-98) + (S7-1); (I-98) + (S11-1); (I-98) + (S11-2); (I-98) + (S11-3); (I-98) + (S12-1); (I-98) + (S13-1); (I-98) + (S13-2); (I-98) + (S13-3); (I-98) + (S13-4): (I-98) + (S13-5); (I-98) + (S13-6); (I-98) + (S13-7); (I-98) + (S13-8); (I-98) + (S13-9); (I-98) + (S14-1)
(I-99) + (S1-1); (I-99) + (S1-2); (I-99) + (S1-3); (I-99) + (S1-4); (I-99) + (S1-5); (I-99) + (S1-6); (I-99) + (S1-7); (I-99) + (S1-8); (I-99) + (S1-9); (I-99) + (S1-10); (I-99) + (S1-11); (I-99) + (S1-12); (I-99) + (S1-13); (I-99) + (S2-1); (I-99) + (S2-2); (I-99) + (S2-3); (I-99) + (S2-4); (I-99) + (S2-5); (I-99) + (S2-6); (I-99) + (S2-7); (I-99) + (S2-8); (I-99) + (S2-9); (I-99) + (S2-10); (I-99) + (S3-1); (I-99) + (S3-2); (I-99) + (S3-3); (I-99) + (S3-4); (I-99) + (S3-5); (I-99) + (S3-6); (I-99) + (S3-7); (I-99) + (S3-8); (I-99) + (S3-9); (I-99) + (S3-10); (I-99) + (S3-11); (I-99) + (S4-1); (I-99) + (S4-2); (I-99) + (S4-3); (I-99) + (S4-4); (I-99) + (S4-5); (I-99) + (S7-1); (I-99) + (S11-1); (I-99) + (S11-2); (I-99) + (S11-3); (I-99) + (S12-1); (I-99) + (S13-1); (I-99) + (S13-2); (I-99) + (S13-3); (I-99) + (S13-4): (I-99) + (S13-5); (I-99) + (S13-6); (I-99) + (S13-7); (I-99) + (S13-8); (I-99) + (S13-9); (I-99) + (S14-1)
(I-100) + (S1-1); (I-100) + (S1-2); (I-100) + (S1-3); (I-100) + (S1-4); (I-100) + (S1-5); (I-100) + (S1-6); (I-100) + (S1-7); (I-100) + (S1-8); (I-100) + (S1-9); (I-100) + (S1-10); (I-100) + (S1-11); (I-100) + (S1-12); (I-100) + (S1-13); (I-100) + (S2-1); (I-100) + (S2-2); (I-100) + (S2-3); (I-100) + (S2-4); (I-100) + (S2-5); (I-100) + (S2-6); (I-100) + (S2-7); (I-100) + (S2-8); (I-100) + (S2-9); (I-100) + (S2-10); (I-100) + (S3-1); (I-100) + (S3-2); (I-100) + (S3-3); (I-100) + (S3-4); (I-100) + (S3-5); (I-100) + (S3-6); (I-100) + (S3-7); (I-100) + (S3-8); (I-100) + (S3-9); (I-100) + (S3-10); (I-100) + (S3-11); (I-100) + (S4-1); (I-100) + (S4-2); (I-100) + (S4-3); (I-100) + (S4-4); (I-100) + (S4-5); (I-100) + (S7-1); (I-100) + (S11-1); (I-100) + (S11-2); (I-100) + (S11-3); (I-100) + (S12-1); (I-100) + (S13-1); (I-100) + (S13-2); (I-100) + (S13-3); (I-100) + (S13-4): (I-100) + (S13-5); (I-100) + (S13-6); (I-100) + (S13-7); (I-100) + (S13-8); (I-100) + (S13-9); (I-100) + (S14-1)
(I-101) + (S1-1); (I-101) + (S1-2); (I-101) + (S1-3); (I-101) + (S1-4); (I-101) + (S1-5); (I-101) + (S1-6); (I-101) + (S1-7); (I-101) + (S1-8); (I-101) + (S1-9); (I-101) + (S1-10); (I-101) + (S1-11); (I-101) + (S1-12); (I-101) + (S1-13); (I-101) + (S2-1); (I-101) + (S2-2); (I-101) + (S2-3); (I-101) + (S2-4); (I-101) + (S2-5); (I-101) + (S2-6); (I-101) + (S2-7); (I-101) + (S2-8); (I-101) + (S2-9); (I-101) + (S2-10); (I-101) + (S3-1); (I-101) + (S3-2); (I-101) + (S3-3); (I-101) + (S3-4); (I-101) + (S3-5); (I-101) + (S3-6); (I-101) + (S3-7); (I-101) + (S3-8); (I-101) + (S3-9); (I-101) + (S3-10); (I-101) + (S3-11); (I-101) + (S4-1); (I-101) + (S4-2); (I-101) + (S4-3); (I-101) + (S4-4); (I-101) + (S4-5); (I-101) + (S7-1); (I-101) + (S11-1); (I-101) + (S11-2); (I-101) + (S11-3); (I-101) + (S12-1); (I-101) + (S13-1); (I-101) + (S13-2); (I-101) + (S13-3); (I-101) + (S13-4): (I-101) + (S13-5); (I-101) + (S13-6); (I-101) + (S13-7); (I-101) + (S13-8); (I-101) + (S13-9); (I-101) + (S14-1)
(I-102) + (S1-1); (I-102) + (S1-2); (I-102) + (S1-3); (I-102) + (S1-4); (I-102) + (S1-5); (I-102) + (S1-6); (I-102) + (S1-7); (I-102) + (S1-8); (I-102) + (S1-9); (I-102) + (S1-10); (I-102) + (S1-11); (I-102) + (S1-12); (I-102) + (S1-13); (I-102) + (S2-1); (I-102) + (S2-2); (I-102) + (S2-3); (I-102) + (S2-4); (I-102) + (S2-5); (I-102) + (S2-6); (I-102) + (S2-7); (I-102) + (S2-8); (I-102) + (S2-9); (I-102) + (S2-10); (I-102) + (S3-1); (I-102) + (S3-2); (I-102) + (S3-3); (I-102) + (S3-4); (I-102) + (S3-5); (I-102) + (S3-6); (I-102) + (S3-7); (I-102) + (S3-8); (I-102) + (S3-9); (I-102) + (S3-10); (I-102) + (S3-11); (I-102) + (S4-1); (I-102) + (S4-2); (I-102) + (S4-3); (I-102) + (S4-4); (I-102) + (S4-5); (I-102) + (S7-1); (I-102) + (S11-1); (I-102) + (S11-2); (I-102) + (S11-3); (I-102) + (S12-1); (I-102) + (S13-1); (I-102) + (S13-2); (I-102) + (S13-3); (I-102) + (S13-4): (I-102) + (S13-5); (I-102) + (S13-6); (I-102) + (S13-7); (I-102) + (S13-8); (I-102) + (S13-9); (I-102) + (S14-1)
(I-103) + (S1-1); (I-103) + (S1-2); (I-103) + (S1-3); (I-103) + (S1-4); (I-103) + (S1-5); (I-103) + (S1-6); (I-103) + (S1-7); (I-103) + (S1-8); (I-103) + (S1-9); (I-103) + (S1-10); (I-103) + (S1-11); (I-103) + (S1-12); (I-103) + (S1-13); (I-103) + (S2-1); (I-103) + (S2-2); (I-103) + (S2-3); (I-103) + (S2-4); (I-103) + (S2-5); (I-103) + (S2-6); (I-103) + (S2-7); (I-103) + (S2-8); (I-103) + (S2-9); (I-103) + (S2-10); (I-103) + (S3-1); (I-103) + (S3-2); (I-103) + (S3-3); (I-103) + (S3-4); (I-103) + (S3-5); (I-103) + (S3-6); (I-103) + (S3-7); (I-103) + (S3-8); (I-103) + (S3-9); (I-103) + (S3-10); (I-103) + (S3-11); (I-103) + (S4-1); (I-103) + (S4-2); (I-103) + (S4-3); (I-103) + (S4-4); (I-103) + (S4-5); (I-103) + (S7-1); (I-103) + (S11-1); (I-103) + (S11-2); (I-103) + (S11-3); (I-103) + (S12-1); (I-103) + (S13-1); (I-103) + (S13-2); (I-103) + (S13-3); (I-103) + (S13-4): (I-103) + (S13-5); (I-103) + (S13-6); (I-103) + (S13-7); (I-103) + (S13-8); (I-103) + (S13-9); (I-103) + (S14-1)
(I-104) + (S1-1); (I-104) + (S1-2); (I-104) + (S1-3); (I-104) + (S1-4); (I-104) + (S1-5); (I-104) + (S1-6); (I-104) + (S1-7); (I-104) + (S1-8); (I-104) + (S1-9); (I-104) + (S1-10); (I-104) + (S1-11); (I-104) + (S1-12); (I-104) + (S1-13); (I-104) + (S2-1); (I-104) + (S2-2); (I-104) + (S2-3); (I-104) + (S2-4); (I-104) + (S2-5); (I-104) + (S2-6); (I-104) + (S2-7); (I-104) + (S2-8); (I-104) + (S2-9); (I-104) + (S2-10); (I-104) + (S3-1); (I-104) + (S3-2); (I-104) + (S3-3); (I-104) + (S3-4); (I-104) + (S3-5); (I-104) + (S3-6); (I-104) + (S3-7); (I-104) + (S3-8); (I-104) + (S3-9); (I-104) + (S3-10); (I-104) + (S3-11); (I-104) + (S4-1); (I-104) + (S4-2); (I-104) + (S4-3); (I-104) + (S4-4); (I-104) + (S4-5); (I-104) + (S7-1); (I-104) + (S11-1), (I-104) + (S11-2); (I-104) + (S11-3); (I-104) + (S12-1); (I-104) + (S13-1); (I-104) + (S13-2); (I-104) + (S13-3); (I-104) + (S13-4): (I-104) + (S13-5); (I-104) + (S13-6); (I-104) + (S13-7); (I-104) + (S13-8); (I-104) + (S13-9); (I-104) + (S14-1 )
(I-105) + (S1-1); (I-105) + (S1-2); (I-105) + (S1-3); (I-105) + (S1-4); (I-105) + (S1-5); (I-105) + (S1-6); (I-105) + (S1-7); (I-105) + (S1-8); (I-105) + (S1-9); (I-105) + (S1-10); (I-105) + (S1-11); (I-105) + (S1-12); (I-105) + (S1-13); (I-105) + (S2-1); (I-105) + (S2-2); (I-105) + (S2-3); (I-105) + (S2-4); (I-105) + (S2-5); (I-105) + (S2-6); (I-105) + (S2-7); (I-105) + (S2-8); (I-105) + (S2-9); (I-105) + (S2-10); (I-105) + (S3-1); (I-105) + (S3-2); (I-105) + (S3-3); (I-105) + (S3-4); (I-105) + (S3-5); (I-105) + (S3-6); (I-105) + (S3-7); (I-105) + (S3-8); (I-105) + (S3-9); (I-105) + (S3-10); (I-105) + (S3-11); (I-105) + (S4-1); (I-105) + (S4-2); (I-105) + (S4-3); (I-105) + (S4-4); (I-105) + (S4-5); (I-105) + (S7-1); (I-105) + (S11-1); (I-105) + (S11-2); (I-105) + (S11-3); (I-105) + (S12-1); (I-105) + (S13-1); (I-105) + (S13-2); (I-105) + (S13-3); (I-105) + (S13-4): (I-105) + (S13-5); (I-105) + (S13-6); (I-105) + (S13-7); (I-105) + (S13-8); (I-105) + (S13-9); (I-105) + (S14-1)
(I-106) + (S1-1); (I-106) + (S1-2); (I-106) + (S1-3); (I-106) + (S1-4); (I-106) + (S1-5); (I-106) + (S1-6); (I-106) + (S1-7); (I-106) + (S1-8); (I-106) + (S1-9); (I-106) + (S1-10); (I-106) + (S1-11); (I-106) + (S1-12); (I-106) + (S1-13); (I-106) + (S2-1); (I-106) + (S2-2); (I-106) + (S2-3); (I-106) + (S2-4); (I-106) + (S2-5); (I-106) + (S2-6); (I-106) + (S2-7); (I-106) + (S2-8); (I-106) + (S2-9); (I-106) + (S2-10); (I-106) + (S3-1); (I-106) + (S3-2); (I-106) + (S3-3); (I-106) + (S3-4); (I-106) + (S3-5); (I-106) + (S3-6); (I-106) + (S3-7); (I-106) + (S3-8); (I-106) + (S3-9); (I-106) + (S3-10); (I-106) + (S3-11); (I-106) + (S4-1); (I-106) + (S4-2); (I-106) + (S4-3); (I-106) + (S4-4); (I-106) + (S4-5); (I-106) + (S7-1); (I-106) + (S11-1); (I-106) + (S11-2); (I-106) + (S11-3); (I-106) + (S12-1); (I-106) + (S13-1); (I-106) + (S13-2); (I-106) + (S13-3); (I-106) + (S13-4): (I-106) + (S13-5); (I-106) + (S13-6); (I-106) + (S13-7); (I-106) + (S13-8); (I-106) + (S13-9); (I-106) + (S14-1)
(I-107) + (S1-1); (I-107) + (S1-2); (I-107) + (S1-3); (I-107) + (S1-4); (I-107) + (S1-5); (I-107) + (S1-6); (I-107) + (S1-7); (I-107) + (S1-8); (I-107) + (S1-9); (I-107) + (S1-10); (I-107) + (S1-11); (I-107) + (S1-12); (I-107) + (S1-13); (I-107) + (S2-1); (I-107) + (S2-2); (I-107) + (S2-3); (I-107) + (S2-4); (I-107) + (S2-5); (I-107) + (S2-6); (I-107) + (S2-7); (I-107) + (S2-8); (I-107) + (S2-9); (I-107) + (S2-10); (I-107) + (S3-1); (I-107) + (S3-2); (I-107) + (S3-3); (I-107) + (S3-4); (I-107) + (S3-5); (I-107) + (S3-6); (I-107) + (S3-7); (I-107) + (S3-8); (I-107) + (S3-9); (I-107) + (S3-10); (I-107) + (S3-11); (I-107) + (S4-1); (I-107) + (S4-2); (I-107) + (S4-3); (I-107) + (S4-4); (I-107) + (S4-5); (I-107) + (S7-1); (I-107) + (S11-1); (I-107) + (S11-2); (I-107) + (S11-3); (I-107) + (S12-1); (I-107) + (S13-1); (I-107) + (S13-2); (I-107) + (S13-3); (I-107) + (S13-4): (I-107) + (S13-5); (I-107) + (S13-6); (I-107) + (S13-7); (I-107) + (S13-8); (I-107) + (S13-9); (I-107) + (S14-1)
(I-108) + (S1-1); (I-108) + (S1-2); (I-108) + (S1-3); (I-108) + (S1-4); (I-108) + (S1-5); (I-108) + (S1-6); (I-108) + (S1-7); (I-108) + (S1-8); (I-108) + (S1-9); (I-108) + (S1-10); (I-108) + (S1-11); (I-108) + (S1-12); (I-108) + (S1-13); (I-108) + (S2-1); (I-108) + (S2-2); (I-108) + (S2-3); (I-108) + (S2-4); (I-108) + (S2-5); (I-108) + (S2-6); (I-108) + (S2-7); (I-108) + (S2-8); (I-108) + (S2-9); (I-108) + (S2-10); (I-108) + (S3-1); (I-108) + (S3-2); (I-108) + (S3-3); (I-108) + (S3-4); (I-108) + (S3-5); (I-108) + (S3-6); (I-108) + (S3-7); (I-108) + (S3-8); (I-108) + (S3-9); (I-108) + (S3-10); (I-108) + (S3-11); (I-108) + (S4-1); (I-108) + (S4-2); (I-108) + (S4-3); (I-108) + (S4-4); (I-108) + (S4-5); (I-108) + (S7-1); (I-108) + (S11-1); (I-108) + (S11-2); (I-108) + (S11-3); (I-108) + (S12-1); (I-108) + (S13-1); (I-108) + (S13-2); (I-108) + (S13-3); (I-108) + (S13-4): (I-108) + (S13-5); (I-108) + (S13-6); (I-108) + (S13-7); (I-108) + (S13-8); (I-108) + (S13-9); (I-108) + (S14-1)
(I-109) + (S1-1); (I-109) + (S1-2); (I-109) + (S1-3); (I-109) + (S1-4); (I-109) + (S1-5); (I-109) + (S1-6); (I-109) + (S1-7); (I-109) + (S1-8); (I-109) + (S1-9); (I-109) + (S1-10); (I-109) + (S1-11); (I-109) + (S1-12); (I-109) + (S1-13); (I-109) + (S2-1); (I-109) + (S2-2); (I-109) + (S2-3); (I-109) + (S2-4); (I-109) + (S2-5); (I-109) + (S2-6); (I-109) + (S2-7); (I-109) + (S2-8); (I-109) + (S2-9); (I-109) + (S2-10); (I-109) + (S3-1); (I-109) + (S3-2); (I-109) + (S3-3); (I-109) + (S3-4); (I-109) + (S3-5); (I-109) + (S3-6); (I-109) + (S3-7); (I-109) + (S3-8); (I-109) + (S3-9); (I-109) + (S3-10); (I-109) + (S3-11); (I-109) + (S4-1); (I-109) + (S4-2); (I-109) + (S4-3); (I-109) + (S4-4); (I-109) + (S4-5); (I-109) + (S7-1); (I-109) + (S11-1); (I-109) + (S11-2); (I-109) + (S11-3); (I-109) + (S12-1); (I-109) + (S13-1); (I-109) + (S13-2); (I-109) + (S13-3); (I-109) + (S13-4): (I-109) + (S13-5); (I-109) + (S13-6); (I-109) + (S13-7); (I-109) + (S13-8); (I-109) + (S13-9); (I-109) + (S14-1)
(I-110) + (S1-1); (I-110) + (S1-2); (I-110) + (S1-3); (I-110) + (S1-4); (I-110) + (S1-5); (I-110) + (S1-6); (I-110) + (S1-7); (I-110) + (S1-8); (I-110) + (S1-9); (I-110) + (S1-10); (I-110) + (S1-11); (I-110) + (S1-12); (I-110) + (S1-13); (I-110) + (S2-1); (I-110) + (S2-2); (I-110) + (S2-3); (I-110) + (S2-4); (I-110) + (S2-5); (I-110) + (S2-6); (I-110) + (S2-7); (I-110) + (S2-8); (I-110) + (S2-9); (I-110) + (S2-10); (I-110) + (S3-1); (I-110) + (S3-2); (I-110) + (S3-3); (I-110) + (S3-4); (I-110) + (S3-5); (I-110) + (S3-6); (I-110) + (S3-7); (I-110) + (S3-8); (I-110) + (S3-9); (I-110) + (S3-10); (I-110) + (S3-11); (I-110) + (S4-1); (I-110) + (S4-2); (I-110) + (S4-3); (I-110) + (S4-4); (I-110) + (S4-5); (I-110) + (S7-1); (I-110) + (S11-1); (I-110) + (S11-2); (I-110) + (S11-3); (I-110) + (S12-1); (I-110) + (S13-1); (I-110) + (S13-2); (I-110) + (S13-3); (I-110) + (S13-4): (I-110) + (S13-5); (I-110) + (S13-6); (I-110) + (S13-7); (I-110) + (S13-8); (I-110) + (S13-9); (I-110) + (S14-1)
(I-111) + (S1-1); (I-111) + (S1-2); (I-111) + (S1-3); (I-111) + (S1-4); (I-111) + (S1-5); (I-111) + (S1-6); (I-111) + (S1-7); (I-111) + (S1-8); (I-111) + (S1-9); (I-111) + (S1-10); (I-111) + (S1-11); (I-111) + (S1-12); (I-111) + (S1-13); (I-111) + (S2-1); (I-111) + (S2-2); (I-111) + (S2-3); (I-111) + (S2-4); (I-111) + (S2-5); (I-111) + (S2-6); (I-111) + (S2-7); (I-111) + (S2-8); (I-111) + (S2-9); (I-111) + (S2-10); (I-111) + (S3-1); (I-111) + (S3-2); (I-111) + (S3-3); (I-111) + (S3-4); (I-111) + (S3-5); (I-111) + (S3-6); (I-111) + (S3-7); (I-111) + (S3-8); (I-111) + (S3-9); (I-111) + (S3-10); (I-111) + (S3-11); (I-111) + (S4-1); (I-111) + (S4-2); (I-111) + (S4-3); (I-111) + (S4-4); (I-111) + (S4-5); (I-111) + (S7-1); (I-111) + (S11-1); (I-111) + (S11-2); (I-111) + (S11-3); (I-111) + (S12-1); (I-111) + (S13-1); (I-111) + (S13-2); (I-111) + (S13-3); (I-111) + (S13-4): (I-111) + (S13-5); (I-111) + (S13-6); (I-111) + (S13-7); (I-111) + (S13-8); (I-111) + (S13-9); (I-111) + (S14-1)
(I-112) + (S1-1); (I-112) + (S1-2); (I-112) + (S1-3); (I-112) + (S1-4); (I-112) + (S1-5); (I-112) + (S1-6); (I-112) + (S1-7); (I-112) + (S1-8); (I-112) + (S1-9); (I-112) + (S1-10); (I-112) + (S1-11); (I-112) + (S1-12); (I-112) + (S1-13); (I-112) + (S2-1); (I-112) + (S2-2); (I-112) + (S2-3); (I-112) + (S2-4); (I-112) + (S2-5); (I-112) + (S2-6); (I-112) + (S2-7); (I-112) + (S2-8); (I-112) + (S2-9); (I-112) + (S2-10); (I-112) + (S3-1); (I-112) + (S3-2); (I-112) + (S3-3); (I-112) + (S3-4); (I-112) + (S3-5); (I-112) + (S3-6); (I-112) + (S3-7); (I-112) + (S3-8); (I-112) + (S3-9); (I-112) + (S3-10); (I-112) + (S3-11); (I-112) + (S4-1); (I-112) + (S4-2); (I-112) + (S4-3); (I-112) + (S4-4); (I-112) + (S4-5); (I-112) + (S7-1); (I-112) + (S11-1); (I-112) + (S11-2); (I-112) + (S11-3); (I-112) + (S12-1); (I-112) + (S13-1); (I-112) + (S13-2); (I-112) + (S13-3); (I-112) + (S13-4): (I-112) + (S13-5); (I-112) + (S13-6); (I-112) + (S13-7); (I-112) + (S13-8); (I-112) + (S13-9); (I-112) + (S14-1)
(I-113) + (S1-1); (I-113) + (S1-2); (I-113) + (S1-3); (I-113) + (S1-4); (I-113) + (S1-5); (I-113) + (S1-6); (I-113) + (S1-7); (I-113) + (S1-8); (I-113) + (S1-9); (I-113) + (S1-10); (I-113) + (S1-11); (I-113) + (S1-12); (I-113) + (S1-13); (I-113) + (S2-1); (I-113) + (S2-2); (I-113) + (S2-3); (I-113) + (S2-4); (I-113) + (S2-5); (I-113) + (S2-6); (I-113) + (S2-7); (I-113) + (S2-8); (I-113) + (S2-9); (I-113) + (S2-10); (I-113) + (S3-1); (I-113) + (S3-2); (I-113) + (S3-3); (I-113) + (S3-4); (I-113) + (S3-5); (I-113) + (S3-6); (I-113) + (S3-7); (I-113) + (S3-8); (I-113) + (S3-9); (I-113) + (S3-10); (I-113) + (S3-11); (I-113) + (S4-1); (I-113) + (S4-2); (I-113) + (S4-3); (I-113) + (S4-4); (I-113) + (S4-5); (I-113) + (S7-1); (I-113) + (S11-1); (I-113) + (S11-2); (I-113) + (S11-3); (I-113) + (S12-1); (I-113) + (S13-1); (I-113) + (S13-2); (I-113) + (S13-3); (I-113) + (S13-4): (I-113) + (S13-5); (I-113) + (S13-6); (I-113) + (S13-7); (I-113) + (S13-8); (I-113) + (S13-9); (I-113) + (S14-1)
(I-114) + (S1-1); (I-114) + (S1-2); (I-114) + (S1-3); (I-114) + (S1-4); (I-114) + (S1-5); (I-114) + (S1-6); (I-114) + (S1-7); (I-114) + (S1-8); (I-114) + (S1-9); (I-114) + (S1-10); (I-114) + (S1-11); (I-114) + (S1-12); (I-114) + (S1-13); (I-114) + (S2-1); (I-114) + (S2-2); (I-114) + (S2-3); (I-114) + (S2-4); (I-114) + (S2-5); (I-114) + (S2-6); (I-114) + (S2-7); (I-114) + (S2-8); (I-114) + (S2-9); (I-114) + (S2-10); (I-114) + (S3-1); (I-114) + (S3-2); (I-114) + (S3-3); (I-114) + (S3-4); (I-114) + (S3-5); (I-114) + (S3-6); (I-114) + (S3-7); (I-114) + (S3-8); (I-114) + (S3-9); (I-114) + (S3-10); (I-114) + (S3-11); (I-114) + (S4-1); (I-114) + (S4-2); (I-114) + (S4-3); (I-114) + (S4-4); (I-114) + (S4-5); (I-114) + (S7-1); (I-114) + (S11-1); (I-114) + (S11-2); (I-114) + (S11-3); (I-114) + (S12-1); (I-114) + (S13-1); (I-114) + (S13-2); (I-114) + (S13-3); (I-114) + (S13-4): (I-114) + (S13-5); (I-114) + (S13-6); (I-114) + (S13-7); (I-114) + (S13-8); (I-114) + (S13-9); (I-114) + (S14-1)
(I-115) + (S1-1); (I-115) + (S1-2); (I-115) + (S1-3); (I-115) + (S1-4); (I-115) + (S1-5); (I-115) + (S1-6); (I-115) + (S1-7); (I-115) + (S1-8); (I-115) + (S1-9); (I-115) + (S1-10); (I-115) + (S1-11); (I-115) + (S1-12); (I-115) + (S1-13); (I-115) + (S2-1); (I-115) + (S2-2); (I-115) + (S2-3); (I-115) + (S2-4); (I-115) + (S2-5); (I-115) + (S2-6); (I-115) + (S2-7); (I-115) + (S2-8); (I-115) + (S2-9); (I-115) + (S2-10); (I-115) + (S3-1); (I-115) + (S3-2); (I-115) + (S3-3); (I-115) + (S3-4); (I-115) + (S3-5); (I-115) + (S3-6); (I-115) + (S3-7); (I-115) + (S3-8); (I-115) + (S3-9); (I-115) + (S3-10); (I-115) + (S3-11); (I-115) + (S4-1); (I-115) + (S4-2); (I-115) + (S4-3); (I-115) + (S4-4); (I-115) + (S4-5); (I-115) + (S7-1); (I-115) + (S11-1); (I-115) + (S11-2); (I-115) + (S11-3); (I-115) + (S12-1); (I-115) + (S13-1); (I-115) + (S13-2); (I-115) + (S13-3); (I-115) + (S13-4): (I-115) + (S13-5); (I-115) + (S13-6); (I-115) + (S13-7); (I-115) + (S13-8); (I-115) + (S13-9); (I-115) + (S14-1)
(I-116) + (S1-1); (I-116) + (S1-2); (I-116) + (S1-3); (I-116) + (S1-4); (I-116) + (S1-5); (I-116) + (S1-6); (I-116) + (S1-7); (I-116) + (S1-8); (I-116) + (S1-9); (I-116) + (S1-10); (I-116) + (S1-11); (I-116) + (S1-12); (I-116) + (S1-13); (I-116) + (S2-1); (I-116) + (S2-2); (I-116) + (S2-3); (I-116) + (S2-4); (I-116) + (S2-5); (I-116) + (S2-6); (I-116) + (S2-7); (I-116) + (S2-8); (I-116) + (S2-9); (I-116) + (S2-10); (I-116) + (S3-1); (I-116) + (S3-2); (I-116) + (S3-3); (I-116) + (S3-4); (I-116) + (S3-5); (I-116) + (S3-6); (I-116) + (S3-7); (I-116) + (S3-8); (I-116) + (S3-9); (I-116) + (S3-10); (I-116) + (S3-11); (I-116) + (S4-1); (I-116) + (S4-2); (I-116) + (S4-3); (I-116) + (S4-4); (I-116) + (S4-5); (I-116) + (S7-1); (I-116) + (S11-1); (I-116) + (S11-2); (I-116) + (S11-3); (I-116) + (S12-1); (I-116) + (S13-1); (I-116) + (S13-2); (I-116) + (S13-3); (I-116) + (S13-4): (I-116) + (S13-5); (I-116) + (S13-6); (I-116) + (S13-7); (I-116) + (S13-8); (I-116) + (S13-9); (I-116) + (S14-1)
(I-117) + (S1-1); (I-117) + (S1-2); (I-117) + (S1-3); (I-117) + (S1-4); (I-117) + (S1-5); (I-117) + (S1-6); (I-117) + (S1-7); (I-117) + (S1-8); (I-117) + (S1-9); (I-117) + (S1-10); (I-117) + (S1-11); (I-117) + (S1-12); (I-117) + (S1-13); (I-117) + (S2-1); (I-117) + (S2-2); (I-117) + (S2-3); (I-117) + (S2-4); (I-117) + (S2-5); (I-117) + (S2-6); (I-117) + (S2-7); (I-117) + (S2-8); (I-117) + (S2-9); (I-117) + (S2-10); (I-117) + (S3-1); (I-117) + (S3-2); (I-117) + (S3-3); (I-117) + (S3-4); (I-117) + (S3-5); (I-117) + (S3-6); (I-117) + (S3-7); (I-117) + (S3-8); (I-117) + (S3-9); (I-117) + (S3-10); (I-117) + (S3-11); (I-117) + (S4-1); (I-117) + (S4-2); (I-117) + (S4-3); (I-117) + (S4-4); (I-117) + (S4-5); (I-117) + (S7-1); (I-117) + (S11-1); (I-117) + (S11-2); (I-117) + (S11-3); (I-117) + (S12-1); (I-117) + (S13-1); (I-117) + (S13-2); (I-117) + (S13-3); (I-117) + (S13-4): (I-117) + (S13-5); (I-117) + (S13-6); (I-117) + (S13-7); (I-117) + (S13-8); (I-117) + (S13-9); (I-117) + (S14-1)
(I-118) + (S1-1); (I-118) + (S1-2); (I-118) + (S1-3); (I-118) + (S1-4); (I-118) + (S1-5); (I-118) + (S1-6); (I-118) + (S1-7); (I-118) + (S1-8); (I-118) + (S1-9); (I-118) + (S1-10); (I-118) + (S1-11); (I-118) + (S1-12); (I-118) + (S1-13); (I-118) + (S2-1); (I-118) + (S2-2); (I-118) + (S2-3); (I-118) + (S2-4); (I-118) + (S2-5); (I-118) + (S2-6); (I-118) + (S2-7); (I-118) + (S2-8); (I-118) + (S2-9); (I-118) + (S2-10); (I-118) + (S3-1); (I-118) + (S3-2); (I-118) + (S3-3); (I-118) + (S3-4); (I-118) + (S3-5); (I-118) + (S3-6); (I-118) + (S3-7); (I-118) + (S3-8); (I-118) + (S3-9); (I-118) + (S3-10); (I-118) + (S3-11); (I-118) + (S4-1); (I-118) + (S4-2); (I-118) + (S4-3); (I-118) + (S4-4); (I-118) + (S4-5); (I-118) + (S7-1); (I-118) + (S11-1); (I-118) + (S11-2); (I-118) + (S11-3); (I-118) + (S12-1); (I-118) + (S13-1); (I-118) + (S13-2); (I-118) + (S13-3); (I-118) + (S13-4): (I-118) + (S13-5); (I-118) + (S13-6); (I-118) + (S13-7); (I-118) + (S13-8); (I-118) + (S13-9); (I-118) + (S14-1)
(I-119) + (S1-1); (I-119) + (S1-2); (I-119) + (S1-3); (I-119) + (S1-4); (I-119) + (S1-5); (I-119) + (S1-6); (I-119) + (S1-7); (I-119) + (S1-8); (I-119) + (S1-9); (I-119) + (S1-10); (I-119) + (S1-11); (I-119) + (S1-12); (I-119) + (S1-13); (I-119) + (S2-1); (I-119) + (S2-2); (I-119) + (S2-3); (I-119) + (S2-4); (I-119) + (S2-5); (I-119) + (S2-6); (I-119) + (S2-7); (I-119) + (S2-8); (I-119) + (S2-9); (I-119) + (S2-10); (I-119) + (S3-1); (I-119) + (S3-2); (I-119) + (S3-3); (I-119) + (S3-4); (I-119) + (S3-5); (I-119) + (S3-6); (I-119) + (S3-7); (I-119) + (S3-8); (I-119) + (S3-9); (I-119) + (S3-10); (I-119) + (S3-11); (I-119) + (S4-1); (I-119) + (S4-2); (I-119) + (S4-3); (I-119) + (S4-4); (I-119) + (S4-5); (I-119) + (S7-1); (I-119) + (S11-1); (I-119) + (S11-2); (I-119) + (S11-3); (I-119) + (S12-1); (I-119) + (S13-1); (I-119) + (S13-2); (I-119) + (S13-3); (I-119) + (S13-4): (I-119) + (S13-5); (I-119) + (S13-6); (I-119) + (S13-7); (I-119) + (S13-8); (I-119) + (S13-9); (I-119) + (S14-1)
(I-120) + (S1-1); (I-120) + (S1-2); (I-120) + (S1-3); (I-120) + (S1-4); (I-120) + (S1-5); (I-120) + (S1-6); (I-120) + (S1-7); (I-120) + (S1-8); (I-120) + (S1-9); (I-120) + (S1-10); (I-120) + (S1-11); (I-120) + (S1-12); (I-120) + (S1-13); (I-120) + (S2-1); (I-120) + (S2-2); (I-120) + (S2-3); (I-120) + (S2-4); (I-120) + (S2-5); (I-120) + (S2-6); (I-120) + (S2-7); (I-120) + (S2-8); (I-120) + (S2-9); (I-120) + (S2-10); (I-120) + (S3-1); (I-120) + (S3-2); (I-120) + (S3-3); (I-120) + (S3-4); (I-120) + (S3-5); (I-120) + (S3-6); (I-120) + (S3-7); (I-120) + (S3-8); (I-120) + (S3-9); (I-120) + (S3-10); (I-120) + (S3-11); (I-120) + (S4-1); (I-120) + (S4-2); (I-120) + (S4-3); (I-120) + (S4-4); (I-120) + (S4-5); (I-120) + (S7-1); (I-120) + (S11-1); (I-120) + (S11-2); (I-120) + (S11-3); (I-120) + (S12-1); (I-120) + (S13-1); (I-120) + (S13-2); (I-120) + (S13-3); (I-120) + (S13-4): (I-120) + (S13-5); (I-120) + (S13-6); (I-120) + (S13-7); (I-120) + (S13-8); (I-120) + (S13-9); (I-120) + (S14-1)
(I-121) + (S1-1); (I-121) + (S1-2); (I-121) + (S1-3); (I-121) + (S1-4); (I-121) + (S1-5); (I-121) + (S1-6); (I-121) + (S1-7); (I-121) + (S1-8); (I-121) + (S1-9); (I-121) + (S1-10); (I-121) + (S1-11); (I-121) + (S1-12); (I-121) + (S1-13); (I-121) + (S2-1); (I-121) + (S2-2); (I-121) + (S2-3); (I-121) + (S2-4); (I-121) + (S2-5); (I-121) + (S2-6); (I-121) + (S2-7); (I-121) + (S2-8); (I-121) + (S2-9); (I-121) + (S2-10); (I-121) + (S3-1); (I-121) + (S3-2); (I-121) + (S3-3); (I-121) + (S3-4); (I-121) + (S3-5); (I-121) + (S3-6); (I-121) + (S3-7); (I-121) + (S3-8); (I-121) + (S3-9); (I-121) + (S3-10); (I-121) + (S3-11); (I-121) + (S4-1); (I-121) + (S4-2); (I-121) + (S4-3); (I-121) + (S4-4); (I-121) + (S4-5); (I-121) + (S7-1); (I-121) + (S11-1); (I-121) + (S11-2); (I-121) + (S11-3); (I-121) + (S12-1); (I-121) + (S13-1); (I-121) + (S13-2); (I-121) + (S13-3); (I-121) + (S13-4): (I-121) + (S13-5); (I-121) + (S13-6); (I-121) + (S13-7); (I-121) + (S13-8); (I-121) + (S13-9); (I-121) + (S14-1)
(I-122) + (S1-1); (I-122) + (S1-2); (I-122) + (S1-3); (I-122) + (S1-4); (I-122) + (S1-5); (I-122) + (S1-6); (I-122) + (S1-7); (I-122) + (S1-8); (I-122) + (S1-9); (I-122) + (S1-10); (I-122) + (S1-11); (I-122) + (S1-12); (I-122) + (S1-13); (I-122) + (S2-1); (I-122) + (S2-2); (I-122) + (S2-3); (I-122) + (S2-4); (I-122) + (S2-5); (I-122) + (S2-6); (I-122) + (S2-7); (I-122) + (S2-8); (I-122) + (S2-9); (I-122) + (S2-10); (I-122) + (S3-1); (I-122) + (S3-2); (I-122) + (S3-3); (I-122) + (S3-4); (I-122) + (S3-5); (I-122) + (S3-6); (I-122) + (S3-7); (I-122) + (S3-8); (I-122) + (S3-9); (I-122) + (S3-10); (I-122) + (S3-11); (I-122) + (S4-1); (I-122) + (S4-2); (I-122) + (S4-3); (I-122) + (S4-4); (I-122) + (S4-5); (I-122) + (S7-1); (I-122) + (S11-1); (I-122) + (S11-2); (I-122) + (S11-3); (I-122) + (S12-1); (I-122) + (S13-1); (I-122) + (S13-2); (I-122) + (S13-3); (I-122) + (S13-4): (I-122) + (S13-5); (I-122) + (S13-6); (I-122) + (S13-7); (I-122) + (S13-8); (I-122) + (S13-9); (I-122) + (S14-1)
(I-123) + (S1-1); (I-123) + (S1-2); (I-123) + (S1-3); (I-123) + (S1-4); (I-123) + (S1-5); (I-123) + (S1-6); (I-123) + (S1-7); (I-123) + (S1-8); (I-123) + (S1-9); (I-123) + (S1-10); (I-123) + (S1-11); (I-123) + (S1-12); (I-123) + (S1-13); (I-123) + (S2-1); (I-123) + (S2-2); (I-123) + (S2-3); (I-123) + (S2-4); (I-123) + (S2-5); (I-123) + (S2-6); (I-123) + (S2-7); (I-123) + (S2-8); (I-123) + (S2-9); (I-123) + (S2-10); (I-123) + (S3-1); (I-123) + (S3-2); (I-123) + (S3-3); (I-123) + (S3-4); (I-123) + (S3-5); (I-123) + (S3-6); (I-123) + (S3-7); (I-123) + (S3-8); (I-123) + (S3-9); (I-123) + (S3-10); (I-123) + (S3-11); (I-123) + (S4-1); (I-123) + (S4-2); (I-123) + (S4-3); (I-123) + (S4-4); (I-123) + (S4-5); (I-123) + (S7-1); (I-123) + (S11-1); (I-123) + (S11-2); (I-123) + (S11-3); (I-123) + (S12-1); (I-123) + (S13-1); (I-123) + (S13-2); (I-123) + (S13-3); (I-123) + (S13-4): (I-123) + (S13-5); (I-123) + (S13-6); (I-123) + (S13-7); (I-123) + (S13-8); (I-123) + (S13-9); (I-123) + (S14-1)
(I-124) + (S1-1); (I-124) + (S1-2); (I-124) + (S1-3); (I-124) + (S1-4); (I-124) + (S1-5); (I-124) + (S1-6); (I-124) + (S1-7); (I-124) + (S1-8); (I-124) + (S1-9); (I-124) + (S1-10); (I-124) + (S1-11); (I-124) + (S1-12); (I-124) + (S1-13); (I-124) + (S2-1); (I-124) + (S2-2); (I-124) + (S2-3); (I-124) + (S2-4); (I-124) + (S2-5); (I-124) + (S2-6); (I-124) + (S2-7); (I-124) + (S2-8); (I-124) + (S2-9); (I-124) + (S2-10); (I-124) + (S3-1); (I-124) + (S3-2); (I-124) + (S3-3); (I-124) + (S3-4); (I-124) + (S3-5); (I-124) + (S3-6); (I-124) + (S3-7); (I-124) + (S3-8); (I-124) + (S3-9); (I-124) + (S3-10); (I-124) + (S3-11); (I-124) + (S4-1); (I-124) + (S4-2); (I-124) + (S4-3); (I-124) + (S4-4); (I-124) + (S4-5); (I-124) + (S7-1); (I-124) + (S11-1); (I-124) + (S11-2); (I-124) + (S11-3); (I-124) + (S12-1); (I-124) + (S13-1); (I-124) + (S13-2); (I-124) + (S13-3); (I-124) + (S13-4): (I-124) + (S13-5); (I-124) + (S13-6); (I-124) + (S13-7); (I-124) + (S13-8); (I-124) + (S13-9); (I-124) + (S14-1)
(I-125) + (S1-1); (I-125) + (S1-2); (I-125) + (S1-3); (I-125) + (S1-4); (I-125) + (S1-5); (I-125) + (S1-6); (I-125) + (S1-7); (I-125) + (S1-8); (I-125) + (S1-9); (I-125) + (S1-10); (I-125) + (S1-11); (I-125) + (S1-12); (I-125) + (S1-13); (I-125) + (S2-1); (I-125) + (S2-2); (I-125) + (S2-3); (I-125) + (S2-4); (I-125) + (S2-5); (I-125) + (S2-6); (I-125) + (S2-7); (I-125) + (S2-8); (I-125) + (S2-9); (I-125) + (S2-10); (I-125) + (S3-1); (I-125) + (S3-2); (I-125) + (S3-3); (I-125) + (S3-4); (I-125) + (S3-5); (I-125) + (S3-6); (I-125) + (S3-7); (I-125) + (S3-8); (I-125) + (S3-9); (I-125) + (S3-10); (I-125) + (S3-11); (I-125) + (S4-1); (I-125) + (S4-2); (I-125) + (S4-3); (I-125) + (S4-4); (I-125) + (S4-5); (I-125) + (S7-1); (I-125) + (S11-1); (I-125) + (S11-2); (I-125) + (S11-3); (I-125) + (S12-1); (I-125) + (S13-1); (I-125) + (S13-2); (I-125) + (S13-3); (I-125) + (S13-4): (I-125) + (S13-5); (I-125) + (S13-6); (I-125) + (S13-7); (I-125) + (S13-8); (I-125) + (S13-9); (I-125) + (S14-1)
(I-126) + (S1-1); (I-126) + (S1-2); (I-126) + (S1-3); (I-126) + (S1-4); (I-126) + (S1-5); (I-126) + (S1-6); (I-126) + (S1-7); (I-126) + (S1-8); (I-126) + (S1-9); (I-126) + (S1-10); (I-126) + (S1-11); (I-126) + (S1-12); (I-126) + (S1-13); (I-126) + (S2-1); (I-126) + (S2-2); (I-126) + (S2-3); (I-126) + (S2-4); (I-126) + (S2-5); (I-126) + (S2-6); (I-126) + (S2-7); (I-126) + (S2-8); (I-126) + (S2-9); (I-126) + (S2-10); (I-126) + (S3-1); (I-126) + (S3-2); (I-126) + (S3-3); (I-126) + (S3-4); (I-126) + (S3-5); (I-126) + (S3-6); (I-126) + (S3-7); (I-126) + (S3-8); (I-126) + (S3-9); (I-126) + (S3-10); (I-126) + (S3-11); (I-126) + (S4-1); (I-126) + (S4-2); (I-126) + (S4-3); (I-126) + (S4-4); (I-126) + (S4-5); (I-126) + (S7-1); (I-126) + (S11-1); (I-126) + (S11-2); (I-126) + (S11-3); (I-126) + (S12-1); (I-126) + (S13-1); (I-126) + (S13-2); (I-126) + (S13-3); (I-126) + (S13-4): (I-126) + (S13-5); (I-126) + (S13-6); (I-126) + (S13-7); (I-126) + (S13-8); (I-126) + (S13-9); (I-126) + (S14-1)
(I-127) + (S1-1); (I-127) + (S1-2); (I-127) + (S1-3); (I-127) + (S1-4); (I-127) + (S1-5); (I-127) + (S1-6); (I-127) + (S1-7); (I-127) + (S1-8); (I-127) + (S1-9); (I-127) + (S1-10); (I-127) + (S1-11); (I-127) + (S1-12); (I-127) + (S1-13); (I-127) + (S2-1); (I-127) + (S2-2); (I-127) + (S2-3); (I-127) + (S2-4); (I-127) + (S2-5); (I-127) + (S2-6); (I-127) + (S2-7); (I-127) + (S2-8); (I-127) + (S2-9); (I-127) + (S2-10); (I-127) + (S3-1); (I-127) + (S3-2); (I-127) + (S3-3); (I-127) + (S3-4); (I-127) + (S3-5); (I-127) + (S3-6); (I-127) + (S3-7); (I-127) + (S3-8); (I-127) + (S3-9); (I-127) + (S3-10); (I-127) + (S3-11); (I-127) + (S4-1); (I-127) + (S4-2); (I-127) + (S4-3); (I-127) + (S4-4); (I-127) + (S4-5); (I-127) + (S7-1); (I-127) + (S11-1); (I-127) + (S11-2); (I-127) + (S11-3); (I-127) + (S12-1); (I-127) + (S13-1); (I-127) + (S13-2); (I-127) + (S13-3); (I-127) + (S13-4): (I-127) + (S13-5); (I-127) + (S13-6); (I-127) + (S13-7); (I-127) + (S13-8); (I-127) + (S13-9); (I-127) + (S14-1)
(I-128) + (S1-1); (I-128) + (S1-2); (I-128) + (S1-3); (I-128) + (S1-4); (I-128) + (S1-5); (I-128) + (S1-6); (I-128) + (S1-7); (I-128) + (S1-8); (I-128) + (S1-9); (I-128) + (S1-10); (I-128) + (S1-11); (I-128) + (S1-12); (I-128) + (S1-13); (I-128) + (S2-1); (I-128) + (S2-2); (I-128) + (S2-3); (I-128) + (S2-4); (I-128) + (S2-5); (I-128) + (S2-6); (I-128) + (S2-7); (I-128) + (S2-8); (I-128) + (S2-9); (I-128) + (S2-10); (I-128) + (S3-1); (I-128) + (S3-2); (I-128) + (S3-3); (I-128) + (S3-4); (I-128) + (S3-5); (I-128) + (S3-6); (I-128) + (S3-7); (I-128) + (S3-8); (I-128) + (S3-9); (I-128) + (S3-10); (I-128) + (S3-11); (I-128) + (S4-1); (I-128) + (S4-2); (I-128) + (S4-3); (I-128) + (S4-4); (I-128) + (S4-5); (I-128) + (S7-1); (I-128) + (S11-1); (I-128) + (S11-2); (I-128) + (S11-3); (I-128) + (S12-1); (I-128) + (S13-1); (I-128) + (S13-2); (I-128) + (S13-3); (I-128) + (S13-4): (I-128) + (S13-5); (I-128) + (S13-6); (I-128) + (S13-7); (I-128) + (S13-8); (I-128) + (S13-9); (I-128) + (S14-1)
(I-129) + (S1-1); (I-129) + (S1-2); (I-129) + (S1-3); (I-129) + (S1-4); (I-129) + (S1-5); (I-129) + (S1-6); (I-129) + (S1-7); (I-129) + (S1-8); (I-129) + (S1-9); (I-129) + (S1-10); (I-129) + (S1-11); (I-129) + (S1-12); (I-129) + (S1-13); (I-129) + (S2-1); (I-129) + (S2-2); (I-129) + (S2-3); (I-129) + (S2-4); (I-129) + (S2-5); (I-129) + (S2-6); (I-129) + (S2-7); (I-129) + (S2-8); (I-129) + (S2-9); (I-129) + (S2-10); (I-129) + (S3-1); (I-129) + (S3-2); (I-129) + (S3-3); (I-129) + (S3-4); (I-129) + (S3-5); (I-129) + (S3-6); (I-129) + (S3-7); (I-129) + (S3-8); (I-129) + (S3-9); (I-129) + (S3-10); (I-129) + (S3-11); (I-129) + (S4-1); (I-129) + (S4-2); (I-129) + (S4-3); (I-129) + (S4-4); (I-129) + (S4-5); (I-129) + (S7-1); (I-129) + (S11-1); (I-129) + (S11-2); (I-129) + (S11-3); (I-129) + (S12-1); (I-129) + (S13-1); (I-129) + (S13-2); (I-129) + (S13-3); (I-129) + (S13-4): (I-129) + (S13-5); (I-129) + (S13-6); (I-129) + (S13-7); (I-129) + (S13-8); (I-129) + (S13-9); (I-129) + (S14-1)
(I-130) + (S1-1); (I-130) + (S1-2); (I-130) + (S1-3); (I-130) + (S1-4); (I-130) + (S1-5); (I-130) + (S1-6); (I-130) + (S1-7); (I-130) + (S1-8); (I-130) + (S1-9); (I-130) + (S1-10); (I-130) + (S1-11); (I-130) + (S1-12); (I-130) + (S1-13); (I-130) + (S2-1); (I-130) + (S2-2); (I-130) + (S2-3); (I-130) + (S2-4); (I-130) + (S2-5); (I-130) + (S2-6); (I-130) + (S2-7); (I-130) + (S2-8); (I-130) + (S2-9); (I-130) + (S2-10); (I-130) + (S3-1); (I-130) + (S3-2); (I-130) + (S3-3); (I-130) + (S3-4); (I-130) + (S3-5); (I-130) + (S3-6); (I-130) + (S3-7); (I-130) + (S3-8); (I-130) + (S3-9); (I-130) + (S3-10); (I-130) + (S3-11); (I-130) + (S4-1); (I-130) + (S4-2); (I-130) + (S4-3); (I-130) + (S4-4); (I-130) + (S4-5); (I-130) + (S7-1); (I-130) + (S11-1); (I-130) + (S11-2); (I-130) + (S11-3); (I-130) + (S12-1); (I-130) + (S13-1); (I-130) + (S13-2); (I-130) + (S13-3); (I-130) + (S13-4): (I-130) + (S13-5); (I-130) + (S13-6); (I-130) + (S13-7); (I-130) + (S13-8); (I-130) + (S13-9); (I-130) + (S14-1)
(I-131) + (S1-1); (I-131) + (S1-2); (I-131) + (S1-3); (I-131) + (S1-4); (I-131) + (S1-5); (I-131) + (S1-6); (I-131) + (S1-7); (I-131) + (S1-8); (I-131) + (S1-9); (I-131) + (S1-10); (I-131) + (S1-11); (I-131) + (S1-12); (I-131) + (S1-13); (I-131) + (S2-1); (I-131) + (S2-2); (I-131) + (S2-3); (I-131) + (S2-4); (I-131) + (S2-5); (I-131) + (S2-6); (I-131) + (S2-7); (I-131) + (S2-8); (I-131) + (S2-9); (I-131) + (S2-10); (I-131) + (S3-1); (I-131) + (S3-2); (I-131) + (S3-3); (I-131) + (S3-4); (I-131) + (S3-5); (I-131) + (S3-6); (I-131) + (S3-7); (I-131) + (S3-8); (I-131) + (S3-9); (I-131) + (S3-10); (I-131) + (S3-11); (I-131) + (S4-1); (I-131) + (S4-2); (I-131) + (S4-3); (I-131) + (S4-4); (I-131) + (S4-5); (I-131) + (S7-1); (I-131) + (S11-1); (I-131) + (S11-2); (I-131) + (S11-3); (I-131) + (S12-1); (I-131) + (S13-1); (I-131) + (S13-2); (I-131) + (S13-3); (I-131) + (S13-4): (I-131) + (S13-5); (I-131) + (S13-6); (I-131) + (S13-7); (I-131) + (S13-8); (I-131) + (S13-9); (I-131) + (S14-1)
(I-132) + (S1-1); (I-132) + (S1-2); (I-132) + (S1-3); (I-132) + (S1-4); (I-132) + (S1-5); (I-132) + (S1-6); (I-132) + (S1-7); (I-132) + (S1-8); (I-132) + (S1-9); (I-132) + (S1-10); (I-132) + (S1-11); (I-132) + (S1-12); (I-132) + (S1-13); (I-132) + (S2-1); (I-132) + (S2-2); (I-132) + (S2-3); (I-132) + (S2-4); (I-132) + (S2-5); (I-132) + (S2-6); (I-132) + (S2-7); (I-132) + (S2-8); (I-132) + (S2-9); (I-132) + (S2-10); (I-132) + (S3-1); (I-132) + (S3-2); (I-132) + (S3-3); (I-132) + (S3-4); (I-132) + (S3-5); (I-132) + (S3-6); (I-132) + (S3-7); (I-132) + (S3-8); (I-132) + (S3-9); (I-132) + (S3-10); (I-132) + (S3-11); (I-132) + (S4-1); (I-132) + (S4-2); (I-132) + (S4-3); (I-132) + (S4-4); (I-132) + (S4-5); (I-132) + (S7-1); (I-132) + (S11-1); (I-132) + (S11-2); (I-132) + (S11-3); (I-132) + (S12-1); (I-132) + (S13-1); (I-132) + (S13-2); (I-132) + (S13-3); (I-132) + (S13-4): (I-132) + (S13-5); (I-132) + (S13-6); (I-132) + (S13-7); (I-132) + (S13-8); (I-132) + (S13-9); (I-132) + (S14-1)
(I-133) + (S1-1); (I-133) + (S1-2); (I-133) + (S1-3); (I-133) + (S1-4); (I-133) + (S1-5); (I-133) + (S1-6); (I-133) + (S1-7); (I-133) + (S1-8); (I-133) + (S1-9); (I-133) + (S1-10); (I-133) + (S1-11); (I-133) + (S1-12); (I-133) + (S1-13); (I-133) + (S2-1); (I-133) + (S2-2); (I-133) + (S2-3); (I-133) + (S2-4); (I-133) + (S2-5); (I-133) + (S2-6); (I-133) + (S2-7); (I-133) + (S2-8); (I-133) + (S2-9); (I-133) + (S2-10); (I-133) + (S3-1); (I-133) + (S3-2); (I-133) + (S3-3); (I-133) + (S3-4); (I-133) + (S3-5); (I-133) + (S3-6); (I-133) + (S3-7); (I-133) + (S3-8); (I-133) + (S3-9); (I-133) + (S3-10); (I-133) + (S3-11); (I-133) + (S4-1); (I-133) + (S4-2); (I-133) + (S4-3); (I-133) + (S4-4); (I-133) + (S4-5); (I-133) + (S7-1); (I-133) + (S11-1); (I-133) + (S11-2); (I-133) + (S11-3); (I-133) + (S12-1); (I-133) + (S13-1); (I-133) + (S13-2); (I-133) + (S13-3); (I-133) + (S13-4): (I-133) + (S13-5); (I-133) + (S13-6); (I-133) + (S13-7); (I-133) + (S13-8); (I-133) + (S13-9); (I-133) + (S14-1)
(I-134) + (S1-1); (I-134) + (S1-2); (I-134) + (S1-3); (I-134) + (S1-4); (I-134) + (S1-5); (I-134) + (S1-6); (I-134) + (S1-7); (I-134) + (S1-8); (I-134) + (S1-9); (I-134) + (S1-10); (I-134) + (S1-11); (I-134) + (S1-12); (I-134) + (S1-13); (I-134) + (S2-1); (I-134) + (S2-2); (I-134) + (S2-3); (I-134) + (S2-4); (I-134) + (S2-5); (I-134) + (S2-6); (I-134) + (S2-7); (I-134) + (S2-8); (I-134) + (S2-9); (I-134) + (S2-10); (I-134) + (S3-1); (I-134) + (S3-2); (I-134) + (S3-3); (I-134) + (S3-4); (I-134) + (S3-5); (I-134) + (S3-6); (I-134) + (S3-7); (I-134) + (S3-8); (I-134) + (S3-9); (I-134) + (S3-10); (I-134) + (S3-11); (I-134) + (S4-1); (I-134) + (S4-2); (I-134) + (S4-3); (I-134) + (S4-4); (I-134) + (S4-5); (I-134) + (S7-1); (I-134) + (S11-1); (I-134) + (S11-2); (I-134) + (S11-3); (I-134) + (S12-1); (I-134) + (S13-1); (I-134) + (S13-2); (I-134) + (S13-3); (I-134) + (S13-4): (I-134) + (S13-5); (I-134) + (S13-6); (I-134) + (S13-7); (I-134) + (S13-8); (I-134) + (S13-9); (I-134) + (S14-1 )
(I-135) + (S1-1); (I-135) + (S1-2); (I-135) + (S1-3); (I-135) + (S1-4); (I-135) + (S1-5); (I-135) + (S1-6); (I-135) + (S1-7); (I-135) + (S1-8); (I-135) + (S1-9); (I-135) + (S1-10); (I-135) + (S1-11); (I-135) + (S1-12); (I-135) + (S1-13); (I-135) + (S2-1); (I-135) + (S2-2); (I-135) + (S2-3); (I-135) + (S2-4); (I-135) + (S2-5); (I-135) + (S2-6); (I-135) + (S2-7); (I-135) + (S2-8); (I-135) + (S2-9); (I-135) + (S2-10); (I-135) + (S3-1); (I-135) + (S3-2); (I-135) + (S3-3); (I-135) + (S3-4); (I-135) + (S3-5); (I-135) + (S3-6); (I-135) + (S3-7); (I-135) + (S3-8); (I-135) + (S3-9); (I-135) + (S3-10); (I-135) + (S3-11); (I-135) + (S4-1); (I-135) + (S4-2); (I-135) + (S4-3); (I-135) + (S4-4); (I-135) + (S4-5); (I-135) + (S7-1); (I-135) + (S11-1); (I-135) + (S11-2); (I-135) + (S11-3); (I-135) + (S12-1); (I-135) + (S13-1); (I-135) + (S13-2); (I-135) + (S13-3); (I-135) + (S13-4): (I-135) + (S13-5); (I-135) + (S13-6); (I-135) + (S13-7); (I-135) + (S13-8); (I-135) + (S13-9); (I-135) + (S14-1 )
(I-136) + (S1-1); (I-136) + (S1-2); (I-136) + (S1-3); (I-136) + (S1-4); (I-136) + (S1-5); (I-136) + (S1-6); (I-136) + (S1-7); (I-136) + (S1-8); (I-136) + (S1-9); (I-136) + (S1-10); (I-136) + (S1-11); (I-136) + (S1-12); (I-136) + (S1-13); (I-136) + (S2-1); (I-136) + (S2-2); (I-136) + (S2-3); (I-136) + (S2-4); (I-136) + (S2-5); (I-136) + (S2-6); (I-136) + (S2-7); (I-136) + (S2-8); (I-136) + (S2-9); (I-136) + (S2-10); (I-136) + (S3-1); (I-136) + (S3-2); (I-136) + (S3-3); (I-136) + (S3-4); (I-136) + (S3-5); (I-136) + (S3-6); (I-136) + (S3-7); (I-136) + (S3-8); (I-136) + (S3-9); (I-136) + (S3-10); (I-136) + (S3-11); (I-136) + (S4-1); (I-136) + (S4-2); (I-136) + (S4-3); (I-136) + (S4-4); (I-136) + (S4-5); (I-136) + (S7-1); (I-136) + (S11-1); (I-136) + (S11-2); (I-136) + (S11-3); (I-136) + (S12-1); (I-136) + (S13-1); (I-136) + (S13-2); (I-136) + (S13-3); (I-136) + (S13-4): (I-136) + (S13-5); (I-136) + (S13-6); (I-136) + (S13-7); (I-136) + (S13-8); (I-136) + (S13-9); (I-136) + (S14-1)
(I-137) + (S1-1); (I-137) + (S1-2); (I-137) + (S1-3); (I-137) + (S1-4); (I-137) + (S1-5); (I-137) + (S1-6); (I-137) + (S1-7); (I-137) + (S1-8); (I-137) + (S1-9); (I-137) + (S1-10); (I-137) + (S1-11); (I-137) + (S1-12); (I-137) + (S1-13); (I-137) + (S2-1); (I-137) + (S2-2); (I-137) + (S2-3); (I-137) + (S2-4); (I-137) + (S2-5); (I-137) + (S2-6); (I-137) + (S2-7); (I-137) + (S2-8); (I-137) + (S2-9); (I-137) + (S2-10); (I-137) + (S3-1); (I-137) + (S3-2); (I-137) + (S3-3); (I-137) + (S3-4); (I-137) + (S3-5); (I-137) + (S3-6); (I-137) + (S3-7); (I-137) + (S3-8); (I-137) + (S3-9); (I-137) + (S3-10); (I-137) + (S3-11); (I-137) + (S4-1); (I-137) + (S4-2); (I-137) + (S4-3); (I-137) + (S4-4); (I-137) + (S4-5); (I-137) + (S7-1); (I-137) + (S11-1); (I-137) + (S11-2); (I-137) + (S11-3); (I-137) + (S12-1); (I-137) + (S13-1); (I-137) + (S13-2); (I-137) + (S13-3); (I-137) + (S13-4): (I-137) + (S13-5); (I-137) + (S13-6); (I-137) + (S13-7); (I-137) + (S13-8); (I-137) + (S13-9); (I-137) + (S14-1)
(I-138) + (S1-1); (I-138) + (S1-2); (I-138) + (S1-3); (I-138) + (S1-4); (I-138) + (S1-5); (I-138) + (S1-6); (I-138) + (S1-7); (I-138) + (S1-8); (I-138) + (S1-9); (I-138) + (S1-10); (I-138) + (S1-11); (I-138) + (S1-12); (I-138) + (S1-13); (I-138) + (S2-1); (I-138) + (S2-2); (I-138) + (S2-3); (I-138) + (S2-4); (I-138) + (S2-5); (I-138) + (S2-6); (I-138) + (S2-7); (I-138) + (S2-8); (I-138) + (S2-9); (I-138) + (S2-10); (I-138) + (S3-1); (I-138) + (S3-2); (I-138) + (S3-3); (I-138) + (S3-4); (I-138) + (S3-5); (I-138) + (S3-6); (I-138) + (S3-7); (I-138) + (S3-8); (I-138) + (S3-9); (I-138) + (S3-10); (I-138) + (S3-11); (I-138) + (S4-1); (I-138) + (S4-2); (I-138) + (S4-3); (I-138) + (S4-4); (I-138) + (S4-5); (I-138) + (S7-1); (I-138) + (S11-1); (I-138) + (S11-2); (I-138) + (S11-3); (I-138) + (S12-1); (I-138) + (S13-1); (I-138) + (S13-2); (I-138) + (S13-3); (I-138) + (S13-4): (I-138) + (S13-5); (I-138) + (S13-6); (I-138) + (S13-7); (I-138) + (S13-8); (I-138) + (S13-9); (I-138) + (S14-1)
(I-139) + (S1-1); (I-139) + (S1-2); (I-139) + (S1-3); (I-139) + (S1-4); (I-139) + (S1-5); (I-139) + (S1-6); (I-139) + (S1-7); (I-139) + (S1-8); (I-139) + (S1-9); (I-139) + (S1-10); (I-139) + (S1-11); (I-139) + (S1-12); (I-139) + (S1-13); (I-139) + (S2-1); (I-139) + (S2-2); (I-139) + (S2-3); (I-139) + (S2-4); (I-139) + (S2-5); (I-139) + (S2-6); (I-139) + (S2-7); (I-139) + (S2-8); (I-139) + (S2-9); (I-139) + (S2-10); (I-139) + (S3-1); (I-139) + (S3-2); (I-139) + (S3-3); (I-139) + (S3-4); (I-139) + (S3-5); (I-139) + (S3-6); (I-139) + (S3-7); (I-139) + (S3-8); (I-139) + (S3-9); (I-139) + (S3-10); (I-139) + (S3-11); (I-139) + (S4-1); (I-139) + (S4-2); (I-139) + (S4-3); (I-139) + (S4-4); (I-139) + (S4-5); (I-139) + (S7-1); (I-139) + (S11-1); (I-139) + (S11-2); (I-139) + (S11-3); (I-139) + (S12-1); (I-139) + (S13-1); (I-139) + (S13-2); (I-139) + (S13-3); (I-139) + (S13-4): (I-139) + (S13-5); (I-139) + (S13-6); (I-139) + (S13-7); (I-139) + (S13-8); (I-139) + (S13-9); (I-139) + (S14-1)
(I-140) + (S1-1); (I-140) + (S1-2); (I-140) + (S1-3); (I-140) + (S1-4); (I-140) + (S1-5); (I-140) + (S1-6); (I-140) + (S1-7); (I-140) + (S1-8); (I-140) + (S1-9); (I-140) + (S1-10); (I-140) + (S1-11); (I-140) + (S1-12); (I-140) + (S1-13); (I-140) + (S2-1); (I-140) + (S2-2); (I-140) + (S2-3); (I-140) + (S2-4); (I-140) + (S2-5); (I-140) + (S2-6); (I-140) + (S2-7); (I-140) + (S2-8); (I-140) + (S2-9); (I-140) + (S2-10); (I-140) + (S3-1); (I-140) + (S3-2); (I-140) + (S3-3); (I-140) + (S3-4); (I-140) + (S3-5); (I-140) + (S3-6); (I-140) + (S3-7); (I-140) + (S3-8); (I-140) + (S3-9); (I-140) + (S3-10); (I-140) + (S3-11); (I-140) + (S4-1); (I-140) + (S4-2); (I-140) + (S4-3); (I-140) + (S4-4); (I-140) + (S4-5); (I-140) + (S7-1); (I-140) + (S11-1); (I-140) + (S11-2); (I-140) + (S11-3); (I-140) + (S12-1); (I-140) + (S13-1); (I-140) + (S13-2); (I-140) + (S13-3); (I-140) + (S13-4): (I-140) + (S13-5); (I-140) + (S13-6); (I-140) + (S13-7); (I-140) + (S13-8); (I-140) + (S13-9); (I-140) + (S14-1)
(I-141) + (S1-1); (I-141) + (S1-2); (I-141) + (S1-3); (I-141) + (S1-4); (I-141) + (S1-5); (I-141) + (S1-6); (I-141) + (S1-7); (I-141) + (S1-8); (I-141) + (S1-9); (I-141) + (S1-10); (I-141) + (SI-11); (I-141) + (S1-12); (I-141) + (S1-13); (I-141) + (S2-1); (I-141) + (S2-2); (I-141) + (S2-3); (I-141) + (S2-4); (I-141) + (S2-5); (I-141) + (S2-6); (I-141) + (S2-7); (I-141) + (S2-8); (I-141) + (S2-9); (I-141) + (S2-10); (I-141) + (S3-1); (I-141) + (S3-2); (I-141) + (S3-3); (I-141) + (S3-4); (I-141) + (S3-5); (I-141) + (S3-6); (I-141) + (S3-7); (I-141) + (S3-8); (I-141) + (S3-9); (I-141) + (S3-10); (I-141) + (S3-11); (I-141) + (S4-1); (I-141) + (S4-2); (I-141) + (S4-3); (I-141) + (S4-4); (I-141) + (S4-5); (I-141) + (S7-1); (I-141) + (S11-1); (I-141) + (S11-2); (I-141) + (S11-3); (I-141) + (S12-1); (I-141) + (S13-1); (I-141) + (S13-2); (I-141) + (S13-3); (I-141) + (S13-4): (I-141) + (S13-5); (I-141) + (S13-6); (I-141) + (S13-7); (I-141) + (S13-8); (I-141) + (S13-9); (I-141) + (S14-1)
(I-142) + (S1-1); (I-142) + (S1-2); (I-142) + (S1-3); (I-142) + (S1-4); (I-142) + (S1-5); (I-142) + (S1-6); (I-142) + (S1-7); (i-142) + (S1-8); (I-142) + (S1-9); (I-142) + (S1-10); (I-142) + (S1-11); (I-142) + (S1-12); (I-142) + (S1-13); (I-142) + (S2-1); (I-142) + (S2-2); (I-142) + (S2-3); (I-142) + (S2-4); (I-142) + (S2-5); (I-142) + (S2-6); (I-142) + (S2-7); (I-142) + (S2-8); (I-142) + (S2-9); (I-142) + (S2-10); (I-142) + (S3-1); (I-142) + (S3-2); (I-142) + (S3-3); (I-142) + (S3-4); (I-142) + (S3-5); (I-142) + (S3-6); (I-142) + (S3-7); (I-142) + (S3-8); (I-142) + (S3-9); (I-142) + (S3-10); (I-142) + (S3-11); (I-142) + (S4-1); (I-142) + (S4-2); (I-142) + (S4-3); (I-142) + (S4-4); (I-142) + (S4-5); (I-142) + (S7-1); (I-142) + (S11-1); (I-142) + (S11-2); (I-142) + (S11-3); (I-142) + (S12-1); (I-142) + (S13-1); (I-142) + (S13-2); (I-142) + (S13-3); (I-142) + (S13-4): (I-142) + (S13-5); (I-142) + (S13-6); (I-142) + (S13-7); (I-142) + (S13-8); (I-142) + (S13-9); (i-142) + (S14-1)
(I-143) + (S1-1); (I-143) + (S1-2); (I-143) + (S1-3); (I-143) + (S1-4); (I-143) + (S1-5); (I-143) + (S1-6); (I-143) + (S1-7); (I-143) + (S1-8); (I-143) + (S1-9); (I-143) + (S1-10); (i-143) + (S1-11); (I-143) + (S1-12); (I-143) + (S1-13); (I-143) + (S2-1); (I-143) + (S2-2); (I-143) + (S2-3); (I-143) + (S2-4); (I-143) + (S2-5); (I-143) + (S2-6); (I-143) + (S2-7); (I-143) + (S2-8); (I-143) + (S2-9); (I-143) + (S2-10); (I-143) + (S3-1); (I-143) + (S3-2); (I-143) + (S3-3); (I-143) + (S3-4); (I-143) + (S3-5); (I-143) + (S3-6); (I-143) + (S3-7); (I-143) + (S3-8); (I-143) + (S3-9); (I-143) + (S3-10); (I-143) + (S3-11); (I-143) + (S4-1); (I-143) + (S4-2); (I-143) + (S4-3); (I-143) + (S4-4); (I-143) + (S4-5); (I-143) + (S7-1); (I-143) + (S11-1); (I-143) + (S11-2); (I-143) + (S11-3); (I-143) + (S12-1); (I-143) + (S13-1); (I-143) + (S13-2); (I-143) + (S13-3); (I-143) + (S13-4): (I-143) + (S13-5); (I-143) + (S13-6); (I-143) + (S13-7); (I-143) + (S13-8); (I-143) + (S13-9); (I-143) + (S14-1)
(I-144) + (S1-1); (I-144) + (S1-2); (I-144) + (S1-3); (I-144) + (S1-4); (I-144) + (S1-5); (I-144) + (S1-6); (I-144) + (S1-7); (I-144) + (S1-8); (I-144) + (S1-9); (I-144) + (S1-10); (I-144) + (S1-11); (I-144) + (S1-12); (I-144) + (S1-13); (I-144) + (S2-1); (I-144) + (S2-2); (I-144) + (S2-3); (I-144) + (S2-4); (I-144) + (S2-5); (I-144) + (S2-6); (I-144) + (S2-7); (I-144) + (S2-8); (I-144) + (S2-9); (I-144) + (S2-10); (I-144) + (S3-1); (I-144) + (S3-2); (I-144) + (S3-3); (I-144) + (S3-4); (I-144) + (S3-5); (I-144) + (S3-6); (I-144) + (S3-7); (I-144) + (S3-8); (I-144) + (S3-9); (I-144) + (S3-10); (I-144) + (S3-11); (I-144) + (S4-1); (I-144) + (S4-2); (I-144) + (S4-3); (I-144) + (S4-4); (I-144) + (S4-5); (I-144) + (S7-1); (I-144) + (S11-1); (I-144) + (S11-2); (I-144) + (S11-3); (I-144) + (S12-1); (I-144) + (S13-1); (I-144) + (S13-2); (I-144) + (S13-3); (I-144) + (S13-4): (I-144) + (S13-5); (I-144) + (S13-6); (I-144) + (S13-7); (I-144) + (S13-8); (I-144) + (S13-9); (I-144) + (S14-1 )
(I-145) + (S1-1); (I-145) + (S1-2); (I-145) + (S1-3); (I-145) + (S1-4); (I-145) + (S1-5); (I-145) + (S1-6); (I-145) + (S1-7); (I-145) + (S1-8); (I-145) + (S1-9); (I-145) + (S1-10); (I-145) + (S1-11); (I-145) + (S1-12); (I-145) + (S1-13); (I-145) + (S2-1); (I-145) + (S2-2); (I-145) + (S2-3); (I-145) + (S2-4); (I-145) + (S2-5); (I-145) + (S2-6); (I-145) + (S2-7); (I-145) + (S2-8); (I-145) + (S2-9); (I-145) + (S2-10); (I-145) + (S3-1); (I-145) + (S3-2); (I-145) + (S3-3); (I-145) + (S3-4); (I-145) + (S3-5); (I-145) + (S3-6); (I-145) + (S3-7); (I-145) + (S3-8); (I-145) + (S3-9); (I-145) + (S3-10); (I-145) + (S3-11); (I-145) + (S4-1); (I-145) + (S4-2); (I-145) + (S4-3); (I-145) + (S4-4); (I-145) + (S4-5); (I-145) + (S7-1); (I-145) + (S11-1); (I-145) + (S11-2); (I-145) + (S11-3); (I-145) + (S12-1); (I-145) + (S13-1); (I-145) + (S13-2); (I-145) + (S13-3); (I-145) + (S13-4): (I-145) + (S13-5); (I-145) + (S13-6); (I-145) + (S13-7); (I-145) + (S13-8); (I-145) + (S13-9); (I-145) + (S14-1)
(I-146) + (S1-1); (I-146) + (S1-2); (I-146) + (S1-3); (I-146) + (S1-4); (I-146) + (S1-5); (I-146) + (S1-6); (I-146) + (S1-7); (I-146) + (S1-8); (I-146) + (S1-9); (I-146) + (S1-10); (I-146) + (S1-11); (I-146) + (S1-12); (I-146) + (S1-13); (I-146) + (S2-1); (I-146) + (S2-2); (I-146) + (S2-3); (I-146) + (S2-4); (I-146) + (S2-5); (I-146) + (S2-6); (I-146) + (S2-7); (I-146) + (S2-8); (I-146) + (S2-9); (I-146) + (S2-10); (I-146) + (S3-1); (I-146) + (S3-2); (I-146) + (S3-3); (I-146) + (S3-4); (I-146) + (S3-5); (I-146) + (S3-6); (I-146) + (S3-7); (I-146) + (S3-8); (I-146) + (S3-9); (I-146) + (S3-10); (I-146) + (S3-11); (I-146) + (S4-1); (I-146) + (S4-2); (I-146) + (S4-3); (I-146) + (S4-4); (I-146) + (S4-5); (I-146) + (S7-1); (I-146) + (S11-1); (I-146) + (S11-2); (I-146) + (S11-3); (I-146) + (S12-1); (I-146) + (S13-1); (I-146) + (S13-2); (I-146) + (S13-3); (I-146) + (S13-4): (I-146) + (S13-5); (I-146) + (S13-6); (I-146) + (S13-7); (I-146) + (S13-8); (I-146) + (S13-9); (I-146) + (S14-1)
(I-147) + (S1-1); (I-147) + (S1-2); (I-147) + (S1-3); (I-147) + (S1-4); (I-147) + (S1-5); (I-147) + (S1-6); (I-147) + (S1-7); (I-147) + (S1-8); (I-147) + (S1-9); (I-147) + (S1-10); (I-147) + (S1-11); (I-147) + (S1-12); (I-147) + (S1-13); (I-147) + (S2-1); (I-147) + (S2-2); (I-147) + (S2-3); (I-147) + (S2-4); (I-147) + (S2-5); (I-147) + (S2-6); (I-147) + (S2-7); (I-147) + (S2-8); (I-147) + (S2-9); (I-147) + (S2-10); (I-147) + (S3-1); (I-147) + (S3-2); (I-147) + (S3-3); (I-147) + (S3-4); (I-147) + (S3-5); (I-147) + (S3-6); (I-147) + (S3-7); (I-147) + (S3-8); (I-147) + (S3-9); (I-147) + (S3-10); (I-147) + (S3-11); (I-147) + (S4-1); (I-147) + (S4-2); (I-147) + (S4-3); (I-147) + (S4-4); (I-147) + (S4-5); (I-147) + (S7-1); (I-147) + (S11-1); (I-147) + (S11-2); (I-147) + (S11-3); (I-147) + (S12-1); (I-147) + (S13-1); (I-147) + (S13-2); (I-147) + (S13-3); (I-147) + (S13-4): (I-147) + (S13-5); (I-147) + (S13-6); (I-147) + (S13-7); (I-147) + (S13-8); (I-147) + (S13-9); (I-147) + (S14-1)
(I-148) + (S1-1); (I-148) + (S1-2); (I-148) + (S1-3); (I-148) + (S1-4); (I-148) + (S1-5); (I-148) + (S1-6); (I-148) + (S1-7); (I-148) + (S1-8); (I-148) + (S1-9); (I-148) + (S1-10); (I-148) + (S1-11); (I-148) + (S1-12); (I-148) + (S1-13); (I-148) + (S2-1); (I-148) + (S2-2); (I-148) + (S2-3); (I-148) + (S2-4); (I-148) + (S2-5); (I-148) + (S2-6); (I-148) + (S2-7); (I-148) + (S2-8); (I-148) + (S2-9); (I-148) + (S2-10); (I-148) + (S3-1); (I-148) + (S3-2); (I-148) + (S3-3); (I-148) + (S3-4); (I-148) + (S3-5); (I-148) + (S3-6); (I-148) + (S3-7); (I-148) + (S3-8); (I-148) + (S3-9); (I-148) + (S3-10); (I-148) + (S3-11); (I-148) + (S4-1); (I-148) + (S4-2); (I-148) + (S4-3); (I-148) + (S4-4); (I-148) + (S4-5); (I-148) + (S7-1); (I-148) + (S11-1); (I-148) + (S11-2); (I-148) + (S11-3); (I-148) + (S12-1); (I-148) + (S13-1); (I-148) + (S13-2); (I-148) + (S13-3); (I-148) + (S13-4): (I-148) + (S13-5); (I-148) + (S13-6); (I-148) + (S13-7); (I-148) + (S13-8); (I-148) + (S13-9); (I-148) + (S14-1)
(I-149) + (S1-1); (I-149) + (S1-2); (I-149) + (S1-3); (I-149) + (S1-4); (I-149) + (S1-5); (I-149) + (S1-6); (I-149) + (S1-7); (I-149) + (S1-8); (I-149) + (S1-9); (I-149) + (S1-10); (I-149) + (S1-11); (I-149) + (S1-12); (I-149) + (S1-13); (I-149) + (S2-1); (I-149) + (S2-2); (I-149) + (S2-3); (I-149) + (S2-4); (I-149) + (S2-5); (I-149) + (S2-6); (I-149) + (S2-7); (I-149) + (S2-8); (I-149) + (S2-9); (I-149) + (S2-10); (I-149) + (S3-1); (I-149) + (S3-2); (I-149) + (S3-3); (I-149) + (S3-4); (I-149) + (S3-5); (I-149) + (S3-6); (I-149) + (S3-7); (I-149) + (S3-8); (I-149) + (S3-9); (I-149) + (S3-10); (I-149) + (S3-11); (I-149) + (S4-1); (I-149) + (S4-2); (I-149) + (S4-3); (I-149) + (S4-4); (I-149) + (S4-5); (I-149) + (S7-1); (I-149) + (S11-1); (I-149) + (S11-2); (I-149) + (S11-3); (I-149) + (S12-1); (I-149) + (S13-1); (I-149) + (S13-2); (I-149) + (S13-3); (I-149) + (S13-4): (I-149) + (S13-5); (I-149) + (S13-6); (I-149) + (S13-7); (I-149) + (S13-8); (I-149) + (S13-9); (I-149) + (S14-1)
(I-150) + (S1-1); (I-150) + (S1-2); (I-150) + (S1-3); (I-150) + (S1-4); (I-150) + (S1-5); (I-150) + (S1-6); (I-150) + (S1-7); (I-150) + (S1-8); (I-150) + (S1-9); (I-150) + (S1-10); (I-150) + (S1-11); (I-150) + (S1-12); (I-150) + (S1-13); (I-150) + (S2-1); (I-150) + (S2-2); (I-150) + (S2-3); (I-150) + (S2-4); (I-150) + (S2-5); (I-150) + (S2-6); (I-150) + (S2-7); (I-150) + (S2-8); (I-150) + (S2-9); (I-150) + (S2-10); (I-150) + (S3-1); (I-150) + (S3-2); (I-150) + (S3-3); (I-150) + (S3-4); (I-150) + (S3-5); (I-150) + (S3-6); (I-150) + (S3-7); (I-150) + (S3-8); (I-150) + (S3-9); (I-150) + (S3-10); (I-150) + (S3-11); (I-150) + (S4-1); (I-150) + (S4-2); (I-150) + (S4-3); (I-150) + (S4-4); (I-150) + (S4-5); (I-150) + (S7-1); (I-150) + (S11-1); (I-150) + (S11-2); (I-150) + (S11-3); (I-150) + (S12-1); (I-150) + (S13-1); (I-150) + (S13-2); (I-150) + (S13-3); (I-150) + (S13-4): (I-150) + (S13-5); (I-150) + (S13-6); (I-150) + (S13-7); (I-150) + (S13-8); (I-150) + (S13-9); (I-150) + (S14-1)
(I-151) + (S1-1); (I-151) + (S1-2); (I-151) + (S1-3); (I-151) + (S1-4); (I-151) + (S1-5); (I-151) + (S1-6); (I-151) + (S1-7); (I-151) + (S1-8); (I-151) + (S1-9); (I-151) + (S1-10); (I-151) + (S1-11); (I-151) + (S1-12); (I-151) + (S1-13); (I-151) + (S2-1); (I-151) + (S2-2); (I-151) + (S2-3); (I-151) + (S2-4); (I-151) + (S2-5); (I-151) + (S2-6); (I-151) + (S2-7); (I-151) + (S2-8); (I-151) + (S2-9); (I-151) + (S2-10); (I-151) + (S3-1); (I-151) + (S3-2); (I-151) + (S3-3); (I-151) + (S3-4); (I-151) + (S3-5); (I-151) + (S3-6); (I-151) + (S3-7); (I-151) + (S3-8); (I-151) + (S3-9); (I-151) + (S3-10); (I-151) + (S3-11); (I-151) + (S4-1); (I-151) + (S4-2); (I-151) + (S4-3); (I-151) + (S4-4); (I-151) + (S4-5); (I-151) + (S7-1); (I-151) + (S11-1); (I-151) + (S11-2); (I-151) + (S11-3); (I-151) + (S12-1); (I-151) + (S13-1); (I-151) + (S13-2); (I-151) + (S13-3); (I-151) + (S13-4): (I-151) + (S13-5); (I-151) + (S13-6); (I-151) + (S13-7); (I-151) + (S13-8); (I-151) + (S13-9); (I-151) + (S14-1)
(I-152) + (S1-1); (I-152) + (S1-2); (I-152) + (S1-3); (I-152) + (S1-4); (I-152) + (S1-5); (I-152) + (S1-6); (I-152) + (S1-7); (I-152) + (S1-8); (I-152) + (S1-9); (I-152) + (S1-10); (I-152) + (S1-11); (I-152) + (S1-12); (I-152) + (S1-13); (I-152) + (S2-1); (I-152) + (S2-2); (I-152) + (S2-3); (I-152) + (S2-4); (I-152) + (S2-5); (I-152) + (S2-6); (I-152) + (S2-7); (I-152) + (S2-8); (I-152) + (S2-9); (I-152) + (S2-10); (I-152) + (S3-1); (I-152) + (S3-2); (I-152) + (S3-3); (I-152) + (S3-4); (I-152) + (S3-5); (I-152) + (S3-6); (I-152) + (S3-7); (I-152) + (S3-8); (I-152) + (S3-9); (I-152) + (S3-10); (I-152) + (S3-11); (I-152) + (S4-1); (I-152) + (S4-2); (I-152) + (S4-3); (I-152) + (S4-4); (I-152) + (S4-5); (I-152) + (S7-1); (I-152) + (S11-1); (I-152) + (S11-2); (I-152) + (S11-3); (I-152) + (S12-1); (I-152) + (S13-1); (I-152) + (S13-2); (I-152) + (S13-3); (I-152) + (S13-4): (I-152) + (S13-5); (I-152) + (S13-6); (I-152) + (S13-7); (I-152) + (S13-8); (I-152) + (S13-9); (I-152) + (S14-1)
(I-153) + (S1-1); (I-153) + (S1-2); (I-153) + (S1-3); (I-153) + (S1-4); (I-153) + (S1-5); (I-153) + (S1-6); (I-153) + (S1-7); (I-153) + (S1-8); (I-153) + (S1-9); (I-153) + (S1-10); (I-153) + (S1-11); (I-153) + (S1-12); (I-153) + (S1-13); (I-153) + (S2-1); (I-153) + (S2-2); (I-153) + (S2-3); (I-153) + (S2-4); (I-153) + (S2-5); (I-153) + (S2-6); (I-153) + (S2-7); (I-153) + (S2-8); (I-153) + (S2-9); (I-153) + (S2-10); (I-153) + (S3-1); (I-153) + (S3-2); (I-153) + (S3-3); (I-153) + (S3-4); (I-153) + (S3-5); (I-153) + (S3-6); (I-153) + (S3-7); (I-153) + (S3-8); (I-153) + (S3-9); (I-153) + (S3-10); (I-153) + (S3-11); (I-153) + (S4-1); (I-153) + (S4-2); (I-153) + (S4-3); (I-153) + (S4-4); (I-153) + (S4-5); (I-153) + (S7-1); (I-153) + (S11-1); (I-153) + (S11-2); (I-153) + (S11-3); (I-153) + (S12-1); (I-153) + (S13-1); (I-153) + (S13-2); (I-153) + (S13-3); (I-153) + (S13-4): (I-153) + (S13-5); (I-153) + (S13-6); (I-153) + (S13-7); (I-153) + (S13-8); (I-153) + (S13-9); (I-153) + (S14-1)
(I-154) + (S1-1); (I-154) + (S1-2); (I-154) + (S1-3); (I-154) + (S1-4); (I-154) + (S1-5); (I-154) + (S1-6); (I-154) + (S1-7); (I-154) + (S1-8); (I-154) + (S1-9); (I-154) + (S1-10); (I-154) + (S1-11); (I-154) + (S1-12); (I-154) + (S1-13); (i-154) + (S2-1); (I-154) + (S2-2); (I-154) + (S2-3); (I-154) + (S2-4); (I-154) + (S2-5); (I-154) + (S2-6); (I-154) + (S2-7); (I-154) + (S2-8); (I-154) + (S2-9); (I-154) + (S2-10); (I-154) + (S3-1); (I-154) + (S3-2); (I-154) + (S3-3); (I-154) + (S3-4); (I-154) + (S3-5); (I-154) + (S3-6); (I-154) + (S3-7); (I-154) + (S3-8); (I-154) + (S3-9); (I-154) + (S3-10); (I-154) + (S3-11); (I-154) + (S4-1); (I-154) + (S4-2); (I-154) + (S4-3); (I-154) + (S4-4); (I-154) + (S4-5); (I-154) + (S7-1); (I-154) + (S11-1); (I-154) + (S11-2); (I-154) + (S11-3); (I-154) + (S12-1); (I-154) + (S13-1); (I-154) + (S13-2); (I-154) + (S13-3); (I-154) + (S13-4): (I-154) + (S13-5); (I-154) + (S13-6); (I-154) + (S13-7); (I-154) + (S13-8); (I-154) + (S13-9); (I-154) + (S14-1)
(I-155) + (S1-1); (I-155) + (S1-2); (I-155) + (S1-3); (I-155) + (S1-4); (I-155) + (S1-5); (I-155) + (S1-6); (I-155) + (S1-7); (I-155) + (S1-8); (I-155) + (S1-9); (I-155) + (S1-10); (I-155) + (S1-11); (I-155) + (S1-12); (I-155) + (S1-13); (I-155) + (S2-1); (I-155) + (S2-2); (I-155) + (S2-3); (I-155) + (S2-4); (I-155) + (S2-5); (I-155) + (S2-6); (I-155) + (S2-7); (I-155) + (S2-8); (I-155) + (S2-9); (I-155) + (S2-10); (I-155) + (S3-1); (I-155) + (S3-2); (I-155) + (S3-3); (I-155) + (S3-4); (I-155) + (S3-5); (I-155) + (S3-6); (I-155) + (S3-7); (I-155) + (S3-8); (I-155) + (S3-9); (I-155) + (S3-10); (I-155) + (S3-11); (I-155) + (S4-1); (I-155) + (S4-2); (I-155) + (S4-3); (I-155) + (S4-4); (I-155) + (S4-5); (I-155) + (S7-1); (I-155) + (S11-1); (I-155) + (S11-2); (I-155) + (S11-3); (I-155) + (S12-1); (I-155) + (S13-1); (I-155) + (S13-2); (I-155) + (S13-3); (I-155) + (S13-4): (I-155) + (S13-5); (I-155) + (S13-6); (I-155) + (S13-7); (I-155) + (S13-8); (I-155) + (S13-9); (I-155) + (S14-1)
(I-156) + (S1-1); (I-156) + (S1-2); (I-156) + (S1-3); (I-156) + (S1-4); (I-156) + (S1-5); (I-156) + (S1-6); (I-156) + (S1-7); (I-156) + (S1-8); (I-156) + (S1-9); (I-156) + (S1-10); (I-156) + (S1-11); (I-156) + (S1-12); (I-156) + (S1-13); (I-156) + (S2-1); (I-156) + (S2-2); (I-156) + (S2-3); (I-156) + (S2-4); (I-156) + (S2-5); (I-156) + (S2-6); (I-156) + (S2-7); (I-156) + (S2-8); (I-156) + (S2-9); (I-156) + (S2-10); (I-156) + (S3-1); (I-156) + (S3-2); (I-156) + (S3-3); (I-156) + (S3-4); (I-156) + (S3-5); (I-156) + (S3-6); (I-156) + (S3-7); (I-156) + (S3-8); (I-156) + (S3-9); (I-156) + (S3-10); (I-156) + (S3-11); (I-156) + (S4-1); (I-156) + (S4-2); (I-156) + (S4-3); (I-156) + (S4-4); (I-156) + (S4-5); (I-156) + (S7-1); (I-156) + (S11-1); (I-156) + (S11-2); (I-156) + (S11-3); (I-156) + (S12-1); (I-156) + (S13-1); (I-156) + (S13-2); (I-156) + (S13-3); (I-156) + (S13-4): (I-156) + (S13-5); (I-156) + (S13-6); (I-156) + (S13-7); (I-156) + (S13-8); (I-156) + (S13-9); (I-156) + (S14-1)
(I-157) + (S1-1); (I-157) + (S1-2); (I-157) + (S1-3); (I-157) + (S1-4); (I-157) + (S1-5); (I-157) + (S1-6); (I-157) + (S1-7); (I-157) + (S1-8); (I-157) + (S1-9); (I-157) + (S1-10); (I-157) + (S1-11); (I-157) + (S1-12); (I-157) + (S1-13); (I-157) + (S2-1); (I-157) + (S2-2); (I-157) + (S2-3); (I-157) + (S2-4); (I-157) + (S2-5); (I-157) + (S2-6); (I-157) + (S2-7); (I-157) + (S2-8); (I-157) + (S2-9); (I-157) + (S2-10); (I-157) + (S3-1); (I-157) + (S3-2); (I-157) + (S3-3); (I-157) + (S3-4); (I-157) + (S3-5); (I-157) + (S3-6); (I-157) + (S3-7); (I-157) + (S3-8); (I-157) + (S3-9); (I-157) + (S3-10); (I-157) + (S3-11); (I-157) + (S4-1); (I-157) + (S4-2); (I-157) + (S4-3); (I-157) + (S4-4); (I-157) + (S4-5); (I-157) + (S7-1); (I-157) + (S11-1); (I-157) + (S11-2); (I-157) + (S11-3); (I-157) + (S12-1); (I-157) + (S13-1); (I-157) + (S13-2); (I-157) + (S13-3); (I-157) + (S13-4): (I-157) + (S13-5); (I-157) + (S13-6); (I-157) + (S13-7); (I-157) + (S13-8); (I-157) + (S13-9); (I-157) + (S14-1)
(I-158) + (S1-1); (I-158) + (S1-2); (I-158) + (S1-3); (I-158) + (S1-4); (I-158) + (S1-5); (I-158) + (S1-6); (I-158) + (S1-7); (I-158) + (S1-8); (I-158) + (S1-9); (I-158) + (S1-10); (I-158) + (S1-11); (I-158) + (S1-12); (I-158) + (S1-13); (I-158) + (S2-1); (I-158) + (S2-2); (I-158) + (S2-3); (I-158) + (S2-4); (I-158) + (S2-5); (I-158) + (S2-6); (I-158) + (S2-7); (I-158) + (S2-8); (I-158) + (S2-9); (I-158) + (S2-10); (I-158) + (S3-1); (I-158) + (S3-2); (I-158) + (S3-3); (I-158) + (S3-4); (I-158) + (S3-5); (I-158) + (S3-6); (I-158) + (S3-7); (I-158) + (S3-8); (I-158) + (S3-9); (I-158) + (S3-10); (I-158) + (S3-11); (I-158) + (S4-1); (I-158) + (S4-2); (I-158) + (S4-3); (I-158) + (S4-4); (I-158) + (S4-5); (I-158) + (S7-1); (I-158) + (S11-1); (I-158) + (S11-2); (I-158) + (S11-3); (I-158) + (S12-1); (I-158) + (S13-1); (I-158) + (S13-2); (I-158) + (S13-3); (I-158) + (S13-4): (I-158) + (S13-5); (I-158) + (S13-6); (I-158) + (S13-7); (I-158) + (S13-8); (I-158) + (S13-9); (I-158) + (S14-1)
(I-159) + (S1-1); (I-159) + (S1-2); (I-159) + (S1-3); (I-159) + (S1-4); (I-159) + (S1-5); (I-159) + (S1-6); (I-159) + (S1-7); (I-159) + (S1-8); (I-159) + (S1-9); (I-159) + (S1-10); (I-159) + (S1-11); (I-159) + (S1-12); (I-159) + (S1-13); (I-159) + (S2-1); (I-159) + (S2-2); (I-159) + (S2-3); (I-159) + (S2-4); (I-159) + (S2-5); (I-159) + (S2-6); (I-159) + (S2-7); (I-159) + (S2-8); (I-159) + (S2-9); (I-159) + (S2-10); (I-159) + (S3-1); (I-159) + (S3-2); (I-159) + (S3-3); (I-159) + (S3-4); (I-159) + (S3-5); (I-159) + (S3-6); (I-159) + (S3-7); (I-159) + (S3-8); (I-159) + (S3-9); (I-159) + (S3-10); (I-159) + (S3-11); (I-159) + (S4-1); (I-159) + (S4-2); (I-159) + (S4-3); (I-159) + (S4-4); (I-159) + (S4-5); (I-159) + (S7-1); (I-159) + (S11-1); (I-159) + (S11-2); (I-159) + (S11-3); (I-159) + (S12-1); (I-159) + (S13-1); (I-159) + (S13-2); (I-159) + (S13-3); (I-159) + (S13-4): (I-159) + (S13-5); (I-159) + (S13-6); (I-159) + (S13-7); (I-159) + (S13-8); (I-159) + (S13-9); (I-159) + (S14-1)
(I-160) + (S1-1); (I-160) + (S1-2); (I-160) + (S1-3); (I-160) + (S1-4); (I-160) + (S1-5); (I-160) + (S1-6); (I-160) + (S1-7); (I-160) + (S1-8); (I-160) + (S1-9); (I-160) + (S1-10); (I-160) + (S1-11); (I-160) + (S1-12); (I-160) + (S1-13); (I-160) + (S2-1); (I-160) + (S2-2); (I-160) + (S2-3); (I-160) + (S2-4); (I-160) + (S2-5); (I-160) + (S2-6); (I-160) + (S2-7); (I-160) + (S2-8); (I-160) + (S2-9); (I-160) + (S2-10); (I-160) + (S3-1); (I-160) + (S3-2); (I-160) + (S3-3); (I-160) + (S3-4); (I-160) + (S3-5); (I-160) + (S3-6); (I-160) + (S3-7); (I-160) + (S3-8); (I-160) + (S3-9); (I-160) + (S3-10); (I-160) + (S3-11); (I-160) + (S4-1); (I-160) + (S4-2); (I-160) + (S4-3); (I-160) + (S4-4); (I-160) + (S4-5); (I-160) + (S7-1); (I-160) + (S11-1); (I-160) + (S11-2); (I-160) + (S11-3); (I-160) + (S12-1); (I-160) + (S13-1); (I-160) + (S13-2); (I-160) + (S13-3); (I-160) + (S13-4): (I-160) + (S13-5); (I-160) + (S13-6); (I-160) + (S13-7); (I-160) + (S13-8); (I-160) + (S13-9); (I-160) + (S14-1)
(I-161) + (S1-1); (I-161) + (S1-2); (I-161) + (S1-3); (I-161) + (S1-4); (I-161) + (S1-5); (I-161) + (S1-6); (I-161) + (S1-7); (I-161) + (S1-8); (I-161) + (S1-9); (I-161) + (S1-10); (I-161) + (S1-11); (I-161) + (S1-12); (I-161) + (S1-13); (I-161) + (S2-1); (I-161) + (S2-2); (I-161) + (S2-3); (I-161) + (S2-4); (I-161) + (S2-5); (I-161) + (S2-6); (I-161) + (S2-7); (I-161) + (S2-8); (I-161) + (S2-9); (I-161) + (S2-10); (I-161) + (S3-1); (I-161) + (S3-2); (I-161) + (S3-3); (I-161) + (S3-4); (I-161) + (S3-5); (I-161) + (S3-6); (I-161) + (S3-7); (I-161) + (S3-8); (I-161) + (S3-9); (I-161) + (S3-10); (I-161) + (S3-11); (I-161) + (S4-1); (I-161) + (S4-2); (I-161) + (S4-3); (I-161) + (S4-4); (I-161) + (S4-5); (I-161) + (S7-1); (I-161) + (S11-1); (I-161) + (S11-2); (I-161) + (S11-3); (I-161) + (S12-1); (I-161) + (S13-1); (I-161) + (S13-2); (I-161) + (S13-3); (I-161) + (S13-4): (t-161) + (S13-5); (I-161) + (S13-6); (I-161) + (S13-7); (I-161) + (S13-8); (I-161) + (S13-9); (I-161) + (S14-1)
(I-162) + (S1-1); (I-162) + (S1-2); (I-162) + (S1-3); (I-162) + (S1-4); (I-162) + (S1-5); (I-162) + (S1-6); (I-162) + (S1-7); (I-162) + (S1-8); (I-162) + (S1-9); (I-162) + (S1-10); (I-162) + (S1-11); (I-162) + (S1-12); (I-162) + (S1-13); (I-162) + (S2-1); (I-162) + (S2-2); (I-162) + (S2-3); (I-162) + (S2-4); (I-162) + (S2-5); (I-162) + (S2-6); (I-162) + (S2-7); (I-162) + (S2-8); (I-162) + (S2-9); (I-162) + (S2-10); (I-162) + (S3-1); (I-162) + (S3-2); (I-162) + (S3-3); (I-162) + (S3-4); (I-162) + (S3-5); (I-162) + (S3-6); (I-162) + (S3-7); (I-162) + (S3-8); (I-162) + (S3-9); (I-162) + (S3-10); (I-162) + (S3-11); (I-162) + (S4-1); (I-162) + (S4-2); (I-162) + (S4-3); (I-162) + (S4-4); (I-162) + (S4-5); (I-162) + (S7-1); (I-162) + (S11-1); (I-162) + (S11-2); (I-162) + (S11-3); (I-162) + (S12-1); (I-162) + (S13-1); (I-162) + (S13-2); (I-162) + (S13-3); (I-162) + (S13-4): (I-162) + (S13-5); (I-162) + (S13-6); (I-162) + (S13-7); (I-162) + (S13-8); (I-162) + (S13-9); (I-162) + (S14-1)
(I-163) + (S1-1); (I-163) + (S1-2); (I-163) + (S1-3); (I-163) + (S1-4); (I-163) + (S1-5); (I-163) + (S1-6); (I-163) + (S1-7); (I-163) + (S1-8); (I-163) + (S1-9); (I-163) + (S1-10); (I-163) + (S1-11); (I-163) + (S1-12); (I-163) + (S1-13); (I-163) + (S2-1); (I-163) + (S2-2); (I-163) + (S2-3); (I-163) + (S2-4); (I-163) + (S2-5); (I-163) + (S2-6); (I-163) + (S2-7); (I-163) + (S2-8); (I-163) + (S2-9); (I-163) + (S2-10); (I-163) + (S3-1); (I-163) + (S3-2); (I-163) + (S3-3); (I-163) + (S3-4); (I-163) + (S3-5); (I-163) + (S3-6); (I-163) + (S3-7); (I-163) + (S3-8); (I-163) + (S3-9); (I-163) + (S3-10); (I-163) + (S3-11); (I-163) + (S4-1); (I-163) + (S4-2); (I-163) + (S4-3); (I-163) + (S4-4); (I-163) + (S4-5); (I-163) + (S7-1); (I-163) + (S11-1); (I-163) + (S11-2); (I-163) + (S11-3); (I-163) + (S12-1); (I-163) + (S13-1); (I-163) + (S13-2); (I-163) + (S13-3); (I-163) + (S13-4): (I-163) + (S13-5); (I-163) + (S13-6); (I-163) + (S13-7); (I-163) + (S13-8); (I-163) + (S13-9); (I-163) + (S14-1)
(I-164) + (S1-1); (I-164) + (S1-2); (I-164) + (S1-3); (I-164) + (S1-4); (I-164) + (S1-5); (I-164) + (S1-6); (I-164) + (S1-7); (I-164) + (S1-8); (I-164) + (S1-9); (I-164) + (S1-10); (I-164) + (S1-11); (I-164) + (S1-12); (I-164) + (S1-13); (I-164) + (S2-1); (I-164) + (S2-2); (I-164) + (S2-3); (I-164) + (S2-4); (I-164) + (S2-5); (I-164) + (S2-6); (I-164) + (S2-7); (I-164) + (S2-8); (I-164) + (S2-9); (I-164) + (S2-10); (I-164) + (S3-1); (I-164) + (S3-2); (I-164) + (S3-3); (I-164) + (S3-4); (I-164) + (S3-5); (I-164) + (S3-6); (I-164) + (S3-7); (I-164) + (S3-8); (I-164) + (S3-9); (I-164) + (S3-10); (I-164) + (S3-11); (I-164) + (S4-1); (I-164) + (S4-2); (I-164) + (S4-3); (I-164) + (S4-4); (I-164) + (S4-5); (I-164) + (S7-1); (I-164) + (S11-1); (I-164) + (S11-2); (I-164) + (S11-3); (I-164) + (S12-1); (I-164) + (S13-1); (I-164) + (S13-2); (I-164) + (S13-3); (I-164) + (S13-4): (I-164) + (S13-5); (I-164) + (S13-6); (I-164) + (S13-7); (I-164) + (S13-8); (I-164) + (S13-9); (I-164) + (S14-1)
(I-165) + (S1-1); (I-165) + (S1-2); (I-165) + (S1-3); (I-165) + (S1-4); (I-165) + (S1-5); (I-165) + (S1-6); (I-165) + (S1-7); (I-165) + (S1-8); (I-165) + (S1-9); (I-165) + (S1-10); (I-165) + (S1-11); (I-165) + (S1-12); (I-165) + (S1-13); (I-165) + (S2-1); (I-165) + (S2-2); (I-165) + (S2-3); (I-165) + (S2-4); (I-165) + (S2-5); (I-165) + (S2-6); (I-165) + (S2-7); (I-165) + (S2-8); (I-165) + (S2-9); (I-165) + (S2-10); (I-165) + (S3-1); (I-165) + (S3-2); (I-165) + (S3-3); (I-165) + (S3-4); (I-165) + (S3-5); (I-165) + (S3-6); (I-165) + (S3-7); (I-165) + (S3-8); (I-165) + (S3-9); (I-165) + (S3-10); (I-165) + (S3-11); (I-165) + (S4-1); (I-165) + (S4-2); (I-165) + (S4-3); (I-165) + (S4-4); (I-165) + (S4-5); (I-165) + (S7-1); (I-165) + (S11-1); (I-165) + (S11-2); (I-165) + (S11-3); (I-165) + (S12-1); (I-165) + (S13-1); (I-165) + (S13-2); (I-165) + (S13-3); (I-165) + (S13-4): (I-165) + (S13-5); (I-165) + (S13-6); (I-165) + (S13-7); (I-165) + (S13-8); (I-165) + (S13-9); (I-165) + (S14-1)
(I-166) + (S1-1); (I-166) + (S1-2); (I-166) + (S1-3); (I-166) + (S1-4); (I-166) + (S1-5); (I-166) + (S1-6); (I-166) + (S1-7); (I-166) + (S1-8); (I-166) + (S1-9); (I-166) + (S1-10); (I-166) + (S1-11); (I-166) + (S1-12); (I-166) + (S1-13); (I-166) + (S2-1); (I-166) + (S2-2); (I-166) + (S2-3); (I-166) + (S2-4); (I-166) + (S2-5); (I-166) + (S2-6); (I-166) + (S2-7); (I-166) + (S2-8); (I-166) + (S2-9); (I-166) + (S2-10); (I-166) + (S3-1); (I-166) + (S3-2); (I-166) + (S3-3); (I-166) + (S3-4); (I-166) + (S3-5); (I-166) + (S3-6); (I-166) + (S3-7); (I-166) + (S3-8); (I-166) + (S3-9); (I-166) + (S3-10); (I-166) + (S3-11); (I-166) + (S4-1); (I-166) + (S4-2); (I-166) + (S4-3); (I-166) + (S4-4); (I-166) + (S4-5); (I-166) + (S7-1); (I-166) + (S11-1); (I-166) + (S11-2); (I-166) + (S11-3); (I-166) + (S12-1); (I-166) + (S13-1); (I-166) + (S13-2); (I-166) + (S13-3); (I-166) + (S13-4): (I-166) + (S13-5); (I-166) + (S13-6); (I-166) + (S13-7); (I-166) + (S13-8); (I-166) + (S13-9); (I-166) + (S14-1)
(I-167) + (S1-1); (I-167) + (S1-2); (I-167) + (S1-3); (I-167) + (S1-4); (I-167) + (S1-5); (I-167) + (S1-6); (I-167) + (S1-7); (I-167) + (S1-8); (I-167) + (S1-9); (I-167) + (S1-10); (I-167) + (S1-11); (I-167) + (S1-12); (I-167) + (S1-13); (I-167) + (S2-1); (I-167) + (S2-2); (I-167) + (S2-3); (I-167) + (S2-4); (I-167) + (S2-5); (I-167) + (S2-6); (I-167) + (S2-7); (I-167) + (S2-8); (I-167) + (S2-9); (I-167) + (S2-10); (I-167) + (S3-1); (I-167) + (S3-2); (I-167) + (S3-3); (I-167) + (S3-4); (I-167) + (S3-5); (I-167) + (S3-6); (I-167) + (S3-7); (I-167) + (S3-8); (I-167) + (S3-9); (I-167) + (S3-10); (I-167) + (S3-11); (I-167) + (S4-1); (I-167) + (S4-2); (I-167) + (S4-3); (I-167) + (S4-4); (I-167) + (S4-5); (I-167) + (S7-1); (I-167) + (S11-1); (I-167) + (S11-2); (I-167) + (S11-3); (I-167) + (S12-1); (I-167) + (S13-1); (I-167) + (S13-2); (I-167) + (S13-3); (I-167) + (S13-4): (I-167) + (S13-5); (I-167) + (S13-6); (I-167) + (S13-7); (I-167) + (S13-8); (I-167) + (S13-9); (I-167) + (S14-1)
(I-168) + (S1-1); (I-168) + (S1-2); (I-168) + (S1-3); (I-168) + (S1-4); (I-168) + (S1-5); (I-168) + (S1-6); (I-168) + (S1-7); (I-168) + (S1-8); (I-168) + (S1-9); (I-168) + (S1-10); (I-168) + (S1-11); (I-168) + (S1-12); (I-168) + (S1-13); (I-168) + (S2-1); (I-168) + (S2-2); (I-168) + (S2-3); (I-168) + (S2-4); (I-168) + (S2-5); (I-168) + (S2-6); (I-168) + (S2-7); (I-168) + (S2-8); (I-168) + (S2-9); (I-168) + (S2-10); (I-168) + (S3-1); (I-168) + (S3-2); (I-168) + (S3-3); (I-168) + (S3-4); (I-168) + (S3-5); (I-168) + (S3-6); (I-168) + (S3-7); (I-168) + (S3-8); (I-168) + (S3-9); (I-168) + (S3-10); (I-168) + (S3-11); (I-168) + (S4-1); (I-168) + (S4-2); (I-168) + (S4-3); (I-168) + (S4-4); (I-168) + (S4-5); (I-168) + (S7-1); (I-168) + (S11-1); (I-168) + (S11-2); (I-168) + (S11-3); (I-168) + (S12-1); (I-168) + (S13-1); (I-168) + (S13-2); (I-168) + (S13-3); (I-168) + (S13-4): (I-168) + (S13-5); (I-168) + (S13-6); (I-168) + (S13-7); (I-168) + (S13-8); (I-168) + (S13-9); (I-168) + (S14-1)
(I-169) + (S1-1); (I-169) + (S1-2); (I-169) + (S1-3); (I-169) + (S1-4); (I-169) + (S1-5); (I-169) + (S1-6); (I-169) + (S1-7); (I-169) + (S1-8); (I-169) + (S1-9); (I-169) + (S1-10); (I-169) + (S1-11); (I-169) + (S1-12); (I-169) + (S1-13); (I-169) + (S2-1); (I-169) + (S2-2); (I-169) + (S2-3); (I-169) + (S2-4); (I-169) + (S2-5); (I-169) + (S2-6); (I-169) + (S2-7); (I-169) + (S2-8); (I-169) + (S2-9); (I-169) + (S2-10); (I-169) + (S3-1); (I-169) + (S3-2); (I-169) + (S3-3); (I-169) + (S3-4); (I-169) + (S3-5); (I-169) + (S3-6); (I-169) + (S3-7); (I-169) + (S3-8); (I-169) + (S3-9); (I-169) + (S3-10); (I-169) + (S3-11); (I-169) + (S4-1); (I-169) + (S4-2); (I-169) + (S4-3); (I-169) + (S4-4); (I-169) + (S4-5); (I-169) + (S7-1); (I-169) + (S11-1): (I-169) + (S11-2); (I-169) + (S11-3); (I-169) + (S12-1); (I-169) + (S13-1); (I-169) + (S13-2); (I-169) + (S13-3); (I-169) + (S13-4): (I-169) + (S13-5); (I-169) + (S13-6); (I-169) + (S13-7); (I-169) + (S13-8); (I-169) + (S13-9); (I-169) + (S14-1)
(I-170) + (S1-1); (I-170) + (S1-2); (I-170) + (S1-3); (I-170) + (S1-4); (I-170) + (S1-5); (I-170) + (S1-6); (I-170) + (S1-7); (I-170) + (S1-8); (I-170) + (S1-9); (I-170) + (S1-10); (I-170) + (S1-11); (I-170) + (S1-12); (I-170) + (S1-13); (I-170) + (S2-1); (I-170) + (S2-2); (I-170) + (S2-3); (I-170) + (S2-4); (I-170) + (S2-5); (I-170) + (S2-6); (I-170) + (S2-7); (I-170) + (S2-8); (I-170) + (S2-9); (I-170) + (S2-10); (I-170) + (S3-1); (I-170) + (S3-2); (I-170) + (S3-3); (I-170) + (S3-4); (I-170) + (S3-5); (I-170) + (S3-6); (I-170) + (S3-7); (I-170) + (S3-8); (I-170) + (S3-9); (I-170) + (S3-10); (I-170) + (S3-11); (I-170) + (S4-1); (I-170) + (S4-2); (I-170) + (S4-3); (I-170) + (S4-4); (I-170) + (S4-5); (I-170) + (S7-1); (I-170) + (S11-1); (I-170) + (S11-2); (I-170) + (S11-3); (I-170) + (S12-1); (I-170) + (S13-1); (I-170) + (S13-2); (I-170) + (S13-3); (I-170) + (S13-4): (I-170) + (S13-5); (I-170) + (S13-6); (I-170) + (S13-7); (I-170) + (S13-8); (I-170) + (S13-9); (I-170) + (S14-1)
(I-171) + (S1-1); (I-171) + (S1-2); (I-171) + (S1-3); (I-171) + (S1-4); (I-171) + (S1-5); (I-171) + (S1-6); (I-171) + (S1-7); (I-171) + (S1-8); (I-171) + (S1-9); (I-171) + (S1-10); (I-171) + (S1-11); (I-171) + (S1-12); (I-171) + (S1-13); (I-171) + (S2-1); (I-171) + (S2-2); (I-171) + (S2-3); (I-171) + (S2-4); (I-171) + (S2-5); (I-171) + (S2-6); (I-171) + (S2-7); (I-171) + (S2-8); (I-171) + (S2-9); (I-171) + (S2-10); (I-171) + (S3-1); (I-171) + (S3-2); (I-171) + (S3-3); (I-171) + (S3-4); (I-171) + (S3-5); (I-171) + (S3-6); (I-171) + (S3-7); (I-171) + (S3-8); (I-171) + (S3-9); (I-171) + (S3-10); (I-171) + (S3-11); (I-171) + (S4-1); (I-171) + (S4-2); (I-171) + (S4-3); (I-171) + (S4-4); (I-171) + (S4-5); (I-171) + (S7-1); (I-171) + (S11-1); (I-171) + (S11-2); (I-171) + (S11-3); (I-171) + (S12-1); (I-171) + (S13-1); (I-171) + (S13-2); (I-171) + (S13-3); (I-171) + (S13-4): (I-171) + (S13-5); (I-171) + (S13-6); (I-171) + (S13-7); (I-171) + (S13-8); (I-171) + (S13-9); (I-171) + (S14-1)
(I-172) + (S1-1); (I-172) + (S1-2); (I-172) + (S1-3); (I-172) + (S1-4); (I-172) + (S1-5); (I-172) + (S1-6); (I-172) + (S1-7); (I-172) + (S1-8); (I-172) + (S1-9); (I-172) + (S1-10); (I-172) + (S1-11); (I-172) + (S1-12); (I-172) + (S1-13); (I-172) + (S2-1); (I-172) + (S2-2); (I-172) + (S2-3); (I-172) + (S2-4); (I-172) + (S2-5); (I-172) + (S2-6); (I-172) + (S2-7); (I-172) + (S2-8); (I-172) + (S2-9); (I-172) + (S2-10); (I-172) + (S3-1); (I-172) + (S3-2); (I-172) + (S3-3); (I-172) + (S3-4); (I-172) + (S3-5); (I-172) + (S3-6); (I-172) + (S3-7); (I-172) + (S3-8); (I-172) + (S3-9); (I-172) + (S3-10); (I-172) + (S3-11); (I-172) + (S4-1); (I-172) + (S4-2); (I-172) + (S4-3); (I-172) + (S4-4); (I-172) + (S4-5); (I-172) + (S7-1); (I-172) + (S11-1); (I-172) + (S11-2); (I-172) + (S11-3); (I-172) + (S12-1); (I-172) + (S13-1); (I-172) + (S13-2); (I-172) + (S13-3); (I-172) + (S13-4): (I-172) + (S13-5); (I-172) + (S13-6); (I-172) + (S13-7); (I-172) + (S13-8); (I-172) + (S13-9); (I-172) + (S14-1)
(I-173) + (S1-1); (I-173) + (S1-2); (I-173) + (S1-3); (I-173) + (S1-4); (I-173) + (S1-5); (I-173) + (S1-6); (I-173) + (S1-7); (I-173) + (S1-8); (I-173) + (S1-9); (I-173) + (S1-10); (I-173) + (S1-11); (I-173) + (S1-12); (I-173) + (S1-13); (I-173) + (S2-1); (I-173) + (S2-2); (I-173) + (S2-3); (I-173) + (S2-4); (I-173) + (S2-5); (I-173) + (S2-6); (I-173) + (S2-7); (I-173) + (S2-8); (I-173) + (S2-9); (I-173) + (S2-10); (I-173) + (S3-1); (I-173) + (S3-2); (I-173) + (S3-3); (I-173) + (S3-4); (I-173) + (S3-5); (I-173) + (S3-6); (I-173) + (S3-7); (I-173) + (S3-8); (I-173) + (S3-9); (I-173) + (S3-10); (I-173) + (S3-11); (I-173) + (S4-1); (I-173) + (S4-2); (I-173) + (S4-3); (I-173) + (S4-4); (I-173) + (S4-5); (I-173) + (S7-1); (I-173) + (S11-1); (I-173) + (S11-2); (I-173) + (S11-3); (I-173) + (S12-1); (I-173) + (S13-1); (I-173) + (S13-2); (I-173) + (S13-3); (I-173) + (S13-4): (I-173) + (S13-5); (I-173) + (S13-6); (I-173) + (S13-7); (I-173) + (S13-8); (I-173) + (S13-9); (I-173) + (S14-1)
(I-174) + (S1-1); (I-174) + (S1-2); (I-174) + (S1-3); (I-174) + (S1-4); (I-174) + (S1-5); (I-174) + (S1-6); (I-174) + (S1-7); (I-174) + (S1-8); (I-174) + (S1-9); (I-174) + (S1-10); (I-174) + (S1-11); (I-174) + (S1-12); (I-174) + (S1-13); (I-174) + (S2-1); (I-174) + (S2-2); (I-174) + (S2-3); (I-174) + (S2-4); (I-174) + (S2-5); (I-174) + (S2-6); (I-174) + (S2-7); (I-174) + (S2-8); (I-174) + (S2-9); (I-174) + (S2-10); (I-174) + (S3-1); (I-174) + (S3-2); (I-174) + (S3-3); (I-174) + (S3-4); (I-174) + (S3-5); (I-174) + (S3-6); (I-174) + (S3-7); (I-174) + (S3-8); (I-174) + (S3-9); (I-174) + (S3-10); (I-174) + (S3-11); (I-174) + (S4-1); (I-174) + (S4-2); (I-174) + (S4-3); (I-174) + (S4-4); (I-174) + (S4-5); (I-174) + (S7-1); (I-174) + (S11-1); (I-174) + (S11-2); (I-174) + (S11-3); (I-174) + (S12-1); (I-174) + (S13-1); (I-174) + (S13-2); (I-174) + (S13-3); (I-174) + (S13-4): (I-174) + (S13-5); (I-174) + (S13-6); (I-174) + (S13-7); (I-174) + (S13-8); (I-174) + (S13-9); (I-174) + (S14-1)
(I-175) + (S1-1); (I-175) + (S1-2); (I-175) + (S1-3); (I-175) + (S1-4); (I-175) + (S1-5); (I-175) + (S1-6); (I-175) + (S1-7); (I-175) + (S1-8); (I-175) + (S1-9); (I-175) + (S1-10); (I-175) + (S1-11); (I-175) + (S1-12); (I-175) + (S1-13); (I-175) + (S2-1); (I-175) + (S2-2); (I-175) + (S2-3); (I-175) + (S2-4); (I-175) + (S2-5); (I-175) + (S2-6); (I-175) + (S2-7); (I-175) + (S2-8); (I-175) + (S2-9); (i-175) + (S2-10); (I-175) + (S3-1); (I-175) + (S3-2); (I-175) + (S3-3); (I-175) + (S3-4); (I-175) + (S3-5); (I-175) + (S3-6); (I-175) + (S3-7); (I-175) + (S3-8); (I-175) + (S3-9); (I-175) + (S3-10); (I-175) + (S3-11); (I-175) + (S4-1); (I-175) + (S4-2); (I-175) + (S4-3); (I-175) + (S4-4); (I-175) + (S4-5); (I-175) + (S7-1); (I-175) + (S11-1); (I-175) + (S11-2); (I-175) + (S11-3); (I-175) + (S12-1); (I-175) + (S13-1); (I-175) + (S13-2); (I-175) + (S13-3); (I-175) + (S13-4): (I-175) + (S13-5); (I-175) + (S13-6); (I-175) + (S13-7); (I-175) + (S13-8); (I-175) + (S13-9); (I-175) + (S14-1)
(I-176) + (S1-1); (I-176) + (S1-2); (I-176) + (S1-3); (I-176) + (S1-4); (I-176) + (S1-5); (I-176) + (S1-6); (I-176) + (S1-7); (I-176) + (S1-8); (I-176) + (S1-9); (I-176) + (S1-10); (I-176) + (S1-11); (I-176) + (S1-12); (I-176) + (S1-13); (I-176) + (S2-1); (I-176) + (S2-2); (I-176) + (S2-3); (I-176) + (S2-4); (I-176) + (S2-5); (I-176) + (S2-6); (I-176) + (S2-7); (I-176) + (S2-8); (I-176) + (S2-9); (I-176) + (S2-10); (I-176) + (S3-1); (I-176) + (S3-2); (I-176) + (S3-3); (I-176) + (S3-4); (I-176) + (S3-5); (I-176) + (S3-6); (I-176) + (S3-7); (I-176) + (S3-8); (I-176) + (S3-9); (I-176) + (S3-10); (I-176) + (S3-11); (I-176) + (S4-1); (I-176) + (S4-2); (I-176) + (S4-3); (I-176) + (S4-4); (I-176) + (S4-5); (I-176) + (S7-1); (I-176) + (S11-1); (I-176) + (S11-2); (I-176) + (S11-3); (I-176) + (S12-1); (I-176) + (S13-1); (I-176) + (S13-2); (I-176) + (S13-3); (I-176) + (S13-4): (I-176) + (S13-5); (I-176) + (S13-6); (I-176) + (S13-7); (I-176) + (S13-8); (I-176) + (S13-9); (I-176) + (S14-1)
(I-177) + (S1-1); (I-177) + (S1-2); (I-177) + (S1-3); (I-177) + (S1-4); (I-177) + (S1-5); (I-177) + (S1-6); (I-177) + (S1-7); (I-177) + (S1-8); (I-177) + (S1-9); (I-177) + (S1-10); (I-177) + (S1-11); (I-177) + (S1-12); (I-177) + (S1-13); (I-177) + (S2-1); (I-177) + (S2-2); (I-177) + (S2-3); (I-177) + (S2-4); (I-177) + (S2-5); (I-177) + (S2-6); (I-177) + (S2-7); (I-177) + (S2-8); (I-177) + (S2-9); (I-177) + (S2-10); (I-177) + (S3-1); (I-177) + (S3-2); (I-177) + (S3-3); (I-177) + (S3-4); (I-177) + (S3-5); (I-177) + (S3-6); (I-177) + (S3-7); (I-177) + (S3-8); (I-177) + (S3-9); (I-177) + (S3-10); (I-177) + (S3-11); (I-177) + (S4-1); (I-177) + (S4-2); (I-177) + (S4-3); (I-177) + (S4-4); (I-177) + (S4-5); (I-177) + (S7-1); (I-177) + (S11-1); (I-177) + (S11-2); (I-177) + (S11-3); (I-177) + (S12-1); (I-177) + (S13-1); (I-177) + (S13-2); (I-177) + (S13-3); (I-177) + (S13-4): (I-177) + (S13-5); (I-177) + (S13-6); (I-177) + (S13-7); (I-177) + (S13-8); (I-177) + (S13-9); (I-177) + (S14-1)
(I-178) + (S1-1); (I-178) + (S1-2); (I-178) + (S1-3); (I-178) + (S1-4); (I-178) + (S1-5); (I-178) + (S1-6); (I-178) + (S1-7); (I-178) + (S1-8); (I-178) + (S1-9); (I-178) + (S1-10); (I-178) + (S1-11); (I-178) + (S1-12); (I-178) + (S1-13); (I-178) + (S2-1); (I-178) + (S2-2); (I-178) + (S2-3); (I-178) + (S2-4); (I-178) + (S2-5); (I-178) + (S2-6); (I-178) + (S2-7); (I-178) + (S2-8); (I-178) + (S2-9); (I-178) + (S2-10); (I-178) + (S3-1); (I-178) + (S3-2); (I-178) + (S3-3); (I-178) + (S3-4); (I-178) + (S3-5); (I-178) + (S3-6); (I-178) + (S3-7); (I-178) + (S3-8); (I-178) + (S3-9); (I-178) + (S3-10); (I-178) + (S3-11); (I-178) + (S4-1); (I-178) + (S4-2); (I-178) + (S4-3); (I-178) + (S4-4); (I-178) + (S4-5); (I-178) + (S7-1); (I-178) + (S11-1); (I-178) + (S11-2); (I-178) + (S11-3); (I-178) + (S12-1); (I-178) + (S13-1); (I-178) + (S13-2); (I-178) + (S13-3); (I-178) + (S13-4): (I-178) + (S13-5); (I-178) + (S13-6); (I-178) + (S13-7); (I-178) + (S13-8); (I-178) + (S13-9); (I-178) + (S14-1)
(I-179) + (S1-1); (I-179) + (S1-2); (I-179) + (S1-3); (I-179) + (S1-4); (I-179) + (S1-5); (I-179) + (S1-6); (I-179) + (S1-7); (I-179) + (S1-8); (I-179) + (S1-9); (I-179) + (S1-10); (I-179) + (S1-11); (I-179) + (S1-12); (I-179) + (S1-13); (I-179) + (S2-1); (I-179) + (S2-2); (I-179) + (S2-3); (I-179) + (S2-4); (I-179) + (S2-5); (I-179) + (S2-6); (I-179) + (S2-7); (I-179) + (S2-8); (I-179) + (S2-9); (I-179) + (S2-10); (I-179) + (S3-1); (I-179) + (S3-2); (I-179) + (S3-3); (I-179) + (S3-4); (I-179) + (S3-5); (I-179) + (S3-6); (I-179) + (S3-7); (I-179) + (S3-8); (I-179) + (S3-9); (I-179) + (S3-10); (I-179) + (S3-11); (I-179) + (S4-1); (I-179) + (S4-2); (I-179) + (S4-3); (I-179) + (S4-4); (I-179) + (S4-5); (I-179) + (S7-1); (I-179) + (S11-1); (I-179) + (S11-2); (I-179) + (S11-3); (I-179) + (S12-1); (I-179) + (S13-1); (I-179) + (S13-2); (I-179) + (S13-3); (I-179) + (S13-4):(I-179) + (S13-5); (I-179) + (S13-6); (I-179) + (S13-7); (I-179) + (S13-8); (I-179) + (S13-9); (I-179) + (S14-1)
(I-180) + (S1-1); (I-180) + (S1-2); (I-180) + (S1-3); (I-180) + (S1-4); (I-180) + (S1-5); (I-180) + (S1-6); (I-180) + (S1-7); (I-180) + (S1-8); (I-180) + (S1-9); (I-180) + (S1-10); (I-180) + (S1-11); (I-180) + (S1-12); (I-180) + (S1-13); (I-180) + (S2-1); (I-180) + (S2-2); (I-180) + (S2-3); (I-180) + (S2-4); (I-180) + (S2-5); (I-180) + (S2-6); (I-180) + (S2-7); (I-180) + (S2-8); (I-180) + (S2-9); (I-180) + (S2-10); (I-180) + (S3-1); (I-180) + (S3-2); (I-180) + (S3-3); (I-180) + (S3-4); (I-180) + (S3-5); (I-180) + (S3-6); (I-180) + (S3-7); (I-180) + (S3-8); (I-180) + (S3-9); (I-180) + (S3-10); (I-180) + (S3-11); (I-180) + (S4-1); (I-180) + (S4-2); (I-180) + (S4-3); (I-180) + (S4-4); (I-180) + (S4-5); (I-180) + (S7-1); (I-180) + (S11-1); (I-180) + (S11-2); (I-180) + (S11-3); (I-180) + (S12-1); (I-180) + (S13-1); (I-180) + (S13-2); (I-180) + (S13-3); (I-180) + (S13-4): (I-180) + (S13-5); (I-180) + (S13-6); (I-180) + (S13-7); (I-180) + (S13-8); (I-180) + (S13-9); (I-180) + (S14-1)
(I-181) + (S1-1); (I-181) + (S1-2); (I-181) + (S1-3); (I-181) + (S1-4); (I-181) + (S1-5); (I-181) + (S1-6); (I-181) + (S1-7); (I-181) + (S1-8); (I-181) + (S1-9); (I-181) + (S1-10); (I-181) + (S1-11); (I-181) + (S1-12); (I-181) + (S1-13); (I-181) + (S2-1); (I-181) + (S2-2); (I-181) + (S2-3); (I-181) + (S2-4); (I-181) + (S2-5); (I-181) + (S2-6); (I-181) + (S2-7); (I-181) + (S2-8); (I-181) + (S2-9); (I-181) + (S2-10); (I-181) + (S3-1); (I-181) + (S3-2); (I-181) + (S3-3); (I-181) + (S3-4); (I-181) + (S3-5); (I-181) + (S3-6); (I-181) + (S3-7); (I-181) + (S3-8); (I-181) + (S3-9); (I-181) + (S3-10); (I-181) + (S3-11); (I-181) + (S4-1); (I-181) + (S4-2); (I-181) + (S4-3); (I-181) + (S4-4); (I-181) + (S4-5); (I-181) + (S7-1); (I-181) + (S11-1); (I-181) + (S11-2); (I-181) + (S11-3); (I-181) + (S12-1); (I-181) + (S13-1); (I-181) + (S13-2); (I-181) + (S13-3); (I-181) + (S13-4): (I-181) + (S13-5); (I-181) + (S13-6); (I-181) + (S13-7); (I-181) + (S13-8); (I-181) + (S13-9); (I-181) + (S14-1)
(I-182) + (S1-1); (I-182) + (S1-2); (I-182) + (S1-3); (I-182) + (S1-4); (I-182) + (S1-5); (I-182) + (S1-6); (I-182) + (S1-7); (I-182) + (S1-8); (I-182) + (S1-9); (I-182) + (S1-10); (I-182) + (S1-11); (I-182) + (S1-12); (I-182) + (S1-13); (I-182) + (S2-1); (I-182) + (S2-2); (I-182) + (S2-3); (I-182) + (S2-4); (I-182) + (S2-5); (I-182) + (S2-6); (I-182) + (S2-7); (I-182) + (S2-8); (I-182) + (S2-9); (I-182) + (S2-10); (I-182) + (S3-1); (I-182) + (S3-2); (I-182) + (S3-3); (I-182) + (S3-4); (I-182) + (S3-5); (I-182) + (S3-6); (I-182) + (S3-7); (I-182) + (S3-8); (I-182) + (S3-9); (I-182) + (S3-10); (I-182) + (S3-11); (I-182) + (S4-1); (I-182) + (S4-2); (I-182) + (S4-3); (I-182) + (S4-4); (I-182) + (S4-5); (I-182) + (S7-1); (I-182) + (S11-1); (I-182) + (S11-2); (I-182) + (S11-3); (I-182) + (S12-1); (I-182) + (S13-1); (I-182) + (S13-2); (I-182) + (S13-3); (I-182) + (S13-4): (I-182) + (S13-5); (I-182) + (S13-6); (I-182) + (S13-7); (I-182) + (S13-8); (I-182) + (S13-9); (I-182) + (S14-1)
(I-183) + (S1-1); (I-183) + (S1-2); (I-183) + (S1-3); (I-183) + (S1-4); (I-183) + (S1-5); (I-183) + (S1-6); (I-183) + (S1-7); (I-183) + (S1-8); (I-183) + (S1-9); (I-183) + (S1-10); (I-183) + (S1-11); (I-183) + (S1-12); (I-183) + (S1-13); (I-183) + (S2-1); (I-183) + (S2-2); (I-183) + (S2-3); (I-183) + (S2-4); (I-183) + (S2-5); (I-183) + (S2-6); (I-183) + (S2-7); (I-183) + (S2-8); (I-183) + (S2-9); (I-183) + (S2-10); (I-183) + (S3-1); (I-183) + (S3-2); (I-183) + (S3-3); (I-183) + (S3-4); (I-183) + (S3-5); (I-183) + (S3-6); (I-183) + (S3-7); (I-183) + (S3-8); (I-183) + (S3-9); (I-183) + (S3-10); (I-183) + (S3-11); (I-183) + (S4-1); (I-183) + (S4-2); (I-183) + (S4-3); (I-183) + (S4-4); (I-183) + (S4-5); (I-183) + (S7-1); (I-183) + (S11-1); (I-183) + (S11-2); (I-183) + (S11-3); (I-183) + (S12-1); (I-183) + (S13-1); (I-183) + (S13-2); (I-183) + (S13-3); (I-183) + (S13-4): (I-183) + (S13-5); (I-183) + (S13-6); (I-183) + (S13-7); (I-183) + (S13-8); (I-183) + (S13-9); (I-183) + (S14-1)
(I-184) + (S1-1); (I-184) + (S1-2); (I-184) + (S1-3); (I-184) + (S1-4); (I-184) + (S1-5); (I-184) + (S1-6); (I-184) + (S1-7); (I-184) + (S1-8); (I-184) + (S1-9); (I-184) + (S1-10); (I-184) + (S1-11); (I-184) + (S1-12); (I-184) + (S1-13); (I-184) + (S2-1); (I-184) + (S2-2); (I-184) + (S2-3); (I-184) + (S2-4); (I-184) + (S2-5); (I-184) + (S2-6); (I-184) + (S2-7); (I-184) + (S2-8); (I-184) + (S2-9); (I-184) + (S2-10); (I-184) + (S3-1); (I-184) + (S3-2); (I-184) + (S3-3); (I-184) + (S3-4); (I-184) + (S3-5); (I-184) + (S3-6); (I-184) + (S3-7); (I-184) + (S3-8); (I-184) + (S3-9); (I-184) + (S3-10); (I-184) + (S3-11); (I-184) + (S4-1); (I-184) + (S4-2); (I-184) + (S4-3); (I-184) + (S4-4); (I-184) + (S4-5); (I-184) + (S7-1); (I-184) + (S11-1); (I-184) + (S11-2); (I-184) + (S11-3); (I-184) + (S12-1); (I-184) + (S13-1); (I-184) + (S13-2); (I-184) + (S13-3); (I-184) + (S13-4): (I-184) + (S13-5); (I-184) + (S13-6); (I-184) + (S13-7); (I-184) + (S13-8); (I-184) + (S13-9); (I-184) + (S14-1)
(I-185) + (S1-1); (I-185) + (S1-2); (I-185) + (S1-3); (I-185) + (S1-4); (I-185) + (S1-5); (I-185) + (S1-6); (I-185) + (S1-7); (I-185) + (S1-8); (I-185) + (S1-9); (I-185) + (S1-10); (I-185) + (S1-11); (I-185) + (S1-12); (I-185) + (S1-13); (I-185) + (S2-1); (I-185) + (S2-2); (I-185) + (S2-3); (I-185) + (S2-4); (I-185) + (S2-5); (I-185) + (S2-6); (I-185) + (S2-7); (I-185) + (S2-8); (I-185) + (S2-9); (I-185) + (S2-10); (I-185) + (S3-1); (I-185) + (S3-2); (I-185) + (S3-3); (I-185) + (S3-4); (I-185) + (S3-5); (I-185) + (S3-6); (I-185) + (S3-7); (I-185) + (S3-8); (I-185) + (S3-9); (I-185) + (S3-10); (I-185) + (S3-11); (I-185) + (S4-1); (I-185) + (S4-2); (I-185) + (S4-3); (I-185) + (S4-4); (I-185) + (S4-5); (I-185) + (S7-1); (I-185) + (S11-1); (I-185) + (S11-2); (I-185) + (S11-3); (I-185) + (S12-1); (I-185) + (S13-1); (I-185) + (S13-2); (I-185) + (S13-3); (I-185) + (S13-4): (I-185) + (S13-5); (I-185) + (S13-6); (I-185) + (S13-7); (I-185) + (S13-8); (I-185) + (S13-9); (I-185) + (S14-1)
(I-186) + (S1-1); (I-186) + (S1-2); (I-186) + (S1-3); (I-186) + (S1-4); (I-186) + (S1-5); (I-186) + (S1-6); (I-186) + (S1-7); (I-186) + (S1-8); (I-186) + (S1-9); (I-186) + (S1-10); (I-186) + (S1-11); (I-186) + (S1-12); (I-186) + (S1-13); (I-186) + (S2-1); (I-186) + (S2-2); (I-186) + (S2-3); (I-186) + (S2-4); (I-186) + (S2-5); (I-186) + (S2-6); (I-186) + (S2-7); (I-186) + (S2-8); (I-186) + (S2-9); (I-186) + (S2-10); (I-186) + (S3-1); (I-186) + (S3-2); (I-186) + (S3-3); (I-186) + (S3-4); (I-186) + (S3-5); (I-186) + (S3-6); (I-186) + (S3-7); (I-186) + (S3-8); (I-186) + (S3-9); (I-186) + (S3-10); (I-186) + (S3-11); (I-186) + (S4-1); (I-186) + (S4-2); (I-186) + (S4-3); (I-186) + (S4-4); (I-186) + (S4-5); (I-186) + (S7-1); (I-186) + (S11-1); (I-186) + (S11-2); (I-186) + (S11-3); (I-186) + (S12-1); (I-186) + (S13-1); (I-186) + (S13-2); (I-186) + (S13-3); (I-186) + (S13-4): (I-186) + (S13-5); (I-186) + (S13-6); (I-186) + (S13-7); (I-186) + (S13-8); (I-186) + (S13-9); (I-186) + (S14-1)
(I-187) + (S1-1); (I-187) + (S1-2); (I-187) + (S1-3); (I-187) + (S1-4); (I-187) + (S1-5); (I-187) + (S1-6); (I-187) + (S1-7); (I-187) + (S1-8); (I-187) + (S1-9); (I-187) + (S1-10); (I-187) + (S1-11); (I-187) + (S1-12); (I-187) + (S1-13); (I-187) + (S2-1); (I-187) + (S2-2); (I-187) + (S2-3); (I-187) + (S2-4); (I-187) + (S2-5); (I-187) + (S2-6); (I-187) + (S2-7); (I-187) + (S2-8); (I-187) + (S2-9); (I-187) + (S2-10); (I-187) + (S3-1); (I-187) + (S3-2); (I-187) + (S3-3); (I-187) + (S3-4); (I-187) + (S3-5); (I-187) + (S3-6); (I-187) + (S3-7); (I-187) + (S3-8); (I-187) + (S3-9); (I-187) + (S3-10); (I-187) + (S3-11); (I-187) + (S4-1); (I-187) + (S4-2); (I-187) + (S4-3); (I-187) + (S4-4); (I-187) + (S4-5); (I-187) + (S7-1); (I-187) + (S11-1); (I-187) + (S11-2); (I-187) + (S11-3); (I-187) + (S12-1); (I-187) + (S13-1); (I-187) + (S13-2); (I-187) + (S13-3); (I-187) + (S13-4): (I-187) + (S13-5); (I-187) + (S13-6); (I-187) + (S13-7); (I-187) + (S13-8); (I-187) + (S13-9); (I-187) + (S14-1)
(I-188) + (S1-1); (I-188) + (S1-2); (I-188) + (S1-3); (I-188) + (S1-4); (I-188) + (S1-5); (I-188) + (S1-6); (I-188) + (S1-7); (I-188) + (S1-8); (I-188) + (S1-9); (I-188) + (S1-10); (I-188) + (S1-11); (I-188) + (S1-12); (I-188) + (S1-13); (I-188) + (S2-1); (I-188) + (S2-2); (I-188) + (S2-3); (I-188) + (S2-4); (I-188) + (S2-5); (I-188) + (S2-6); (I-188) + (S2-7); (I-188) + (S2-8); (I-188) + (S2-9); (I-188) + (S2-10); (I-188) + (S3-1); (I-188) + (S3-2); (I-188) + (S3-3); (I-188) + (S3-4); (I-188) + (S3-5); (I-188) + (S3-6); (I-188) + (S3-7); (I-188) + (S3-8); (I-188) + (S3-9); (I-188) + (S3-10); (I-188) + (S3-11); (I-188) + (S4-1); (I-188) + (S4-2); (I-188) + (S4-3); (I-188) + (S4-4); (I-188) + (S4-5); (I-188) + (S7-1); (I-188) + (S11-1); (I-188) + (S11-2); (I-188) + (S11-3); (I-188) + (S12-1); (I-188) + (S13-1); (I-188) + (S13-2); (I-188) + (S13-3); (I-188) + (S13-4): (I-188) + (S13-5); (I-188) + (S13-6); (I-188) + (S13-7); (I-188) + (S13-8); (I-188) + (S13-9); (I-188) + (S14-1)
(I-189) + (S1-1); (I-189) + (S1-2); (I-189) + (S1-3); (I-189) + (S1-4); (I-189) + (S1-5); (I-189) + (S1-6); (I-189) + (S1-7); (I-189) + (S1-8); (I-189) + (S1-9); (I-189) + (S1-10); (I-189) + (S1-11); (I-189) + (S1-12); (I-189) + (S1-13); (I-189) + (S2-1); (I-189) + (S2-2); (I-189) + (S2-3); (I-189) + (S2-4); (I-189) + (S2-5); (I-189) + (S2-6); (I-189) + (S2-7); (I-189) + (S2-8); (I-189) + (S2-9); (I-189) + (S2-10); (I-189) + (S3-1); (I-189) + (S3-2); (I-189) + (S3-3); (I-189) + (S3-4); (I-189) + (S3-5); (I-189) + (S3-6); (I-189) + (S3-7); (I-189) + (S3-8); (I-189) + (S3-9); (I-189) + (S3-10); (I-189) + (S3-11); (I-189) + (S4-1); (I-189) + (S4-2); (I-189) + (S4-3); (I-189) + (S4-4); (I-189) + (S4-5); (I-189) + (S7-1); (I-189) + (S11-1); (I-189) + (S11-2); (I-189) + (S11-3); (I-189) + (S12-1); (I-189) + (S13-1); (I-189) + (S13-2); (I-189) + (S13-3); (I-189) + (S13-4): (I-189) + (S13-5); (I-189) + (S13-6); (I-189) + (S13-7); (I-189) + (S13-8); (I-189) + (S13-9); (I-189) + (S14-1)
(I-190) + (S1-1); (I-190) + (S1-2); (I-190) + (S1-3); (I-190) + (S1-4); (I-190) + (S1-5); (I-190) + (S1-6); (I-190) + (S1-7); (I-190) + (S1-8); (I-190) + (S1-9); (I-190) + (S1-10); (I-190) + (S1-11); (I-190) + (S1-12); (I-190) + (S1-13); (I-190) + (S2-1); (I-190) + (S2-2); (I-190) + (S2-3); (I-190) + (S2-4); (I-190) + (S2-5); (I-190) + (S2-6); (I-190) + (S2-7); (I-190) + (S2-8); (I-190) + (S2-9); (I-190) + (S2-10); (I-190) + (S3-1); (I-190) + (S3-2); (I-190) + (S3-3); (I-190) + (S3-4); (I-190) + (S3-5); (I-190) + (S3-6); (I-190) + (S3-7); (I-190) + (S3-8); (I-190) + (S3-9); (I-190) + (S3-10); (I-190) + (S3-11); (I-190) + (S4-1); (I-190) + (S4-2); (I-190) + (S4-3); (I-190) + (S4-4); (I-190) + (S4-5); (I-190) + (S7-1); (I-190) + (S11-1); (I-190) + (S11-2); (I-190) + (S11-3); (I-190) + (S12-1); (I-190) + (S13-1); (I-190) + (S13-2); (I-190) + (S13-3); (I-190) + (S13-4): (I-190) + (S13-5); (I-190) + (S13-6); (I-190) + (S13-7); (I-190) + (S13-8); (I-190) + (S13-9); (I-190) + (S14-1)
(I-191) + (S1-1); (I-191) + (S1-2); (I-191) + (S1-3); (I-191) + (S1-4); (I-191) + (S1-5); (I-191) + (S1-6); (I-191) + (S1-7); (I-191) + (S1-8); (I-191) + (S1-9); (I-191) + (S1-10); (I-191) + (S1-11); (I-191) + (S1-12); (I-191) + (S1-13); (I-191) + (S2-1); (I-191) + (S2-2); (I-191) + (S2-3); (I-191) + (S2-4); (I-191) + (S2-5); (I-191) + (S2-6); (I-191) + (S2-7); (I-191) + (S2-8); (I-191) + (S2-9); (I-191) + (S2-10); (I-191) + (S3-1); (I-191) + (S3-2); (I-191) + (S3-3); (I-191) + (S3-4); (I-191) + (S3-5); (I-191) + (S3-6); (I-191) + (S3-7); (I-191) + (S3-8); (I-191) + (S3-9); (I-191) + (S3-10); (I-191) + (S3-11); (I-191) + (S4-1); (I-191) + (S4-2); (I-191) + (S4-3); (I-191) + (S4-4); (I-191) + (S4-5); (I-191) + (S7-1); (I-191) + (S11-1); (I-191) + (S11-2); (I-191) + (S11-3); (I-191) + (S12-1); (I-191) + (S13-1); (I-191) + (S13-2); (I-191) + (S13-3); (I-191) + (S13-4): (I-191) + (S13-5); (I-191) + (S13-6); (I-191) + (S13-7); (I-191) + (S13-8); (I-191) + (S13-9); (I-191) + (S14-1)
(I-192) + (S1-1); (I-192) + (S1-2); (I-192) + (S1-3); (I-192) + (S1-4); (I-192) + (S1-5); (I-192) + (S1-6); (I-192) + (S1-7); (I-192) + (S1-8); (I-192) + (S1-9); (I-192) + (S1-10); (I-192) + (S1-11); (I-192) + (S1-12); (I-192) + (S1-13); (I-192) + (S2-1); (I-192) + (S2-2); (I-192) + (S2-3); (I-192) + (S2-4); (I-192) + (S2-5); (I-192) + (S2-6); (I-192) + (S2-7); (I-192) + (S2-8); (I-192) + (S2-9); (I-192) + (S2-10); (I-192) + (S3-1); (I-192) + (S3-2); (I-192) + (S3-3); (I-192) + (S3-4); (I-192) + (S3-5); (I-192) + (S3-6); (I-192) + (S3-7); (I-192) + (S3-8); (I-192) + (S3-9); (I-192) + (S3-10); (I-192) + (S3-11); (I-192) + (S4-1); (I-192) + (S4-2); (I-192) + (S4-3); (I-192) + (S4-4); (I-192) + (S4-5); (I-192) + (S7-1); (I-192) + (S11-1); (I-192) + (S11-2); (I-192) + (S11-3); (I-192) + (S12-1); (I-192) + (S13-1); (I-192) + (S13-2); (I-192) + (S13-3); (I-192) + (S13-4): (I-192) + (S13-5); (I-192) + (S13-6); (I-192) + (S13-7); (I-192) + (S13-8); (I-192) + (S13-9); (I-192) + (S14-1)
(I-193) + (S1-1); (I-193) + (S1-2); (I-193) + (S1-3); (I-193) + (S1-4); (I-193) + (S1-5); (I-193) + (S1-6); (I-193) + (S1-7); (I-193) + (S1-8); (I-193) + (S1-9); (I-193) + (S1-10); (I-193) + (S1-11); (I-193) + (S1-12); (I-193) + (S1-13); (I-193) + (S2-1); (I-193) + (S2-2); (I-193) + (S2-3); (I-193) + (S2-4); (I-193) + (S2-5); (I-193) + (S2-6); (I-193) + (S2-7); (I-193) + (S2-8); (I-193) + (S2-9); (I-193) + (S2-10); (I-193) + (S3-1); (I-193) + (S3-2); (I-193) + (S3-3); (I-193) + (S3-4); (I-193) + (S3-5); (I-193) + (S3-6); (I-193) + (S3-7); (I-193) + (S3-8); (I-193) + (S3-9); (I-193) + (S3-10); (I-193) + (S3-11); (I-193) + (S4-1); (I-193) + (S4-2); (I-193) + (S4-3); (I-193) + (S4-4); (I-193) + (S4-5); (I-193) + (S7-1); (I-193) + (S11-1); (I-193) + (S11-2); (I-193) + (S11-3); (I-193) + (S12-1); (I-193) + (S13-1); (I-193) + (S13-2); (I-193) + (S13-3); (I-193) + (S13-4): (I-193) + (S13-5); (I-193) + (S13-6); (I-193) + (S13-7); (I-193) + (S13-8); (I-193) + (S13-9); (I-193) + (S14-1)
(I-194) + (S1-1); (I-194) + (S1-2); (I-194) + (S1-3); (I-194) + (S1-4); (I-194) + (S1-5); (I-194) + (S1-6); (I-194) + (S1-7); (I-194) + (S1-8); (I-194) + (S1-9); (I-194) + (S1-10); (I-194) + (S1-11); (I-194) + (S1-12); (I-194) + (S1-13); (I-194) + (S2-1); (I-194) + (S2-2); (I-194) + (S2-3); (I-194) + (S2-4); (I-194) + (S2-5); (I-194) + (S2-6); (I-194) + (S2-7); (I-194) + (S2-8); (I-194) + (S2-9); (I-194) + (S2-10); (I-194) + (S3-1); (I-194) + (S3-2); (I-194) + (S3-3); (I-194) + (S3-4); (I-194) + (S3-5); (I-194) + (S3-6); (I-194) + (S3-7); (I-194) + (S3-8); (I-194) + (S3-9); (I-194) + (S3-10); (I-194) + (S3-11); (I-194) + (S4-1); (I-194) + (S4-2); (I-194) + (S4-3); (I-194) + (S4-4); (I-194) + (S4-5); (I-194) + (S7-1); (I-194) + (S11-1); (I-194) + (S11-2); (I-194) + (S11-3); (I-194) + (S12-1); (I-194) + (S13-1); (I-194) + (S13-2); (I-194) + (S13-3); (I-194) + (S13-4): (I-194) + (S13-5); (I-194) + (S13-6); (I-194) + (S13-7); (I-194) + (S13-8); (I-194) + (S13-9); (I-194) + (S14-1 )
(I-195) + (S1-1); (I-195) + (S1-2); (I-195) + (S1-3); (I-195) + (S1-4); (I-195) + (S1-5); (I-195) + (S1-6); (I-195) + (S1-7); (I-195) + (S1-8); (I-195) + (S1-9); (I-195) + (S1-10); (I-195) + (S1-11); (I-195) + (S1-12); (I-195) + (S1-13); (I-195) + (S2-1); (I-195) + (S2-2); (I-195) + (S2-3); (I-195) + (S2-4); (I-195) + (S2-5); (I-195) + (S2-6); (I-195) + (S2-7); (I-195) + (S2-8); (I-195) + (S2-9); (I-195) + (S2-10); (I-195) + (S3-1); (I-195) + (S3-2); (I-195) + (S3-3); (I-195) + (S3-4); (I-195) + (S3-5); (I-195) + (S3-6); (I-195) + (S3-7); (I-195) + (S3-8); (I-195) + (S3-9); (I-195) + (S3-10); (I-195) + (S3-11); (I-195) + (S4-1); (I-195) + (S4-2); (I-195) + (S4-3); (I-195) + (S4-4); (I-195) + (S4-5); (I-195) + (S7-1); (I-195) + (S11-1); (I-195) + (S11-2); (I-195) + (S11-3); (I-195) + (S12-1); (I-195) + (S13-1); (I-195) + (S13-2); (I-195) + (S13-3); (I-195) + (S13-4): (I-195) + (S13-5); (I-195) + (S13-6); (I-195) + (S13-7); (I-195) + (S13-8); (I-195) + (S13-9); (I-195) + (S14-1 )
(I-196) + (S1-1); (I-196) + (S1-2); (I-196) + (S1-3); (I-196) + (S1-4); (I-196) + (S1-5); (I-196) + (S1-6); (I-196) + (S1-7); (I-196) + (S1-8); (I-196) + (S1-9); (I-196) + (S1-10); (I-196) + (S1-11); (I-196) + (S1-12); (I-196) + (S1-13); (I-196) + (S2-1); (I-196) + (S2-2); (I-196) + (S2-3); (I-196) + (S2-4); (I-196) + (S2-5); (I-196) + (S2-6); (I-196) + (S2-7); (I-196) + (S2-8); (I-196) + (S2-9); (I-196) + (S2-10); (I-196) + (S3-1); (I-196) + (S3-2); (I-196) + (S3-3); (I-196) + (S3-4); (I-196) + (S3-5); (I-196) + (S3-6); (I-196) + (S3-7); (I-196) + (S3-8); (I-196) + (S3-9); (I-196) + (S3-10); (I-196) + (S3-11); (I-196) + (S4-1); (I-196) + (S4-2); (I-196) + (S4-3); (I-196) + (S4-4); (I-196) + (S4-5); (I-196) + (S7-1); (I-196) + (S11-1); (I-196) + (S11-2); (I-196) + (S11-3); (I-196) + (S12-1); (I-196) + (S13-1); (I-196) + (S13-2); (I-196) + (S13-3); (I-196) + (S13-4): (I-196) + (S13-5); (I-196) + (S13-6); (I-196) + (S13-7); (I-196) + (S13-8); (I-196) + (S13-9); (I-196) + (S14-1 )
(I-197) + (S1-1); (I-197) + (S1-2); (I-197) + (S1-3); (I-197) + (S1-4); (I-197) + (S1-5); (I-197) + (S1-6); (I-197) + (S1-7); (I-197) + (S1-8); (I-197) + (S1-9); (I-197) + (S1-10); (I-197) + (S1-11); (I-197) + (S1-12); (I-197) + (S1-13); (I-197) + (S2-1); (I-197) + (S2-2); (I-197) + (S2-3); (I-197) + (S2-4); (I-197) + (S2-5); (I-197) + (S2-6); (I-197) + (S2-7); (I-197) + (S2-8); (I-197) + (S2-9); (I-197) + (S2-10); (I-197) + (S3-1); (I-197) + (S3-2); (I-197) + (S3-3); (I-197) + (S3-4); (I-197) + (S3-5); (I-197) + (S3-6); (I-197) + (S3-7); (I-197) + (S3-8); (I-197) + (S3-9); (I-197) + (S3-10); (I-197) + (S3-11); (I-197) + (S4-1); (I-197) + (S4-2); (I-197) + (S4-3); (I-197) + (S4-4); (I-197) + (S4-5); (I-197) + (S7-1); (I-197) + (S11-1); (I-197) + (S11-2); (I-197) + (S11-3); (I-197) + (S12-1); (I-197) + (S13-1); (I-197) + (S13-2); (I-197) + (S13-3); (I-197) + (S13-4): (I-197) + (S13-5); (I-197) + (S13-6); (I-197) + (S13-7); (I-197) + (S13-8); (I-197) + (S13-9); (I-197) + (S14-1)
(I-198) + (S1-1); (I-198) + (S1-2); (I-198) + (S1-3); (I-198) + (S1-4); (I-198) + (S1-5); (I-198) + (S1-6); (I-198) + (S1-7); (I-198) + (S1-8); (I-198) + (S1-9); (I-198) + (S1-10); (I-198) + (S1-11); (I-198) + (S1-12); (I-198) + (S1-13); (I-198) + (S2-1); (I-198) + (S2-2); (I-198) + (S2-3); (I-198) + (S2-4); (I-198) + (S2-5); (I-198) + (S2-6); (I-198) + (S2-7); (I-198) + (S2-8); (I-198) + (S2-9); (I-198) + (S2-10); (I-198) + (S3-1); (I-198) + (S3-2); (I-198) + (S3-3); (I-198) + (S3-4); (I-198) + (S3-5); (I-198) + (S3-6); (I-198) + (S3-7); (I-198) + (S3-8); (I-198) + (S3-9); (I-198) + (S3-10); (I-198) + (S3-11); (I-198) + (S4-1); (I-198) + (S4-2); (I-198) + (S4-3); (I-198) + (S4-4); (I-198) + (S4-5); (I-198) + (S7-1); (I-198) + (S11-1); (I-198) + (S11-2); (I-198) + (S11-3); (I-198) + (S12-1); (I-198) + (S13-1); (I-198) + (S13-2); (I-198) + (S13-3); (I-198) + (S13-4): (I-198) + (S13-5); (I-198) + (S13-6); (I-198) + (S13-7); (I-198) + (S13-8); (I-198) + (S13-9); (I-198) + (S14-1 )
(I-199) + (S1-1); (I-199) + (S1-2); (I-199) + (S1-3); (I-199) + (S1-4); (I-199) + (S1-5); (I-199) + (S1-6); (I-199) + (S1-7); (I-199) + (S1-8); (I-199) + (S1-9); (I-199) + (S1-10); (I-199) + (S1-11); (I-199) + (S1-12); (I-199) + (S1-13); (I-199) + (S2-1); (I-199) + (S2-2); (I-199) + (S2-3); (I-199) + (S2-4); (I-199) + (S2-5); (I-199) + (S2-6); (I-199) + (S2-7); (I-199) + (S2-8); (I-199) + (S2-9); (I-199) + (S2-10); (I-199) + (S3-1); (I-199) + (S3-2); (I-199) + (S3-3); (I-199) + (S3-4); (I-199) + (S3-5); (I-199) + (S3-6); (I-199) + (S3-7); (I-199) + (S3-8); (I-199) + (S3-9); (I-199) + (S3-10); (I-199) + (S3-11); (I-199) + (S4-1); (I-199) + (S4-2); (I-199) + (S4-3); (I-199) + (S4-4); (I-199) + (S4-5); (I-199) + (S7-1); (I-199) + (S11-1); (I-199) + (S11-2); (I-199) + (S11-3); (I-199) + (S12-1); (I-199) + (S13-1); (I-199) + (S13-2); (I-199) + (S13-3); (I-199) + (S13-4): (I-199) + (S13-5); (I-199) + (S13-6); (I-199) + (S13-7); (I-199) + (S13-8); (I-199) + (S13-9); (I-199) + (S14-1)
(I-200) + (S1-1); (I-200) + (S1-2); (I-200) + (S1-3); (I-200) + (S1-4); (I-200) + (S1-5); (I-200) + (S1-6); (I-200) + (S1-7); (I-200) + (S1-8); (I-200) + (S1-9); (I-200) + (S1-10); (I-200) + (S1-11); (I-200) + (S1-12); (I-200) + (S1-13); (I-200) + (S2-1); (I-200) + (S2-2); (I-200) + (S2-3); (I-200) + (S2-4); (I-200) + (S2-5); (I-200) + (S2-6); (I-200) + (S2-7); (I-200) + (S2-8); (I-200) + (S2-9); (I-200) + (S2-10); (I-200) + (S3-1); (I-200) + (S3-2); (I-200) + (S3-3); (I-200) + (S3-4); (I-200) + (S3-5); (I-200) + (S3-6); (I-200) + (S3-7); (I-200) + (S3-8); (I-200) + (S3-9); (I-200) + (S3-10); (I-200) + (S3-11); (I-200) + (S4-1); (I-200) + (S4-2); (I-200) + (S4-3); (I-200) + (S4-4); (I-200) + (S4-5); (I-200) + (S7-1); (I-200) + (S11-1); (I-200) + (S11-2); (I-200) + (S11-3); (I-200) + (S12-1); (I-200) + (S13-1); (I-200) + (S13-2); (I-200) + (S13-3); (I-200) + (S13-4): (I-200) + (S13-5); (I-200) + (S13-6); (I-200) + (S13-7); (I-200) + (S13-8); (I-200) + (S13-9); (I-200) + (S14-1)
(I-201) + (S1-1); (I-201) + (S1-2); (I-201) + (S1-3); (I-201) + (S1-4); (I-201) + (S1-5); (I-201) + (S1-6); (I-201) + (S1-7); (I-201) + (S1-8); (I-201) + (S1-9); (I-201) + (S1-10); (I-201) + (S1-11); (I-201) + (S1-12); (I-201) + (S1-13); (I-201) + (S2-1); (I-201) + (S2-2); (I-201) + (S2-3); (I-201) + (S2-4); (I-201) + (S2-5); (I-201) + (S2-6); (I-201) + (S2-7); (I-201) + (S2-8); (I-201) + (S2-9); (I-201) + (S2-10); (I-201) + (S3-1); (I-201) + (S3-2); (I-201) + (S3-3); (I-201) + (S3-4); (I-201) + (S3-5); (I-201) + (S3-6); (I-201) + (S3-7); (I-201) + (S3-8); (I-201) + (S3-9); (I-201) + (S3-10); (I-201) + (S3-11); (I-201) + (S4-1); (I-201) + (S4-2); (I-201) + (S4-3); (I-201) + (S4-4); (I-201) + (S4-5); (I-201) + (S7-1); (I-201) + (S11-1); (I-201) + (S11-2); (I-201) + (S11-3); (I-201) + (S12-1); (I-201) + (S13-1); (I-201) + (S13-2); (I-201) + (S13-3); (I-201) + (S13-4): (I-201) + (S13-5); (I-201) + (S13-6); (I-201) + (S13-7); (I-201) + (S13-8); (I-201) + (S13-9); (I-201) + (S14-1)
(I-202) + (S1-1); (I-202) + (S1-2); (I-202) + (S1-3); (I-202) + (S1-4); (I-202) + (S1-5); (I-202) + (S1-6); (I-202) + (S1-7); (I-202) + (S1-8); (I-202) + (S1-9); (I-202) + (S1-10); (I-202) + (S1-11); (I-202) + (S1-12); (I-202) + (S1-13); (I-202) + (S2-1); (I-202) + (S2-2); (I-202) + (S2-3); (I-202) + (S2-4); (I-202) + (S2-5); (I-202) + (S2-6); (I-202) + (S2-7); (I-202) + (S2-8); (I-202) + (S2-9); (I-202) + (S2-10); (I-202) + (S3-1); (I-202) + (S3-2); (I-202) + (S3-3); (I-202) + (S3-4); (I-202) + (S3-5); (I-202) + (S3-6); (I-202) + (S3-7); (I-202) + (S3-8); (I-202) + (S3-9); (I-202) + (S3-10); (I-202) + (S3-11); (I-202) + (S4-1); (I-202) + (S4-2); (I-202) + (S4-3); (I-202) + (S4-4); (I-202) + (S4-5); (I-202) + (S7-1); (I-202) + (S11-1); (I-202) + (S11-2); (I-202) + (S11-3); (I-202) + (S12-1); (I-202) + (S13-1); (I-202) + (S13-2); (I-202) + (S13-3); (I-202) + (S13-4): (I-202) + (S13-5); (I-202) + (S13-6); (I-202) + (S13-7); (I-202) + (S13-8); (I-202) + (S13-9); (I-202) + (S14-1)
(I-203) + (S1-1); (I-203) + (S1-2); (I-203) + (S1-3); (I-203) + (S1-4); (I-203) + (S1-5); (I-203) + (S1-6); (I-203) + (S1-7); (I-203) + (S1-8); (I-203) + (S1-9); (I-203) + (S1-10); (I-203) + (S1-11); (I-203) + (S1-12); (I-203) + (S1-13); (I-203) + (S2-1); (I-203) + (S2-2); (I-203) + (S2-3); (I-203) + (S2-4); (I-203) + (S2-5); (I-203) + (S2-6); (I-203) + (S2-7); (I-203) + (S2-8); (I-203) + (S2-9); (I-203) + (S2-10); (I-203) + (S3-1); (I-203) + (S3-2); (I-203) + (S3-3); (I-203) + (S3-4); (I-203) + (S3-5); (I-203) + (S3-6); (I-203) + (S3-7); (I-203) + (S3-8); (I-203) + (S3-9); (I-203) + (S3-10); (I-203) + (S3-11); (I-203) + (S4-1); (I-203) + (S4-2); (I-203) + (S4-3); (I-203) + (S4-4); (I-203) + (S4-5); (I-203) + (S7-1); (I-203) + (S11-1); (I-203) + (S11-2); (I-203) + (S11-3); (I-203) + (S12-1); (I-203) + (S13-1); (I-203) + (S13-2); (I-203) + (S13-3); (I-203) + (S13-4): (I-203) + (S13-5); (I-203) + (S13-6); (I-203) + (S13-7); (I-203) + (S13-8); (I-203) + (S13-9); (I-203) + (S14-1 )
(I-204) + (S1-1); (I-204) + (S1-2); (I-204) + (S1-3); (I-204) + (S1-4); (I-204) + (S1-5); (I-204) + (S1-6); (I-204) + (S1-7); (I-204) + (S1-8); (I-204) + (S1-9); (I-204) + (S1-10); (I-204) + (S1-11); (I-204) + (S1-12); (I-204) + (S1-13); (I-204) + (S2-1); (I-204) + (S2-2); (I-204) + (S2-3); (I-204) + (S2-4); (I-204) + (S2-5); (I-204) + (S2-6); (I-204) + (S2-7); (I-204) + (S2-8); (I-204) + (S2-9); (I-204) + (S2-10); (I-204) + (S3-1); (I-204) + (S3-2); (I-204) + (S3-3); (I-204) + (S3-4); (I-204) + (S3-5); (I-204) + (S3-6); (I-204) + (S3-7); (I-204) + (S3-8); (I-204) + (S3-9); (I-204) + (S3-10); (I-204) + (S3-11); (I-204) + (S4-1); (I-204) + (S4-2); (I-204) + (S4-3); (I-204) + (S4-4); (I-204) + (S4-5); (I-204) + (S7-1); (I-204) + (S11-1); (I-204) + (S11-2); (I-204) + (S11-3); (I-204) + (S12-1); (I-204) + (S13-1); (I-204) + (S13-2); (I-204) + (S13-3); (I-204) + (S13-4): (I-204) + (S13-5); (I-204) + (S13-6); (I-204) + (S13-7); (I-204) + (S13-8); (I-204) + (S13-9); (I-204) + (S14-1 )
(I-205) + (S1-1); (I-205) + (S1-2); (I-205) + (S1-3); (I-205) + (S1-4); (I-205) + (S1-5); (I-205) + (S1-6); (I-205) + (S1-7); (I-205) + (S1-8); (I-205) + (S1-9); (I-205) + (S1-10); (I-205) + (S1-11); (I-205) + (S1-12); (I-205) + (S1-13); (I-205) + (S2-1); (I-205) + (S2-2); (I-205) + (S2-3); (I-205) + (S2-4); (I-205) + (S2-5); (I-205) + (S2-6); (I-205) + (S2-7); (I-205) + (S2-8); (I-205) + (S2-9); (I-205) + (S2-10); (I-205) + (S3-1); (I-205) + (S3-2); (I-205) + (S3-3); (I-205) + (S3-4); (I-205) + (S3-5); (I-205) + (S3-6); (I-205) + (S3-7); (I-205) + (S3-8); (I-205) + (S3-9); (I-205) + (S3-10); (I-205) + (S3-11); (I-205) + (S4-1); (I-205) + (S4-2); (I-205) + (S4-3); (I-205) + (S4-4); (I-205) + (S4-5); (I-205) + (S7-1); (I-205) + (S11-1); (I-205) + (S11-2); (I-205) + (S11-3); (I-205) + (S12-1); (I-205) + (S13-1); (I-205) + (S13-2); (I-205) + (S13-3); (I-205) + (S13-4): (I-205) + (S13-5); (I-205) + (S13-6); (I-205) + (S13-7); (I-205) + (S13-8); (I-205) + (S13-9); (I-205) + (S14-1)
(I-206) + (S1-1); (I-206) + (S1-2); (I-206) + (S1-3); (I-206) + (S1-4); (I-206) + (S1-5); (I-206) + (S1-6); (I-206) + (S1-7); (I-206) + (S1-8); (I-206) + (S1-9); (I-206) + (S1-10); (I-206) + (S1-11); (I-206) + (S1-12); (I-206) + (S1-13); (I-206) + (S2-1); (I-206) + (S2-2); (I-206) + (S2-3); (I-206) + (S2-4); (I-206) + (S2-5); (I-206) + (S2-6); (I-206) + (S2-7); (I-206) + (S2-8); (I-206) + (S2-9); (I-206) + (S2-10); (I-206) + (S3-1); (I-206) + (S3-2); (I-206) + (S3-3); (I-206) + (S3-4); (I-206) + (S3-5); (I-206) + (S3-6); (I-206) + (S3-7); (I-206) + (S3-8); (I-206) + (S3-9); (I-206) + (S3-10); (I-206) + (S3-11); (I-206) + (S4-1); (I-206) + (S4-2); (I-206) + (S4-3); (I-206) + (S4-4); (I-206) + (S4-5); (I-206) + (S7-1); (I-206) + (S11-1); (I-206) + (S11-2); (I-206) + (S11-3); (I-206) + (S12-1); (I-206) + (S13-1); (I-206) + (S13-2); (I-206) + (S13-3); (I-206) + (S13-4): (I-206) + (S13-5); (I-206) + (S13-6); (I-206) + (S13-7); (I-206) + (S13-8); (I-206) + (S13-9); (I-206) + (S14-1)
(I-207) + (S1-1); (I-207) + (S1-2); (I-207) + (S1-3); (I-207) + (S1-4); (I-207) + (S1-5); (I-207) + (S1-6); (I-207) + (S1-7); (I-207) + (S1-8); (I-207) + (S1-9); (I-207) + (S1-10); (I-207) + (S1-11); (I-207) + (S1-12); (I-207) + (S1-13); (I-207) + (S2-1); (I-207) + (S2-2); (I-207) + (S2-3); (I-207) + (S2-4); (I-207) + (S2-5); (I-207) + (S2-6); (I-207) + (S2-7); (I-207) + (S2-8); (I-207) + (S2-9); (I-207) + (S2-10); (I-207) + (S3-1); (I-207) +
(S3-2); (I-207) + (S3-3); (I-207) + (S3-4); (I-207) + (S3-5); (I-207) + (S3-6); (I-207) + (S3-7); (I-207) + (S3-8); (I-207) + (S3-9); (I-207) + (S3-10); (I-207) + (S3-11); (I-207) + (S4-1); (I-207) + (S4-2); (I-207) + (S4-3); (I-207) + (S4-4); (I-207) + (S4-5); (I-207) + (S7-1); (I-207) + (S11-1); (I-207) + (S11-2); (I-207) + (S11-3); (I-207) + (S12-1); (I-207) + (S13-1); (I-207) + (S13-2); (I-207) + (S13-3); (I-207) + (S13-4): (I-207) + (S13-5); (I-207) + (S13-6); (I-207) + (S13-7); (I-207) + (S13-8); (I-207) + (S13-9); (I-207) + (S14-1)
(I-208) + (S1-1); (I-208) + (S1-2); (I-208) + (S1-3); (I-208) + (S1-4); (I-208) + (S1-5); (I-208) + (S1-6); (I-208) + (S1-7); (I-208) + (S1-8); (I-208) + (S1-9); (I-208) + (S1-10); (I-208) + (S1-11); (I-208) + (S1-12); (I-208) + (S1-13); (I-208) + (S2-1); (I-208) + (S2-2); (I-208) + (S2-3); (I-208) + (S2-4); (I-208) + (S2-5); (I-208) + (S2-6); (I-208) + (S2-7); (I-208) + (S2-8); (I-208) + (S2-9); (I-208) + (S2-10); (I-208) + (S3-1); (I-208) + (S3-2); (I-208) + (S3-3); (I-208) + (S3-4); (I-208) + (S3-5); (I-208) + (S3-6); (I-208) + (S3-7); (I-208) + (S3-8); (I-208) + (S3-9); (I-208) + (S3-10); (I-208) + (S3-11); (I-208) + (S4-1); (I-208) + (S4-2); (I-208) + (S4-3); (I-208) + (S4-4); (I-208) + (S4-5); (I-208) + (S7-1); (I-208) + (S11-1); (I-208) + (S11-2); (I-208) + (S11-3); (I-208) + (S12-1); (I-208) + (S13-1); (I-208) + (S13-2); (I-208) + (S13-3); (I-208) + (S13-4): (I-208) + (S13-5); (I-208) + (S13-6); (I-208) + (S13-7); (I-208) + (S13-8); (I-208) + (S13-9); (I-208) + (S14-1)
(I-209) + (S1-1); (I-209) + (S1-2); (I-209) + (S1-3); (I-209) + (S1-4); (I-209) + (S1-5); (I-209) + (S1-6); (I-209) + (S1-7); (I-209) + (S1-8); (I-209) + (S1-9); (I-209) + (S1-10); (I-209) + (S1-11); (I-209) + (S1-12); (I-209) + (S1-13); (I-209) + (S2-1); (I-209) + (S2-2); (I-209) + (S2-3); (I-209) + (S2-4); (I-209) + (S2-5); (I-209) + (S2-6); (I-209) + (S2-7); (I-209) + (S2-8); (I-209) + (S2-9); (I-209) + (S2-10); (I-209) + (S3-1); (I-209) + (S3-2); (I-209) + (S3-3); (I-209) + (S3-4); (I-209) + (S3-5); (I-209) + (S3-6); (I-209) + (S3-7); (I-209) + (S3-8); (I-209) + (S3-9); (I-209) + (S3-10); (I-209) + (S3-11); (I-209) + (S4-1); (I-209) + (S4-2); (I-209) + (S4-3); (I-209) + (S4-4); (I-209) + (S4-5); (I-209) + (S7-1); (I-209) + (S11-1); (I-209) + (S11-2); (I-209) + (S11-3); (I-209) + (S12-1); (I-209) + (S13-1); (I-209) + (S13-2); (I-209) + (S13-3); (I-209) + (S13-4): (I-209) + (S13-5); (I-209) + (S13-6); (I-209) + (S13-7); (I-209) + (S13-8); (I-209) + (S13-9); (I-209) + (S14-1)
(I-210) + (S1-1); (I-210) + (S1-2); (I-210) + (S1-3); (I-210) + (S1-4); (I-210) + (S1-5); (I-210) + (S1-6); (I-210) + (S1-7); (I-210) + (S1-8); (I-210) + (S1-9); (I-210) + (S1-10); (I-210) + (S1-11); (I-210) + (S1-12); (I-210) + (S1-13); (I-210) + (S2-1); (I-210) + (S2-2); (I-210) + (S2-3); (I-210) + (S2-4); (I-210) + (S2-5); (I-210) + (S2-6); (I-210) + (S2-7); (I-210) + (S2-8); (I-210) + (S2-9); (I-210) + (S2-10); (I-210) + (S3-1); (I-210) + (S3-2); (I-210) + (S3-3); (I-210) + (S3-4); (I-210) + (S3-5); (I-210) + (S3-6); (I-210) + (S3-7); (I-210) + (S3-8); (I-210) + (S3-9); (I-210) + (S3-10); (I-210) + (S3-11); (I-210) + (S4-1); (I-210) + (S4-2); (I-210) + (S4-3); (I-210) + (S4-4); (I-210) + (S4-5); (I-210) + (S7-1); (I-210) + (S11-1); (I-210) + (S11-2); (I-210) + (S11-3); (I-210) + (S12-1); (I-210) + (S13-1); (I-210) + (S13-2); (I-210) + (S13-3); (I-210) + (S13-4): (I-210) + (S13-5); (I-210) + (S13-6); (I-210) + (S13-7); (I-210) + (S13-8); (I-210) + (S13-9); (I-210) + (S14-1)
(I-211) + (S1-1); (I-211) + (S1-2); (I-211) + (S1-3); (I-211) + (S1-4); (I-211) + (S1-5); (I-211) + (S1-6); (I-211) + (S1-7); (I-211) + (S1-8); (I-211) + (S1-9); (I-211) + (S1-10); (I-211) + (S1-11); (I-211) + (S1-12); (I-211) + (S1-13); (I-211) + (S2-1); (I-211) + (S2-2); (I-211) + (S2-3); (I-211) + (S2-4); (I-211) + (S2-5); (I-211) + (S2-6); (I-211) + (S2-7); (I-211) + (S2-8); (I-211) + (S2-9); (I-211) + (S2-10); (I-211) + (S3-1); (I-211 + (S3-2); (I-211) + (S3-3); (I-211) + (S3-4); (I-211) + (S3-5); (I-211) + (S3-6); (I-211) + (S3-7); (I-211) + (S3-8); (I-211) + (S3-9); (I-211) + (S3-10); (I-211) + (S3-11); (I-211) + (S4-1); (I-211) + (S4-2); (I-211) + (S4-3); (I-211) + (S4-4); (I-211) + (S4-5); (I-211) + (S7-1); (I-211) + (S11-1); (I-211) + (S11-2); (I-211) + (S11-3); (I-211) + (S12-1); (I-211) + (S13-1); (I-211) + (S13-2); (I-211) + (S13-3); (I-211) + (S13-4): (I-211) + (S13-5); (I-211) + (S13-6); (I-211) + (S13-7); (I-211) + (S13-8); (I-211) + (S13-9); (I-211) + (S14-1)
(I-212) + (S1-1); (I-212) + (S1-2); (I-212) + (S1-3); (I-212) + (S1-4); (I-212) + (S1-5); (I-212) + (S1-6); (I-212) + (S1-7); (I-212) + (S1-8); (I-212) + (S1-9); (I-212) + (S1-10); (I-212) + (S1-11); (I-212) + (S1-12); (I-212) + (S1-13); (I-212) + (S2-1); (I-212) + (S2-2); (I-212) + (S2-3); (I-212) + (S2-4); (I-212) + (S2-5); (I-212) + (S2-6); (I-212) + (S2-7); (I-212) + (S2-8); (I-212) + (S2-9); (I-212) + (S2-10); (I-212) + (S3-1); (I-212) + (S3-2); (I-212) + (S3-3); (I-212) + (S3-4); (I-212) + (S3-5); (I-212) + (S3-6); (I-212) + (S3-7); (I-212) + (S3-8); (I-212) + (S3-9); (I-212) + (S3-10); (I-212) + (S3-11); (I-212) + (S4-1); (I-212) + (S4-2); (I-212) + (S4-3); (I-212) + (S4-4); (I-212) + (S4-5); (I-212) + (S7-1); (I-212) + (S11-1); (I-212) + (S11-2); (I-212) + (S11-3); (I-212) + (S12-1); (I-212) + (S13-1); (I-212) + (S13-2); (I-212) + (S13-3); (I-212) + (S13-4): (I-212) + (S13-5); (I-212) + (S13-6); (I-212) + (S13-7); (I-212) + (S13-8); (I-212) + (S13-9); (I-212) + (S14-1)
(I-213) + (S1-1); (I-213) + (S1-2); (I-213) + (S1-3); (I-213) + (S1-4); (I-213) + (S1-5); (I-213) + (S1-6); (I-213) + (S1-7); (I-213) + (S1-8); (I-213) + (S1-9); (I-213) + (S1-10); (I-213) + (S1-11); (I-213) + (S1-12); (I-213) + (S1-13); (I-213) + (S2-1); (I-213) + (S2-2); (I-213) + (S2-3); (I-213) + (S2-4); (I-213) + (S2-5); (I-213) + (S2-6); (I-213) + (S2-7); (I-213) + (S2-8); (I-213) + (S2-9); (I-213) + (S2-10); (I-213) + (S3-1); (I-213) + (S3-2); (I-213) + (S3-3); (I-213) + (S3-4); (I-213) + (S3-5); (I-213) + (S3-6); (I-213) + (S3-7); (I-213) + (S3-8); (I-213) + (S3-9); (I-213) + (S3-10); (I-213) + (S3-11); (I-213) + (S4-1); (I-213) + (S4-2); (I-213) + (S4-3); (I-213) + (S4-4); (I-213) + (S4-5); (I-213) + (S7-1); (I-213) + (S11-1); (I-213) + (S11-2); (I-213) + (S11-3); (I-213) + (S12-1); (I-213) + (S13-1); (I-213) + (S13-2); (I-213) + (S13-3); (I-213) + (S13-4):(I-213) + (S13-5); (I-213) + (S13-6); (I-213) + (S13-7); (I-213) + (S13-8); (I-213) + (S13-9); (I-213) + (S14-1)
(I-214) + (S1-1); (I-214) + (S1-2); (I-214) + (S1-3); (I-214) + (S1-4); (I-214) + (S1-5); (I-214) + (S1-6); (I-214) + (S1-7); (I-214) + (S1-8); (I-214) + (S1-9); (I-214) + (S1-10); (I-214) + (S1-11); (I-214) + (S1-12); (I-214) + (S1-13); (I-214) + (S2-1); (I-214) + (S2-2); (I-214) + (S2-3); (I-214) + (S2-4); (I-214) + (S2-5); (I-214) + (S2-6); (I-214) + (S2-7); (I-214) + (S2-8); (I-214) + (S2-9); (I-214) + (S2-10); (I-214) + (S3-1); (I-214) + (S3-2); (I-214) + (S3-3); (I-214) + (S3-4); (I-214) + (S3-5); (I-214) + (S3-6); (I-214) + (S3-7); (I-214) + (S3-8); (I-214) + (S3-9); (I-214) + (S3-10); (I-214) + (S3-11); (I-214) + (S4-1); (I-214) + (S4-2); (I-214) + (S4-3); (I-214) + (S4-4); (I-214) + (S4-5); (I-214) + (S7-1); (I-214) + (S11-1); (I-214) + (S11-2); (I-214) + (S11-3); (I-214) + (S12-1); (I-214) + (S13-1); (I-214) + (S13-2); (I-214) + (S13-3); (I-214) + (S13-4): (I-214) + (S13-5); (I-214) + (S13-6); (I-214) + (S13-7); (I-214) + (S13-8); (I-214) + (S13-9); (I-214) + (S14-1)
(I-215) + (S1-1); (I-215) + (S1-2); (I-215) + (S1-3); (I-215) + (S1-4); (I-215) + (S1-5); (I-215) + (S1-6); (I-215) + (S1-7); (I-215) + (S1-8); (I-215) + (S1-9); (I-215) + (S1-10); (I-215) + (S1-11); (I-215) + (S1-12); (I-215) + (S1-13); (I-215) + (S2-1); (I-215) + (S2-2); (I-215) + (S2-3); (I-215) + (S2-4); (I-215) + (S2-5); (I-215) + (S2-6); (I-215) + (S2-7); (I-215) + (S2-8); (I-215) + (S2-9); (I-215) + (S2-10); (I-215) + (S3-1); (I-215) + (S3-2); (I-215) + (S3-3); (I-215) + (S3-4); (I-215) + (S3-5); (I-215) + (S3-6); (I-215) + (S3-7); (I-215) + (S3-8); (I-215) + (S3-9); (I-215) + (S3-10); (I-215) + (S3-11); (I-215) + (S4-1); (I-215) + (S4-2); (I-215) + (S4-3); (I-215) + (S4-4); (I-215) + (S4-5); (I-215) + (S7-1); (I-215) + (S11-1); (I-215) + (S11-2); (I-215) + (S11-3); (I-215) + (S12-1); (I-215) + (S13-1); (I-215) + (S13-2); (I-215) + (S13-3); (I-215) + (S13-4): (I-215) + (S13-5); (I-215) + (S13-6); (I-215) + (S13-7); (I-215) + (S13-8); (I-215) + (S13-9); (I-215) + (S14-1)
(I-216) + (S1-1); (I-216) + (S1-2); (I-216) + (S1-3); (I-216) + (S1-4); (I-216) + (S1-5); (I-216) + (S1-6); (I-216) + (S1-7); (I-216) + (S1-8); (I-216) + (S1-9); (I-216) + (S1-10); (I-216) + (S1-11); (I-216) + (S1-12); (I-216) + (S1-13); (I-216) + (S2-1); (I-216) + (S2-2); (I-216) + (S2-3); (I-216) + (S2-4); (I-216) + (S2-5); (I-216) + (S2-6); (I-216) + (S2-7); (I-216) + (S2-8); (I-216) + (S2-9); (I-216) + (S2-10); (I-216) + (S3-1); (I-216) + (S3-2); (I-216) + (S3-3); (I-216) + (S3-4); (I-216) + (S3-5); (I-216) + (S3-6); (I-216) + (S3-7); (I-216) + (S3-8); (I-216) + (S3-9); (I-216) + (S3-10); (I-216) + (S3-11); (I-216) + (S4-1); (I-216) + (S4-2); (I-216) + (S4-3); (I-216) + (S4-4); (I-216) + (S4-5); (I-216) + (S7-1); (I-216) + (S11-1); (I-216) + (S11-2); (I-216) + (S11-3); (I-216) + (S12-1); (I-216) + (S13-1); (I-216) + (S13-2); (I-216) + (S13-3); (I-216) + (S13-4): (I-216) + (S13-5); (I-216) + (S13-6); (I-216) + (S13-7); (I-216) + (S13-8); (I-216) + (S13-9); (I-216) + (S14-1)
(I-217) + (S1-1); (I-217) + (S1-2); (I-217) + (S1-3); (I-217) + (S1-4); (I-217) + (S1-5); (I-217) + (S1-6); (I-217) + (S1-7); (I-217) + (S1-8); (I-217) + (S1-9); (I-217) + (S1-10); (I-217) + (S1-11); (I-217) + (S1-12); (I-217) + (S1-13); (I-217) + (S2-1); (I-217) + (S2-2); (I-217) + (S2-3); (I-217) + (S2-4); (I-217) + (S2-5); (I-217) + (S2-6); (I-217) + (S2-7); (I-217) + (S2-8); (I-217) + (S2-9); (I-217) + (S2-10); (I-217) + (S3-1); (I-217) + (S3-2); (I-217) + (S3-3); (I-217) + (S3-4); (I-217) + (S3-5); (I-217) + (S3-6); (I-217) + (S3-7); (I-217) + (S3-8); (I-217) + (S3-9); (I-217) + (S3-10); (I-217) + (S3-11); (I-217) + (S4-1); (I-217) + (S4-2); (I-217) + (S4-3); (I-217) + (S4-4); (I-217) + (S4-5); (I-217) + (S7-1); (I-217) + (S11-1); (I-217) + (S11-2); (I-217) + (S11-3); (I-217) + (S12-1); (I-217) + (S13-1); (I-217) + (S13-2); (I-217) + (S13-3); (I-217) + (S13-4): (I-217) + (S13-5); (I-217) + (S13-6); (I-217) + (S13-7); (I-217) + (S13-8); (I-217) + (S13-9); (I-217) + (S14-1)
(I-218) + (S1-1); (I-218) + (S1-2); (I-218) + (S1-3); (I-218) + (S1-4); (I-218) + (S1-5); (I-218) + (S1-6); (I-218) + (S1-7); (I-218) + (S1-8); (I-218) + (S1-9); (I-218) + (S1-10); (I-218) + (S1-11); (I-218) + (S1-12); (I-218) + (S1-13); (I-218) + (S2-1); (I-218) + (S2-2); (I-218) + (S2-3); (I-218) + (S2-4); (I-218) + (S2-5); (I-218) + (S2-6); (I-218) + (S2-7); (I-218) + (S2-8); (I-218) + (S2-9); (I-218) + (S2-10); (I-218) + (S3-1); (I-218) + (S3-2); (I-218) + (S3-3); (I-218) + (S3-4); (I-218) + (S3-5); (I-218) + (S3-6); (I-218) + (S3-7); (I-218) + (S3-8); (I-218) + (S3-9); (I-218) + (S3-10); (I-218) + (S3-11); (I-218) + (S4-1); (I-218) + (S4-2); (I-218) + (S4-3); (I-218) + (S4-4); (I-218) + (S4-5); (I-218) + (S7-1); (I-218) + (S11 -1); (I-218) + (S11-2); (I-218) + (S11-3); (I-218) + (S12-1); (I-218) + (S13-1); (I-218) + (S13-2); (I-218) + (S13-3); I-218) + (S13-4): (I-218) + (S13-5); (I-218) + (S13-6); (I-218) + (S13-7); (I-218) + (S13-8); (I-218) + (S13-9); (I-218) + (S14-1)
(I-219) + (S1-1); (I-219) + (S1-2); (I-219) + (S1-3); (I-219) + (S1-4); (I-219) + (S1-5); (I-219) + (S1-6); (I-219) + (S1-7); (I-219) + (S1-8); (I-219) + (S1-9); (I-219) + (S1-10); (I-219) + (S1-11); (I-219) + (S1-12); (I-219) + (S1-13); (I-219) + (S2-1); (I-219) + (S2-2); (I-219) + (S2-3); (I-219) + (S2-4); (I-219) + (S2-5); (I-219) + (S2-6); (I-219) + (S2-7); (I-219) + (S2-8); (I-219) + (S2-9); (I-219) + (S2-10); (I-219) + (S3-1); (I-219) + (S3-2); (I-219) + (S3-3); (I-219) + (S3-4); (I-219) + (S3-5); (I-219) + (S3-6); (I-219) + (S3-7); (I-219) + (S3-8); (I-219) + (S3-9); (I-219) + (S3-10); (I-219) + (S3-11); (I-219) + (S4-1); (I-219) + (S4-2); (I-219) + (S4-3); (I-219) + (S4-4); (I-219) + (S4-5); (I-219) + (S7-1); (I-219) + (S11 -1); (I-219) + (S11-2); (I-219) + (S11-3); (I-219) + (S12-1); (I-219) + (S13-1); (I-219) + (S13-2); (I-219) + (S13-3); (I-219) + (S13-4): (I-219) + (S13-5); (I-219) + (S13-6); (I-219) + (S13-7); (I-219) + (S13-8); (I-219) + (S13-9); (I-219) + (S14-1)
(I-220) + (S1-1); (I-220) + (S1-2); (I-220) + (S1-3); (I-220) + (S1-4); (I-220) + (S1-5); (I-220) + (S1-6); (I-220) + (S1-7); (I-220) + (S1-8); (I-220) + (S1-9); (I-220) + (S1-10); (I-220) + (S1-11); (I-220) + (S1-12); (I-220) + (S1-13); (I-220) + (S2-1); (I-220) + (S2-2); (I-220) + (S2-3); (I-220) + (S2-4); (I-220) + (S2-5); (I-220) + (S2-6); (I-220) + (S2-7); (I-220) + (S2-8); (I-220) + (S2-9); (I-220) + (S2-10); (I-220) + (S3-1); (I-220) + (S3-2); (I-220) + (S3-3); (I-220) + (S3-4); (I-220) + (S3-5); (I-220) + (S3-6); (I-220) + (S3-7); (I-220) + (S3-8); (I-220) + (S3-9); (I-220) + (S3-10); (I-220) + (S3-11); (I-220) + (S4-1); (I-220) + (S4-2); (I-220) + (S4-3); (I-220) + (S4-4); (I-220) + (S4-5); (I-220) + (S7-1); (I-220) + (S11-1); (I-220) + (S11-2); (I-220) + (S11-3); (I-220) + (S12-1); (I-220) + (S13-1); (I-220) + (S13-2); (I-220) + (S13-3); (I-220) + (S13-4): (I-220) + (S13-5); (I-220) + (S13-6); (I-220) + (S13-7); (I-220) + (S13-8); (I-220) + (S13-9); (I-220) + (S14-1)
(I-221) + (S1-1); (I-221) + (S1-2); (I-221) + (S1-3); (I-221) + (S1-4); (I-221) + (S1-5); (I-221) + (S1-6); (I-221) + (S1-7); (I-221) + (S1-8); (I-221) + (S1-9); (I-221) + (S1-10); (I-221) + (S1-11); (I-221) + (S1-12); (I-221) + (S1-13); (I-221 + (S2-1); (I-221) + (S2-2); (I-221) + (S2-3); (I-221) + (S2-4); (I-221) + (S2-5); (I-221) + (S2-6); (I-221) + (S2-7); (I-221) + (S2-8); (I-221) + (S2-9); (I-221) + (S2-10); (I-221) + (S3-1); (I-221) + (S3-2); (I-221) + (S3-3); (I-221) + (S3-4); (I-221) + (S3-5); (I-221) + (S3-6); (I-221) + (S3-7); (I-221) + (S3-8); (I-221) + (S3-9); (I-221) + (S3-10); (I-221) + (S3-11); (I-221) + (S4-1); (I-221) + (S4-2); (I-221) + (S4-3); (I-221) + (S4-4); (I-221) + (S4-5); (I-221) + (S7-1); (I-221) + (S11-1); (I-221) + (S11-2); (I-221) + (S11-3); (I-221) + (S12-1); (I-221) + (S13-1); (I-221) + (S13-2); (I-221) + (S13-3); (I-221) + (S13-4): (I-221) + (S13-5); (I-221) + (S13-6); (I-221) + (S13-7); (I-221) + (S13-8); (I-221) + (S13-9); (I-221) + (S14-1)
(I-222) + (S1-1); (I-222) + (S1-2); (I-222) + (S1-3); (I-222) + (S1-4); (I-222) + (S1-5); (I-222) + (S1-6); (I-222) + (S1-7); (I-222) + (S1-8); (I-222) + (S1-9); (I-222) + (S1-10); (I-222) + (S1-11); (I-222) + (S1-12); (I-222) + (S1-13); (I-222) + (S2-1); (I-222) + (S2-2); (I-222) + (S2-3); (I-222) + (S2-4); (I-222) + (S2-5); (I-222) + (S2-6); (I-222) + (S2-7); (I-222) + (S2-8); (I-222) + (S2-9); (I-222) + (S2-10); (I-222) + (S3-1); (I-222) + (S3-2); (I-222) + (S3-3); (I-222) + (S3-4); (I-222) + (S3-5); (I-222) + (S3-6); (I-222) + (S3-7); (I-222) + (S3-8); (I-222) + (S3-9); (I-222) + (S3-10); (I-222) + (S3-11); (I-222) + (S4-1); (I-222) + (S4-2); (I-222) + (S4-3); (I-222) + (S4-4); (I-222) + (S4-5); (I-222) + (S7-1); (I-222) + (S11-1); (I-222) + (S11-2); (I-222) + (S11-3); (I-222) + (S12-1); (I-222) + (S13-1); (I-222) + (S13-2); (I-222) + (S13-3); (I-222) + (S13-4): (I-222) + (S13-5); (I-222) + (S13-6); (I-222) + (S13-7); (I-222) + (S13-8); (I-222) + (S13-9); (I-222) + (S14-1)
(I-223) + (S1-1); (I-223) + (S1-2); (I-223) + (S1-3); (I-223) + (S1-4); (I-223) + (S1-5); (I-223) + (S1-6); (I-223) + (S1-7); (I-223) + (S1-8); (I-223) + (S1-9); (I-223) + (S1-10); (I-223) + (SI-11); (I-223) + (S1-12); (I-223) + (S1-13); (I-223) + (S2-1); (I-223) + (S2-2); (I-223) + (S2-3); (I-223) + (S2-4); (I-223) + (S2-5); (I-223) + (S2-6); (I-223) + (S2-7); (I-223) + (S2-8); (I-223) + (S2-9); (I-223) + (S2-10); (I-223) + (S3-1); (I-223) + (S3-2); (I-223) + (S3-3); (I-223) + (S3-4); (I-223) + (S3-5); (I-223) + (53-6); (I-223) + (S3-7); (I-223) + (S3-8); (I-223) + (S3-9); (I-223) + (S3-10); (I-223) + (S3-11); (I-223) + (S4-1); (I-223) + (S4-2); (I-223) + (S4-3); (I-223) + (S4-4); (I-223) + (S4-5); (I-223) + (S7-1); (I-223) + (S11-1); (I-223) + (S11-2); (I-223) + (S11-3); (I-223) + (S12-1); (I-223) + (S13-1); (I-223) + (S13-2); (I-223) + (S13-3); (I-223) + (S13-4): (I-223) + (S13-5); (I-223) + (S13-6); (I-223) + (S13-7); (I-223) + (S13-8); (I-223) + (S13-9); (I-223) + (S14-1)
(I-224) + (S1-1); (I-224) + (S1-2); (I-224) + (S1-3); (I-224) + (S1-4); (I-224) + (S1-5); (I-224) + (S1-6); (I-224) + (S1-7); (I-224) + (S1-8); (I-224) + (S1-9); (I-224) + (S1-10); (I-224) + (S1-11); (I-224) + (S1-12); (I-224) + (S1-13); (I-224) + (S2-1); (I-224) + (S2-2); (I-224) + (S2-3); (I-224) + (S2-4); (I-224) + (S2-5); (I-224) + (S2-6); (I-224) + (S2-7); (I-224) + (S2-8); (I-224) + (S2-9); (I-224) + (S2-10); (I-224) + (S3-1); (I-224) + (S3-2); (I-224) + (S3-3); (I-224) + (S3-4); (I-224) + (S3-5); (I-224) + (S3-6); (I-224) + (S3-7); (I-224) + (S3-8); (I-224) + (S3-9); (I-224) + (S3-10); (I-224) + (S3-11); (I-224) + (S4-1); (I-224) + (S4-2); (I-224) + (S4-3); (I-224) + (S4-4); (I-224) + (S4-5); (I-224) + (S7-1); (I-224) + (S11-1); (I-224) + (S11-2); (I-224) + (S11-3); (I-224) + (S12-1); (I-224) + (S13-1); (I-224) + (S13-2); (I-224) + (S13-3); (I-224) + (S13-4): (I-224) + (S13-5); (I-224) + (S13-6); (I-224) + (S13-7); (I-224) + (S13-8); (I-224) + (S13-9); (I-224) + (S14-1)
(I-225) + (S1-1); (I-225) + (S1-2); (I-225) + (S1-3); (I-225) + (S1-4); (I-225) + (S1-5); (I-225) + (S1-6); (I-225) + (S1-7); (I-225) + (S1-8); (I-225) + (S1-9); (I-225) + (S1-10); (I-225) + (S1-11); (I-225) + (S1-12); (I-225) + (S1-13); (I-225) + (S2-1); (I-225) + (S2-2); (I-225) + (S2-3); (I-225) + (S2-4); (I-225) + (S2-5); (I-225) + (S2-6); (I-225) + (S2-7); (I-225) + (S2-8); (I-225) + (S2-9); (I-225) + (S2-10); (I-225) + (S3-1); (I-225) + (S3-2); (I-225) + (S3-3); (I-225) + (S3-4); (I-225) + (S3-5); (I-225) + (S3-6); (I-225) + (S3-7); (I-225) + (S3-8); (I-225) + (S3-9); (I-225) + (S3-10); (I-225) + (S3-11); (I-225) + (S4-1); (I-225) + (S4-2); (I-225) + (S4-3); (I-225) + (S4-4); (I-225) + (S4-5); (I-225) + (S7-1); (I-225) + (S11-1); (I-225) + (S11-2); (I-225) + (S11-3); (I-225) + (S12-1); (I-225) + (S13-1); (I-225) + (S13-2); (I-225) + (S13-3); (I-225) + (S13-4): (I-225) + (S13-5); (I-225) + (S13-6); (I-225) + (S13-7); (I-225) + (S13-8); (I-225) + (S13-9); (I-225) + (S14-1)
(I-226) + (S1-1); (I-226) + (S1-2); (I-226) + (S1-3); (I-226) + (S1-4); (I-226) + (S1-5); (I-226) + (S1-6); (I-226) + (S1-7); (I-226) + (S1-8); (I-226) + (S1-9); (I-226) + (S1-10); (I-226) + (S1-11); (I-226) + (S1-12); (I-226) + (S1-13); (I-226) + (S2-1); (I-226) + (S2-2); (I-226) + (S2-3); (I-226) + (S2-4); (I-226) + (S2-5); (I-226) + (S2-6); (I-226) + (S2-7); (I-226) + (S2-8); (I-226) + (S2-9); (I-226) + (S2-10); (I-226) + (S3-1); (I-226) + (S3-2); (I-226) + (S3-3); (I-226) + (S3-4); (I-226) + (S3-5); (I-226) + (S3-6); (I-226) + (S3-7); (I-226) + (S3-8); (I-226) + (S3-9); (I-226) + (S3-10); (I-226) + (S3-11); (I-226) + (S4-1); (I-226) + (S4-2); (I-226) + (S4-3); (I-226) + (S4-4); (I-226) + (S4-5); (I-226) + (S7-1); (I-226) + (S11-1); (I-226) + (S11-2); (I-226) + (S11-3); (I-226) + (S12-1); (I-226) + (S13-1); (I-226) + (S13-2); (I-226) + (S13-3); (I-226) + (S13-4): (I-226) + (S13-5); (I-226) + (S13-6); (I-226) + (S13-7); (I-226) + (S13-8); (I-226) + (S13-9); (I-226) + (S14-1)
(I-227) + (S1-1); (I-227) + (S1-2); (I-227) + (S1-3); (I-227) + (S1-4); (I-227) + (S1-5); (I-227) + (S1-6); (I-227) + (S1-7); (I-227) + (S1-8); (I-227) + (S1-9); (I-227) + (S1-10); (I-227) + (S1-11); (I-227) + (S1-12); (I-227) + (S1-13); (I-227) + (S2-1); (I-227) + (S2-2); (I-227) + (S2-3); (I-227) + (S2-4); (I-227) + (S2-5); (I-227) + (S2-6); (I-227) + (S2-7); (I-227) + (S2-8); (I-227) + (S2-9); (I-227) + (S2-10); (I-227) + (S3-1); (I-227) + (S3-2); (I-227) + (S3-3); (I-227) + (S3-4); (I-227) + (S3-5); (I-227) + (S3-6); (I-227) + (S3-7); (I-227) + (S3-8); (I-227) + (S3-9); (I-227) + (S3-10); (I-227) + (S3-11); (I-227) + (S4-1); (I-227) + (S4-2); (I-227) + (S4-3); (I-227) + (S4-4); (I-227) + (S4-5); (I-227) + (S7-1); (I-227) + (S11-1); (I-227) + (S11-2); (I-227) + (S11-3); (I-227) + (S12-1); (I-227) + (S13-1); (I-227) + (S13-2); (I-227) + (S13-3); (I-227) + (S13-4): (I-227) + (S13-5); (I-227) + (S13-6); (I-227) + (S13-7); (I-227) + (S13-8); (I-227) + (S13-9); (I-227) + (S14-1)
(I-228) + (S1-1); (I-228) + (S1-2); (I-228) + (S1-3); (I-228) + (S1-4); (I-228) + (S1-5); (I-228) + (S1-6); (I-228) + (S1-7); (I-228) + (S1-8); (I-228) + (S1-9); (I-228) + (S1-10); (I-228) + (S1-11); (I-228) + (S1-12); (I-228) + (S1-13); (I-228) + (S2-1); (I-228) + (S2-2); (I-228) + (S2-3); (I-228) + (S2-4); (I-228) + (S2-5); (I-228) + (S2-6); (I-228) + (S2-7); (I-228) + (S2-8); (I-228) + (S2-9); (I-228) + (S2-10); (I-228) + (S3-1); (I-228) + (S3-2); (I-228) + (S3-3); (I-228) + (S3-4); (I-228) + (S3-5); (I-228) + (S3-6); (I-228) + (S3-7); (I-228) + (S3-8); (I-228) + (S3-9); (I-228) + (S3-10); (I-228) + (S3-11); (I-228) + (S4-1); (I-228) + (S4-2); (I-228) + (S4-3); (I-228) + (S4-4); (I-228) + (S4-5); (I-228) + (S7-1); (I-228) + (S11-1); (I-228) + (S11-2); (I-228) + (S11-3); (I-228) + (S12-1); (I-228) + (S13-1); (I-228) + (S13-2); (I-228) + (S13-3); (I-228) + (S13-4):(I-228) + (S13-5); (I-228) + (S13-6); (I-228) + (S13-7); (I-228) + (S13-8); (I-228) + (S13-9); (I-228) + (S14-1)
(I-229) + (S1-1); (I-229) + (S1-2); (I-229) + (S1-3); (I-229) + (S1-4); (I-229) + (S1-5); (I-229) + (S1-6); (I-229) + (S1-7); (I-229) + (S1-8); (I-229) + (S1-9); (I-229) + (S1-10); (I-229) + (S1-11); (I-229) + (S1-12); (I-229) + (S1-13); (I-229) + (S2-1); (I-229) + (S2-2); (I-229) + (S2-3); (I-229) + (S2-4); (I-229) + (S2-5); (I-229) + (S2-6); (I-229) + (S2-7); (I-229) + (S2-8); (I-229) + (S2-9); (I-229) + (S2-10); (I-229) + (S3-1); (I-229) + (S3-2); (I-229) + (S3-3); (I-229) + (S3-4); (I-229) + (S3-5); (I-229) + (S3-6); (I-229) + (S3-7); (I-229) + (S3-8); (I-229) + (S3-9); (I-229) + (S3-10); (I-229) + (S3-11); (I-229) + (S4-1); (I-229) + (S4-2); (I-229) + (S4-3); (I-229) + (S4-4); (I-229) + (S4-5); (I-229) + (S7-1); (I-229) + (S11-1); (I-229) + (S11-2); (I-229) + (S11-3); (I-229) + (S12-1); (I-229) + (S13-1); (I-229) + (S13-2); (I-229) + (S13-3); (I-229) + (S13-4): (I-229) + (S13-5); (I-229) + (S13-6); (I-229) + (S13-7); (I-229) + (S13-8); (I-229) + (S13-9); (I-229) + (S14-1)
(I-230) + (S1-1); (I-230) + (S1-2); (I-230) + (S1-3); (I-230) + (S1-4); (I-230) + (S1-5); (I-230) + (S1-6); (I-230) + (S1-7); (I-230) + (S1-8); (I-230) + (S1-9); (I-230) + (S1-10); (I-230) + (S1-11); (I-230) + (S1-12); (I-230) + (S1-13); (I-230) + (S2-1); (I-230) + (S2-2); (I-230) + (S2-3); (I-230) + (S2-4); (I-230) + (S2-5); (I-230) + (S2-6); (I-230) + (S2-7); (I-230) + (S2-8); (I-230) + (S2-9); (I-230) + (S2-10); (I-230) + (S3-1); (I-230) + (S3-2); (I-230) + (S3-3); (I-230) + (S3-4); (I-230) + (S3-5); (I-230) + (S3-6); (I-230) + (S3-7); (I-230) + (S3-8); (I-230) + (S3-9); (I-230) + (S3-10); (I-230) + (S3-11); (I-230) + (S4-1); (I-230) + (S4-2); (I-230) + (S4-3); (I-230) + (S4-4); (I-230) + (S4-5); (I-230) + (S7-1); (I-230) + (S11-1); (I-230) + (S11-2); (I-230) + (S11-3); (I-230) + (S12-1); (I-230) + (S13-1); (I-230) + (S13-2); (I-230) + (S13-3); (I-230) + (S13-4): (I-230) + (S13-5); (I-230) + (S13-6); (I-230) + (S13-7); (I-230) + (S13-8); (I-230) + (S13-9); (I-230) + (S14-1)
(I-231) + (S1-1); (I-231) + (S1-2); (I-231) + (S1-3); (I-231) + (S1-4); (I-231) + (S1-5); (I-231) + (S1-6); (I-231) + (S1-7); (I-231) + (S1-8); (I-231) + (S1-9); (I-231) + (S1-10); (I-231) + (S1-11); (I-231) + (S1-12); (I-231) + (S1-13); (I-231) + (S2-1); (I-231) + (S2-2); (I-231) + (S2-3); (I-231) + (S2-4); (I-231) + (S2-5); (I-231) + (S2-6); (I-231) + (S2-7); (I-231) + (S2-8); (I-231) + (S2-9); (I-231) + (S2-10); (I-231) + (S3-1); (I-231) + (S3-2); (I-231) + (S3-3); (I-231) + (S3-4); (I-231) + (S3-5); (I-231) + (S3-6); (I-231) + (S3-7); (I-231) + (S3-8); (I-231) + (S3-9); (I-231) + (S3-10); (I-231) + (S3-11); (I-231) + (S4-1); (I-231) + (S4-2); (I-231) + (S4-3); (I-231) + (S4-4); (I-231) + (S4-5); (I-231) + (S7-1); (I-231) + (S11-1); (I-231) + (S11-2); (I-231) + (S11-3); (I-231) + (S12-1); (I-231) + (S13-1); (I-231) + (S13-2); (I-231) + (S13-3); (I-231) + (S13-4): (I-231) + (S13-5); (I-231) + (S13-6); (I-231) + (S13-7); (I-231) + (S13-8); (I-231) + (S13-9); (I-231) + (S14-1)
(I-232) + (S1-1); (I-232) + (S1-2); (I-232) + (S1-3); (I-232) + (S1-4); (I-232) + (S1-5); (I-232) + (S1-6); (I-232) + (S1-7); (I-232) + (S1-8); (I-232) + (S1-9); (I-232) + (S1-10); (I-232) + (S1-11); (I-232) + (S1-12); (I-232) + (S1-13); (I-232) + (S2-1); (I-232) + (S2-2); (I-232) + (S2-3); (I-232) + (S2-4); (I-232) + (S2-5); (I-232) + (S2-6); (I-232) + (S2-7); (I-232) + (S2-8); (I-232) + (S2-9); (I-232) + (S2-10); (I-232) + (S3-1); (I-232) + (S3-2); (I-232) + (S3-3); (I-232) + (S3-4); (I-232) + (S3-5); (I-232) + (S3-6); (I-232) + (S3-7); (I-232) + (S3-8); (I-232) + (S3-9); (I-232) + (S3-10); (I-232) + (S3-11); (I-232) + (S4-1); (I-232) + (S4-2); (I-232) + (S4-3); (I-232) + (S4-4); (I-232) + (S4-5); (I-232) + (S7-1); (I-232) + (S11-1); (I-232) + (S11-2); (I-232) + (S11-3); (I-232) + (S12-1); (I-232) + (S13-1); (I-232) + (S13-2); (I-232) + (S13-3); (I-232) + (S13-4): (I-232) + (S13-5); (I-232) + (S13-6); (I-232) + (S13-7); (I-232) + (S13-8); (I-232) + (S13-9); (I-232) + (S14-1)
(I-233) + (S1-1); (I-233) + (S1-2); (I-233) + (S1-3); (I-233) + (S1-4); (I-233) + (S1-5); (I-233) + (S1-6); (I-233) + (S1-7); (I-233) + (S1-8); (I-233) + (S1-9); (I-233) + (S1-10); (I-233) + (S1-11); (I-233) + (S1-12); (I-233) + (S1-13); (I-233) + (S2-1); (I-233) + (S2-2); (I-233) + (S2-3); (I-233) + (S2-4); (I-233) + (S2-5); (I-233) + (S2-6); (I-233) + (S2-7); (I-233) + (S2-8); (I-233) + (S2-9); (I-233) + (S2-10); (I-233) + (S3-1); (I-233) + (S3-2); (I-233) + (S3-3); (I-233) + (S3-4); (I-233) + (S3-5); (I-233) + (S3-6); (I-233) + (S3-7); (I-233) + (S3-8); (I-233) + (S3-9); (I-233) + (S3-10); (I-233) + (S3-11); (I-233) + (S4-1); (I-233) + (S4-2); (I-233) + (S4-3); (I-233) + (S4-4); (I-233) + (S4-5); (I-233) + (S7-1); (I-233) + (S11-1); (I-233) + (S11-2); (I-233) + (S11-3); (I-233) + (S12-1); (I-233) + (S13-1); (I-233) + (S13-2); (I-233) + (S13-3); (I-233) + (S13-4):(I-233) + (S13-5); (I-233) + (S13-6); (I-233) + (S13-7); (I-233) + (S13-8); (I-233) + (S13-9); (I-233) + (S14-1)
(I-234) + (S1-1); (I-234) + (S1-2); (I-234) + (S1-3); (I-234) + (S1-4); (I-234) + (S1-5); (I-234) + (S1-6); (I-234) + (S1-7); (I-234) + (S1-8); (I-234) + (S1-9); (I-234) + (S1-10); (I-234) + (S1-11); (I-234) + (S1-12); (I-234) + (S1-13); (I-234) + (S2-1); (I-234) + (S2-2); (I-234) + (S2-3); (I-234) + (S2-4); (I-234) + (S2-5); (I-234) + (S2-6); (I-234) + (S2-7); (I-234) + (S2-8); (I-234) + (S2-9); (I-234) + (S2-10); (I-234) + (S3-1); (I-234) + (S3-2); (I-234) + (S3-3); (I-234) + (S3-4); (I-234) + (S3-5); (I-234) + (S3-6); (I-234) + (S3-7); (I-234) + (S3-8); (I-234) + (S3-9); (I-234) + (S3-10); (I-234) + (S3-11); (I-234) + (S4-1); (I-234) + (S4-2); (I-234) + (S4-3); (I-234) + (S4-4); (I-234) + (S4-5); (I-234) + (S7-1); (I-234) + (S11-1); (I-234) + (S11-2); (I-234) + (S11-3); (I-234) + (S12-1); (I-234) + (S13-1); (I-234) + (S13-2); (I-234) + (S13-3); (I-234) + (S13-4): (I-234) + (S13-5); (I-234) + (S13-6); (I-234) + (S13-7); (I-234) + (S13-8); (I-234) + (S13-9); (I-234) + (S14-1)
(I-235) + (S1-1); (I-235) + (S1-2); (I-235) + (S1-3); (I-235) + (S1-4); (I-235) + (S1-5); (I-235) + (S1-6); (I-235) + (S1-7); (I-235) + (S1-8); (I-235) + (S1-9); (I-235) + (S1-10); (I-235) + (S1-11); (I-235) + (S1-12); (I-235) + (S1-13); (I-235) + (S2-1); (I-235) + (S2-2); (I-235) + (S2-3); (I-235) + (S2-4); (I-235) + (S2-5); (I-235) + (S2-6); (I-235) + (S2-7); (I-235) + (S2-8); (I-235) + (S2-9); (I-235) + (S2-10); (I-235) + (S3-1); (I-235) + (S3-2); (I-235) + (S3-3); (I-235) + (S3-4); (I-235) + (S3-5); (I-235) + (S3-6); (I-235) + (S3-7); (I-235) + (S3-8); (I-235) + (S3-9); (I-235) + (S3-10); (I-235) + (S3-11); (I-235) + (S4-1); (I-235) + (S4-2); (I-235) + (S4-3); (I-235) + (S4-4); (I-235) + (S4-5); (I-235) + (S7-1); (I-235) + (S11-1); (I-235) + (S11-2); (I-235) + (S11-3); (I-235) + (S12-1); (I-235) + (S13-1); (I-235) + (S13-2); (I-235) + (S13-3); (I-235) + (S13-4): (I-235) + (S13-5); (I-235) + (S13-6); (I-235) + (S13-7); (I-235) + (S13-8); (I-235) + (S13-9); (I-235) + (S14-1)
(I-236) + (S1-1); (I-236) + (S1-2); (I-236) + (S1-3); (I-236) + (S1-4); (I-236) + (S1-5); (I-236) + (S1-6); (I-236) + (S1-7); (I-236) + (S1-8); (I-236) + (S1-9); (I-236) + (S1-10); (I-236) + (S1-11); (I-236) + (S1-12); (I-236) + (S1-13); (I-236) + (S2-1); (I-236) + (S2-2); (I-236) + (S2-3); (I-236) + (S2-4); (I-236) + (S2-5); (I-236) + (S2-6); (I-236) + (S2-7); (I-236) + (S2-8); (I-236) + (S2-9); (I-236) + (S2-10); (I-236) + (S3-1); (I-236) + (S3-2); (I-236) + (S3-3); (I-236) + (S3-4); (I-236) + (S3-5); (I-236) + (S3-6); (I-236) + (S3-7); (I-236) + (S3-8); (I-236) + (S3-9); (I-236) + (S3-10); (I-236) + (S3-11); (I-236) + (S4-1); (I-236) + (S4-2); (I-236) + (S4-3); (I-236) + (S4-4); (I-236) + (S4-5); (I-236) + (S7-1); (I-236) + (S11-1); (I-236) + (S11-2); (I-236) + (S11-3); (I-236) + (S12-1); (I-236) + (S13-1); (I-236) + (S13-2); (I-236) + (S13-3); (I-236) + (S13-4): (I-236) + (S13-5); (I-236) + (S13-6); (I-236) + (S13-7); (I-236) + (S13-8); (I-236) + (S13-9); (I-236) + (S14-1)
(I-237) + (S1-1); (I-237) + (S1-2); (I-237) + (S1-3); (I-237) + (S1-4); (I-237) + (S1-5); (I-237) + (S1-6); (I-237) + (S1-7); (I-237) + (S1-8); (I-237) + (S1-9); (I-237) + (S1-10); (I-237) + (S1-11); (I-237) + (S1-12); (I-237) + (S1-13); (I-237) + (S2-1); (I-237) + (S2-2); (I-237) + (S2-3); (I-237) + (S2-4); (I-237) + (S2-5); (I-237) + (S2-6); (I-237) + (S2-7); (I-237) + (S2-8); (I-237) + (S2-9); (I-237) + (S2-10); (I-237) + (S3-1); (I-237) + (S3-2); (I-237) + (S3-3); (I-237) + (S3-4); (I-237) + (S3-5); (I-237) + (S3-6); (I-237) + (S3-7); (I-237) + (S3-8); (I-237) + (S3-9); (I-237) + (S3-10); (I-237) + (S3-11); (I-237) + (S4-1); (I-237) + (S4-2); (I-237) + (S4-3); (I-237) + (S4-4); (I-237) + (S4-5); (I-237) + (S7-1); (I-237) + (S11-1); (I-237) + (S11-2); (I-237) + (S11-3); (I-237) + (S12-1); (I-237) + (S13-1); (I-237) + (S13-2); (I-237) + (S13-3); (I-237) + (S13-4): (I-237) + (S13-5); (I-237) + (S13-6); (I-237) + (S13-7); (I-237) + (S13-8); (I-237) + (S13-9); (I-237) + (S14-1)
(I-238) + (S1-1); (I-238) + (S1-2); (I-238) + (S1-3); (I-238) + (S1-4); (I-238) + (S1-5); (I-238) + (S1-6); (I-238) + (S1-7); (I-238) + (S1-8); (I-238) + (S1-9); (I-238) + (S1-10); (I-238) + (S1-11); (I-238) + (S1-12); (I-238) + (S1-13); (I-238) + (S2-1); (I-238) + (S2-2); (I-238) + (S2-3); (I-238) + (S2-4); (I-238) + (S2-5); (I-238) + (S2-6); (I-238) + (S2-7); (I-238) + (S2-8); (I-238) + (S2-9); (I-238) + (S2-10); (I-238) + (S3-1); (I-238) + (S3-2); (I-238) + (S3-3); (I-238) + (S3-4); (I-238) + (S3-5); (I-238) + (S3-6); (I-238) + (S3-7); (I-238) + (S3-8); (I-238) + (S3-9); (I-238) + (S3-10); (I-238) + (S3-11); (I-238) + (S4-1); (I-238) + (S4-2); (I-238) + (S4-3); (I-238) + (S4-4); (I-238) + (S4-5); (I-238) + (S7-1); (I-238) + (S11 -1); (I-238) + (S11-2); (I-238) + (S11-3); (I-238) + (S12-1); (I-238) + (S13-1); (I-238) + (S13-2); (I-238) + (S13-3); (I-238) + (S13-4): (I-238) + (S13-5); (I-238) + (S13-6); (I-238) + (S13-7); (I-238) + (S13-8); (I-238) + (S13-9); (I-238) + (S14-1)
(I-239) + (S1-1); (I-239) + (S1-2); (I-239) + (S1-3); (I-239) + (S1-4); (I-239) + (S1-5); (I-239) + (S1-6); (I-239) + (S1-7); (I-239) + (S1-8); (I-239) + (S1-9); (I-239) + (S1-10); (I-239) + (S1-11); (I-239) + (S1-12); (I-239) + (S1-13); (I-239) + (S2-1); (I-239) + (S2-2); (I-239) + (S2-3); (I-239) + (S2-4); (I-239) + (S2-5); (I-239) + (S2-6); (I-239) + (S2-7); (I-239) + (S2-8); (I-239) + (S2-9); (I-239) + (S2-10); (I-239) + (S3-1); (I-239) + (S3-2); (I-239) + (S3-3); (I-239) + (S3-4); (I-239) + (S3-5); (I-239) + (S3-6); (I-239) + (S3-7); (I-239) + (S3-8); (I-239) + (S3-9); (I-239) + (S3-10); (I-239) + (S3-11); (I-239) + (S4-1); (I-239) + (S4-2); (I-239) + (S4-3); (I-239) + (S4-4); (I-239) + (S4-5); (I-239) + (S7-1); (I-239) + (S11-1); (I-239) + (S11-2); (I-239) + (S11-3); (I-239) + (S12-1); (I-239) + (S13-1); (I-239) + (S13-2); (I-239) + (S13-3); (I-239) + (S13-4): (I-239) + (S13-5); (I-239) + (S13-6); (I-239) + (S13-7); (I-239) + (S13-8); (I-239) + (S13-9); (I-239) + (S14-1)
(I-240) + (S1-1); (I-240) + (S1-2); (I-240) + (S1-3); (I-240) + (S1-4); (I-240) + (S1-5); (I-240) + (S1-6); (I-240) + (S1-7); (I-240) + (S1-8); (I-240) + (S1-9); (I-240) + (S1-10); (I-240) + (S1-11); (I-240) + (S1-12); (I-240) + (S1-13); (I-240) + (S2-1); (I-240) + (S2-2); (I-240) + (S2-3); (I-240) + (S2-4); (I-240) + (S2-5); (I-240) + (S2-6); (I-240) + (S2-7); (I-240) + (S2-8); (I-240) + (S2-9); (I-240) + (S2-10); (I-240) + (S3-1); (I-240) + (S3-2); (I-240) + (S3-3); (I-240) + (S3-4); (I-240) + (S3-5); (I-240) + (S3-6); (I-240) + (S3-7); (I-240) + (S3-8); (I-240) + (S3-9); (I-240) + (S3-10); (I-240) + (S3-11); (I-240) + (S4-1); (I-240) + (S4-2); (I-240) + (S4-3); (I-240) + (S4-4); (I-240) + (S4-5); (I-240) + (S7-1); (I-240) + (S11-1); (I-240) + (S11-2); (I-240) + (S11-3); (I-240) + (S12-1); (I-240) + (S13-1); (I-240) + (S13-2); (I-240) + (S13-3); (I-240) + (S13-4): (I-240) + (S13-5); (I-240) + (S13-6); (I-240) + (S13-7); (I-240) + (S13-8); (I-240) + (S13-9); (I-240) + (S14-1)
(I-241) + (S1-1); (I-241) + (S1-2); (I-241) + (S1-3); (I-241) + (S1-4); (I-241) + (S1-5); (I-241) + (S1-6); (I-241) + (S1-7); (I-241) + (S1-8); (I-241) + (S1-9); (I-241) + (S1-10); (I-241) + (S1-11); (I-241) + (S1-12); (I-241) + (S1-13); (I-241) + (S2-1); (I-241) + (S2-2); (I-241) + (S2-3); (I-241) + (S2-4); (I-241) + (S2-5); (I-241) + (S2-6); (I-241) + (S2-7); (I-241) + (S2-8); (I-241) + (S2-9); (I-241) + (S2-10); (I-241) + (S3-1); (I-241) + (S3-2); (I-241) + (S3-3); (I-241) + (S3-4); (I-241) + (S3-5); (I-241) + (S3-6); (I-241) + (S3-7); (I-241) + (S3-8); (I-241) + (S3-9); (I-241) + (S3-10); (I-241) + (S3-11); (I-241) + (S4-1); (I-241) + (S4-2); (I-241) + (S4-3); (I-241) + (S4-4); (I-241) + (S4-5); (I-241) + (S7-1); (I-241) + (S11-1); (I-241) + (S11-2); (I-241) + (S11-3); (I-241) + (S12-1); (I-241) + (S13-1); (I-241) + (S13-2); (I-241) + (S13-3); (I-241) + (S13-4): (I-241) + (S13-5); (I-241) + (S13-6); (I-241) + (S13-7); (I-241) + (S13-8); (I-241) + (S13-9); (I-241) + (S14-1)
(I-242) + (S1-1); (I-242) + (S1-2); (I-242) + (S1-3); (I-242) + (S1-4); (I-242) + (S1-5); (I-242) + (S1-6); (I-242) + (S1-7); (I-242) + (S1-8); (I-242) + (S1-9); (I-242) + (S1-10); (I-242) + (S1-11); (I-242) + (S1-12); (I-242) + (S1-13); (I-242) + (S2-1); (I-242) + (S2-2); (I-242) + (S2-3); (I-242) + (S2-4); (I-242) + (S2-5); (I-242) + (S2-6); (I-242) + (S2-7); (I-242) + (S2-8); (I-242) + (S2-9); (I-242) + (S2-10); (I-242) + (S3-1); (I-242) + (S3-2); (I-242) + (S3-3); (I-242) + (S3-4); (I-242) + (S3-5); (I-242) + (S3-6); (I-242) + (S3-7); (I-242) + (S3-8); (I-242) + (S3-9); (I-242) + (S3-10); (I-242) + (S3-11); (I-242) + (S4-1); (I-242) + (S4-2); (I-242) + (S4-3); (I-242) + (S4-4); (I-242) + (S4-5); (I-242) + (S7-1); (I-242) + (S11-1); (I-242) + (S11-2); (I-242) + (S11-3); (I-242) + (S12-1); (I-242) + (S13-1); (I-242) + (S13-2); (I-242) + (S13-3); (I-242) + (S13-4): (I-242) + (S13-5); (I-242) + (S13-6); (I-242) + (S13-7); (I-242) + (S13-8); (I-242) + (S13-9); (I-242) + (S14-1)
(I-243) + (S1-1); (I-243) + (S1-2); (I-243) + (S1-3); (I-243) + (S1-4); (I-243) + (S1-5); (I-243) + (S1-6); (I-243) + (S1-7); (I-243) + (S1-8); (I-243) + (S1-9); (I-243) + (S1-10); (I-243) + (S1-11); (I-243) + (S1-12); (I-243) + (SI-13); (I-243) + (S2-1); (I-243) + (S2-2); (I-243) + (S2-3); (I-243) + (S2-4); (I-243) + (S2-5); (I-243) + (S2-6); (I-243) + (S2-7); (I-243) + (S2-8); (I-243) + (S2-9); (I-243) + (S2-10); (I-243) + (S3-1); (I-243) + (53-2); (I-243) + (S3-3); (I-243) + (S3-4); (I-243) + (S3-5); (I-243) + (S3-6); (I-243) + (S3-7); (I-243) + (S3-8); (I-243) + (S3-9); (I-243) + (S3-10); (I-243) + (S3-11); (I-243) + (S4-1); (I-243) + (S4-2); (I-243) + (S4-3); (I-243) + (S4-4); (I-243) + (S4-5); (I-243) + (S7-1); (I-243) + (S11-1); (I-243) + (S11-2); (I-243) + (S11-3); (I-243) + (S12-1); (I-243) + (S13-1); (I-243) + (S13-2); (I-243) + (S13-3); (I-243) + (S13-4): (I-243) + (S13-5); (I-243) + (S13-6); (I-243) + (S13-7); (I-243) + (S13-8); (I-243) + (S13-9); (I-243) + (S14-1)
(I-244) + (S1-1); (I-244) + (S1-2); (I-244) + (S1-3); (I-244) + (S1-4); (I-244) + (S1-5); (I-244) + (S1-6); (I-244) + (S1-7); (I-244) + (S1-8); (I-244) + (S1-9); (I-244) + (S1-10); (I-244) + (S1-11); (I-244) + (S1-12); (I-244) + (S1-13); (I-244) + (S2-1); (I-244) + (S2-2); (I-244) + (S2-3); (I-244) + (S2-4); (I-244) + (S2-5); (I-244) + (S2-6); (I-244) + (S2-7); (I-244) + (S2-8); (I-244) + (S2-9); (I-244) + (S2-10); (I-244) + (S3-1); (I-244) + (S3-2); (I-244) + (S3-3); (I-244) + (S3-4); (I-244) + (S3-5); (I-244) + (S3-6); (I-244) + (S3-7); (I-244) + (S3-8); (I-244) + (S3-9); (I-244) + (S3-10); (I-244) + (S3-11); (I-244) + (S4-1); (I-244) + (S4-2); (I-244) + (S4-3); (I-244) + (S4-4); (I-244) + (S4-5); (I-244) + (S7-1); (I-244) + (S11-1); (I-244) + (S11-2); (I-244) + (S11-3); (I-244) + (S12-1); (I-244) + (S13-1); (I-244) + (S13-2); (I-244) + (S13-3); (I-244) + (S13-4): (I-244) + (S13-5); (I-244) + (S13-6); (I-244) + (S13-7); (I-244) + (S13-8); (I-244) + (S13-9); (I-244) + (S14-1)
(I-245) + (S1-1); (I-245) + (S1-2); (I-245) + (S1-3); (I-245) + (S1-4); (I-245) + (S1-5); (I-245) + (S1-6); (I-245) + (S1-7); (I-245) + (S1-8); (I-245) + (S1-9); (I-245) + (S1-10); (I-245) + (S1-11); (I-245) + (S1-12); (I-245) + (S1-13); (I-245) + (S2-1); (I-245) + (S2-2); (I-245) + (S2-3); (I-245) + (S2-4); (I-245) + (S2-5); (I-245) + (S2-6); (I-245) + (S2-7); (I-245) + (S2-8); (I-245) + (S2-9); (I-245) + (S2-10); (I-245) + (S3-1); (I-245) + (S3-2); (I-245) + (S3-3); (I-245) + (S3-4); (I-245) + (S3-5); (I-245) + (S3-6); (I-245) + (S3-7); (I-245) + (S3-8); (I-245) + (S3-9); (I-245) + (S3-10); (I-245) + (S3-11); (I-245) + (S4-1); (I-245) + (S4-2); (I-245) + (S4-3); (I-245) + (S4-4); (I-245) + (S4-5); (I-245) + (S7-1); (I-245) + (S11-1); (I-245) + (S11-2); (I-245) + (S11-3); (I-245) + (S12-1); (I-245) + (S13-1); (I-245) + (S13-2); (I-245) + (S13-3); (I-245) + (S13-4): (I-245) + (S13-5); (I-245) + (S13-6); (I-245) + (S13-7); (I-245) + (S13-8); (I-245) + (S13-9); (I-245) + (S14-1)
(I-246) + (S1-1); (I-246) + (S1-2); (I-246) + (S1-3); (I-246) + (S1-4); (I-246) + (S1-5); (I-246) + (S1-6); (I-246) + (S1-7); (I-246) + (S1-8); (I-246) + (S1-9); (I-246) + (S1-10); (I-246) + (S1-11); (I-246) + (S1-12); (I-246) + (S1-13); (I-246) + (S2-1); (I-246) + (S2-2); (I-246) + (S2-3); (I-246) + (S2-4); (I-246) + (S2-5); (I-246) + (S2-6); (I-246) + (S2-7); (I-246) + (S2-8); (I-246) + (S2-9); (I-246) + (S2-10); (I-246) + (S3-1); (I-246) + (S3-2); (I-246) + (S3-3); (I-246) + (S3-4); (I-246) + (S3-5); (I-246) + (S3-6); (I-246) + (S3-7); (I-246) + (S3-8); (I-246) + (S3-9); (I-246) + (S3-10); (I-246) + (S3-11); (I-246) + (S4-1); (I-246) + (S4-2); (I-246) + (S4-3); (I-246) + (S4-4); (I-246) + (S4-5); (I-246) + (S7-1); (I-246) + (S11-1); (I-246) + (S11-2); (I-246) + (S11-3); (I-246) + (S12-1); (I-246) + (S13-1); (I-246) + (S13-2); (I-246) + (S13-3); (I-246) + (S13-4): (I-246) + (S13-5); (I-246) + (S13-6); (I-246) + (S13-7); (I-246) + (S13-8); (I-246) + (S13-9); (I-246) + (S14-1)
(I-247) + (S1-1); (I-247) + (S1-2); (I-247) + (S1-3); (I-247) + (S1-4); (I-247) + (S1-5); (I-247) + (S1-6); (I-247) + (S1-7); (I-247) + (S1-8); (I-247) + (S1-9); (I-247) + (S1-10); (I-247) + (S1-11); (I-247) + (S1-12); (I-247) + (S1-13); (I-247) + (S2-1); (I-247) + (S2-2); (I-247) + (S2-3); (I-247) + (S2-4); (I-247) + (S2-5); (I-247) + (S2-6); (I-247) + (S2-7); (I-247) + (S2-8); (I-247) + (S2-9); (I-247) + (S2-10); (I-247) + (S3-1); (I-247) + (S3-2); (I-247) + (S3-3); (I-247) + (S3-4); (I-247) + (S3-5); (I-247) + (S3-6); (I-247) + (S3-7); (I-247) + (S3-8); (I-247) + (S3-9); (I-247) + (S3-10); (I-247) + (S3-11); (I-247) + (S4-1); (I-247) + (S4-2); (I-247) + (S4-3); (I-247) + (S4-4); (I-247) + (S4-5); (I-247) + (S7-1); (I-247) + (S11-1); (I-247) + (S11-2); (I-247) + (S11-3); (I-247) + (S12-1); (I-247) + (S13-1); (I-247) + (S13-2); (I-247) + (S13-3); (I-247) + (S13-4): (I-247) + (S13-5); (I-247) + (S13-6); (I-247) + (S13-7); (I-247) + (S13-8); (I-247) + (S13-9); (I-247) + (S14-1)
(I-248) + (S1-1); (I-248) + (S1-2); (I-248) + (S1-3); (I-248) + (S1-4); (I-248) + (S1-5); (I-248) + (S1-6); (I-248) + (S1-7); (I-248) + (S1-8); (I-248) + (S1-9); (I-248) + (S1-10); (I-248) + (S1-11); (I-248) + (S1-12); (I-248) + (S1-13); (I-248) + (S2-1); (I-248) + (S2-2); (I-248) + (S2-3); (I-248) + (S2-4); (I-248) + (S2-5); (I-248) + (S2-6); (I-248) + (S2-7); (I-248) + (S2-8); (I-248) + (S2-9); (I-248) + (S2-10); (I-248) + (S3-1); (I-248) + (S3-2); (I-248) + (S3-3); (I-248) + (S3-4); (I-248) + (S3-5); (I-248) + (S3-6); (I-248) + (S3-7); (I-248) + (S3-8); (I-248) + (S3-9); (I-248) + (S3-10); (I-248) + (S3-11); (I-248) + (S4-1); (I-248) + (S4-2); (I-248) + (S4-3); (I-248) + (S4-4); (I-248) + (S4-5); (I-248) + (S7-1); (I-248) + (S11-1); (I-248) + (S11-2); (I-248) + (S11-3); (I-248) + (S12-1); (I-248) + (S13-1); (I-248) + (S13-2); (I-248) + (S13-3); (I-248) + (S13-4): (I-248) + (S13-5); (I-248) + (S13-6); (I-248) + (S13-7); (I-248) + (S13-8); (I-248) + (S13-9); (I-248) + (S14-1)
(I-249) + (S1-1); (I-249) + (S1-2); (I-249) + (S1-3); (I-249) + (S1-4); (I-249) + (S1-5); (I-249) + (S1-6); (I-249) + (S1-7); (I-249) + (S1-8); (I-249) + (S1-9); (I-249) + (S1-10); (I-249) + (S1-11); (I-249) + (S1-12); (I-249) + (S1-13); (I-249) + (S2-1); (I-249) + (S2-2); (I-249) + (S2-3); (I-249) + (S2-4); (I-249) + (S2-5); (I-249) + (S2-6); (I-249) + (S2-7); (I-249) + (S2-8); (I-249) + (S2-9); (I-249) + (S2-10); (I-249) + (S3-1); (I-249) + (S3-2); (I-249) + (53-3); (I-249) + (S3-4); (I-249) + (S3-5); (I-249) + (S3-6); (I-249) + (S3-7); (I-249) + (S3-8); (I-249) + (S3-9); (I-249) + (S3-10); (I-249) + (S3-11); (I-249) + (S4-1); (I-249) + (S4-2); (I-249) + (S4-3); (I-249) + (S4-4); (I-249) + (S4-5); (I-249) + (S7-1); (I-249) + (S11-1); (I-249) + (S11-2); (I-249) + (S11-3); (I-249) + (S12-1); (I-249) + (S13-1); (I-249) + (S13-2); (I-249) + (S13-3); (I-249) + (S13-4): (I-249) + (S13-5); (I-249) + (S13-6); (I-249) + (S13-7); (I-249) + (S13-8); (I-249) + (S13-9); (I-249) + (S14-1)
(I-250) + (S1-1); (I-250) + (S1-2); (I-250) + (S1-3); (I-250) + (S1-4); (I-250) + (S1-5); (I-250) + (S1-6); (I-250) + (S1-7); (I-250) + (S1-8); (I-250) + (S1-9); (I-250) + (S1-10); (I-250) + (S1-11); (I-250) + (S1-12); (I-250) + (S1-13); (I-250) + (S2-1); (I-250) + (S2-2); (I-250) + (S2-3); (I-250) + (S2-4); (I-250) + (S2-5); (I-250) + (S2-6); (I-250) + (S2-7); (I-250) + (S2-8); (I-250) + (S2-9); (I-250) + (S2-10); (I-250) + (S3-1); (I-250) + (S3-2); (I-250) + (S3-3); (I-250) + (S3-4); (I-250) + (S3-5); (I-250) + (S3-6); (I-250) + (S3-7); (I-250) + (S3-8); (I-250) + (S3-9); (I-250) + (S3-10); (I-250) + (S3-11); (I-250) + (S4-1); (I-250) + (S4-2); (I-250) + (S4-3); (I-250) + (S4-4); (I-250) + (S4-5); (I-250) + (S7-1); (I-250) + (S11 -1); (I-250) + (S11-2); (I-250) + (S11-3); (I-250) + (S12-1); (I-250) + (S13-1); (I-250) + (S13-2); (I-250) + (S13-3); (I-250) + (S13-4): (I-250) + (S13-5); (I-250) + (S13-6); (I-250) + (S13-7); (I-250) + (S13-8); (I-250) + (S13-9); (I-250) + (S14-1)
(I-251) + (S1-1); (I-251) + (S1-2); (I-251) + (S1-3); (I-251) + (S1-4); (I-251) + (S1-5); (I-251) + (S1-6); (I-251) + (S1-7); (I-251) + (S1-8); (I-251) + (S1-9); (I-251) + (S1-10); (I-251) + (S1-11); (I-251) + (S1-12); (I-251) + (S1-13); (I-251) + (S2-1); (I-251) + (S2-2); (I-251) + (S2-3); (I-251) + (S2-4); (I-251) + (S2-5); (I-251) + (S2-6); (I-251) + (S2-7); (I-251) + (S2-8); (I-251) + (S2-9); (I-251) + (S2-10); (I-251) + (S3-1); (I-251) + (S3-2); (I-251) + (S3-3); (I-251) + (S3-4); (I-251) + (S3-5); (I-251) + (S3-6); (I-251) + (S3-7); (I-251) + (S3-8); (I-251) + (S3-9); (I-251) + (S3-10); (I-251) + (S3-11); (I-251) + (S4-1); (I-251) + (S4-2); (I-251) + (S4-3); (I-251) + (S4-4); (I-251) + (S4-5); (I-251) + (S7-1); (I-251) + (S11-1); (I-251) + (S11-2); (I-251) + (S11-3); (I-251) + (S12-1); (I-251) + (S13-1); (I-251) + (S13-2); (I-251) + (S13-3); (I-251) + (S13-4): (I-251) + (S13-5); (I-251) + (S13-6); (I-251) + (S13-7); (I-251) + (S13-8); (I-251) + (S13-9); (I-251) + (S14-1)
(I-252) + (S1-1); (I-252) + (S1-2); (I-252) + (S1-3); (I-252) + (S1-4); (I-252) + (S1-5); (I-252) + (S1-6); (I-252) + (S1-7); (I-252) + (S1-8); (I-252) + (S1-9); (I-252) + (S1-10); (I-252) + (S1-11); (I-252) + (S1-12); (I-252) + (S1-13); (I-252) + (S2-1); (I-252) + (S2-2); (I-252) + (S2-3); (I-252) + (S2-4); (I-252) + (S2-5); (I-252) + (S2-6); (I-252) + (S2-7); (I-252) + (S2-8); (I-252) + (S2-9); (I-252) + (S2-10); (I-252) + (S3-1); (I-252) + (S3-2); (I-252) + (S3-3); (I-252) + (S3-4); (I-252) + (S3-5); (I-252) + (S3-6); (I-252) + (S3-7); (I-252) + (S3-8); (I-252) + (S3-9); (I-252) + (S3-10); (I-252) + (S3-11); (I-252) + (S4-1); (I-252) + (S4-2); (I-252) + (S4-3); (I-252) + (S4-4); (I-252) + (S4-5); (I-252) + (S7-1); (I-252) + (S11-1); (I-252) + (S11-2); (I-252) + (S11-3); (I-252) + (S12-1); (I-252) + (S13-1); (I-252) + (S13-2); (I-252) + (S13-3); (I-252) + (S13-4): (I-252) + (S13-5); (I-252) + (S13-6); (I-252) + (S13-7); (I-252) + (S13-8); (I-252) + (S13-9); (I-252) + (S14-1)
(I-253) + (S1-1); (I-253) + (S1-2); (I-253) + (S1-3); (I-253) + (S1-4); (I-253) + (S1-5); (I-253) + (S1-6); (I-253) + (S1-7); (I-253) + (S1-8); (I-253) + (S1-9); (I-253) + (S1-10); (I-253) + (S1-11); (I-253) + (S1-12); (I-253) + (S1-13); (I-253) + (S2-1); (I-253) + (S2-2); (I-253) + (S2-3); (I-253) + (S2-4); (I-253) + (S2-5); (I-253) + (S2-6); (I-253) + (S2-7); (I-253) + (S2-8); (I-253) + (S2-9); (I-253) + (S2-10); (I-253) + (S3-1); (I-253) + (S3-2); (I-253) + (S3-3); (I-253) + (S3-4); (I-253) + (S3-5); (I-253) + (S3-6); (I-253) + (S3-7); (I-253) + (S3-8); (I-253) + (S3-9); (I-253) + (S3-10); (I-253) + (S3-11); (I-253) + (S4-1); (I-253) + (S4-2); (I-253) + (S4-3); (I-253) + (S4-4); (I-253) + (S4-5); (I-253) + (S7-1); (I-253) + (S11-1); (I-253) + (S11-2); (I-253) + (S11-3); (I-253) + (S12-1); (I-253) + (S13-1); (I-253) + (S13-2); (I-253) + (S13-3); (I-253) + (S13-4): (I-253) + (S13-5); (I-253) + (S13-6); (I-253) + (S13-7); (I-253) + (S13-8); (I-253) + (S13-9); (I-253) + (S14-1)
(I-254) + (S1-1); (I-254) + (S1-2); (I-254) + (S1-3); (I-254) + (S1-4); (I-254) + (S1-5); (I-254) + (S1-6); (I-254) + (S1-7); (I-254) + (S1-8); (I-254) + (S1-9); (I-254) + (S1-10); (I-254) + (S1-11); (I-254) + (S1-12); (I-254) + (S1-13); (I-254) + (S2-1); (I-254) + (S2-2); (I-254) + (S2-3); (I-254) + (S2-4); (I-254) + (S2-5); (I-254) + (S2-6); (I-254) + (S2-7); (I-254) + (S2-8); (I-254) + (S2-9); (I-254) + (S2-10); (I-254) + (S3-1); (I-254) + (S3-2); (I-254) + (S3-3); (I-254) + (S3-4); (I-254) + (S3-5); (I-254) + (S3-6); (I-254) + (S3-7); (I-254) + (S3-8); (I-254) + (S3-9); (I-254) + (S3-10); (I-254) + (S3-11); (I-254) + (S4-1); (I-254) + (S4-2); (I-254) + (S4-3); (I-254) + (S4-4); (I-254) + (S4-5); (I-254) + (S7-1); (I-254) + (S11-1); (I-254) + (S11-2); (I-254) + (S11-3); (I-254) + (S12-1); (I-254) + (S13-1); (I-254) + (S13-2); (I-254) + (S13-3); (I-254) + (S13-4): (I-254) + (S13-5); (I-254) + (S13-6); (I-254) + (S13-7); (I-254) + (S13-8); (I-254) + (S13-9); (I-254) + (S14-1)
(I-255) + (S1-1); (I-255) + (S1-2); (I-255) + (S1-3); (I-255) + (S1-4); (I-255) + (S1-5); (I-255) + (S1-6); (I-255) + (S1-7); (I-255) + (S1-8); (I-255) + (S1-9); (I-255) + (S1-10); (I-255) + (S1-11); (I-255) + (S1-12); (I-255) + (S1-13); (I-255) + (S2-1); (I-255) + (S2-2); (I-255) + (S2-3); (I-255) + (S2-4); (I-255) + (S2-5); (I-255) + (S2-6); (I-255) + (S2-7); (I-255) + (S2-8); (I-255) + (S2-9); (I-255) + (S2-10); (I-255) + (S3-1); (I-255) + (S3-2); (I-255) + (S3-3); (I-255) + (S3-4); (I-255) + (S3-5); (I-255) + (S3-6); (I-255) + (S3-7); (I-255) + (S3-8); (I-255) + (S3-9); (I-255) + (S3-10); (I-255) + (S3-11); (I-255) + (S4-1); (I-255) + (S4-2); (I-255) + (S4-3); (I-255) + (S4-4); (I-255) + (S4-5); (I-255) + (S7-1); (I-255) + (S11-1); (I-255) + (S11-2); (I-255) + (S11-3); (I-255) + (S12-1); (I-255) + (S13-1); (I-255) + (S13-2); (I-255) + (S13-3); (I-255) + (S13-4): (I-255) + (S13-5); (I-255) + (S13-6); (I-255) + (S13-7); (I-255) + (S13-8); (I-255) + (S13-9); (I-255) + (S14-1)
(I-256) + (S1-1); (I-256) + (S1-2); (I-256) + (S1-3); (I-256) + (S1-4); (I-256) + (S1-5); (I-256) + (S1-6); (I-256) + (S1-7); (I-256) + (S1-8); (I-256) + (S1-9); (I-256) + (S1-10); (I-256) + (S1-11); (I-256) + (S1-12); (I-256) + (S1-13); (I-256) + (S2-1); (I-256) + (S2-2); (I-256) + (S2-3); (I-256) + (S2-4); (I-256) + (S2-5); (I-256) + (S2-6); (I-256) + (S2-7); (I-256) + (S2-8); (I-256) + (S2-9); (I-256) + (S2-10); (I-256) + (S3-1); (I-256) + (S3-2); (I-256) + (S3-3); (I-256) + (S3-4); (I-256) + (S3-5); (I-256) + (S3-6); (I-256) + (S3-7); (I-256) + (S3-8); (I-256) + (S3-9); (I-256) + (S3-10); (I-256) + (S3-11); (I-256) + (S4-1); (I-256) + (S4-2); (I-256) + (S4-3); (I-256) + (S4-4); (I-256) + (S4-5); (I-256) + (S7-1); (I-256) + (S11-1); (I-256) + (S11-2); (I-256) + (S11-3); (I-256) + (S12-1); (I-256) + (S13-1); (I-256) + (S13-2); (I-256) + (S13-3); (I-256) + (S13-4): (I-256) + (S13-5); (I-256) + (S13-6); (I-256) + (S13-7); (I-256) + (S13-8); (I-256) + (S13-9); (I-256) + (S14-1)
(I-257) + (S1-1); (I-257) + (S1-2); (I-257) + (S1-3); (I-257) + (S1-4); (I-257) + (S1-5); (I-257) + (S1-6); (I-257) + (S1-7); (I-257) + (S1-8); (I-257) + (S1-9); (I-257) + (S1-10); (I-257) + (S1-11); (I-257) + (S1-12); (I-257) + (S1-13); (I-257) + (S2-1); (I-257) + (S2-2); (I-257) + (S2-3); (I-257) + (S2-4); (I-257) + (S2-5); (I-257) + (S2-6); (I-257) + (S2-7); (I-257) + (S2-8); (I-257) + (S2-9); (I-257) + (S2-10); (I-257) + (S3-1); (I-257) + (S3-2); (I-257) + (S3-3); (I-257) + (S3-4); (I-257) + (S3-5); (I-257) + (S3-6); (I-257) + (S3-7); (I-257) + (S3-8); (I-257) + (S3-9); (I-257) + (S3-10); (I-257) + (S3-11); (I-257) + (S4-1); (I-257) + (S4-2); (I-257) + (S4-3); (I-257) + (S4-4); (I-257) + (S4-5); (I-257) + (S7-1); (I-257) + (S11-1); (I-257) + (S11-2); (I-257) + (S11-3); (I-257) + (S12-1); (I-257) + (S13-1); (I-257) + (S13-2); (I-257) + (S13-3); (I-257) + (S13-4): (I-257) + (S13-5); (I-257) + (S13-6); (I-257) + (S13-7); (I-257) + (S13-8); (I-257) + (S13-9); (I-257) + (S14-1)
(I-258) + (S1-1); (I-258) + (S1-2); (I-258) + (S1-3); (I-258) + (S1-4); (I-258) + (S1-5); (I-258) + (S1-6); (I-258) + (S1-7); (I-258) + (S1-8); (I-258) + (S1-9); (I-258) + (S1-10); (I-258) + (S1-11); (I-258) + (S1-12); (I-258) + (S1-13); (I-258) + (S2-1); (I-258) + (S2-2); (I-258) + (S2-3); (I-258) + (S2-4); (I-258) + (S2-5); (I-258) + (S2-6); (I-258) + (S2-7); (I-258) + (S2-8); (I-258) + (S2-9); (I-258) + (S2-10); (I-258) + (S3-1); (I-258) + (S3-2); (I-258) + (S3-3); (I-258) + (S3-4); (I-258) + (S3-5); (I-258) + (S3-6); (I-258) + (S3-7); (I-258) + (S3-8); (I-258) + (S3-9); (I-258) + (S3-10); (I-258) + (S3-11); (I-258) + (S4-1); (I-258) + (S4-2); (I-258) + (S4-3); (I-258) + (S4-4); (I-258) + (S4-5); (I-258) + (S7-1); (I-258) + (S11-1); (I-258) + (S11-2); (I-258) + (S11-3); (I-258) + (S12-1); (I-258) + (S13-1); (I-258) + (S13-2); (I-258) + (S13-3); (I-258) + (S13-4): (I-258) + (S13-5); (I-258) + (S13-6); (I-258) + (S13-7); (I-258) + (S13-8); (I-258) + (S13-9); (I-258) + (S14-1)
(I-259) + (S1-1); (I-259) + (S1-2); (I-259) + (S1-3); (I-259) + (S1-4); (I-259) + (S1-5); (I-259) + (S1-6); (I-259) + (S1-7); (I-259) + (S1-8); (I-259) + (S1-9); (I-259) + (S1-10); (I-259) + (S1 -11); (I-259) + (S1-12); (I-259) + (S1-13); (I-259) + (S2-1); (I-259) + (S2-2); (I-259) + (S2-3); (I-259) + (S2-4); (I-259) + (S2-5); (I-259) + (S2-6); (I-259) + (S2-7); (I-259) + (S2-8); (I-259) + (S2-9); (I-259) + (S2-10); (I-259) + (S3-1); (I-259) + (S3-2); (I-259) + (S3-3); (I-259) + (S3-4); (I-259) + (S3-5); (I-259) + (S3-6); (I-259) + (S3-7); (I-259) + (S3-8); (I-259) + (S3-9); (I-259) + (S3-10); (I-259) + (S3-11); (I-259) + (S4-1); (I-259) + (S4-2); (I-259) + (S4-3); (I-259) + (S4-4); (I-259) + (S4-5); (I-259) + (S7-1); (I-259) + (S11-1); (I-259) + (S11-2); (I-259) + (S11-3); (I-259) + (S12-1); (I-259) + (S13-1); (I-259) + (S13-2); (I-259) + (S13-3); (I-259) + (S13-4): (I-259) + (S13-5); (I-259) + (S13-6); (I-259) + (S13-7); (I-259) + (S13-8); (I-259) + (S13-9); (I-259) + (S14-1)
(I-260) + (S1-1); (I-260) + (S1-2); (I-260) + (S1-3); (I-260) + (S1-4); (I-260) + (S1-5); (I-260) + (S1-6); (I-260) + (S1-7); (I-260) + (S1-8); (I-260) + (S1-9); (I-260) + (S1-10); (I-260) + (S1-11); (I-260) + (S1-12); (I-260) + (S1-13); (I-260) + (S2-1); (I-260) + (S2-2); (I-260) + (S2-3); (I-260) + (S2-4); (I-260) + (S2-5); (I-260) + (S2-6); (I-260) + (S2-7); (I-260) + (S2-8); (I-260) + (S2-9); (I-260) + (S2-10); (I-260) + (S3-1); (I-260) + (S3-2); (I-260) + (S3-3); (I-260) + (S3-4); (I-260) + (S3-5); (I-260) + (S3-6); (I-260) + (S3-7); (I-260) + (S3-8); (I-260) + (S3-9); (I-260) + (S3-10); (I-260) + (S3-11); (I-260) + (S4-1); (I-260) + (S4-2); (I-260) + (S4-3); (I-260) + (S4-4); (I-260) + (S4-5); (I-260) + (S7-1); (I-260) + (S11-1); (I-260) + (S11-2); (I-260) + (S11-3); (I-260) + (S12-1); (I-260) + (S13-1); (I-260) + (S13-2); (I-260) + (S13-3); (I-260) + (S13-4): (I-260) + (S13-5); (I-260) + (S13-6); (I-260) + (S13-7); (I-260) + (S13-8); (I-260) + (S13-9); (I-260) + (S14-1)
(I-261) + (S1-1); (I-261) + (S1-2); (I-261) + (S1-3); (I-261) + (S1-4); (I-261) + (S1-5); (I-261) + (S1-6); (I-261) + (S1-7); (I-261) + (S1-8); (I-261) + (S1-9); (I-261) + (S1-10); (I-261) + (S1-11 ); (I-261) + (S1-12); (I-261) + (S1-13); (I-261) + (S2-1); (I-261) + (S2-2); (I-261) + (S2-3); (I-261) + (S2-4); (I-261) + (S2-5); (I-261) + (S2-6); (I-261) + (S2-7); (I-261) + (S2-8); (I-261) + (S2-9); (I-261) + (S2-10); (I-261) + (S3-1); (I-261) + (S3-2); (I-261) + (S3-3); (I-261) + (S3-4); (I-261) + (S3-5); (I-261) + (S3-6); (I-261) + (S3-7); (I-261) + (S3-8); (I-261) + (S3-9); (I-261) + (S3-10); (I-261) + (S3-11); (I-261) + (S4-1); (I-261) + (S4-2); (I-261) + (S4-3); (I-261) + (S4-4); (I-261) + (S4-5); (I-261) + (S7-1); (I-261) + (S11-1); (I-261) + (S11-2); (I-261) + (S11-3); (I-261) + (S12-1); (I-261) + (S13-1); (I-261) + (S13-2); (I-261) + (S13-3); (I-261) + (S13-4): (I-261) + (S13-5); (I-261) + (S13-6); (I-261) + (S13-7); (I-261) + (S13-8); (I-261) + (S13-9); (I-261) + (S14-1)
(I-262) + (S1-1); (I-262) + (S1-2); (I-262) + (S1-3); (I-262) + (S1-4); (I-262) + (S1-5); (I-262) + (S1-6); (I-262) + (S1-7); (I-262) + (S1-8); (I-262) + (S1-9); (I-262) + (S1-10); (I-262) + (S1-11); (I-262) + (S1-12); (I-262) + (S1-13); (I-262) + (S2-1); (I-262) + (S2-2); (I-262) + (S2-3); (I-262) + (S2-4); (I-262) + (S2-5); (I-262) + (S2-6); (I-262) + (S2-7); (I-262) + (S2-8); (I-262) + (S2-9); (I-262) + (S2-10); (I-262) + (S3-1); (I-262) + (S3-2); (I-262) + (S3-3); (I-262) + (S3-4); (I-262) + (S3-5); (I-262) + (S3-6); (I-262) + (S3-7); (I-262) + (S3-8); (I-262) + (S3-9); (I-262) + (S3-10); (I-262) + (S3-11); (I-262) + (S4-1); (I-262) + (S4-2); (I-262) + (S4-3); (I-262) + (S4-4); (I-262) + (S4-5); (I-262) + (S7-1); (I-262) + (S11-1); (I-262) + (S11-2); (I-262) + (S11-3); (I-262) + (S12-1); (I-262) + (S13-1); (I-262) + (S13-2); (I-262) + (S13-3); (I-262) + (S13-4): (I-262) + (S13-5); (I-262) + (S13-6); (I-262) + (S13-7); (I-262) + (S13-8); (I-262) + (S13-9); (I-262) + (S14-1)
(I-263) + (S1-1); (I-263) + (S1-2); (I-263) + (S1-3); (I-263) + (S1-4); (I-263) + (S1-5); (I-263) + (S1-6); (I-263) + (S1-7); (I-263) + (S1-8); (I-263) + (S1-9); (I-263) + (S1-10); (I-263) + (S1-11); (I-263) + (S1-12); (I-263) + (S1-13); (I-263) + (S2-1); (I-263) + (S2-2); (I-263) + (S2-3); (I-263) + (S2-4); (I-263) + (S2-5); (I-263) + (S2-6); (I-263) + (S2-7); (I-263) + (S2-8); (I-263) + (S2-9); (I-263) + (S2-10); (I-263) + (S3-1); (I-263) + (S3-2); (I-263) + (S3-3); (I-263) + (S3-4); (I-263) + (S3-5); (I-263) + (S3-6); (I-263) + (S3-7); (I-263) + (S3-8); (I-263) + (S3-9); (I-263) + (S3-10); (I-263) + (S3-11); (I-263) + (S4-1); (I-263) + (S4-2); (I-263) + (S4-3); (I-263) + (S4-4); (I-263) + (S4-5); (I-263) + (S7-1); (I-263) + (S11-1); (I-263) + (S11-2); (I-263) + (S11-3); (I-263) + (S12-1); (I-263) + (S13-1); (I-263) + (S13-2); (I-263) + (S13-3); (I-263) + (S13-4): (I-263) + (S13-5); (I-263) + (S13-6); (I-263) + (S13-7); (I-263) + (S13-8); (I-263) + (S13-9); (I-263) + (S14-1)
(I-264) + (S1-1); (I-264) + (S1-2); (I-264) + (S1-3); (I-264) + (S1-4); (I-264) + (S1-5); (I-264) + (S1-6); (I-264) + (S1-7); (I-264) + (S1-8); (I-264) + (S1-9); (I-264) + (S1-10); (I-264) + (S1-11); (I-264) + (S1-12); (I-264) + (S1-13); (I-264) + (S2-1); (I-264) + (S2-2); (I-264) + (S2-3); (I-264) + (S2-4); (I-264) + (S2-5); (I-264) + (S2-6); (I-264) + (S2-7); (I-264) + (S2-8); (I-264) + (S2-9); (I-264) + (S2-10); (I-264) + (S3-1); (I-264) + (S3-2); (I-264) + (S3-3); (I-264) + (S3-4); (I-264) + (S3-5); (I-264) + (S3-6); (I-264) + (S3-7); (I-264) + (S3-8); (I-264) + (S3-9); (I-264) + (S3-10); (I-264) + (S3-11); (I-264) + (S4-1); (I-264) + (S4-2); (I-264) + (S4-3); (I-264) + (S4-4); (I-264) + (S4-5); (I-264) + (S7-1); (I-264) + (S11-1); (I-264) + (S11-2); (I-264) + (S11-3); (I-264) + (S12-1); (I-264) + (S13-1); (I-264) + (S13-2); (I-264) + (S13-3); (I-264) + (S13-4): (I-264) + (S13-5); (I-264) + (S13-6); (I-264) + (S13-7); (I-264) + (S13-8); (I-264) + (S13-9); (I-264) + (S14-1)
(I-265) + (S1-1); (I-265) + (S1-2); (I-265) + (S1-3); (I-265) + (S1-4); (I-265) + (S1-5); (I-265) + (S1-6); (I-265) + (S1-7); (I-265) + (S1-8); (I-265) + (S1-9); (I-265) + (S1-10); (I-265) + (S1-11); (I-265) + (S1-12); (I-265) + (S1-13); (I-265) + (S2-1); (I-265) + (S2-2); (I-265) + (S2-3); (I-265) + (S2-4); (I-265) + (S2-5); (I-265) + (S2-6); (I-265) + (S2-7); (I-265) + (S2-8); (I-265) + (S2-9); (I-265) + (S2-10); (I-265) + (S3-1); (I-265) + (S3-2); (I-265) + (S3-3); (I-265) + (S3-4); (I-265) + (S3-5); (I-265) + (S3-6); (I-265) + (S3-7); (I-265) + (S3-8); (I-265) + (S3-9); (I-265) + (S3-10); (I-265) + (S3-11); (I-265) + (S4-1); (I-265) + (S4-2); (I-265) + (S4-3); (I-265) + (S4-4); (I-265) + (S4-5); (I-265) + (S7-1); (I-265) + (S11-1); (I-265) + (S11-2); (I-265) + (S11-3); (I-265) + (S12-1); (I-265) + (S13-1); (I-265) + (S13-2); (I-265) + (S13-3); (I-265) + (S13-4): (I-265) + (S13-5); (I-265) + (S13-6); (I-265) + (S13-7); (I-265) + (S13-8); (I-265) + (S13-9); (I-265) + (S14-1)
(I-266) + (S1-1); (I-266) + (S1-2); (I-266) + (S1-3); (I-266) + (S1-4); (I-266) + (S1-5); (I-266) + (S1-6); (I-266) + (S1-7); (I-266) + (SI-8); (I-266) + (S1-9); (I-266) + (S1-10); (I-266) + (S1-11); (I-266) + (S1-12); (I-266) + (S1-13); (I-266) + (S2-1); (I-266) + (S2-2); (I-266) + (S2-3); (I-266) + (S2-4); (I-266) + (S2-5); (I-266) + (S2-6); (I-266) + (S2-7); (I-266) + (S2-8); (I-266) + (S2-9); (I-266) + (S2-10); (I-266) + (S3-1); (I-266) + (S3-2); (I-266) + (S3-3); (I-266) + (S3-4); (I-266) + (S3-5); (I-266) + (S3-6); (I-266) + (S3-7); (I-266) + (S3-8); (I-266) + (S3-9); (I-266) + (S3-10); (I-266) + (S3-11); (I-266) + (S4-1); (I-266) + (S4-2); (I-266) + (S4-3); (I-266) + (S4-4); (I-266) + (S4-5); (I-266) + (S7-1); (I-266) + (S11-1); (I-266) + (S11-2); (I-266) + (S11-3); (I-266) + (S12-1); (I-266) + (S13-1); (I-266) + (S13-2); (I-266) + (S13-3); (I-266) + (S13-4): (I-266) + (S13-5); (I-266) + (S13-6); (I-266) + (S13-7); (I-266) + (S13-8); (I-266) + (S13-9); (I-266) + (S14-1)
(I-267) + (S1-1); (I-267) + (S1-2); (I-267) + (S1-3); (I-267) + (S1-4); (I-267) + (S1-5); (I-267) + (S1-6); (I-267) + (S1-7); (I-267) + (S1-8); (I-267) + (S1-9); (I-267) + (S1-10); (I-267) + (S1-11); (I-267) + (S1-12); (I-267) + (S1-13); (I-267) + (S2-1); (I-267) + (S2-2); (I-267) + (S2-3); (I-267) + (S2-4); (I-267) + (S2-5); (I-267) + (S2-6); (I-267) + (S2-7); (I-267) + (S2-8); (I-267) + (S2-9); (I-267) + (S2-10); (I-267) + (S3-1); (I-267) + (S3-2); (I-267) + (S3-3); (I-267) + (S3-4); (I-267) + (S3-5); (I-267) + (S3-6); (I-267) + (S3-7); (I-267) + (S3-8); (I-267) + (S3-9); (I-267) + (S3-10); (I-267) + (S3-11); (I-267) + (S4-1); (I-267) + (S4-2); (I-267) + (S4-3); (I-267) + (S4-4); (I-267) + (S4-5); (I-267) + (S7-1); (I-267) + (S11-1); (I-267) + (S11-2); (I-267) + (S11-3); (I-267) + (S12-1); (I-267) + (S13-1); (I-267) + (S13-2); (I-267) + (S13-3); (I-267) + (S13-4): (I-267) + (S13-5); (I-267) + (S13-6); (I-267) + (S13-7); (I-267) + (S13-8); (I-267) + (S13-9); (I-267) + (S14-1)
(I-268) + (S1-1); (I-268) + (S1-2); (I-268) + (S1-3); (I-268) + (S1-4); (I-268) + (S1-5); (I-268) + (S1-6); (I-268) + (S1-7); (I-268) + (S1-8); (I-268) + (S1-9); (I-268) + (S1-10); (I-268) + (S1-11); (I-268) + (S1-12); (I-268) + (S1-13); (I-268) + (S2-1); (I-268) + (S2-2); (I-268) + (S2-3); (I-268) + (S2-4); (I-268) + (S2-5); (I-268) + (S2-6); (I-268) + (S2-7); (I-268) + (S2-8); (I-268) + (S2-9); (I-268) + (S2-10); (I-268) + (S3-1); (I-268) + (S3-2); (I-268) + (S3-3); (I-268) + (S3-4); (I-268) + (S3-5); (I-268) + (S3-6); (I-268) + (S3-7); (I-268) + (S3-8); (I-268) + (S3-9); (I-268) + (S3-10); (I-268) + (S3-11); (I-268) + (S4-1); (I-268) + (S4-2); (I-268) + (S4-3); (I-268) + (S4-4); (I-268) + (S4-5); (I-268) + (S7-1); (I-268) + (S11-1); (I-268) + (S11-2); (I-268) + (S11-3); (I-268) + (S12-1); (I-268) + (S13-1); (I-268) + (S13-2); (I-268) + (S13-3); (I-268) + (S13-4): (I-268) + (S13-5); (I-268) + (S13-6); (I-268) + (S13-7); (I-268) + (S13-8); (I-268) + (S13-9); (I-268) + (S14-1)
(I-269) + (S1-1); (I-269) + (S1-2); (I-269) + (S1-3); (I-269) + (S1-4); (I-269) + (S1-5); (I-269) + (S1-6); (I-269) + (S1-7); (I-269) + (S1-8); (I-269) + (S1-9); (I-269) + (S1-10); (I-269) + (S1-11); (I-269) + (S1-12); (I-269) + (S1-13); (i-269) + (S2-1); (I-269) + (S2-2); (I-269) + (S2-3); (I-269) + (S2-4); (I-269) + (S2-5); (I-269) + (S2-6); (I-269) + (S2-7); (I-269) + (S2-8); (I-269) + (S2-9); (I-269) + (S2-10); (I-269) + (S3-1); (I-269) + (S3-2); (I-269) + (S3-3); (I-269) + (S3-4); (I-269) + (S3-5); (I-269) + (S3-6); (I-269) + (S3-7); (I-269) + (S3-8); (I-269) + (S3-9); (I-269) + (S3-10); (I-269) + (S3-11); (I-269) + (S4-1); (I-269) + (S4-2); (I-269) + (S4-3); (I-269) + (S4-4); (I-269) + (S4-5); (I-269) + (S7-1); (I-269) + (S11-1); (I-269) + (S11-2); (I-269) + (S11-3); (I-269) + (S12-1); (I-269) + (S13-1); (I-269) + (S13-2); (I-269) + (S13-3); (I-269) + (S13-4): (I-269) + (S13-5); (I-269) + (S13-6); (I-269) + (S13-7); (I-269) + (S13-8); (I-269) + (S13-9); (I-269) + (S14-1)
(I-270) + (S1-1); (I-270) + (S1-2); (I-270) + (S1-3); (I-270) + (S1-4); (I-270) + (S1-5); (I-270) + (S1-6); (I-270) + (S1-7); (I-270) + (S1-8); (I-270) + (S1-9); (I-270) + (S1-10); (I-270) + (S1-11); (I-270) + (S1-12); (I-270) + (S1-13); (I-270) + (S2-1); (I-270) + (S2-2); (I-270) + (S2-3); (I-270) + (S2-4); (I-270) + (S2-5); (I-270) + (S2-6); (I-270) + (S2-7); (I-270) + (S2-8); (I-270) + (S2-9); (I-270) + (S2-10); (I-270) + (S3-1); (I-270) + (S3-2); (I-270) + (S3-3); (I-270) + (S3-4); (I-270) + (S3-5); (I-270) + (S3-6); (I-270) + (S3-7); (I-270) + (S3-8), (I-270) + (S3-9); (I-270) + (S3-10); (i-270) + (S3-11); (I-270) + (S4-1); (I-270) + (S4-2); (I-270) + (S4-3); (I-270) + (S4-4); (I-270) + (S4-5); (I-270) + (S7-1); (I-270) + (S11-1); (I-270) + (S11-2); (I-270) + (S11-3); (I-270) + (S12-1); (I-270) + (S13-1); (I-270) + (S13-2); (I-270) + (S13-3); (I-270) + (S13-4): (I-270) + (S13-5); (I-270) + (S13-6); (I-270) + (S13-7); (I-270) + (S13-8); (I-270) + (S13-9); (I-270) + (S14-1)
(I-271) + (S1-1); (I-271) + (S1-2); (I-271) + (S1-3); (I-271) + (S1-4); (I-271) + (S1-5); (I-271) + (S1-6); (I-271) + (S1-7); (I-271) + (S1-8); (I-271) + (S1-9); (I-271) + (S1-10); (I-271) + (S1-11); (I-271) + (S1-12); (I-271) + (S1-13); (I-271) + (S2-1); (I-271) + (S2-2); (I-271) + (S2-3); (I-271) + (S2-4); (I-271) + (S2-5); (I-271) + (S2-6); (I-271) + (S2-7); (I-271) + (S2-8); (I-271) + (S2-9); (I-271) + (S2-10); (I-271) + (S3-1); (I-271) + (S3-2); (I-271) + (S3-3); (I-271) + (S3-4); (I-271) + (S3-5); (I-271) + (S3-6); (I-271) + (S3-7); (I-271) + (S3-8); (I-271) + (S3-9); (I-271) + (S3-10); (I-271) + (S3-11); (I-271) + (S4-1); (I-271) + (S4-2); (I-271) + (S4-3); (I-271) + (S4-4); (I-271) + (S4-5); (I-271) + (S7-1); (I-271) + (S11-1); (I-271) + (S11-2); (I-271) + (S11-3); (I-271) + (S12-1); (I-271) + (S13-1); (I-271) + (S13-2); (I-271) + (S13-3); (I-271) + (S13-4): (I-271) + (S13-5); (I-271) + (S13-6); (I-271) + (S13-7); (I-271) + (S13-8); (I-271) + (S13-9); (I-271) + (S14-1 )
(I-272) + (S1-1); (I-272) + (S1-2); (I-272) + (S1-3); (I-272) + (S1-4); (I-272) + (S1-5); (I-272) + (S1-6); (I-272) + (S1-7); (I-272) + (S1-8); (I-272) + (S1-9); (I-272) + (S1-10); (I-272) + (S1-11); (I-272) + (S1-12); (I-272) + (S1-13); (I-272) + (S2-1); (I-272) + (S2-2); (I-272) + (S2-3); (I-272) + (S2-4); (I-272) + (S2-5); (I-272) + (S2-6); (I-272) + (S2-7); (I-272) + (S2-8); (I-272) + (S2-9); (I-272) + (S2-10); (I-272) + (S3-1); (I-272) + (S3-2); (I-272) + (S3-3); (I-272) + (S3-4); (I-272) + (S3-5); (I-272) + (S3-6); (I-272) + (S3-7); (I-272) + (S3-8); (I-272) + (S3-9); (I-272) + (S3-10); (I-272) + (S3-11); (I-272) + (S4-1); (I-272) + (S4-2); (I-272) + (S4-3); (I-272) + (S4-4); (I-272) + (S4-5); (I-272) + (S7-1); (I-272) + (S11-1); (I-272) + (S11-2); (I-272) + (S11-3); (I-272) + (S12-1); (I-272) + (S13-1); (I-272) + (S13-2); (I-272) + (S13-3); (I-272) + (S13-4): (I-272) + (S13-5); (I-272) + (S13-6); (I-272) + (S13-7); (I-272) + (S13-8); (I-272) + (S13-9); (I-272) + (S14-1)
(I-273) + (S1-1); (I-273) + (S1-2); (I-273) + (S1-3); (I-273) + (S1-4); (I-273) + (S1-5); (I-273) + (S1-6); (I-273) + (S1-7); (I-273) + (S1-8); (I-273) + (S1-9); (I-273) + (S1-10); (I-273) + (S1-11); (I-273) + (S1-12); (I-273) + (S1-13); (I-273) + (S2-1); (I-273) + (S2-2); (I-273) + (S2-3); (I-273) + (S2-4); (I-273) + (S2-5); (I-273) + (S2-6); (I-273) + (S2-7); (I-273) + (S2-8); (I-273) + (S2-9); (I-273) + (S2-10); (I-273) + (S3-1); (I-273) + (S3-2); (I-273) + (S3-3); (I-273) + (S3-4); (I-273) + (S3-5); (I-273) + (S3-6); (I-273) + (S3-7); (I-273) + (S3-8); (l-273) + (S3-9); (I-273) + (S3-10); (I-273) + (S3-11); (I-273) + (S4-1); (I-273) + (S4-2); (I-273) + (S4-3); (I-273) + (S4-4); (I-273) + (S4-5); (I-273) + (S7-1); (I-273) + (S11-1); (I-273) + (S11-2); (I-273) + (S11-3); (I-273) + (S12-1); (I-273) + (S13-1); (I-273) + (S13-2); (I-273) + (S13-3); (I-273) + (S13-4): (I-273) + (S13-5); (I-273) + (S13-6); (I-273) + (S13-7); (I-273) + (S13-8); (I-273) + (S13-9); (I-273) + (S14-1)
(I-274) + (S1-1); (I-274) + (S1-2); (I-274) + (S1-3); (I-274) + (S1-4); (I-274) + (S1-5); (I-274) + (S1-6); (I-274) + (S1-7); (I-274) + (S1-8); (I-274) + (S1-9); (I-274) + (S1-10); (I-274) + (S1-11); (I-274) + (S1-12); (I-274) + (S1 -13); (I-274) + (S2-1); (I-274) + (S2-2); (I-274) + (S2-3); (I-274) + (S2-4); (I-274) + (S2-5); (I-274) + (S2-6); (I-274) + (S2-7); (I-274) + (S2-8); (I-274) + (S2-9); (I-274) + (S2-10); (I-274) + (S3-1); (I-274) + (S3-2); (I-274) + (S3-3); (I-274) + (S3-4); (I-274) + (S3-5); (I-274) + (S3-6); (I-274) + (S3-7); (I-274) + (S3-8); (I-274) + (S3-9); (I-274) + (S3-10); (I-274) + (S3-11); (I-274) + (S4-1); (I-274) + (S4-2); (I-274) + (S4-3); (I-274) + (S4-4); (I-274) + (S4-5); (I-274) + (S7-1); (I-274) + (S11-1); (I-274) + (S11-2); (I-274) + (S11-3); (I-274) + (S12-1); (I-274) + (S13-1); (I-274) + (S13-2); (I-274) + (S13-3); (I-274) + (S13-4): (I-274) + (S13-5); (I-274) + (S13-6); (I-274) + (S13-7); (I-274) + (S13-8); (I-274) + (S13-9); (I-274) + (S14-1)
(I-275) + (S1-1); (I-275) + (S1-2); (I-275) + (S1-3); (I-275) + (S1-4); (I-275) + (S1-5); (I-275) + (S1-6); (I-275) + (S1-7); (I-275) + (S1-8); (I-275) + (S1-9); (I-275) + (S1-10); (I-275) + (S1-11); (I-275) + (S1-12); (I-275) + (S1-13); (I-275) + (S2-1); (I-275) + (S2-2); (I-275) + (S2-3); (I-275) + (S2-4); (I-275) + (S2-5); (I-275) + (S2-6); (I-275) + (S2-7); (I-275) + (S2-8); (I-275) + (S2-9); (I-275) + (S2-10); (I-275) + (S3-1); (I-275) + (S3-2); (I-275) + (S3-3); (I-275) + (S3-4); (I-275) + (S3-5); (I-275) + (S3-6); (I-275) + (S3-7); (I-275) + (S3-8); (I-275) + (S3-9); (I-275) + (S3-10); (I-275) + (S3-11); (I-275) + (S4-1); (I-275) + (S4-2); (I-275) + (S4-3); (I-275) + (S4-4); (I-275) + (S4-5), (I-275) + (S7-1); (I-275) + (S11-1); (I-275) + (S11-2); (I-275) + (S11-3); (I-275) + (S12-1); (I-275) + (S13-1); (I-275) + (S13-2); (I-275) + (S13-3); (I-275) + (S13-4): (I-275) + (S13-5); (I-275) + (S13-6); (I-275) + (S13-7); (I-275) + (S13-8); (i-275) + (S13-9); (I-275) + (S14-1)
(I-276) + (S1-1); (I-276) + (S1-2); (I-276) + (S1-3); (I-276) + (S1-4); (I-276) + (S1-5); (I-276) + (S1-6); (I-276) + (S1-7); (I-276) + (S1-8); (I-276) + (S1-9); (I-276) + (S1-10); (l-276) + (S1-11); (I-276) + (S1-12); (I-276) + (S1-13); (I-276) + (S2-1); (I-276) + (S2-2); (I-276) + (S2-3); (I-276) + (S2-4); (I-276) + (S2-5); (I-276) + (S2-6); (I-276) + (S2-7); (I-276) + (S2-8); (I-276) + (S2-9); (I-276) + (S2-10); (I-276) + (S3-1); (I-276) + (S3-2); (I-276) + (S3-3); (I-276) + (S3-4); (I-276) + (S3-5); (I-276) + (S3-6); (I-276) + (S3-7); (I-276) + (S3-8); (I-276) + (S3-9); (I-276) + (S3-10); (I-276) + (S3-11); (I-276) + (S4-1); (I-276) + (S4-2); (I-276) + (S4-3); (I-276) + (S4-4); (I-276) + (S4-5); (I-276) + (S7-1); (I-276) + (S11-1); (I-276) + (S11-2); (I-276) + (S11-3); (I-276) + (S12-1); (I-276) + (S13-1); (I-276) + (S13-2); (I-276) + (S13-3); (I-276) + (S13-4): (I-276) + (S13-5); (I-276) + (S13-6); (I-276) + (S13-7); (I-276) + (S13-8); (I-276) + (S13-9); (I-276) + (S14-1)
(I-277) + (S1-1); (I-277) + (S1-2); (I-277) + (S1-3); (I-277) + (S1-4); (I-277) + (S1-5); (I-277) + (S1-6); (I-277) + (S1-7); (I-277) + (S1-8); (I-277) + (S1-9); (I-277) + (S1-10); (I-277) + (S1-11); (I-277) + (S1-12); (I-277) + (S1-13); (I-277) + (S2-1); (I-277) + (S2-2); (I-277) + (S2-3); (I-277) + (S2-4); (I-277) + (S2-5); (I-277) + (S2-6); (I-277) + (S2-7); (I-277) + (S2-8); (I-277) + (S2-9); (I-277) + (S2-10); (I-277) + (S3-1); (I-277) + (S3-2); (I-277) + (S3-3); (I-277) + (S3-4); (I-277) + (S3-5); (I-277) + (S3-6); (I-277) + (S3-7); (I-277) + (S3-8); (I-277) + (S3-9); (I-277) + (S3-10); (I-277) + (S3-11); (I-277) + (S4-1); (I-277) + (S4-2); (I-277) + (S4-3); (I-277) + (S4-4); (I-277) + (S4-5); (I-277) + (S7-1); (I-277) + (S11-1); (I-277) + (S11-2); (I-277) + (S11-3); (I-277) + (S12-1); (I-277) + (S13-1); (I-277) + (S13-2); (I-277) + (S13-3); (I-277) + (S13-4): (I-277) + (S13-5); (I-277) + (S13-6); (I-277) + (S13-7); (I-277) + (S13-8); (I-277) + (S13-9); (I-277) + (S14-1)
(I-278) + (S1-1); (I-278) + (S1-2); (I-278) + (S1-3); (I-278) + (S1-4); (I-278) + (S1-5); (I-278) + (S1-6); (I-278) + (S1-7); (I-278) + (S1-8); (I-278) + (S1-9); (I-278) + (S1-10); (I-278) + (S1-11); (I-278) + (S1-12); (I-278) + (S1-13); (I-278) + (S2-1); (I-278) + (S2-2); (I-278) + (S2-3); (I-278) + (S2-4); (I-278) + (S2-5); (I-278) + (S2-6); (I-278) + (S2-7); (I-278) + (S2-8); (I-278) + (S2-9); (I-278) + (S2-10); (I-278) + (S3-1); (I-278) + (S3-2); (I-278) + (S3-3); (I-278) + (S3-4); (I-278) + (S3-5); (I-278) + (S3-6); (I-278) + (S3-7); (I-278) + (S3-8); (I-278) + (S3-9); (I-278) + (S3-10); (I-278) + (S3-11); (I-278) + (S4-1); (I-278) + (S4-2); (I-278) + (S4-3); (I-278) + (S4-4); (I-278) + (S4-5); (I-278) + (S7-1); (I-278) + (S11-1); (I-278) + (S11-2); (I-278) + (S11-3); (I-278) + (S12-1); (I-278) + (S13-1); (I-278) + (S13-2); (I-278) + (S13-3); (I-278) + (S13-4): (I-278) + (S13-5); (I-278) + (S13-6); (I-278) + (S13-7); (I-278) + (S13-8); (I-278) + (S13-9); (I-278) + (S14-1)
(I-279) + (S1-1); (I-279) + (S1-2); (I-279) + (S1-3); (I-279) + (S1-4); (I-279) + (S1-5); (I-279) + (S1-6); (I-279) + (S1-7); (I-279) + (S1-8); (I-279) + (S1-9); (I-279) + (S1-10); (I-279) + (S1-11); (I-279) + (S1-12); (I-279) + (S1-13); (I-279) + (S2-1); (I-279) + (S2-2); (I-279) + (S2-3); (I-279) + (S2-4); (I-279) + (S2-5); (I-279) + (S2-6); (I-279) + (S2-7); (I-279) + (S2-8); (I-279) + (S2-9); (I-279) + (S2-10); (I-279) + (S3-1); (I-279) + (S3-2); (I-279) + (S3-3); (I-279) + (S3-4); (I-279) + (S3-5); (I-279) + (S3-6); (I-279) + (S3-7); (I-279) + (S3-8); (I-279) + (S3-9); (I-279) + (S3-10); (I-279) + (S3-11); (I-279) + (S4-1); (f-279) + (S4-2); (I-279) + (S4-3); (I-279) + (S4-4); (I-279) + (S4-5); (I-279) + (S7-1); (I-279) + (S11-1); (I-279) + (S11-2); (i-279) + (S11-3); (I-279) + (S12-1); (I-279) + (S13-1); (I-279) + (S13-2); (I-279) + (S13-3); (I-279) + (S13-4): (I-279) + (S13-5); (I-279) + (S13-6); (I-279) + (S13-7); (I-279) + (S13-8); (I-279) + (S13-9); (I-279) + (S14-1)
(I-280) + (S1-1); (I-280) + (S1-2); (I-280) + (S1-3); (I-280) + (S1-4); (I-280) + (S1-5); (I-280) + (S1-6); (i-280) + (S1-7); (I-280) + (S1-8); (I-280) + (S1-9); (I-280) + (S1-10); (I-280) + (S1-11); (I-280) + (S1-12); (I-280) + (S1-13); (I-280) + (S2-1); (I-280) + (S2-2); (I-280) + (S2-3); (I-280) + (S2-4); (I-280) + (S2-5); (I-280) + (S2-6); (I-280) + (S2-7); (I-280) + (S2-8); (I-280) + (S2-9); (I-280) + (S2-10); (I-280) + (S3-1); (I-280) + (S3-2); (I-280) + (S3-3); (i-280) + (S3-4); (I-280) + (S3-5); (I-280) + (S3-6); (I-280) + (S3-7); (I-280) + (S3-8); (I-280) + (S3-9); (I-280) + (S3-10); (I-280) + (S3-11); (I-280) + (S4-1); (I-280) + (S4-2); (I-280) + (S4-3); (I-280) + (S4-4); (I-280) + (S4-5); (I-280) + (S7-1); (I-280) + (S11-1); (I-280) + (S11-2); (I-280) + (S11-3); (I-280) + (S12-1); (I-280) + (S13-1); (I-280) + (S13-2); (I-280) + (S13-3); (I-280) + (S13-4): (I-280) + (S13-5); (I-280) + (S13-6); (I-280) + (S13-7); (I-280) + (S13-8); (I-280) + (S13-9); (I-280) + (S14-1)
(I-281) + (S1-1); (I-281) + (S1-2); (I-281) + (S1-3); (I-281) + (S1-4); (I-281) + (S1-5); (I-281) + (S1-6); (I-281) + (S1-7); (I-281) + (S1-8); (I-281) + (S1-9); (I-281) + (S1-10); (I-281) + (S1-11); (I-281) + (S1-12); (I-281) + (S1-13); (I-281) + (S2-1); (I-281) + (S2-2); (I-281) + (S2-3); (I-281) + (S2-4); (I-281) + (S2-5); (I-281) + (S2-6); (I-281) + (S2-7); (I-281) + (S2-8); (I-281) + (S2-9); (I-281) + (S2-10); (I-281) + (S3-1); (I-281) + (S3-2); (I-281) + (S3-3); (I-281) + (S3-4); (I-281) + (S3-5); (I-281) + (S3-6); (I-281) + (S3-7); (I-281) + (S3-8); (I-281) + (S3-9); (I-281) + (S3-10); (I-281) + (S3-11); (I-281) + (S4-1); (I-281) + (S4-2); (I-281) + (S4-3); (I-281) + (S4-4); (I-281) + (S4-5); (I-281) + (S7-1); (I-281) + (S11-1); (I-281) + (S11-2); (I-281) + (S11-3); (I-281) + (S12-1); (I-281) + (S13-1); (I-281) + (S13-2); (I-281) + (S13-3); (I-281) + (S13-4): (I-281) + (S13-5); (I-281) + (S13-6); (I-281) + (S13-7); (I-281) + (S13-8); (I-281) + (S13-9); (I-281) + (S14-1)
(I-282) + (S1-1); (I-282) + (S1-2); (I-282) + (S1-3); (I-282) + (S1-4); (I-282) + (S1-5); (I-282) + (S1-6); (I-282) + (S1-7); (I-282) + (S1-8); (I-282) + (S1-9); (I-282) + (S1-10); (I-282) + (S1-11); (I-282) + (S1-12); (I-282) + (S1-13); (I-282) + (S2-1); (I-282) + (S2-2); (I-282) + (S2-3); (I-282) + (S2-4); (I-282) + (S2-5); (I-282) + (S2-6); (I-282) + (S2-7); (I-282) + (S2-8); (I-282) + (S2-9); (I-282) + (S2-10); (I-282) + (S3-1); (I-282) + (S3-2); (I-282) + (S3-3); (I-282) + (S3-4); (I-282) + (S3-5); (I-282) + (S3-6); (I-282) + (S3-7); (I-282) + (S3-8); (I-282) + (S3-9); (I-282) + (S3-10); (I-282) + (S3-11); (I-282) + (S4-1); (I-282) + (S4-2); (I-282) + (S4-3); (I-282) + (S4-4); (I-282) + (S4-5); (I-282) + (S7-1); (I-282) + (S11-1); (I-282) + (S11-2); (I-282) + (S11-3); (I-282) + (S12-1); (I-282) + (S13-1); (I-282) + (S13-2); (I-282) + (S13-3); (I-282) + (S13-4): (I-282) + (S13-5); (I-282) + (S13-6); (I-282) + (S13-7); (I-282) + (S13-8); (I-282) + (S13-9); (I-282) + (S14-1)
(I-283) + (S1-1); (I-283) + (S1-2); (I-283) + (S1-3); (I-283) + (S1-4); (I-283) + (S1-5); (I-283) + (S1-6); (I-283) + (S1-7); (I-283) + (S1-8); (I-283) + (S1-9); (I-283) + (S1-10); (I-283) + (S1-11); (I-283) + (S1-12); (I-283) + (S1-13); (I-283) + (S2-1); (I-283) + (S2-2); (I-283) + (S2-3); (I-283) + (S2-4); (I-283) + (S2-5); (I-283) + (S2-6); (I-283) + (S2-7); (I-283) + (S2-8); (I-283) + (S2-9); (I-283) + (S2-10); (I-283) + (S3-1); (I-283) + (S3-2); (I-283) + (S3-3); (I-283) + (S3-4); (I-283) + (S3-5); (I-283) + (S3-6); (I-283) + (S3-7); (I-283) + (S3-8); (I-283) + (S3-9); (I-283) + (S3-10); (I-283) + (S3-11); (I-283) + (S4-1); (I-283) + (S4-2); (I-283) + (S4-3); (I-283) + (S4-4); (I-283) + (S4-5); (I-283) + (S7-1); (I-283) + (S11-1); (I-283) + (S11-2); (I-283) + (S11-3); (I-283) + (S12-1); (I-283) + (S13-1); (I-283) + (S13-2); (I-283) + (S13-3); (I-283) + (S13-4): (I-283) + (S13-5); (I-283) + (S13-6); (I-283) + (S13-7); (I-283) + (S13-8); (I-283) + (S13-9); (I-283) + (S14-1)
(I-284) + (S1-1); (I-284) + (S1-2); (I-284) + (S1-3); (I-284) + (S1-4); (I-284) + (S1-5); (I-284) + (S1-6); (I-284) + (S1-7); (I-284) + (S1-8); (I-284) + (S1-9); (I-284) + (S1-10); (I-284) + (S1-11); (I-284) + (S1-12); (I-284) + (S1-13); (I-284) + (S2-1); (I-284) + (S2-2); (I-284) + (S2-3); (I-284) + (S2-4); (I-284) + (S2-5); (I-284) + (S2-6); (I-284) + (S2-7); (I-284) + (S2-8); (I-284) + (S2-9); (I-284) + (S2-10); (I-284) + (S3-1); (I-284) + (S3-2); (I-284) + (S3-3); (I-284) + (S3-4); (I-284) + (S3-5); (I-284) + (S3-6); (I-284) + (S3-7); (I-284) + (S3-8); (I-284) + (S3-9); (I-284) + (S3-10); (I-284) + (S3-11); (I-284) + (S4-1); (I-284) + (S4-2); (I-284) + (S4-3); (I-284) + (S4-4); (I-284) + (S4-5); (I-284) + (S7-1); (I-284) + (S11-1); (I-284) + (S11-2); (I-284) + (S11-3); (I-284) + (S12-1); (I-284) + (S13-1); (I-284) + (S13-2); (I-284) + (S13-3); (I-284) + (S13-4): (I-284) + (S13-5); (I-284) + (S13-6); (I-284) + (S13-7); (I-284) + (S13-8); (I-284) + (S13-9); (I-284) + (S14-1)
(I-285) + (S1-1); (I-285) + (S1-2); (I-285) + (S1-3); (I-285) + (S1-4); (I-285) + (S1-5); (I-285) + (S1-6); (I-285) + (S1-7); (I-285) + (S1-8); (I-285) + (S1-9); (I-285) + (S1-10); (I-285) + (S1-11); (I-285) + (SI-12), (I-285) + (S1-13); (I-285) + (S2-1); (I-285) + (S2-2); (I-285) + (S2-3); (I-285) + (S2-4); (I-285) + (S2-5); (I-285) + (S2-6); (I-285) + (S2-7); (I-285) + (S2-8); (I-285) + (S2-9); (I-285) + (S2-10); (I-285) + (S3-1); (I-285) + (S3-2); (I-285) + (S3-3); (I-285) + (S3-4); (I-285) + (S3-5); (I-285) + (S3-6); (I-285) + (S3-7); (I-285) + (S3-8); (I-285) + (S3-9); (I-285) + (S3-10); (I-285) + (S3-11); (I-285) + (S4-1); (I-285) + (S4-2); (I-285) + (S4-3); (I-285) + (S4-4); (I-285) + (S4-5); (I-285) + (S7-1); (I-285) + (S11-1); (I-285) + (S11-2); (I-285) + (S11-3); (I-285) + (S12-1); (I-285) + (S13-1); (I-285) + (S13-2); (I-285) + (S13-3); (I-285) + (S13-4): (I-285) + (S13-5); (I-285) + (S13-6); (I-285) + (S13-7); (I-285) + (S13-8); (I-285) + (S13-9); (I-285) + (S14-1)
(I-286) + (S1-1); (I-286) + (S1-2); (I-286) + (S1-3); (I-286) + (S1-4); (I-286) + (S1-5); (I-286) + (S1-6); (I-286) + (S1-7); (I-286) + (S1-8); (I-286) + (S1-9); (I-286) + (S1-10); (I-286) + (S1-11); (I-286) + (S1-12); (I-286) + (S1-13); (I-286) + (S2-1); (I-286) + (S2-2); (I-286) + (S2-3); (I-286) + (S2-4); (I-286) + (S2-5); (I-286) + (S2-6); (I-286) + (S2-7); (I-286) + (S2-8); (I-286) + (S2-9); (I-286) + (S2-10); (I-286) + (S3-1); (I-286) + (S3-2); (I-286) + (S3-3); (I-286) + (S3-4); (I-286) + (S3-5); (I-286) + (S3-6); (I-286) + (S3-7); (I-286) + (S3-8); (I-286) + (S3-9); (I-286) + (S3-10); (I-286) + (S3-11); (I-286) + (S4-1); (I-286) + (S4-2); (I-286) + (S4-3); (I-286) + (S4-4); (I-286) + (S4-5); (I-286) + (S7-1); (I-286) + (S11-1); (I-286) + (S11-2); (I-286) + (S11-3); (I-286) + (S12-1); (I-286) + (S13-1); (I-286) + (S13-2); (I-286) + (S13-3); (I-286) + (S13-4): (I-286) + (S13-5); (I-286) + (S13-6); (I-286) + (S13-7); (I-286) + (S13-8); (I-286) + (S13-9); (I-286) + (S14-1)
(I-287) + (S1-1); (I-287) + (S1-2); (I-287) + (S1-3); (I-287) + (S1-4); (I-287) + (S1-5); (I-287) + (S1-6); (I-287) + (S1-7); (I-287) + (S1-8); (I-287) + (S1-9); (I-287) + (S1-10); (I-287) + (S1-11); (I-287) + (S1-12); (I-287) + (S1-13); (I-287) + (S2-1); (I-287) + (S2-2); (I-287) + (S2-3); (I-287) + (S2-4); (I-287) + (S2-5); (I-287) + (S2-6); (I-287) + (S2-7); (I-287) + (S2-8); (I-287) + (S2-9); (I-287) + (S2-10); (I-287) + (S3-1); (I-287) + (S3-2); (I-287) + (S3-3); (I-287) + (S3-4); (I-287) + (S3-5); (I-287) + (S3-6); (I-287) + (S3-7); (I-287) + (S3-8); (I-287) + (S3-9); (I-287) + (S3-10); (I-287) + (S3-11); (I-287) + (S4-1); (I-287) + (S4-2); (I-287) + (S4-3); (I-287) + (S4-4); (I-287) + (S4-5); (I-287) + (S7-1); (I-287) + (S11-1); (I-287) + (S11-2); (I-287) + (S11-3); (I-287) + (S12-1); (I-287) + (S13-1); (I-287) + (S13-2); (I-287) + (S13-3); (I-287) + (S13-4): (I-287) + (S13-5); (I-287) + (S13-6); (I-287) + (S13-7); (I-287) + (S13-8); (I-287) + (S13-9); (I-287) + (S14-1)
(I-288) + (S1-1); (I-288) + (S1-2); (I-288) + (S1-3); (I-288) + (S1-4); (I-288) + (S1-5); (I-288) + (S1-6); (I-288) + (S1-7); (I-288) + (S1-8); (I-288) + (S1-9); (I-288) + (S1-10); (I-288) + (S1-11); (I-288) + (S1-12); (I-288) + (S1-13); (I-288) + (S2-1); (I-288) + (S2-2); (I-288) + (S2-3); (I-288) + (S2-4); (I-288) + (S2-5); (I-288) + (S2-6); (I-288) + (S2-7); (I-288) + (S2-8); (I-288) + (S2-9); (I-288) + (S2-10); (I-288) + (S3-1); (I-288) + (S3-2); (I-288) + (S3-3); (I-288) + (S3-4); (I-288) + (S3-5); (I-288) + (S3-6); (I-288) + (S3-7); (I-288) + (S3-8); (I-288) + (S3-9); (I-288) + (S3-10); (I-288) + (S3-11); (I-288) + (S4-1); (I-288) + (S4-2); (I-288) + (S4-3); (I-288) + (S4-4); (I-288) + (S4-5); (I-288) + (S7-1); (I-288) + (S11-1); (I-288) + (S11-2); (I-288) + (S11-3); (I-288) + (S12-1); (I-288) + (S13-1); (I-288) + (S13-2); (I-288) + (S13-3); (I-288) + (S13-4): (I-288) + (S13-5); (I-288) + (S13-6); (I-288) + (S13-7); (I-288) + (S13-8); (I-288) + (S13-9); (I-288) + (S14-1)
(I-289) + (S1-1); (I-289) + (S1-2); (I-289) + (S1-3); (I-289) + (S1-4); (I-289) + (S1-5); (I-289) + (S1-6); (I-289) + (S1-7); (I-289) + (S1-8); (I-289) + (S1-9); (I-289) + (S1-10); (I-289) + (S1-11); (I-289) + (S1-12); (I-289) + (S1-13); (I-289) + (S2-1); (I-289) + (S2-2); (I-289) + (S2-3); (I-289) + (S2-4); (I-289) + (S2-5); (I-289) + (S2-6); (I-289) + (S2-7); (I-289) + (S2-8); (I-289) + (S2-9); (I-289) + (S2-10); (I-289) + (S3-1); (I-289) + (S3-2); (I-289) + (S3-3); (I-289) + (S3-4); (I-289) + (S3-5); (I-289) + (S3-6); (I-289) + (S3-7); (I-289) + (S3-8); (I-289) + (S3-9); (I-289) + (S3-10); (I-289) + (S3-11); (I-289) + (S4-1); (I-289) + (S4-2); (I-289) + (S4-3); (I-289) + (S4-4); (I-289) + (S4-5); (I-289) + (S7-1); (I-289) + (S11-1); (I-289) + (S11-2); (I-289) + (S11-3); (I-289) + (S12-1); (I-289) + (S13-1); (I-289) + (S13-2); (I-289) + (S13-3); (I-289) + (S13-4): (I-289) + (S13-5); (I-289) + (S13-6); (I-289) + (S13-7); (I-289) + (S13-8); (I-289) + (S13-9); (I-289) + (S14-1)
(I-290) + (S1-1); (I-290) + (S1-2); (I-290) + (S1-3); (I-290) + (S1-4); (I-290) + (S1-5); (I-290) + (S1-6); (I-290) + (S1-7); (I-290) + (S1-8); (I-290) + (S1-9); (I-290) + (S1-10); (I-290) + (S1-11); (I-290) + (S1-12); (I-290) + (S1-13); (I-290) + (S2-1); (I-290) + (S2-2); (I-290) + (S2-3); (I-290) + (S2-4); (I-290) + (S2-5); (I-290) + (S2-6); (I-290) + (S2-7); (I-290) + (S2-8); (I-290) + (S2-9); (I-290) + (S2-10); (I-290) + (S3-1); (I-290) + (S3-2); (I-290) + (S3-3), (I-290) + (S3-4); (I-290) + (S3-5); (I-290) + (S3-6); (I-290) + (S3-7); (I-290) + (S3-8); (I-290) + (S3-9); (I-290) + (S3-10); (I-290) + (S3-11); (I-290) + (S4-1); (I-290) + (S4-2); (I-290) + (S4-3); (I-290) + (S4-4); (I-290) + (S4-5); (I-290) + (S7-1); (I-290) + (S11-1); (I-290) + (S11-2); (I-290) + (S11-3); (I-290) + (S12-1); (I-290) + (S13-1); (I-290) + (S13-2); (I-290) + (S13-3); (I-290) + (S13-4): (I-290) + (S13-5); (I-290) + (S13-6); (I-290) + (S13-7); (I-290) + (S13-8); (I-290) + (S13-9); (I-290) + (S14-1)
(I-291) + (S1-1); (I-291) + (S1-2); (I-291) + (S1-3); (I-291) + (S1-4); (I-291) + (S1-5); (I-291) + (S1-6); (I-291) + (S1-7); (I-291) + (S1-8); (I-291) + (S1-9); (I-291) + (S1-10); (I-291) + (S1-11); (I-291) + (S1-12); (I-291) + (S1-13); (I-291) + (S2-1); (I-291) + (S2-2); (I-291) + (S2-3); (I-291) + (S2-4); (I-291) + (S2-5); (I-291) + (S2-6); (I-291) + (S2-7); (I-291) + (S2-8); (I-291) + (S2-9); (I-291) + (S2-10); (I-291) + (S3-1); (I-291) + (S3-2); (I-291) + (S3-3); (I-291) + (S3-4); (I-291) + (S3-5); (I-291) + (S3-6); (I-291) + (S3-7); (I-291) + (S3-8); (I-291) + (S3-9); (I-291) + (S3-10); (I-291) + (S3-11); (I-291) + (S4-1); (I-291) + (S4-2); (I-291) + (S4-3); (I-291) + (S4-4); (I-291) + (S4-5); (I-291) + (S7-1); (I-291) + (S11-1); (I-291) + (S11-2); (I-291) + (S11-3); (I-291) + (S12-1); (I-291) + (S13-1); (I-291) + (S13-2); (I-291) + (S13-3); (I-291) + (S13-4): (I-291) + (S13-5); (I-291) + (S13-6); (I-291) + (S13-7); (I-291) + (S13-8); (I-291) + (S13-9); (I-291) + (S14-1)
(I-292) + (S1-1); (I-292) + (S1-2); (I-292) + (S1-3); (I-292) + (S1-4); (I-292) + (S1-5); (I-292) + (S1-6); (I-292) + (S1-7); (I-292) + (S1-8); (I-292) + (S1-9); (I-292) + (S1-10); (I-292) + (S1-11); (I-292) + (S1-12); (I-292) + (S1-13); (I-292) + (S2-1); (I-292) + (S2-2); (I-292) + (S2-3); (I-292) + (S2-4); (I-292) + (S2-5); (I-292) + (S2-6); (I-292) + (S2-7); (I-292) + (S2-8); (I-292) + (S2-9); (I-292) + (S2-10); (I-292) + (S3-1); (I-292) + (S3-2); (I-292) + (S3-3); (I-292) + (S3-4); (I-292) + (S3-5); (I-292) + (S3-6); (I-292) + (S3-7); (I-292) + (S3-8); (I-292) + (S3-9); (I-292) + (S3-10); (I-292) + (S3-11); (I-292) + (S4-1); (I-292) + (S4-2); (I-292) + (S4-3); (I-292) + (S4-4); (I-292) + (S4-5); (I-292) + (S7-1); (I-292) + (S11-1); (I-292) + (S11-2); (I-292) + (S11-3); (I-292) + (S12-1); (I-292) + (S13-1); (I-292) + (S13-2); (I-292) + (S13-3); (I-292) + (S13-4): (I-292) + (S13-5); (I-292) + (S13-6); (I-292) + (S13-7); (I-292) + (S13-8); (I-292) + (S13-9); (I-292) + (S14-1)
(I-293) + (S1-1); (I-293) + (S1-2); (I-293) + (S1-3); (I-293) + (S1-4); (I-293) + (S1-5); (I-293) + (S1-6); (I-293) + (S1-7); (I-293) + (S1-8); (I-293) + (S1-9); (I-293) + (S1-10); (I-293) + (S1-11); (I-293) + (S1-12); (I-293) + (S1-13); (I-293) + (S2-1); (I-293) + (S2-2); (I-293) + (S2-3); (I-293) + (S2-4); (I-293) + (S2-5); (I-293) + (S2-6); (I-293) + (S2-7); (I-293) + (S2-8); (I-293) + (S2-9); (I-293) + (S2-10); (I-293) + (S3-1); (I-293) + (S3-2); (I-293) + (S3-3); (I-293) + (S3-4); (I-293) + (S3-5); (I-293) + (S3-6); (I-293) + (S3-7); (I-293) + (S3-8); (I-293) + (S3-9); (I-293) + (S3-10); (I-293) + (S3-11); (I-293) + (S4-1); (I-293) + (S4-2); (I-293) + (S4-3); (I-293) + (S4-4); (I-293) + (S4-5); (I-293) + (S7-1); (I-293) + (S11-1); (I-293) + (S11-2); (I-293) + (S11-3); (I-293) + (S12-1); (I-293) + (S13-1); (I-293) + (S13-2); (I-293) + (S13-3); (I-293) + (S13-4): (I-293) + (S13-5); (I-293) + (S13-6); (I-293) + (S13-7); (I-293) + (S13-8); (I-293) + (S13-9); (I-293) + (S14-1)
(I-294) + (S1-1); (I-294) + (S1-2); (I-294) + (S1-3); (I-294) + (S1-4); (I-294) + (S1-5); (I-294) + (S1-6); (I-294) + (S1-7); (I-294) + (S1-8); (I-294) + (S1-9); (I-294) + (S1-10); (I-294) + (S1-11); (I-294) + (S1-12); (I-294) + (S1-13); (I-294) + (S2-1); (I-294) + (S2-2); (I-294) + (S2-3); (I-294) + (S2-4); (I-294) + (S2-5); (I-294) + (S2-6); (I-294) + (S2-7); (I-294) + (S2-8); (I-294) + (S2-9); (I-294) + (S2-10); (I-294) + (S3-1); (I-294) + (S3-2); (I-294) + (S3-3); (I-294) + (S3-4); (I-294) + (S3-5), (I-294) + (S3-6); (I-294) + (S3-7); (I-294) + (S3-8); (I-294) + (S3-9); (I-294) + (S3-10); (I-294) + (S3-11); (I-294) + (S4-1); (I-294) + (S4-2); (I-294) + (S4-3); (I-294) + (S4-4); (I-294) + (S4-5); (I-294) + (S7-1); (I-294) + (S11-1); (I-294) + (S11-2); (I-294) + (S11-3); (I-294) + (S12-1); (I-294) + (S13-1); (I-294) + (S13-2); (I-294) + (S13-3); (I-294) + (S13-4): (I-294) + (S13-5); (I-294) + (S13-6); (I-294) + (S13-7); (I-294) + (S13-8); (I-294) + (S13-9); (I-294) + (S14-1)
(I-295) + (S1-1); (I-295) + (S1-2); (I-295) + (S1-3); (I-295) + (S1-4); (I-295) + (S1-5); (I-295) + (S1-6); (I-295) + (S1-7); (I-295) + (S1-8); (I-295) + (S1-9); (I-295) + (S1-10); (I-295) + (S1-11); (I-295) + (S1-12); (I-295) + (S1-13); (I-295) + (S2-1); (I-295) + (S2-2); (I-295) + (S2-3); (I-295) + (S2-4); (I-295) + (S2-5); (I-295) + (S2-6); (I-295) + (S2-7); (I-295) + (S2-8); (I-295) + (S2-9); (I-295) + (S2-10); (I-295) + (S3-1); (I-295) + (S3-2); (I-295) + (S3-3); (I-295) + (S3-4); (I-295) + (S3-5); (I-295) + (S3-6); (I-295) + (S3-7); (I-295) + (S3-8); (I-295) + (S3-9); (I-295) + (S3-10); (I-295) + (S3-11); (I-295) + (S4-1); (I-295) + (S4-2); (I-295) + (S4-3); (I-295) + (S4-4); (I-295) + (S4-5); (I-295) + (S7-1); (I-295) + (S11-1); (I-295) + (S11-2); (I-295) + (S11-3); (I-295) + (S12-1); (I-295) + (S13-1); (I-295) + (S13-2); (I-295) + (S13-3); (I-295) + (S13-4): (I-295) + (S13-5); (I-295) + (S13-6); (I-295) + (S13-7); (I-295) + (S13-8); (I-295) + (S13-9); (I-295) + (S14-1)
(I-296) + (S1-1); (I-296) + (S1-2); (I-296) + (S1-3); (I-296) + (S1-4); (I-296) + (S1-5); (I-296) + (S1-6); (I-296) + (S1-7); (I-296) + (S1-8); (I-296) + (S1-9); (I-296) + (S1-10); (I-296) + (S1-11); (I-296) + (S1-12); (I-296) + (S1-13); (I-296) + (S2-1); (I-296) + (S2-2); (I-296) + (S2-3); (I-296) + (S2-4); (I-296) + (S2-5), (I-296) + (S2-6); (I-296) + (S2-7); (I-296) + (S2-8); (I-296) + (S2-9); (I-296) + (S2-10); (I-296) + (S3-1); (I-296) + (S3-2); (I-296) + (S3-3); (I-296) + (S3-4); (I-296) + (S3-5); (I-296) + (S3-6); (I-296) + (S3-7); (I-296) + (S3-8); (I-296) + (S3-9); (I-296) + (S3-10); (I-296) + (S3-11); (I-296) + (S4-1); (I-296) + (S4-2); (I-296) + (S4-3); (I-296) + (S4-4); (I-296) + (S4-5), (I-296) + (S7-1); (I-296) + (S11-1); (I-296) + (S11-2); (I-296) + (S11-3); (I-296) + (S12-1); (I-296) + (S13-1); (I-296) + (S13-2); (I-296) + (S13-3); (I-296) + (S13-4): (I-296) + (S13-5); (I-296) + (S13-6); (I-296) + (S13-7); (I-296) + (S13-8); (I-296) + (S13-9); (I-296) + (S14-1)
(I-297) + (S1-1); (I-297) + (S1-2); (I-297) + (S1-3); (I-297) + (S1-4); (I-297) + (S1-5); (I-297) + (S1-6); (I-297) + (S1-7); (I-297) + (S1-8); (I-297) + (S1-9); (I-297) + (S1-10); (I-297) + (S1-11); (I-297) + (S1-12); (I-297) + (S1-13); (I-297) + (S2-1); (I-297) + (S2-2); (I-297) + (S2-3); (I-297) + (S2-4); (I-297) + (S2-5); (I-297) + (S2-6); (I-297) + (S2-7); (I-297) + (S2-8); (I-297) + (S2-9); (I-297) + (S2-10); (I-297) + (S3-1); (I-297) + (S3-2); (I-297) + (S3-3); (I-297) + (S3-4); (I-297) + (S3-5); (I-297) + (S3-6); (I-297) + (S3-7); (I-297) + (S3-8); (I-297) + (S3-9); (I-297) + (S3-10); (I-297) + (S3-11); (I-297) + (S4-1); (I-297) + (S4-2); (I-297) + (S4-3); (I-297) + (S4-4); (I-297) + (S4-5); (I-297) + (S7-1); (I-297) + (S11-1); (I-297) + (S11-2); (I-297) + (S11-3); (I-297) + (S12-1); (I-297) + (S13-1); (I-297) + (S13-2); (I-297) + (S13-3); (I-297) + (S13-4): (I-297) + (S13-5); (I-297) + (S13-6); (I-297) + (S13-7); (I-297) + (S13-8); (I-297) + (S13-9); (I-297) + (S14-1)
(I-298) + (S1-1); (I-298) + (S1-2); (I-298) + (S1-3); (I-298) + (S1-4); (I-298) + (S1-5); (I-298) + (S1-6); (I-298) + (S1-7); (I-298) + (S1-8); (I-298) + (S1-9); (I-298) + (S1-10); (I-298) + (S1-11); (I-298) + (S1-12); (I-298) + (S1-13); (I-298) + (S2-1); (I-298) + (S2-2); (I-298) + (S2-3); (I-298) + (S2-4); (I-298) + (S2-5); (I-298) + (S2-6); (I-298) + (S2-7); (I-298) + (S2-8); (I-298) + (S2-9); (I-298) + (S2-10); (I-298) + (S3-1); (I-298) + (S3-2); (I-298) + (S3-3); (I-298) + (S3-4); (I-298) + (S3-5); (I-298) + (S3-6); (I-298) + (S3-7); (I-298) + (S3-8); (I-298) + (S3-9); (I-298) + (S3-10); (I-298) + (S3-11); (I-298) + (S4-1); (I-298) + (S4-2); (I-298) + (S4-3); (I-298) + (S4-4); (I-298) + (S4-5); (I-298) + (S7-1); (I-298) + (S11-1); (I-298) + (S11-2); (I-298) + (S11-3); (I-298) + (S12-1); (I-298) + (S13-1); (I-298) + (S13-2); (I-298) + (S13-3); (I-298) + (S13-4): (I-298) + (S13-5); (I-298) + (S13-6); (I-298) + (S13-7); (I-298) + (S13-8); (I-298) + (S13-9); (I-298) + (S14-1)
(I-299) + (S1-1); (I-299) + (S1-2); (I-299) + (S1-3); (I-299) + (S1-4); (I-299) + (S1-5); (I-299) + (S1-6); (I-299) + (S1-7); (I-299) + (S1-8); (I-299) + (S1-9); (I-299) + (S1-10); (I-299) + (S1-11); (I-299) + (S1-12); (I-299) + (S1-13); (I-299) + (S2-1); (I-299) + (S2-2); (I-299) + (S2-3); (I-299) + (S2-4); (I-299) + (S2-5); (I-299) + (S2-6); (I-299) + (S2-7); (I-299) + (S2-8); (I-299) + (S2-9); (I-299) + (S2-10); (I-299) + (S3-1); (I-299) + (S3-2); (I-299) + (S3-3); (I-299) + (S3-4); (I-299) + (S3-5); (I-299) + (S3-6); (I-299) + (S3-7); (I-299) + (S3-8); (I-299) + (S3-9); (-299) + (S3-10); (I-299) + (S3-11); (I-299) + (S4-1); (I-299) + (S4-2); (I-299) + (S4-3); (I-299) + (S4-4); (I-299) + (S4-5); (I-299) + (S7-1); (I-299) + (S11-1); (I-299) + (S11-2); (I-299) + (S11-3); (I-299) + (S12-1); (I-299) + (S13-1); (I-299) + (S13-2); (I-299) + (S13-3); (I-299) + (S13-4): (I-299) + (S13-5); (I-299) + (S13-6); (I-299) + (S13-7); (I-299) + (S13-8); (I-299) + (S13-9); (I-299) + (S14-1)
(I-300) + (S1-1); (I-300) + (S1-2); (I-300) + (S1-3); (I-300) + (S1-4); (I-300) + (S1-5); (I-300) + (S1-6); (I-300) + (S1-7); (I-300) + (S1-8); (I-300) + (S1-9); (I-300) + (S1-10); (I-300) + (S1-11); (I-300) + (S1-12); (I-300) + (S1-13); (I-300) + (S2-1); (I-300) + (S2-2); (I-300) + (S2-3); (I-300) + (S2-4); (I-300) + (S2-5); (I-300) + (S2-6); (I-300) + (S2-7); (I-300) + (S2-8); (I-300) + (S2-9); (I-300) + (S2-10); (I-300) + (S3-1); (I-300) + (S3-2); (I-300) + (S3-3); (I-300) + (S3-4); (I-300) + (S3-5); (I-300) + (S3-6); (I-300) + (S3-7); (I-300) + (S3-8); (I-300) + (S3-9); (I-300) + (S3-10); (I-300) + (S3-11); (I-300) + (S4-1); (I-300) + (S4-2); (I-300) + (S4-3); (I-300) + (S4-4); (I-300) + (S4-5); (I-300) + (S7-1); (I-300) + (S11-1); (I-300) + (S11-2); (I-300) + (S11-3); (I-300) + (S12-1); (I-300) + (S13-1); (I-300) + (S13-2); (I-300) + (S13-3); (I-300) + (S13-4): (I-300) + (S13-5); (I-300) + (S13-6); (I-300) + (S13-7); (I-300) + (S13-8); (I-300) + (S13-9); (I-300) + (S14-1)
(I-301) + (S1-1); (I-301) + (S1-2); (I-301) + (S1-3); (I-301) + (S1-4); (I-301) + (S1-5); (I-301) + (S1-6); (I-301) + (S1-7); (I-301) + (S1-8); (I-301) + (S1-9); (I-301) + (S1-10); (I-301) + (S1-11); (I-301) + (S1-12); (I-301) + (S1-13); (I-301) + (S2-1); (I-301) + (S2-2); (I-301) + (S2-3); (I-301) + (S2-4); (I-301) + (S2-5); (I-301) + (S2-6); (I-301) + (S2-7); (I-301) + (S2-8); (I-301) + (S2-9); (I-301) + (S2-10); (I-301) + (S3-1); (I-301) + (S3-2); (I-301) + (S3-3); (I-301) + (S3-4); (I-301) + (S3-5); (I-301) + (S3-6); (I-301) + (S3-7); (I-301) + (S3-8); (I-301) + (S3-9); (I-301) + (S3-10); (I-301) + (S3-11); (I-301) + (S4-1); (I-301) + (S4-2); (I-301) + (S4-3); (I-301) + (S4-4); (I-301) + (S4-5); (I-301) + (S7-1); (I-301) + (S11-1); (I-301) + (S11-2); (I-301) + (S11-3); (I-301) + (S12-1); (I-301) + (S13-1); (I-301) + (S13-2); (I-301) + (S13-3); (I-301) + (S13-4): (I-301) + (S13-5); (I-301) + (S13-6); (I-301) + (S13-7); (I-301) + (S13-8); (I-301) + (S13-9); (I-301) + (S14-1)
(I-302) + (S1-1); (I-302) + (S1-2); (I-302) + (S1-3); (I-302) + (S1-4); (I-302) + (S1-5); (I-302) + (S1-6); (I-302) + (S1-7); (I-302) + (S1-8); (I-302) + (S1-9); (I-302) + (S1-10); (I-302) + (S1-11); (I-302) + (S1-12); (I-302) + (S1-13); (I-302) + (S2-1); (I-302) + (S2-2); (I-302) + (S2-3); (I-302) + (S2-4); (I-302) + (S2-5); (I-302) + (S2-6); (I-302) + (S2-7); (I-302) + (S2-8); (I-302) + (S2-9); (I-302) + (S2-10); (I-302) + (S3-1); (I-302) + (S3-2); (I-302) + (S3-3); (I-302) + (S3-4); (I-302) + (S3-5); (I-302) + (S3-6); (I-302) + (S3-7); (I-302) + (S3-8); (I-302) + (S3-9); (I-302) + (S3-10); (I-302) + (S3-11); (I-302) + (S4-1); (I-302) + (S4-2); (I-302) + (S4-3); (I-302) + (S4-4); (I-302) + (S4-5); (I-302) + (S7-1); (I-302) + (S11-1); (I-302) + (S11-2); (I-302) + (S11-3); (I-302) + (S12-1); (I-302) + (S13-1); (I-302) + (S13-2); (I-302) + (S13-3); (I-302) + (S13-4): (I-302) + (S13-5); (I-302) + (S13-6); (I-302) + (S13-7); (I-302) + (S13-8); (I-302) + (S13-9); (I-302) + (S14-1)
(I-303) + (S1-1); (I-303) + (S1-2); (I-303) + (S1-3); (I-303) + (S1-4); (I-303) + (S1-5); (I-303) + (S1-6); (I-303) + (S1-7); (I-303) + (S1-8); (I-303) + (S1-9); (I-303) + (S1-10); (I-303) + (S1-11); (I-303) + (S1-12); (I-303) + (S1-13); (I-303) + (S2-1); (I-303) + (S2-2); (I-303) + (S2-3); (I-303) + (S2-4); (I-303) + (S2-5); (I-303) + (S2-6); (I-303) + (S2-7); (I-303) + (S2-8); (I-303) + (S2-9); (I-303) + (S2-10); (I-303) + (S3-1); (I-303) + (S3-2); (I-303) + (S3-3); (I-303) + (S3-4); (I-303) + (S3-5); (I-303) + (S3-6); (I-303) + (S3-7); (I-303) + (S3-8); (I-303) + (S3-9); (I-303) + (S3-10); (I-303) + (S3-11); (I-303) + (S4-1); (I-303) + (S4-2); (I-303) + (S4-3); (I-303) + (S4-4); (I-303) + (S4-5); (I-303) + (S7-1); (I-303) + (S11-1); (I-303) + (S11-2); (I-303) + (S11-3); (I-303) + (S12-1); (I-303) + (S13-1); (I-303) + (S13-2); (I-303) + (S13-3); (I-303) + (S13-4): (I-303) + (S13-5); (I-303) + (S13-6); (I-303) + (S13-7); (I-303) + (S13-8); (I-303) + (S13-9); (I-303) + (S14-1)
(I-304) + (S1-1); (I-304) + (S1-2); (I-304) + (S1-3); (I-304) + (S1-4); (I-304) + (S1-5); (I-304) + (S1-6); (I-304) + (S1-7); (I-304) + (S1-8); (I-304) + (S1-9); (I-304) + (S1-10); (I-304) + (S1-11); (I-304) + (S1-12); (I-304) + (S1-13); (I-304) + (S2-1); (I-304) + (S2-2); (I-304) + (S2-3); (I-304) + (S2-4); (I-304) + (S2-5); (I-304) + (S2-6); (I-304) + (S2-7); (I-304) + (S2-8); (I-304) + (S2-9); (I-304) + (S2-10); (I-304) + (S3-1); (I-304) + (S3-2); (I-304) + (S3-3); (I-304) + (S3-4); (I-304) + (S3-5); (I-304) + (S3-6); (I-304) + (S3-7); (I-304) + (S3-8); (I-304) + (S3-9); (I-304) + (S3-10); (I-304) + (S3-11); (I-304) + (S4-1); (I-304) + (S4-2); (I-304) + (S4-3); (I-304) + (S4-4); (I-304) + (S4-5); (I-304) + (S7-1); (I-304) + (S11-1); (I-304) + (S11-2); (I-304) + (S11-3); (I-304) + (S12-1); (I-304) + (S13-1); (I-304) + (S13-2); (I-304) + (S13-3); (I-304) + (S13-4): (I-304) + (S13-5); (I-304) + (S13-6); (I-304) + (S13-7); (I-304) + (S13-8); (I-304) + (S13-9); (I-304) + (S14-1)
(I-305) + (S1-1); (I-305) + (S1-2); (I-305) + (S1-3); (I-305) + (S1-4); (I-305) + (S1-5); (I-305) + (S1-6); (I-305) + (S1-7); (I-305) + (S1-8); (I-305) + (S1-9); (I-305) + (S1-10); (I-305) + (S1-11); (I-305) + (S1-12); (I-305) + (S1-13); (I-305) + (S2-1); (I-305) + (S2-2); (I-305) + (S2-3); (I-305) + (S2-4); (I-305) + (S2-5); (I-305) + (S2-6); (I-305) + (S2-7); (I-305) + (S2-8); (I-305) + (S2-9); (I-305) + (S2-10); (I-305) + (S3-1); (I-305) + (S3-2); (I-305) + (S3-3); (I-305) + (S3-4); (I-305) + (S3-5); (I-305) + (S3-6); (I-305) + (S3-7); (I-305) + (S3-8); (I-305) + (S3-9); (I-305) + (S3-10); (I-305) + (S3-11); (I-305) + (S4-1); (I-305) + (S4-2); (I-305) + (S4-3); (I-305) + (S4-4); (I-305) + (S4-5); (I-305) + (S7-1); (I-305) + (S11-1); (I-305) + (S11-2); (I-305) + (S11-3); (I-305) + (S12-1); (I-305) + (S13-1); (I-305) + (S13-2); (I-305) + (S13-3); (I-305) + (S13-4): (I-305) + (S13-5); (I-305) + (S13-6); (I-305) + (S13-7); (I-305) + (S13-8); (I-305) + (S13-9); (I-305) + (S14-1)
(I-306) + (S1-1); (I-306) + (S1-2); (I-306) + (S1-3); (I-306) + (S1-4); (I-306) + (S1-5); (I-306) + (S1-6); (I-306) + (S1-7); (I-306) + (S1-8); (I-306) + (S1-9); (I-306) + (S1-10); (I-306) + (S1-11); (I-306) + (S1-12); (I-306) + (S1-13); (I-306) + (S2-1); (I-306) + (S2-2); (I-306) + (S2-3); (I-306) + (S2-4); (I-306) + (S2-5); (I-306) + (S2-6); (I-306) + (S2-7); (I-306) + (S2-8); (I-306) + (S2-9); (I-306) + (S2-10); (I-306) + (S3-1); (I-306) + (S3-2); (I-306) + (S3-3); (I-306) + (S3-4); (I-306) + (S3-5); (I-306) + (S3-6); (I-306) + (S3-7); (I-306) + (S3-8); (I-306) + (S3-9); (I-306) + (S3-10); (I-306) + (S3-11); (I-306) + (S4-1); (I-306) + (S4-2); (I-306) + (S4-3); (I-306) + (S4-4); (I-306) + (S4-5); (I-306) + (S7-1); (I-306) + (S11-1); (I-306) + (S11-2); (I-306) + (S11-3); (I-306) + (S12-1); (I-306) + (S13-1); (I-306) + (S13-2); (I-306) + (S13-3); (I-306) + (S13-4): (I-306) + (S13-5); (I-306) + (S13-6); (I-306) + (S13-7); (I-306) + (S13-8); (I-306) + (S13-9); (I-306) + (S14-1)
(I-307) + (S1-1); (I-307) + (S1-2); (I-307) + (S1-3); (I-307) + (S1-4); (I-307) + (S1-5); (I-307) + (S1-6); (I-307) + (S1-7); (I-307) + (S1-8); (I-307) + (S1-9); (I-307) + (S1-10); (I-307) + (S1-11); (I-307) + (S1-12); (I-307) + (S1-13); (I-307) + (S2-1); (I-307) + (S2-2); (I-307) + (S2-3); (I-307) + (S2-4); (I-307) + (S2-5); (I-307) + (S2-6); (I-307) + (S2-7); (I-307) + (S2-8); (I-307) + (S2-9); (I-307) + (S2-10); (I-307) + (S3-1); (I-307) + (S3-2); (I-307) + (S3-3); (I-307) + (S3-4); (I-307) + (S3-5); (I-307) + (S3-6); (I-307) + (S3-7); (I-307) + (S3-8); (I-307) + (S3-9); (I-307) + (S3-10); (I-307) + (S3-11); (I-307) + (S4-1); (I-307) + (S4-2); (I-307) + (S4-3); (I-307) + (S4-4); (I-307) + (S4-5); (I-307) + (S7-1); (I-307) + (S11-1); (I-307) + (S11-2); (I-307) + (S11-3); (I-307) + (S12-1); (I-307) + (S13-1); (I-307) + (S13-2); (I-307) + (S13-3); (I-307) + (S13-4): (I-307) + (S13-5); (I-307) + (S13-6); (I-307) + (S13-7); (I-307) + (S13-8); (I-307) + (S13-9); (I-307) + (S14-1)
(I-308) + (S1-1); (I-308) + (S1-2); (I-308) + (S1-3); (I-308) + (S1-4); (I-308) + (S1-5); (I-308) + (S1-6); (I-308) + (S1-7); (I-308) + (S1-8); (I-308) + (S1-9); (I-308) + (S1-10); (I-308) + (S1-11); (I-308) + (S1-12); (I-308) + (S1-13); (I-308) + (S2-1); (I-308) + (S2-2); (I-308) + (S2-3); (I-308) + (S2-4); (I-308) + (S2-5); (I-308) + (S2-6); (I-308) + (S2-7); (I-308) + (S2-8); (I-308) + (S2-9); (I-308) + (S2-10); (I-308) + (S3-1); (I-308) + (S3-2); (I-308) + (S3-3); (I-308) + (S3-4); (I-308) + (S3-5); (I-308) + (S3-6); (I-308) + (S3-7); (I-308) + (S3-8); (I-308) + (S3-9); (I-308) + (S3-10); (I-308) + (S3-11); (I-308) + (S4-1); (I-308) + (S4-2); (I-308) + (S4-3); (I-308) + (S4-4); (I-308) + (S4-5); (I-308) + (S7-1); (I-308) + (S11-1); (I-308) + (S11-2); (I-308) + (S11-3); (I-308) + (S12-1); (I-308) + (S13-1); (I-308) + (S13-2); (I-308) + (S13-3); (I-308) + (S13-4): (I-308) + (S13-5); (I-308) + (S13-6); (I-308) + (S13-7); (I-308) + (S13-8); (I-308) + (S13-9); (I-308) + (S14-1)
(I-309) + (S1-1); (I-309) + (S1-2); (I-309) + (S1-3); (I-309) + (S1-4); (I-309) + (S1-5); (I-309) + (S1-6); (I-309) + (S1-7); (I-309) + (S1-8); (I-309) + (S1-9); (I-309) + (S1-10); (I-309) + (S1-11); (I-309) + (S1-12); (I-309) + (S1-13); (I-309) + (S2-1); (I-309) + (S2-2); (I-309) + (S2-3); (I-309) + (S2-4); (I-309) + (S2-5); (I-309) + (S2-6); (I-309) + (S2-7); (I-309) + (S2-8); (I-309) + (S2-9); (I-309) + (S2-10); (I-309) + (S3-1); (I-309) + (S3-2); (I-309) + (S3-3); (I-309) + (S3-4); (I-309) + (S3-5); (I-309) + (S3-6); (I-309) + (S3-7); (I-309) + (S3-8); (I-309) + (S3-9); (I-309) + (S3-10); (I-309) + (S3-11); (I-309) + (S4-1); (I-309) + (S4-2); (I-309) + (S4-3); (I-309) + (S4-4); (I-309) + (S4-5); (I-309) + (S7-1); (I-309) + (S11-1); (I-309) + (S11-2); (I-309) + (S11-3); (I-309) + (S12-1); (I-309) + (S13-1); (I-309) + (S13-2); (I-309) + (S13-3); (I-309) + (S13-4): (I-309) + (S13-5); (I-309) + (S13-6); (I-309) + (S13-7); (I-309) + (S13-8); (I-309) + (S13-9); (I-309) + (S14-1)
(I-310) + (S1-1); (I-310) + (S1-2); (I-310) + (S1-3); (I-310) + (S1-4); (I-310) + (S1-5); (I-310) + (S1-6); (I-310) + (S1-7); (I-310) + (S1-8); (I-310) + (S1-9); (I-310) + (S1-10); (I-310) + (S1-11); (I-310) + (S1-12); (I-310) + (S1-13); (I-310) + (S2-1); (I-310) + (S2-2); (I-310) + (S2-3); (I-310) + (S2-4); (I-310) + (S2-5); (I-310) + (S2-6); (I-310) + (S2-7); (I-310) + (S2-8); (I-310) + (S2-9); (I-310) + (S2-10); (I-310) + (S3-1); (I-310) + (S3-2); (I-310) + (S3-3); (I-310) + (S3-4); (I-310) + (S3-5); (I-310) + (S3-6); (I-310) + (S3-7); (I-310) + (S3-8); (I-310) + (S3-9); (I-310) + (S3-10); (I-310) + (S3-11); (I-310) + (S4-1); (I-310) + (S4-2); (I-310) + (S4-3); (I-310) + (S4-4); (I-310) + (S4-5); (I-310) + (S7-1); (I-310) + (S11-1); (I-310) + (S11-2); (I-310) + (S11-3); (I-310) + (S12-1); (I-310) + (S13-1); (I-310) + (S13-2); (I-310) + (S13-3); (I-310) + (S13-4): (I-310) + (S13-5); (I-310) + (S13-6); (I-310) + (S13-7); (I-310) + (S13-8); (I-310) + (S13-9); (I-310) + (S14-1)
(I-311) + (S1-1); (I-311) + (S1-2); (I-311) + (S1-3); (I-311) + (S1-4); (I-311) + (S1-5); (I-311) + (S1-6); (I-311) + (S1-7); (I-311) + (S1-8); (I-311) + (S1-9); (I-311) + (S1-10); (I311) + (S1-11); (I-311) + (S1-12); (I-311) + (S1-13); (I-311) + (S2-1); (I-311) + (S2-2); (I-311) + (S2-3); (I-311) + (S2-4); (I-311) + (S2-5); (I-311) + (S2-6); (I-311) + (S2-7); (I-311) + (S2-8); (I-311) + (S2-9); (I-311) + (S2-10); (I-311) + (S3-1); (I-311) + (S3-2); (I-311) + (S3-3); (I-311) + (S3-4); (I-311) + (S3-5); (I-311) + (S3-6); (I-311) + (S3-7); (I-311) + (S3-8); (I-311) + (S3-9); (I-311) + (S3-10); (I-311) + (S3-11); (I-311) + (S4-1); (I-311) + (S4-2); (I-311) + (S4-3); (I-311) + (S4-4); (I-311) + (S4-5); (I-311) + (S7-1); (I-311) + (S11-1); (I-311) + (S11-2); (I-311) + (S11-3); (I-311) + (S12-1); (I-311) + (S13-1); (I-311) + (S13-2); (I-311) + (S13-3); (I-311) + (S13-4): (I-311) + (S13-5); (I-311) + (S13-6); (I-311) + (S13-7); (I-311) + (S13-8); (I-311) + (S13-9); (I-311) + (S14-1)
(I-312) + (S1-1); (I-312) + (S1-2); (I-312) + (S1-3); (I-312) + (S1-4); (I-312) + (S1-5); (I-312) + (S1-6); (I-312) + (S1-7); (I-312) + (S1-8); (I-312) + (S1-9); (I-312) + (S1-10); (I-312) + (S1-11); (I-312) + (S1-12); (I-312) + (S1-13); (I-312) + (S2-1); (I-312) + (S2-2); (I-312) + (S2-3); (I-312) + (S2-4); (I-312) + (S2-5); (I-312) + (S2-6); (I-312) + (S2-7); (I-312) + (S2-8); (I-312) + (S2-9); (I-312) + (S2-10); (I-312) + (S3-1); (I-312) + (S3-2); (I-312) + (S3-3); (I-312) + (S3-4); (I-312) + (S3-5); (I-312) + (S3-6); (I-312) + (S3-7); (I-312) + (S3-8); (I-312) + (S3-9); (I-312) + (S3-10); (I-312) + (S3-11); (I-312) + (S4-1); (I-312) + (S4-2); (I-312) + (S4-3); (I-312) + (S4-4); (I-312) + (S4-5); (I-312) + (S7-1); (I-312) + (S11-1); (I-312) + (S11-2); (I-312) + (S11-3); (I-312) + (S12-1); (I-312) + (S13-1); (I-312) + (S13-2); (I-312) + (S13-3); (I-312) + (S13-4): (I-312) + (S13-5); (I-312) + (S13-6); (I-312) + (S13-7); (I-312) + (S13-8); (I-312) + (S13-9); (I-312) + (S14-1)
(I-313) + (S1-1); (I-313) + (S1-2); (I-313) + (S1-3); (I-313) + (S1-4); (I-313) + (S1-5); (I-313) + (S1-6); (I-313) + (S1-7); (I-313) + (S1-8); (I-313) + (S1-9); (I-313) + (S1-10); (I-313) + (S1-11); (I-313) + (S1-12); (I-313) + (S1-13); (I-313) + (S2-1); (I-313) + (S2-2); (I-313) + (S2-3); (I-313) + (S2-4); (I-313) + (S2-5); (I-313) + (S2-6); (I-313) + (S2-7); (I-313) + (S2-8); (I-313) + (S2-9); (I-313) + (S2-10); (I-313) + (S3-1); (I-313) + (S3-2); (I-313) + (S3-3); (I-313) + (S3-4); (I-313) + (S3-5); (I-313) + (S3-6); (I-313) + (S3-7); (I-313) + (S3-8); (I-313) + (S3-9); (I-313) + (S3-10); (I-313) + (S3-11); (I-313) + (S4-1); (I-313) + (S4-2); (I-313) + (S4-3); (I-313) + (S4-4); (I-313) + (S4-5); (I-313) + (S7-1); (I-313) + (S11-1); (I-313) + (S11-2); (I-313) + (S11-3); (I-313) + (S12-1); (I-313) + (S13-1); (I-313) + (S13-2); (I-313) + (S13-3); (I-313) + (S13-4): (I-313) + (S13-5); (I-313) + (S13-6); (I-313) + (S13-7); (I-313) + (S13-8); (I-313) + (S13-9); (I-313) + (S14-1)
(I-314) + (S1-1); (I-314) + (S1-2); (I-314) + (S1-3); (I-314) + (S1-4); (I-314) + (S1-5); (I-314) + (S1-6); (I-314) + (S1-7); (I-314) + (S1-8); (I-314) + (S1-9); (I-314) + (S1-10); (I-314) + (S1-11); (I-314) + (S1-12); (I-314) + (S1-13); (I-314) + (S2-1); (I-314) + (S2-2); (I-314) + (S2-3); (I-314) + (S2-4); (I-314) + (S2-5); (I-314) + (S2-6); (I-314) + (S2-7); (I-314) + (S2-8); (I-314) + (S2-9); (I-314) + (S2-10); (I-314) + (S3-1); (I-314) + (S3-2); (I-314) + (S3-3); (I-314) + (S3-4); (I-314) + (S3-5); (I-314) + (S3-6); (I-314) + (S3-7); (I-314) + (S3-8); (I-314) + (S3-9); (I-314) + (S3-10); (I-314) + (S3-11); (I-314) + (S4-1); (I-314) + (S4-2); (I-314) + (S4-3); (I-314) + (S4-4); (I-314) + (S4-5); (I-314) + (S7-1); (I-314) + (S11-1); (I-314) + (S11-2); (I-314) + (S11-3); (I-314) + (S12-1); (I-314) + (S13-1); (I-314) + (S13-2); (I-314) + (S13-3); (I-314) + (S13-4): (I-314) + (S13-5); (I-314) + (S13-6); (I-314) + (S13-7); (I-314) + (S13-8); (I-314) + (S13-9); (I-314) + (S14-1)
(I-315) + (S1-1); (I-315) + (S1-2); (I-315) + (S1-3); (I-315) + (S1-4); (I-315) + (S1-5); (I-315) + (S1-6); (I-315) + (S1-7); (I-315) + (S1-8); (I-315) + (S1-9); (I-315) + (S1-10); (I-315) + (S1-11); (I-315) + (S1-12); (I-315) + (S1-13); (I-315) + (S2-1); (I-315) + (S2-2); (I-315) + (S2-3); (I-315) + (S2-4); (I-315) + (S2-5); (I-315) + (S2-6); (I-315) + (S2-7); (I-315) + (S2-8); (I-315) + (S2-9); (I-315) + (S2-10); (I-315) + (S3-1); (I-315) + (S3-2); (I-315) + (S3-3); (I-315) + (S3-4); (I-315) + (S3-5); (I-315) + (S3-6); (I-315) + (S3-7); (I-315) + (S3-8); (I-315) + (S3-9); (I-315) + (S3-10); (I-315) + (S3-11); (I-315) + (S4-1); (I-315) + (S4-2); (I-315) + (S4-3); (I-315) + (S4-4); (I-315) + (S4-5); (I-315) + (S7-1); (I-315) + (S11-1); (I-315) + (S11-2); (I-315) + (S11-3); (I-315) + (S12-1); (I-315) + (S13-1); (I-315) + (S13-2); (I-315) + (S13-3); (I-315) + (S13-4): (I-315) + (S13-5); (I-315) + (S13-6); (I-315) + (S13-7); (I-315) + (S13-8); (I-315) + (S13-9); (I-315) + (S14-1)
(I-316) + (S1-1); (I-316) + (S1-2); (I-316) + (S1-3); (I-316) + (S1-4); (I-316) + (S1-5); (I-316) + (S1-6); (I-316) + (S1-7); (I-316) + (S1-8); (I-316) + (S1-9); (I-316) + (S1-10); (I-316) + (S1-11); (I-316) + (S1-12); (I-316) + (S1-13); (I-316) + (S2-1); (I-316) + (S2-2); (I-316) + (S2-3); (I-316) + (S2-4); (I-316) + (S2-5); (I-316) + (S2-6); (I-316) + (S2-7); (I-316) + (S2-8); (I-316) + (S2-9); (I-316) + (S2-10); (I-316) + (S3-1); (I-316) + (S3-2); (I-316) + (S3-3); (I-316) + (S3-4); (I-316) + (S3-5); (I-316) + (S3-6); (I-316) + (S3-7); (I-316) + (S3-8); (I-316) + (S3-9); (I-316) + (S3-10); (I-316) + (S3-11); (I-316) + (S4-1); (I-316) + (S4-2); (I-316) + (S4-3); (I-316) + (S4-4); (I-316) + (S4-5); (I-316) + (S7-1); (I-316) + (S11-1); (I-316) + (S11-2); (I-316) + (S11-3); (I-316) + (S12-1); (I-316) + (S13-1); (I-316) + (S13-2); (I-316) + (S13-3); (I-316) + (S13-4): (I-316) + (S13-5); (I-316) + (S13-6); (I-316) + (S13-7); (I-316) + (S13-8); (I-316) + (S13-9); (I-316) + (S14-1)
(I-317) + (S1-1); (I-317) + (S1-2); (I-317) + (S1-3); (I-317) + (S1-4); (I-317) + (S1-5); (I-317) + (S1-6); (I-317) + (S1-7); (I-317) + (S1-8); (I-317) + (S1-9); (I-317) + (S1-10); (I-317) + (S1-11); (I-317) + (S1-12); (I-317) + (S1-13); (I-317) + (S2-1); (I-317) + (S2-2); (I-317) + (S2-3); (I-317) + (S2-4); (I-317) + (S2-5); (I-317) + (S2-6); (I-317) + (S2-7); (I-317) + (S2-8); (I-317) + (S2-9); (I-317) + (S2-10); (I-317) + (S3-1); (I-317) + (S3-2); (I-317) + (S3-3); (I-317) + (S3-4); (I-317) + (S3-5); (I-317) + (S3-6); (I-317) + (S3-7); (I-317) + (S3-8); (I-317) + (S3-9); (I-317) + (S3-10); (I-317) + (S3-11); (I-317) + (S4-1); (I-317) + (S4-2); (I-317) + (S4-3); (I-317) + (S4-4); (I-317) + (S4-5); (I-317) + (S7-1); (I-317) + (S11-1); (I-317) + (S11-2); (I-317) + (S11-3); (I-317) + (S12-1); (I-317) + (S13-1); (I-317) + (S13-2); (I-317) + (S13-3); (I-317) + (S13-4): (I-317) + (S13-5); (I-317) + (S13-6); (I-317) + (S13-7); (I-317) + (S13-8); (I-317) + (S13-9); (I-317) + (S14-1)
(I-318) + (S1-1); (I-318) + (S1-2); (I-318) + (S1-3); (I-318) + (S1-4); (I-318) + (S1-5); (I-318) + (S1-6); (I-318) + (S1-7); (I-318) + (S1-8); (I-318) + (S1-9); (I-318) + (S1-10); (I-318) + (S1-11); (I-318) + (S1-12); (I-318) + (S1-13); (I-318) + (S2-1); (I-318) + (S2-2); (I-318) + (S2-3); (I-318) + (S2-4); (I-318) + (S2-5); (I-318) + (S2-6); (I-318) + (S2-7); (I-318) + (S2-8); (I-318) + (S2-9); (I-318) + (S2-10); (I-318) + (S3-1); (I-318) + (S3-2); (I-318) + (S3-3); (I-318) + (S3-4); (I-318) + (S3-5); (I-318) + (S3-6); (I-318) + (S3-7); (I-318) + (S3-8); (I-318) + (S3-9); (I-318) + (S3-10); (I-318) + (S3-11); (I-318) + (S4-1); (I-318) + (S4-2); (I-318) + (S4-3); (I-318) + (S4-4); (I-318) + (S4-5); (I-318) + (S7-1); (I-318) + (S11-1); (I-318) + (S11-2); (I-318) + (S11-3); (I-318) + (S12-1); (I-318) + (S13-1); (I-318) + (S13-2); (I-318) + (S13-3); (I-318) + (S13-4): (I-318) + (S13-5); (I-318) + (S13-6); (I-318) + (S13-7); (I-318) + (S13-8); (I-318) + (S13-9); (I-318) + (S14-1)
(I-319) + (S1-1); (I-319) + (S1-2); (I-319) + (S1-3); (I-319) + (S1-4); (I-319) + (S1-5); (I-319) + (S1-6); (I-319) + (S1-7); (I-319) + (S1-8); (I-319) + (S1-9); (I-319) + (S1-10); (I-319) + (S1-11); (I-319) + (S1-12); (I-319) + (S1-13); (I-319) + (S2-1); (I-319) + (S2-2); (I-319) + (S2-3); (I-319) + (S2-4); (I-319) + (S2-5); (I-319) + (S2-6); (I-319) + (S2-7); (I-319) + (S2-8); (I-319) + (S2-9); (I-319) + (S2-10); (I-319) + (S3-1); (I-319) + (S3-2); (I-319) + (S3-3); (I-319) + (S3-4); (I-319) + (S3-5); (I-319) + (S3-6); (I-319) + (S3-7); (I-319) + (S3-8); (I-319) + (S3-9); (I-319) + (S3-10); (I-319) + (S3-11); (I-319) + (S4-1); (I-319) + (S4-2); (I-319) + (S4-3); (I-319) + (S4-4); (I-319) + (S4-5); (I-319) + (S7-1); (I-319) + (S11-1); (I-319) + (S11-2); (I-319) + (S11-3); (I-319) + (S12-1); (I-319) + (S13-1); (I-319) + (S13-2); (I-319) + (S13-3); (I-319) + (S13-4): (I-319) + (S13-5); (I-319) + (S13-6); (I-319) + (S13-7); (I-319) + (S13-8); (I-319) + (S13-9); (I-319) + (S14-1)
(I-320) + (S1-1); (I-320) + (S1-2); (I-320) + (S1-3); (I-320) + (S1-4); (I-320) + (S1-5); (I-320) + (S1-6); (I-320) + (S1-7); (I-320) + (S1-8); (I-320) + (S1-9); (I-320) + (S1-10); (I-320) + (S1-11); (I-320) + (S1-12); (I-320) + (S1-13); (I-320) + (S2-1); (I-320) + (S2-2); (I-320) + (S2-3); (I-320) + (S2-4); (I-320) + (S2-5); (I-320) + (S2-6); (I-320) + (S2-7); (I-320) + (S2-8); (I-320) + (S2-9); (I-320) + (S2-10); (I-320) + (S3-1); (I-320) + (S3-2); (I-320) + (S3-3); (I-320) + (S3-4); (I-320) + (S3-5); (I-320) + (S3-6); (I-320) + (S3-7); (I-320) + (S3-8); (I-320) + (S3-9); (I-320) + (S3-10); (I-320) + (S3-11); (I-320) + (S4-1); (I-320) + (S4-2); (I-320) + (S4-3); (I-320) + (S4-4); (I-320) + (S4-5); (I-320) + (S7-1); (I-320) + (S11-1); (I-320) + (S11-2); (I-320) + (S11-3); (I-320) + (S12-1); (I-320) + (S13-1); (I-320) + (S13-2); (I-320) + (S13-3); (I-320) + (S13-4): (I-320) + (S13-5); (I-320) + (S13-6); (I-320) + (S13-7); (I-320) + (S13-8); (I-320) + (S13-9); (I-320) + (S14-1)
(I-321) + (S1-1); (I-321) + (S1-2); (I-321) + (S1-3); (I-321) + (S1-4); (I-321) + (S1-5); (I-321) + (S1-6); (I-321) + (S1-7); (I-321) + (S1-8); (I-321) + (S1-9); (I-321) + (S1-10); (I-321) + (S1-11); (I-321) + (S1-12); (I-321) + (S1-13); (I-321) + (S2-1); (I-321) + (S2-2); (I-321) + (S2-3); (I-321) + (S2-4); (I-321) + (S2-5); (I-321) + (S2-6); (I-321) + (S2-7); (I-321) + (S2-8); (I-321) + (S2-9); (I-321) + (S2-10); (I-321) + (S3-1); (I-321) + (S3-2); (I-321) + (S3-3); (I-321) + (S3-4); (I-321) + (S3-5); (I-321) + (S3-6); (I-321) + (S3-7); (I-321) + (S3-8); (I-321) + (S3-9); (I-321) + (S3-10); (I-321) + (S3-11); (I-321) + (S4-1); (I-321) + (S4-2); (I-321) + (S4-3); (I-321) + (S4-4); (I-321) + (S4-5); (I-321) + (S7-1); (I-321) + (S11-1); (I-321) + (S11-2); (I-321) + (S11-3); (I-321) + (S12-1); (I-321) + (S13-1); (I-321) + (S13-2); (I-321) + (S13-3); (I-321) + (S13-4): (I-321) + (S13-5); (I-321) + (S13-6); (I-321) + (S13-7); (I-321) + (S13-8); (I-321) + (S13-9); (I-321) + (S14-1)
(I-322) + (S1-1); (I-322) + (S1-2); (I-322) + (S1-3); (I-322) + (S1-4); (I-322) + (S1-5); (I-322) + (S1-6); (I-322) + (S1-7); (I-322) + (S1-8); (I-322) + (S1-9); (I-322) + (S1-10); (I-322) + (S1-11); (I-322) + (S1-12); (I-322) + (S1-13); (I-322) + (S2-1); (I-322) + (S2-2); (I-322) + (S2-3); (I-322) + (S2-4); (I-322) + (S2-5); (I-322) + (S2-6); (I-322) + (S2-7); (I-322) + (S2-8); (I-322) + (S2-9); (I-322) + (S2-10); (I-322) + (S3-1); (I-322) + (S3-2); (I-322) + (S3-3); (I-322) + (S3-4); (I-322) + (S3-5); (I-322) + (S3-6); (I-322) + (S3-7); (I-322) + (S3-8); (I-322) + (S3-9); (I-322) + (S3-10); (I-322) + (S3-11); (I-322) + (S4-1); (I-322) + (S4-2); (I-322) + (S4-3); (I-322) + (S4-4); (I-322) + (S4-5); (I-322) + (S7-1); (I-322) + (S11-1); (I-322) + (S11-2); (I-322) + (S11-3); (I-322) + (S12-1); (I-322) + (S13-1); (I-322) + (S13-2); (I-322) + (S13-3); (I-322) + (S13-4): (I-322) + (S13-5); (I-322) + (S13-6); (I-322) + (S13-7); (I-322) + (S13-8); (I-322) + (S13-9); (I-322) + (S14-1)
(I-323) + (S1-1); (I-323) + (S1-2); (I-323) + (S1-3); (I-323) + (S1-4); (I-323) + (S1-5); (I-323) + (S1-6); (I-323) + (S1-7); (I-323) + (S1-8); (I-323) + (S1-9); (I-323) + (S1-10); (I-323) + (S1-11); (I-323) + (S1-12); (I-323) + (S1-13); (I-323) + (S2-1); (I-323) + (S2-2); (I-323) + (S2-3); (I-323) + (S2-4); (I-323) + (S2-5); (I-323) + (S2-6); (I-323) + (S2-7); (I-323) + (S2-8); (I-323) + (S2-9); (I-323) + (S2-10); (I-323) + (S3-1); (I-323) + (S3-2); (I-323) + (S3-3); (I-323) + (S3-4); (I-323) + (S3-5); (I-323) + (S3-6); (I-323) + (S3-7); (I-323) + (S3-8); (I-323) + (S3-9); (I-323) + (S3-10); (I-323) + (S3-11); (I-323) + (S4-1); (I-323) + (S4-2); (I-323) + (S4-3); (I-323) + (S4-4); (I-323) + (S4-5); (I-323) + (S7-1); (I-323) + (S11-1); (I-323) + (S11-2); (I-323) + (S11-3); (I-323) + (S12-1); (I-323) + (S13-1); (I-323) + (S13-2); (I-323) + (S13-3); (I-323) + (S13-4): (I-323) + (S13-5); (I-323) + (S13-6); (I-323) + (S13-7); (I-323) + (S13-8); (I-323) + (S13-9); (I-323) + (S14-1)
(I-324) + (S1-1); (I-324) + (S1-2); (I-324) + (S1-3); (I-324) + (S1-4); (I-324) + (S1-5); (I-324) + (S1-6); (I-324) + (S1-7); (I-324) + (S1-8); (I-324) + (S1-9); (I-324) + (S1-10); (I-324) + (S1-11); (I-324) + (S1-12); (I-324) + (S1-13); (I-324) + (S2-1); (I-324) + (S2-2); (I-324) + (S2-3); (I-324) + (S2-4); (I-324) + (S2-5); (I-324) + (S2-6); (I-324) + (S2-7); (I-324) + (S2-8); (I-324) + (S2-9); (I-324) + (S2-10); (I-324) + (S3-1); (I-324) + (S3-2); (I-324) + (S3-3); (I-324) + (S3-4); (I-324) + (S3-5); (I-324) + (S3-6); (I-324) + (S3-7); (I-324) + (S3-8); (I-324) + (S3-9); (I-324) + (S3-10); (I-324) + (S3-11); (I-324) + (S4-1); (I-324) + (S4-2); (I-324) + (S4-3); (I-324) + (S4-4); (I-324) + (S4-5); (I-324) + (S7-1); (I-324) + (S11-1); (I-324) + (S11-2); (I-324) + (S11-3); (I-324) + (S12-1); (I-324) + (S13-1); (I-324) + (S13-2); (I-324) + (S13-3); (I-324) + (S13-4): (I-324) + (S13-5); (I-324) + (S13-6); (I-324) + (S13-7); (I-324) + (S13-8); (I-324) + (S13-9); (I-324) + (S14-1)
(I-325) + (S1-1); (I-325) + (S1-2); (I-325) + (S1-3); (I-325) + (S1-4); (I-325) + (S1-5); (I-325) + (S1-6); (I-325) + (S1-7); (I-325) + (S1-8); (I-325) + (S1-9); (I-325) + (S1-10); (I-325) + (S1-11); (I-325) + (S1-12); (I-325) + (S1-13); (I-325) + (S2-1); (I-325) + (S2-2); (I-325) + (S2-3); (I-325) + (S2-4); (I-325) + (S2-5); (I-325) + (S2-6); (I-325) + (S2-7); (I-325) + (S2-8); (I-325) + (S2-9); (I-325) + (S2-10); (I-325) + (S3-1); (I-325) + (S3-2); (I-325) + (S3-3); (I-325) + (S3-4); (I-325) + (S3-5); (I-325) + (S3-6); (I-325) + (S3-7); (I-325) + (S3-8); (I-325) + (S3-9); (I-325) + (S3-10); (I-325) + (S3-11); (I-325) + (S4-1); (I-325) + (S4-2); (I-325) + (S4-3); (I-325) + (S4-4); (I-325) + (S4-5); (I-325) + (S7-1); (I-325) + (S11-1); (I-325) + (S11-2); (I-325) + (S11-3); (I-325) + (S12-1); (I-325) + (S13-1); (I-325) + (S13-2); (I-325) + (S13-3); (I-325) + (S13-4): (I-325) + (S13-5); (I-325) + (S13-6); (I-325) + (S13-7); (I-325) + (S13-8); (I-325) + (S13-9); (I-325) + (S14-1)
(I-326) + (S1-1); (I-326) + (S1-2); (I-326) + (S1-3); (I-326) + (S1-4); (I-326) + (S1-5); (I-326) + (S1-6); (I-326) + (S1-7); (I-326) + (S1-8); (I-326) + (S1-9); (I-326) + (S1-10); (I-326) + (S1-11); (I-326) + (S1-12); (I-326) + (S1-13); (I-326) + (S2-1); (I-326) + (S2-2); (I-326) + (S2-3); (I-326) + (S2-4); (I-326) + (S2-5); (I-326) + (S2-6); (I-326) + (S2-7); (I-326) + (S2-8); (I-326) + (S2-9); (I-326) + (S2-10); (I-326) + (S3-1); (I-326) + (S3-2); (I-326) + (S3-3); (I-326) + (S3-4); (I-326) + (S3-5); (I-326) + (S3-6); (I-326) + (S3-7); (I-326) + (S3-8); (I-326) + (S3-9); (I-326) + (S3-10); (I-326) + (S3-11); (I-326) + (S4-1); (I-326) + (S4-2); (I-326) + (S4-3); (I-326) + (S4-4); (I-326) + (S4-5); (I-326) + (S7-1); (I-326) + (S11-1); (I-326) + (S11-2); (I-326) + (S11-3); (I-326) + (S12-1); (I-326) + (S13-1); (I-326) + (S13-2); (I-326) + (S13-3); (I-326) + (S13-4): (I-326) + (S13-5); (I-326) + (S13-6); (I-326) + (S13-7); (I-326) + (S13-8); (I-326) + (S13-9); (I-326) + (S14-1)
(I-327) + (S1-1); (I-327) + (S1-2); (I-327) + (S1-3); (I-327) + (S1-4); (I-327) + (S1-5); (I-327) + (S1-6); (I-327) + (S1-7); (I-327) + (S1-8); (I-327) + (S1-9); (I-327) + (S1-10); (I-327) + (S1-11); (I-327) + (S1-12); (I-327) + (S1-13); (I-327) + (S2-1); (I-327) + (S2-2); (I-327) + (S2-3); (I-327) + (S2-4); (I-327) + (S2-5); (I-327) + (S2-6); (I-327) + (S2-7); (I-327) + (S2-8); (I-327) + (S2-9); (I-327) + (S2-10); (I-327) + (S3-1); (I-327) + (S3-2); (I-327) + (S3-3); (I-327) + (S3-4); (I-327) + (S3-5); (I-327) + (S3-6); (I-327) + (S3-7); (I-327) + (S3-8); (I-327) + (S3-9); (I-327) + (S3-10); (I-327) + (S3-11); (I-327) + (S4-1); (I-327) + (S4-2); (I-327) + (S4-3); (I-327) + (S4-4); (I-327) + (S4-5); (I-327) + (S7-1); (I-327) + (S11-1); (I-327) + (S11-2); (I-327) + (S11-3); (I-327) + (S12-1); (I-327) + (S13-1); (I-327) + (S13-2); (I-327) + (S13-3); (I-327) + (S13-4): (I-327) + (S13-5); (I-327) + (S13-6); (I-327) + (S13-7); (I-327) + (S13-8); (I-327) + (S13-9); (I-327) + (S14-1)
(I-328) + (S1-1); (I-328) + (S1-2); (I-328) + (S1-3); (I-328) + (S1-4); (I-328) + (S1-5); (I-328) + (S1-6); (I-328) + (S1-7); (I-328) + (S1-8); (I-328) + (S1-9); (I-328) + (S1-10); (I-328) + (S1-11); (I-328) + (S1-12); (I-328) + (S1-13); (I-328) + (S2-1); (I-328) + (S2-2); (I-328) + (S2-3); (I-328) + (S2-4); (I-328) + (S2-5); (I-328) + (S2-6); (I-328) + (S2-7); (I-328) + (S2-8); (I-328) + (S2-9); (I-328) + (S2-10); (I-328) + (S3-1); (I-328) + (S3-2); (I-328) + (S3-3); (I-328) + (S3-4); (I-328) + (S3-5); (I-328) + (S3-6); (I-328) + (S3-7); (I-328) + (S3-8); (I-328) + (S3-9); (I-328) + (S3-10); (I-328) + (S3-11); (I-328) + (S4-1); (I-328) + (S4-2); (I-328) + (S4-3); (I-328) + (S4-4); (I-328) + (S4-5); (I-328) + (S7-1); (I-328) + (S11-1); (I-328) + (S11-2); (I-328) + (S11-3); (I-328) + (S12-1); (I-328) + (S13-1); (I-328) + (S13-2); (I-328) + (S13-3); (I-328) + (S13-4): (I-328) + (S13-5); (I-328) + (S13-6); (I-328) + (S13-7); (I-328) + (S13-8); (I-328) + (S13-9); (I-328) + (S14-1)
(I-329) + (S1-1); (I-329) + (S1-2); (I-329) + (S1-3); (I-329) + (S1-4); (I-329) + (S1-5); (II-329) + (S1-6); (I-329) + (S1-7); (I-329) + (S1-8); (I-329) + (S1-9); (I-329) + (S1-10); (I-329) + (S1-11); (I-329) + (S1-12); (I-329) + (S1-13); (I-329) + (S2-1); (I-329) + (S2-2); (I-329) + (S2-3); (I-329) + (S2-4); (I-329) + (S2-5); (I-329) + (S2-6); (I-329) + (S2-7); (I-329) + (S2-8); (I-329) + (S2-9); (I-329) + (S2-10); (I-329) + (S3-1); (I-329) + (S3-2); (I-329) + (S3-3); (I-329) + (S3-4); (I-329) + (S3-5); (I-329) + (S3-6); (I-329) + (S3-7); (I-329) + (S3-8); (I-329) + (S3-9); (I-329) + (S3-10); (I-329) + (S3-11); (I-329) + (S4-1); (I-329) + (S4-2); (I-329) + (S4-3); (I-329) + (S4-4); (I-329) + (S4-5); (I-329) + (S7-1); (I-329) + (S11-1); (I-329) + (S11-2); (I-329) + (S11-3); (I-329) + (S12-1); (I-329) + (S13-1); (I-329) + (S13-2); (I-329) + (S13-3); (I-329) + (S13-4): (I-329) + (S13-5); (I-329) + (S13-6); (I-329) + (S13-7); (I-329) + (S13-8); (I-329) + (S13-9); (I-329) + (S14-1)
(I-330) + (S1-1); (I-330) + (S1-2); (I-330) + (S1-3); (I-330) + (S1-4); (I-330) + (S1-5); (I-330) + (S1-6); (I-330) + (S1-7); (I-330) + (S1-8); (I-330) + (S1-9); (I-330) + (S1-10); (I-330) + (S1-11); (I-330) + (S1-12); (I-330) + (S1-13); (I-330) + (S2-1); (I-330) + (S2-2); (I-330) + (S2-3); (I-330) + (S2-4); (I-330) + (S2-5); (I-330) + (S2-6); (I-330) + (S2-7); (I-330) + (S2-8); (I-330) + (S2-9); (I-330) + (S2-10); (I-330) + (S3-1); (I-330) + (S3-2); (I-330) + (S3-3); (I-330) + (S3-4); (I-330) + (S3-5); (I-330) + (S3-6); (I-330) + (S3-7); (I-330) + (S3-8); (I-330) + (S3-9); (I-330) + (S3-10); (I-330) + (S3-11); (I-330) + (S4-1); (I-330) + (S4-2); (I-330) + (S4-3); (I-330) + (S4-4); (I-330) + (S4-5); (I-330) + (S7-1); (I-330) + (S11-1); (I-330) + (S11-2); (I-330) + (S11-3); (I-330) + (S12-1); (I-330) + (S13-1); (I-330) + (S13-2); (I-330) + (S13-3); (I-330) + (S13-4): (I-330) + (S13-5); (I-330) + (S13-6); (I-330) + (S13-7); (I-330) + (S13-8); (I-330) + (S13-9); (I-330) + (S14-1)
(I-331) + (S1-1); (I-331) + (S1-2); (I-331) + (S1-3); (I-331) + (S1-4); (I-331) + (S1-5); (I-331) + (S1-6); (I-331) + (S1-7); (I-331) + (S1-8); (I-331) + (S1-9); (I-331) + (S1-10); (I-331) + (S1-11); (I-331) + (S1-12); (I-331) + (S1-13); (I-331) + (S2-1); (I-331) + (S2-2); (I-331) + (S2-3); (I-331) + (S2-4); (I-331) + (S2-5); (I-331) + (S2-6); (I-331) + (S2-7); (I-331) + (S2-8); (I-331) + (S2-9); (I-331) + (S2-10); (I-331) + (S3-1); (I-331) + (S3-2); (I-331) + (S3-3); (I-331) + (S3-4); (I-331) + (S3-5); (I-331) + (S3-6); (I-331) + (S3-7); (I-331) + (S3-8); (I-331) + (S3-9); (I-331) + (S3-10); (I-331) + (S3-11); (I-331) + (S4-1); (I-331) + (S4-2); (I-331) + (S4-3); (I-331) + (S4-4); (I-331) + (S4-5); (I-331) + (S7-1); (I-331) + (S11-1); (I-331) + (S11-2); (I-331) + (S11-3); (I-331) + (S12-1); (I-331) + (S13-1); (I-331) + (S13-2); (I-331) + (S13-3); (I-331) + (S13-4): (I-331) + (S13-5); (I-331) + (S13-6); (I-331) + (S13-7); (I-331) + (S13-8); (I-331) + (S13-9); (I-331) + (S14-1)
(I-332) + (S1-1); (I-332) + (S1-2); (I-332) + (S1-3); (I-332) + (S1-4); (I-332) + (S1-5); (I-332) + (S1-6); (I-332) + (S1-7); (I-332) + (S1-8); (I-332) + (S1-9); (I-332) + (S1-10); (I-332) + (S1-11); (I-332) + (S1-12); (I-332) + (S1-13); (I-332) + (S2-1); (I-332) + (S2-2); (I-332) + (S2-3); (I-332) + (S2-4); (I-332) + (S2-5); (I-332) + (S2-6); (I-332) + (S2-7); (I-332) + (S2-8); (I-332) + (S2-9); (I-332) + (S2-10); (I-332) + (S3-1); (I-332) + (S3-2); (I-332) + (S3-3); (I-332) + (S3-4); (I-332) + (S3-5); (I-332) + (S3-6); (I-332) + (S3-7); (I-332) + (S3-8); (I-332) + (S3-9); (I-332) + (S3-10); (I-332) + (S3-11); (I-332) + (S4-1); (I-332) + (S4-2); (I-332) + (S4-3); (I-332) + (S4-4); (I-332) + (S4-5); (I-332) + (S7-1); (I-332) + (S11-1); (I-332) + (S11-2); (I-332) + (S11-3); (I-332) + (S12-1): (I-332) + (S13-1); (I-332) + (S13-2); (I-332) + (S13-3); (I-332) + (S13-4): (I-332) + (S13-5); (I-332) + (S13-6); (I-332) + (S13-7); (I-332) + (S13-8); (I-332) + (S13-9); (I-332) + (S14-1)
(I-333) + (S1-1); (I-333) + (S1-2); (I-333) + (S1-3); (I-333) + (S1-4); (I-333) + (S1-5); (I-333) + (S1-6); (I-333) + (S1-7); (I-333) + (S1-8); (I-333) + (S1-9); (I-333) + (S1-10); (I-333) + (S1-11); (I-333) + (S1-12); (I-333) + (S1-13); (I-333) + (S2-1); (I-333) + (S2-2); (I-333) + (S2-3); (I-333) + (S2-4); (I-333) + (S2-5); (I-333) + (S2-6); (I-333) + (S2-7); (I-333) + (S2-8); (I-333) + (S2-9); (I-333) + (S2-10); (I-333) + (S3-1); (I-333) + (S3-2); (I-333) + (S3-3); (I-333) + (S3-4); (I-333) + (S3-5); (I-333) + (S3-6); (I-333) + (S3-7); (I-333) + (S3-8); (I-333) + (S3-9); (I-333) + (S3-10); (I-333) + (S3-11); (I-333) + (S4-1); (I-333) + (S4-2); (I-333) + (S4-3); (I-333) + (S4-4); (I-333) + (S4-5); (I-333) + (S7-1); (I-333) + (S11-1); (I-333) + (S11-2); (I-333) + (S11-3); (I-333) + (S12-1); (I-333) + (S13-1); (I-333) + (S13-2); (I-333) + (S13-3); (I-333) + (S13-4): (I-333) + (S13-5); (I-333) + (S13-6); (I-333) + (S13-7); (I-333) + (S13-8); (I-333) + (S13-9); (I-333) + (S14-1)
(I-334) + (S1-1); (I-334) + (S1-2); (I-334) + (S1-3); (I-334) + (S1-4); (I-334) + (S1-5); (I-334) + (S1-6); (I-334) + (S1-7); (I-334) + (S1-8); (I-334) + (S1-9); (I-334) + (S1-10); (I-334) + (S1-11); (I-334) + (S1-12); (I-334) + (S1-13); (I-334) + (S2-1); (I-334) + (S2-2); (I-334) + (S2-3); (I-334) + (S2-4); (I-334) + (S2-5); (I-334) + (S2-6); (I-334) + (S2-7); (I-334) + (S2-8); (I-334) + (S2-9); (I-334) + (S2-10); (I-334) + (S3-1); (I-334) + (S3-2); (I-334) + (S3-3); (I-334) + (S3-4); (I-334) + (S3-5); (I-334) + (S3-6); (I-334) + (S3-7); (I-334) + (S3-8); (I-334) + (S3-9); (I-334) + (S3-10); (I-334) + (S3-11); (I-334) + (S4-1); (I-334) + (S4-2); (I-334) + (S4-3); (I-334) + (S4-4); (I-334) + (S4-5); (I-334) + (S7-1); (I-334) + (S11-1); (I-334) + (S11-2); (I-334) + (S11-3); (I-334) + (S12-1); (I-334) + (S13-1); (I-334) + (S13-2); (I-334) + (S13-3); (I-334) + (S13-4): (I-334) + (S13-5); (I-334) + (S13-6); (I-334) + (S13-7); (I-334) + (S13-8); (I-334) + (S13-9); (I-334) + (S14-1)
(I-335) + (S1-1); (I-335) + (S1-2); (I-335) + (S1-3); (I-335) + (S1-4); (I-335) + (S1-5); (I-335) + (S1-6); (I-335) + (S1-7); (I-335) + (S1-8); (I-335) + (S1-9); (I-335) + (S1-10); (I-335) + (S1-11); (I-335) + (S1-12); (I-335) + (S1-13); (I-335) + (S2-1); (I-335) + (S2-2); (I-335) + (S2-3); (I-335) + (S2-4); (I-335) + (S2-5); (I-335) + (S2-6); (I-335) + (S2-7); (I-335) + (S2-8); (I-335) + (S2-9); (I-335) + (S2-10); (I-335) + (S3-1); (I-335) + (S3-2); (I-335) + (S3-3); (I-335) + (S3-4); (I-335) + (S3-5); (I-335) + (S3-6); (I-335) + (S3-7); (I-335) + (S3-8); (I-335) + (S3-9); (I-335) + (S3-10); (I-335) + (S3-11); (I-335) + (S4-1); (I-335) + (S4-2); (I-335) + (S4-3); (I-335) + (S4-4); (I-335) + (S4-5); (I-335) + (S7-1); (I-335) + (S11-1); (I-335) + (S11-2); (I-335) + (S11-3); (I-335) + (S12-1); (I-335) + (S13-1); (I-335) + (S13-2); (I-335) + (S13-3); (I-335) + (S13-4): (I-335) + (S13-5); (I-335) + (S13-6); (I-335) + (S13-7); (I-335) + (S13-8); (I-335) + (S13-9); (I-335) + (S14-1)
(I-336) + (S1-1); (I-336) + (S1-2); (I-336) + (S1-3); (I-336) + (S1-4); (I-336) + (S1-5); (I-336) + (S1-6); (I-336) + (S1-7); (I-336) + (S1-8); (I-336) + (S1-9); (I-336) + (S1-10); (I-336) + (S1-11); (I-336) + (S1-12); (I-336) + (S1-13); (I-336) + (S2-1); (I-336) + (S2-2); (I-336) + (S2-3); (I-336) + (S2-4); (I-336) + (S2-5); (I-336) + (S2-6); (I-336) + (S2-7); (I-336) + (S2-8); (I-336) + (S2-9); (I-336) + (S2-10); (I-336) + (S3-1); (I-336) + (S3-2); (I-336) + (S3-3); (I-336) + (S3-4); (I-336) + (S3-5); (I-336) + (S3-6); (I-336) + (S3-7); (I-336) + (S3-8); (I-336) + (S3-9); (I-336) + (S3-10); (I-336) + (S3-11); (I-336) + (S4-1); (I-336) + (S4-2); (I-336) + (S4-3); (I-336) + (S4-4); (I-336) + (S4-5); (I-336) + (S7-1); (I-336) + (S11-1); (I-336) + (S11-2); (I-336) + (S11-3); (I-336) + (S12-1); (I-336) + (S13-1); (I-336) + (S13-2); (I-336) + (S13-3); (I-336) + (S13-4): (I-336) + (S13-5); (I-336) + (S13-6); (I-336) + (S13-7); (I-336) + (S13-8); (I-336) + (S13-9); (I-336) + (S14-1)
(I-337) + (S1-1); (I-337) + (S1-2); (I-337) + (S1-3); (I-337) + (S1-4); (I-337) + (S1-5); (I-337) + (S1-6); (I-337) + (S1-7); (I-337) + (S1-8); (I-337) + (S1-9); (I-337) + (S1-10); (I-337) + (S1-11); (I-337) + (S1-12); (I-337) + (S1-13); (I-337) + (S2-1); (I-337) + (S2-2); (I-337) + (S2-3); (I-337) + (S2-4); (I-337) + (S2-5); (I-337) + (S2-6); (I-337) + (S2-7); (I-337) + (S2-8); (I-337) + (S2-9); (I-337) + (S2-10); (I-337) + (S3-1); (I-337) + (S3-2); (I-337) + (S3-3); (I-337) + (S3-4); (I-337) + (S3-5); (I-337) + (S3-6); (I-337) + (S3-7); (I-337) + (S3-8); (I-337) + (S3-9); (I-337) + (S3-10); (I-337) + (S3-11); (I-337) + (S4-1); (I-337) + (S4-2); (I-337) + (S4-3); (I-337) + (S4-4); (I-337) + (S4-5); (I-337) + (S7-1); (I-337) + (S11-1); (I-337) + (S11-2); (I-337) + (S11-3); (I-337) + (S12-1); (I-337) + (S13-1); (I-337) + (S13-2); (I-337) + (S13-3); (I-337) + (S13-4): (I-337) + (S13-5); (I-337) + (S13-6); (I-337) + (S13-7); (I-337) + (S13-8); (I-337) + (S13-9); (I-337) + (S14-1)
(I-338) + (S1-1); (I-338) + (S1-2); (I-338) + (S1-3); (I-338) + (S1-4); (I-338) + (S1-5); (I-338) + (S1-6); (I-338) + (S1-7); (I-338) + (S1-8); (I-338) + (S1-9); (I-338) + (S1-10); (I-338) + (S1-11); (I-338) + (S1-12); (I-338) + (S1-13); (I-338) + (S2-1); (I-338) + (S2-2); (I-338) + (S2-3); (I-338) + (S2-4); (I-338) + (S2-5); (I-338) + (S2-6); (I-338) + (S2-7); (I-338) + (S2-8), (I-338) + (S2-9); (I-338) + (S2-10); (I-338) + (S3-1); (I-338) + (S3-2); (I-338) + (S3-3); (I-338) + (S3-4); (I-338) + (S3-5); (I-338) + (S3-6); (I-338) + (S3-7); (I-338) + (S3-8); (I-338) + (S3-9); (I-338) + (S3-10); (I-338) + (S3-11); (I-338) + (S4-1); (I-338) + (S4-2); (I-338) + (S4-3); (I-338) + (S4-4); (I-338) + (S4-5); (I-338) + (S7-1); (I-338) + (S11-1); (I-338) + (S11-2); (I-338) + (S11-3); (I-338) + (S12-1); (I-338) + (S13-1); (I-338) + (S13-2); (I-338) + (S13-3); (I-338) + (S13-4): (I-338) + (S13-5); (I-338) + (S13-6); (I-338) + (S13-7); (I-338) + (S13-8); (I-338) + (S13-9); (I-338) + (S14-1)
(I-339) + (S1-1); (I-339) + (S1-2); (I-339) + (S1-3); (I-339) + (S1-4); (I-339) + (S1-5); (I-339) + (S1-6); (I-339) + (S1-7); (I-339) + (S1-8); (I-339) + (S1-9); (I-339) + (S1-10); (I-339) + (S1-11); (I-339) + (S1-12); (I-339) + (S1-13); (I-339) + (S2-1); (I-339) + (S2-2); (I-339) + (S2-3); (I-339) + (S2-4); (I-339) + (S2-5); (I-339) + (S2-6); (I-339) + (S2-7); (I-339) + (S2-8); (I-339) + (S2-9); (I-339) + (S2-10); (I-339) + (S3-1); (I-339) + (S3-2); (I-339) + (S3-3); (I-339) + (S3-4); (I-339) + (S3-5); (I-339) + (S3-6); (I-339) + (S3-7); (I-339) + (S3-8); (I-339) + (S3-9); (I-339) + (S3-10); (I-339) + (S3-11); (I-339) + (S4-1); (I-339) + (S4-2); (I-339) + (S4-3); (I-339) + (S4-4); (I-339) + (S4-5); (I-339) + (S7-1); (I-339) + (S11-1); (I-339) + (S11-2); (I-339) + (S11-3); (I-339) + (S12-1); (I-339) + (S13-1); (I-339) + (S13-2); (I-339) + (S13-3); (I-339) + (S13-4): (I-339) + (S13-5); (I-339) + (S13-6); (I-339) + (S13-7); (I-339) + (S13-8); (I-339) + (S13-9); (I-339) + (S14-1)
(I-340) + (S1-1); (I-340) + (S1-2); (I-340) + (S1-3); (I-340) + (S1-4); (I-340) + (S1-5); (I-340) + (S1-6); (I-340) + (S1-7); (I-340) + (S1-8); (I-340) + (S1-9); (I-340) + (S1-10); (I-340) + (S1-11); (I-340) + (S1-12); (I-340) + (S1-13); (I-340) + (S2-1); (I-340) + (S2-2); (I-340) + (S2-3); (I-340) + (S2-4); (I-340) + (S2-5); (I-340) + (S2-6); (I-340) + (S2-7); (I-340) + (S2-8); (I-340) + (S2-9); (I-340) + (S2-10); (I-340) + (S3-1); (I-340) + (S3-2); (I-340) + (S3-3); (I-340) + (S3-4); (I-340) + (S3-5); (I-340) + (S3-6); (I-340) + (S3-7); (I-340) + (S3-8); (I-340) + (S3-9); (I-340) + (S3-10); (I-340) + (S3-11); (I-340) + (S4-1); (I-340) + (S4-2); (I-340) + (S4-3); (I-340) + (S4-4); (I-340) + (S4-5); (I-340) + (S7-1); (I-340) + (S11-1); (I-340) + (S11-2); (I-340) + (S11-3); (I-340) + (S12-1); (I-340) + (S13-1); (I-340) + (S13-2); (I-340) + (S13-3); (I-340) + (S13-4): (I-340) + (S13-5); (I-340) + (S13-6); (I-340) + (S13-7); (I-340) + (S13-8); (I-340) + (S13-9); (I-340) + (S14-1)
(I-341) + (S1-1); (I-341) + (S1-2); (I-341) + (S1-3); (I-341) + (S1-4); (I-341) + (S1-5); (I-341) + (S1-6); (I-341) + (S1-7); (I-341) + (S1-8); (I-341) + (S1-9); (I-341) + (S1-10); (I-341) + (S1-11); (I-341) + (S1-12); (I-341) + (S1-13); (I-341) + (S2-1); (I-341) + (S2-2); (I-341) + (S2-3); (I-341) + (S2-4); (I-341) + (S2-5); (I-341) + (S2-6); (I-341) + (S2-7); (I-341) + (S2-8); (I-341) + (S2-9); (I-341) + (S2-10); (I-341) + (S3-1); (I-341) + (S3-2); (I-341) + (S3-3); (I-341) + (S3-4); (I-341) + (S3-5); (I-341) + (S3-6); (I-341) + (S3-7); (I-341) + (S3-8); (I-341) + (S3-9); (I-341) + (S3-10); (I-341) + (S3-11); (I-341) + (S4-1); (I-341) + (S4-2); (I-341) + (S4-3); (I-341) + (S4-4); (I-341) + (S4-5); (I-341) + (S7-1); (I-341) + (S11-1); (I-341) + (S11-2); (I-341) + (S11-3); (I-341) + (S12-1); (I-341) + (S13-1); (I-341) + (S13-2); (I-341) + (S13-3); (I-341) + (S13-4): (I-341) + (S13-5); (I-341) + (S13-6); (I-341) + (S13-7); (I-341) + (S13-8); (I-341) + (S13-9); (I-341) + (S14-1)
(I-342) + (S1-1); (I-342) + (S1-2); (I-342) + (S1-3); (I-342) + (S1-4); (I-342) + (S1-5); (I-342) + (S1-6); (I-342) + (S1-7); (I-342) + (S1-8); (I-342) + (S1-9); (I-342) + (S1-10); (I-342) + (S1-11); (I-342) + (S1-12); (I-342) + (S1-13); (I-342) + (S2-1); (I-342) + (S2-2); (I-342) + (S2-3); (I-342) + (S2-4); (I-342) + (S2-5); (I-342) + (S2-6); (I-342) + (S2-7); (I-342) + (S2-8); (I-342) + (S2-9); (I-342) + (S2-10); (I-342) + (S3-1); (I-342) + (S3-2); (I-342) + (S3-3); (I-342) + (S3-4); (I-342) + (S3-5); (I-342) + (S3-6); (I-342) + (S3-7); (I-342) + (S3-8); (I-342) + (S3-9); (I-342) + (S3-10); (I-342) + (S3-11); (I-342) + (S4-1); (I-342) + (S4-2); (I-342) + (S4-3); (I-342) + (S4-4); (I-342) + (S4-5); (I-342) + (S7-1); (I-342) + (S11-1); (I-342) + (S11-2); (I-342) + (S11-3); (I-342) + (S12-1); (I-342) + (S13-1); (I-342) + (S13-2); (I-342) + (S13-3); (I-342) + (S13-4): (I-342) + (S13-5); (I-342) + (S13-6); (I-342) + (S13-7); (I-342) + (S13-8); (I-342) + (S13-9); (I-342) + (S14-1)
(I-343) + (S1-1); (I-343) + (S1-2); (I-343) + (S1-3); (I-343) + (S1-4); (I-343) + (S1-5); (I-343) + (S1-6); (I-343) + (S1-7); (I-343) + (S1-8); (I-343) + (S1-9); (I-343) + (S1-10); (I-343) + (S1-11); (I-343) + (S1-12); (I-343) + (S1-13); (I-343) + (S2-1); (I-343) + (S2-2); (I-343) + (S2-3); (I-343) + (S2-4); (I-343) + (S2-5); (I-343) + (S2-6); (I-343) + (S2-7); (I-343) + (S2-8); (I-343) + (S2-9); (I-343) + (S2-10); (I-343) + (S3-1); (I-343) + (S3-2); (I-343) + (S3-3); (I-343) + (S3-4); (I-343) + (S3-5); (I-343) + (S3-6); (I-343) + (S3-7); (I-343) + (S3-8); (I-343) + (S3-9); (I-343) + (S3-10); (I-343) + (S3-11); (I-343) + (S4-1); (I-343) + (S4-2); (I-343) + (S4-3); (I-343) + (S4-4); (I-343) + (S4-5); (I-343) + (S7-1); (I-343) + (S11-1); (I-343) + (S11-2); (I-343) + (S11-3); (I-343) + (S12-1); (I-343) + (S13-1); (I-343) + (S13-2); (I-343) + (S13-3); (I-343) + (S13-4): (I-343) + (S13-5); (I-343) + (S13-6); (I-343) + (S13-7); (I-343) + (S13-8); (I-343) + (S13-9); (I-343) + (S14-1)
(I-344) + (S1-1); (I-344) + (S1-2); (I-344) + (S1-3); (I-344) + (S1-4); (I-344) + (S1-5); (I-344) + (S1-6); (I-344) + (S1-7); (I-344) + (S1-8); (I-344) + (S1-9); (I-344) + (S1-10); (I-344) + (S1-11); (I-344) + (S1-12); (I-344) + (S1-13); (I-344) + (S2-1); (I-344) + (S2-2); (I-344) + (S2-3); (I-344) + (S2-4); (I-344) + (S2-5); (I-344) + (S2-6); (I-344) + (S2-7); (I-344) + (S2-8); (I-344) + (S2-9); (I-344) + (S2-10); (I-344) + (S3-1); (I-344) + (S3-2); (I-344) + (S3-3); (I-344) + (S3-4); (I-344) + (S3-5); (I-344) + (S3-6); (I-344) + (S3-7); (I-344) + (S3-8); (I-344) + (S3-9); (I-344) + (S3-10); (I-344) + (S3-11); (I-344) + (S4-1); (I-344) + (S4-2); (I-344) + (S4-3); (I-344) + (S4-4); (I-344) + (S4-5); (I-344) + (S7-1); (I-344) + (S11-1); (I-344) + (S11-2); (I-344) + (S11-3); (I-344) + (S12-1); (I-344) + (S13-1); (I-344) + (S13-2); (I-344) + (S13-3); (I-344) + (S13-4): (I-344) + (S13-5); (I-344) + (S13-6); (I-344) + (S13-7); (I-344) + (S13-8); (I-344) + (S13-9); (I-344) + (S14-1)
(I-345) + (S1-1); (I-345) + (S1-2); (I-345) + (S1-3); (I-345) + (S1-4); (I-345) + (S1-5); (I-345) + (S1-6); (I-345) + (S1-7); (I-345) + (S1-8); (I-345) + (S1-9); (I-345) + (S1-10); (I-345) + (S1-11); (I-345) + (S1-12); (I-345) + (S1-13); (I-345) + (S2-1); (I-345) + (S2-2); (I-345) + (S2-3); (I-345) + (S2-4); (I-345) + (S2-5); (I-345) + (S2-6); (I-345) + (S2-7); (I-345) + (S2-8); (I-345) + (S2-9); (I-345) + (S2-10); (I-345) + (S3-1); (I-345) + (S3-2); (I-345) + (S3-3); (I-345) + (S3-4); (I-345) + (S3-5); (I-345) + (S3-6); (I-345) + (S3-7); (I-345) + (S3-8); (I-345) + (S3-9); (I-345) + (S3-10); (I-345) + (S3-11); (I-345) + (S4-1); (I-345) + (S4-2); (I-345) + (S4-3); (I-345) + (S4-4); (I-345) + (S4-5); (I-345) + (S7-1); (I-345) + (S11-1); (I-345) + (S11-2); (I-345) + (S11-3); (I-345) + (S12-1); (I-345) + (S13-1); (I-345) + (S13-2); (I-345) + (S13-3); (I-345) + (S13-4): (I-345) + (S13-5); (I-345) + (S13-6); (I-345) + (S13-7); (I-345) + (S13-8); (I-345) + (S13-9); (I-345) + (S14-1)
(I-346) + (S1-1); (I-346) + (S1-2); (I-346) + (S1-3); (I-346) + (S1-4); (I-346) + (S1-5); (I-346) + (S1-6); (I-346) + (S1-7); (I-346) + (S1-8); (I-346) + (S1-9); (I-346) + (S1-10); (I-346) + (S1-11); (I-346) + (S1-12); (I-346) + (S1-13); (I-346) + (S2-1); (I-346) + (S2-2); (I-346) + (S2-3); (I-346) + (S2-4); (I-346) + (S2-5); (I-346) + (S2-6); (I-346) + (S2-7); (I-346) + (S2-8); (I-346) + (S2-9); (I-346) + (S2-10); (I-346) + (S3-1); (I-346) + (S3-2); (I-346) + (S3-3); (I-346) + (S3-4); (I-346) + (S3-5); (I-346) + (S3-6); (I-346) + (S3-7); (I-346) + (S3-8); (I-346) + (S3-9); (I-346) + (S3-10); (I-346) + (S3-11); (I-346) + (S4-1); (I-346) + (S4-2); (I-346) + (S4-3); (I-346) + (S4-4); (I-346) + (S4-5); (I-346) + (S7-1); (I-346) + (S11-1); (I-346) + (S11-2); (I-346) + (S11-3); (I-346) + (S12-1); (I-346) + (S13-1); (I-346) + (S13-2); (I-346) + (S13-3); (I-346) + (S13-4): (I-346) + (S13-5); (I-346) + (S13-6); (I-346) + (S13-7); (I-346) + (S13-8); (I-346) + (S13-9); (I-346) + (S14-1)
(I-347) + (S1-1); (I-347) + (S1-2); (I-347) + (S1-3); (I-347) + (S1-4); (I-347) + (S1-5); (I-347) + (S1-6); (I-347) + (S1-7); (I-347) + (S1-8); (I-347) + (S1-9); (I-347) + (S1-10); (I-347) + (S1-11); (I-347) + (S1-12); (I-347) + (S1-13); (I-347) + (S2-1); (I-347) + (S2-2); (I-347) + (S2-3); (I-347) + (S2-4); (I-347) + (S2-5); (I-347) + (S2-6); (I-347) + (S2-7); (I-347) + (S2-8); (I-347) + (S2-9); (I-347) + (S2-10); (I-347) + (S3-1); (I-347) + (S3-2); (I-347) + (S3-3); (I-347) + (S3-4); (I-347) + (S3-5); (I-347) + (S3-6); (I-347) + (S3-7); (I-347) + (S3-8); (I-347) + (S3-9); (I-347) + (S3-10); (I-347) + (S3-11); (I-347) + (S4-1); (I-347) + (S4-2); (I-347) + (S4-3); (I-347) + (S4-4), (I-347) + (S4-5); (I-347) + (S7-1); (I-347) + (S11-1); (I-347) + (S11-2); (I-347) + (S11-3); (I-347) + (S12-1); (I-347) + (S13-1); (I-347) + (S13-2); (I-347) + (S13-3); (I-347) + (S13-4): (I-347) + (S13-5); (I-347) + (S13-6); (I-347) + (S13-7); (I-347) + (S13-8); (I-347) + (S13-9); (I-347) + (S14-1)
(I-348) + (S1-1); (I-348) + (S1-2); (I-348) + (S1-3); (I-348) + (S1-4); (I-348) + (S1-5); (I-348) + (S1-6); (I-348) + (S1-7); (I-348) + (S1-8); (I-348) + (S1-9); (I-348) + (S1-10); (I-348) + (S1-11); (I-348) + (S1-12); (I-348) + (S1-13); (I-348) + (S2-1); (I-348) + (S2-2); (I-348) + (S2-3); (I-348) + (S2-4); (I-348) + (S2-5); (I-348) + (S2-6); (I-348) + (S2-7); (I-348) + (S2-8); (I-348) + (S2-9); (I-348) + (S2-10); (I-348) + (S3-1); (I-348) + (S3-2); (I-348) + (S3-3); (I-348) + (S3-4); (I-348) + (S3-5); (I-348) + (S3-6); (I-348) + (S3-7); (I-348) + (S3-8); (I-348) + (S3-9); (I-348) + (S3-10); (I-348) + (S3-11); (I-348) + (S4-1); (I-348) + (S4-2); (I-348) + (S4-3); (I-348) + (S4-4); (I-348) + (S4-5); (I-348) + (S7-1); (I-348) + (S11-1); (I-348) + (S11-2); (I-348) + (S11-3); (I-348) + (S12-1); (I-348) + (S13-1); (I-348) + (S13-2); (I-348) + (S13-3); (I-348) + (S13-4): (I-348) + (S13-5); (I-348) + (S13-6); (I-348) + (S13-7); (I-348) + (S13-8); (I-348) + (S13-9); (I-348) + (S14-1)
(I-349) + (S1-1); (I-349) + (S1-2); (I-349) + (S1-3); (I-349) + (S1-4); (I-349) + (S1-5); (I-349) + (S1-6); (I-349) + (S1-7); (I-349) + (S1-8); (I-349) + (S1-9); (I-349) + (S1-10); (I-349) + (S1-11); (I-349) + (S1-12); (I-349) + (S1-13); (I-349) + (S2-1); (I-349) + (S2-2); (I-349) + (S2-3); (I-349) + (S2-4); (I-349) + (S2-5); (I-349) + (S2-6); (I-349) + (S2-7); (I-349) + (S2-8); (I-349) + (S2-9); (I-349) + (S2-10); (I-349) + (S3-1); (I-349) + (S3-2); (I-349) + (S3-3); (I-349) + (S3-4); (I-349) + (S3-5); (I-349) + (S3-6); (I-349) + (S3-7); (I-349) + (S3-8); (I-349) + (S3-9); (I-349) + (S3-10); (I-349) + (S3-11); (I-349) + (S4-1); (I-349) + (S4-2); (I-349) + (S4-3); (I-349) + (S4-4); (I-349) + (S4-5); (I-349) + (S7-1); (I-349) + (S11-1); (I-349) + (S11-2); (I-349) + (S11-3); (I-349) + (S12-1); (I-349) + (S13-1); (I-349) + (S13-2); (I-349) + (S13-3); (I-349) + (S13-4): (I-349) + (S13-5); (I-349) + (S13-6); (I-349) + (S13-7); (I-349) + (S13-8); (I-349) + (S13-9); (I-349) + (S14-1)
(I-350) + (S1-1); (I-350) + (S1-2); (I-350) + (S1-3); (I-350) + (S1-4); (I-350) + (S1-5); (I-350) + (S1-6); (I-350) + (S1-7); (I-350) + (S1-8); (I-350) + (S1-9); (I-350) + (S1-10); (I-350) + (S1-11); (I-350) + (S1-12); (I-350) + (S1-13); (I-350) + (S2-1); (I-350) + (S2-2); (I-350) + (S2-3); (I-350) + (S2-4); (I-350) + (S2-5); (I-350) + (S2-6); (I-350) + (S2-7); (I-350) + (S2-8); (I-350) + (S2-9); (I-350) + (S2-10); (I-350) + (S3-1); (I-350) + (S3-2); (I-350) + (S3-3); (I-350) + (S3-4); (I-350) + (S3-5); (I-350) + (S3-6); (I-350) + (S3-7); (I-350) + (S3-8); (I-350) + (S3-9); (I-350) + (S3-10); (I-350) + (S3-11); (I-350) + (S4-1); (I-350) + (S4-2); (I-350) + (S4-3); (I-350) + (S4-4); (I-350) + (S4-5); (I-350) + (S7-1); (I-350) + (S11-1); (I-350) + (S11-2); (I-350) + (S11-3); (I-350) + (S12-1); (I-350) + (S13-1); (I-350) + (S13-2); (I-350) + (S13-3); (I-350) + (S13-4): (I-350) + (S13-5); (I-350) + (S13-6); (I-350) + (S13-7); (I-350) + (S13-8); (I-350) + (S13-9); (I-350) + (S14-1)
(I-351) + (S1-1); (I-351) + (S1-2); (I-351) + (S1-3); (I-351) + (S1-4); (I-351) + (S1-5); (I-351) + (S1-6); (I-351) + (S1-7); (I-351) + (S1-8); (I-351) + (S1-9); (I-351) + (S1-10); (I-351) + (S1-11); (I-351) + (S1-12); (I-351) + (S1-13); (I-351) + (S2-1); (I-351) + (S2-2); (I-351) + (S2-3); (I-351) + (S2-4); (I-351) + (S2-5); (I-351) + (S2-6); (I-351) + (S2-7); (I-351) + (S2-8); (I-351) + (S2-9); (I-351) + (S2-10); (I-351) + (S3-1); (I-351) + (S3-2); (I-351) + (S3-3); (I-351) + (S3-4); (I-351) + (S3-5); (I-351) + (S3-6); (I-351) + (S3-7); (I-351) + (S3-8); (I-351) + (S3-9); (I-351) + (S3-10); (I-351) + (S3-11); (I-351) + (S4-1); (I-351) + (S4-2); (I-351) + (S4-3); (I-351) + (S4-4); (I-351) + (S4-5); (I-351) + (S7-1); (I-351) + (S11-1); (I-351) + (S11-2); (I-351) + (S11-3); (I-351) + (S12-1); (I-351) + (S13-1); (I-351) + (S13-2); (I-351) + (S13-3); (I-351) + (S13-4): (I-351) + (S13-5); (I-351) + (S13-6); (I-351) + (S13-7); (I-351) + (S13-8); (I-351) + (S13-9); (I-351) + (S14-1)
(I-352) + (S1-1); (I-352) + (S1-2); (I-352) + (S1-3); (I-352) + (S1-4); (I-352) + (S1-5); (I-352) + (S1-6); (I-352) + (S1-7); (I-352) + (S1-8); (I-352) + (S1-9); (I-352) + (S1-10); (I-352) + (S1-11); (I-352) + (S1-12); (I-352) + (S1-13); (I-352) + (S2-1); (I-352) + (S2-2); (I-352) + (S2-3); (I-352) + (S2-4); (I-352) + (S2-5); (I-352) + (S2-6); (I-352) + (S2-7); (I-352) + (S2-8); (I-352) + (S2-9); (I-352) + (S2-10); (I-352) + (S3-1); (I-352) + (S3-2); (I-352) + (S3-3); (I-352) + (S3-4); (I-352) + (S3-5); (I-352) + (S3-6); (I-352) + (S3-7); (I-352) + (S3-8); (I-352) + (S3-9); (I-352) + (S3-10); (I-352) + (S3-11); (I-352) + (S4-1); (I-352) + (S4-2); (I-352) + (S4-3); (I-352) + (S4-4); (I-352) + (S4-5); (I-352) + (S7-1); (I-352) + (S11-1); (I-352) + (S11-2); (I-352) + (S11-3); (I-352) + (S12-1); (I-352) + (S13-1); (I-352) + (S13-2); (I-352) + (S13-3); (I-352) + (S13-4): (I-352) + (S13-5); (I-352) + (S13-6); (I-352) + (S13-7); (I-352) + (S13-8); (I-352) + (S13-9); (I-352) + (S14-1)
(I-353) + (S1-1); (I-353) + (S1-2); (I-353) + (S1-3); (I-353) + (S1-4); (I-353) + (S1-5); (I-353) + (S1-6); (I-353) + (S1-7); (I-353) + (S1-8); (I-353) + (S1-9); (I-353) + (S1-10); (I-353) + (S1-11); (I-353) + (S1-12); (I-353) + (S1-13); (I-353) + (S2-1); (I-353) + (S2-2); (I-353) + (S2-3); (I-353) + (S2-4); (I-353) + (S2-5); (I-353) + (S2-6); (I-353) + (S2-7); (I-353) + (S2-8); (I-353) + (S2-9); (I-353) + (S2-10); (I-353) + (S3-1); (I-353) + (S3-2); (I-353) + (S3-3); (I-353) + (S3-4); (I-353) + (S3-5); (I-353) + (S3-6); (I-353) + (S3-7); (I-353) + (S3-8); (I-353) + (S3-9); (I-353) + (S3-10); (I-353) + (S3-11); (I-353) + (S4-1); (I-353) + (S4-2); (I-353) + (S4-3); (I-353) + (S4-4); (I-353) + (S4-5); (I-353) + (S7-1); (I-353) + (S11 -1); (I-353) + (S11-2); (I-353) + (S11-3); (I-353) + (S12-1); (I-353) + (S13-1); (I-353) + (S13-2); (I-353) + (S13-3); (I-353) + (S13-4): (I-353) + (S13-5); (I-353) + (S13-6); (I-353) + (S13-7); (I-353) + (S13-8); (I-353) + (S13-9); (I-353) + (S14-1)
(I-354) + (S1-1); (I-354) + (S1-2); (I-354) + (S1-3); (I-354) + (S1-4); (I-354) + (S1-5); (I-354) + (S1-6); (I-354) + (S1-7); (I-354) + (S1-8); (I-354) + (S1-9); (I-354) + (S1-10); (I-354) + (S1-11); (I-354) + (S1-12); (I-354) + (S1-13); (I-354) + (S2-1); (I-354) + (S2-2); (I-354) + (S2-3); (I-354) + (S2-4); (I-354) + (S2-5); (I-354) + (S2-6); (I-354) + (S2-7); (I-354) + (S2-8); (I-354) + (S2-9); (I-354) + (S2-10); (I-354) + (S3-1); (I-354) + (S3-2); (I-354) + (S3-3); (I-354) + (S3-4); (I-354) + (S3-5); (I-354) + (S3-6); (I-354) + (S3-7); (I-354) + (S3-8); (I-354) + (S3-9); (I-354) + (S3-10); (I-354) + (S3-11); (I-354) + (S4-1); (I-354) + (S4-2); (I-354) + (S4-3); (I-354) + (S4-4); (I-354) + (S4-5); (I-354) + (S7-1); (I-354) + (S11-1); (I-354) + (S11-2); (I-354) + (S11-3); (I-354) + (S12-1); (I-354) + (S13-1); (I-354) + (S13-2); (I-354) + (S13-3); (I-354) + (S13-4): (I-354) + (S13-5); (I-354) + (S13-6); (I-354) + (S13-7); (I-354) + (S13-8), (I-354) + (S13-9); (I-354) + (S14-1)
(I-355) + (S1-1); (I-355) + (S1-2); (I-355) + (S1-3); (I-355) + (S1-4); (I-355) + (S1-5); (I-355) + (S1-6); (I-355) + (S1-7); (I-355) + (S1-8); (I-355) + (S1-9); (I-355) + (S1-10); (I-355) + (S1-11); (I-355) + (S1-12); (I-355) + (S1-13); (I-355) + (S2-1); (I-355) + (S2-2); (I-355) + (S2-3); (I-355) + (S2-4); (I-355) + (S2-5); (I-355) + (S2-6); (I-355) + (S2-7); (I-355) + (S2-8); (I-355) + (S2-9); (I-355) + (S2-10); (I-355) + (S3-1); (I-355) + (S3-2); (I-355) + (S3-3); (I-355) + (S3-4); (I-355) + (S3-5); (I-355) + (S3-6); (I-355) + (S3-7); (I-355) + (S3-8); (I-355) + (S3-9); (I-355) + (S3-10); (I-355) + (S3-11); (I-355) + (S4-1); (I-355) + (S4-2); (I-355) + (S4-3); (I-355) + (S4-4); (I-355) + (S4-5); (I-355) + (S7-1); (I-355) + (S11-1); (I-355) + (S11-2); (I-355) + (S11-3); (I-355) + (S12-1); (I-355) + (S13-1); (I-355) + (S13-2); (I-355) + (S13-3); (I-355) + (S13-4): (I-355) + (S13-5); (I-355) + (S13-6); (I-355) + (S13-7); (I-355) + (S13-8); (I-355) + (S13-9); (I-355) + (S14-1)
(I-356) + (S1-1); (I-356) + (S1-2); (I-356) + (S1-3); (I-356) + (S1-4); (I-356) + (S1-5); (I-356) + (S1-6); (I-356) + (S1-7); (I-356) + (S1-8); (I-356) + (S1-9); (I-356) + (S1-10); (I-356) + (S1-11); (I-356) + (S1-12); (I-356) + (S1-13); (I-356) + (S2-1); (I-356) + (S2-2); (I-356) + (S2-3); (I-356) + (S2-4); (I-356) + (S2-5); (I-356) + (S2-6); (I-356) + (S2-7); (I-356) + (S2-8); (I-356) + (S2-9); (I-356) + (S2-10); (I-356) + (S3-1); (I-356) + (S3-2); (I-356) + (S3-3); (I-356) + (S3-4); (I-356) + (S3-5); (I-356) + (S3-6); (I-356) + (S3-7); (I-356) + (S3-8); (I-356) + (S3-9); (I-356) + (S3-10); (I-356) + (S3-11); (I-356) + (S4-1); (I-356) + (S4-2); (I-356) + (S4-3); (I-356) + (S4-4); (I-356) + (S4-5); (I-356) + (S7-1); (I-356) + (S11-1); (I-356) + (S11-2); (I-356) + (S11-3); (I-356) + (S12-1); (I-356) + (S13-1); (I-356) + (S13-2); (I-356) + (S13-3); (I-356) + (S13-4): (I-356) + (S13-5); (I-356) + (S13-6); (I-356) + (S13-7); (I-356) + (S13-8); (I-356) + (S13-9); (I-356) + (S14-1)
(I-357) + (S1-1); (I-357) + (S1-2); (I-357) + (S1-3); (I-357) + (S1-4); (I-357) + (S1-5); (I-357) + (S1-6); (I-357) + (S1-7); (I-357) + (S1-8); (I-357) + (S1-9); (I-357) + (S1-10); (I-357) + (S1-11); (I-357) + (S1-12); (I-357) + (S1-13); (I-357) + (S2-1); (I-357) + (S2-2); (I-357) + (S2-3); (I-357) + (S2-4); (I-357) + (S2-5); (I-357) + (S2-6); (I-357) + (S2-7); (I-357) + (S2-8); (I-357) + (S2-9); (I-357) + (S2-10); (I-357) + (S3-1); (I-357) + (S3-2); (I-357) + (S3-3); (I-357) + (S3-4); (I-357) + (S3-5); (I-357) + (S3-6); (I-357) + (S3-7); (I-357) + (S3-8); (I-357) + (S3-9); (I-357) + (S3-10); (I-357) + (S3-11); (I-357) + (S4-1); (I-357) + (S4-2); (I-357) + (S4-3); (I-357) + (S4-4); (I-357) + (S4-5); (I-357) + (S7-1); (I-357) + (S11-1); (I-357) + (S11-2); (I-357) + (S11-3); (I-357) + (S12-1); (I-357) + (S13-1); (I-357) + (S13-2); (I-357) + (S13-3); (I-357) + (S13-4): (I-357) + (S13-5); (I-357) + (S13-6); (I-357) + (S13-7); (I-357) + (S13-8); (I-357) + (S13-9); (I-357) + (S14-1)
(I-358) + (S1-1); (I-358) + (S1-2); (I-358) + (S1-3); (I-358) + (S1-4); (I-358) + (S1-5); (I-358) + (S1-6); (I-358) + (S1-7); (I-358) + (S1-8); (I-358) + (S1-9); (I-358) + (S1-10); (I-358) + (S1-11); (I-358) + (S1-12); (I-358) + (S1-13); (I-358) + (S2-1); (I-358) + (S2-2); (I-358) + (S2-3); (I-358) + (S2-4); (I-358) + (S2-5); (I-358) + (S2-6); (I-358) + (S2-7); (I-358) + (S2-8); (I-358) + (S2-9); (I-358) + (S2-10); (I-358) + (S3-1); (I-358) + (S3-2); (I-358) + (S3-3); (I-358) + (S3-4); (I-358) + (S3-5); (I-358) + (S3-6); (I-358) + (S3-7); (I-358) + (S3-8); (I-358) + (S3-9); (I-358) + (S3-10); (I-358) + (S3-11); (I-358) + (S4-1); (I-358) + (S4-2); (I-358) + (S4-3); (I-358) + (S4-4); (I-358) + (S4-5); (I-358) + (S7-1); (I-358) + (S11-1); (I-358) + (S11-2); (I-358) + (S11-3); (I-358) + (S12-1); (I-358) + (S13-1); (I-358) + (S13-2); (I-358) + (S13-3); (I-358) + (S13-4): (I-358) + (S13-5); (I-358) + (S13-6); (I-358) + (S13-7); (I-358) + (S13-8); (I-358) + (S13-9); (I-358) + (S14-1)
(I-359) + (S1-1); (I-359) + (S1-2); (I-359) + (S1-3); (I-359) + (S1-4); (I-359) + (S1-5); (I-359) + (S1-6); (I-359) + (S1-7); (I-359) + (S1-8); (I-359) + (S1-9); (I-359) + (S1-10); (I-359) + (S1-11); (I-359) + (S1-12); (I-359) + (S1-13); (I-359) + (S2-1); (I-359) + (S2-2); (I-359) + (S2-3); (I-359) + (S2-4); (I-359) + (S2-5); (I-359) + (S2-6); (I-359) + (S2-7); (I-359) + (S2-8); (I-359) + (S2-9); (I-359) + (S2-10); (I-359) + (S3-1); (I-359) + (S3-2); (I-359) + (S3-3); (I-359) + (S3-4); (I-359) + (S3-5); (I-359) + (S3-6); (I-359) + (S3-7); (I-359) + (S3-8); (I-359) + (S3-9); (I-359) + (S3-10); (I-359) + (S3-11); (I-359) + (S4-1); (I-359) + (S4-2); (I-359) + (S4-3); (I-359) + (S4-4); (I-359) + (S4-5); (I-359) + (S7-1); (I-359) + (S11-1); (I-359) + (S11-2); (I-359) + (S11-3); (I-359) + (S12-1); (I-359) + (S13-1); (I-359) + (S13-2); (I-359) + (S13-3); (I-359) + (S13-4): (I-359) + (S13-5); (I-359) + (S13-6); (I-359) + (S13-7); (I-359) + (S13-8); (I-359) + (S13-9); (I-359) + (S14-1)
(I-360) + (S1-1); (I-360) + (S1-2); (I-360) + (S1-3); (I-360) + (S1-4); (I-360) + (S1-5); (I-360) + (S1-6); (I-360) + (S1-7); (I-360) + (S1-8); (I-360) + (S1-9); (I-360) + (S1-10); (I-360) + (S1-11); (I-360) + (S1-12); (I-360) + (S1-13); (I-360) + (S2-1); (I-360) + (S2-2); (I-360) + (S2-3); (I-360) + (S2-4); (I-360) + (S2-5); (I-360) + (S2-6); (I-360) + (S2-7); (I-360) + (S2-8); (I-360) + (S2-9); (I-360) + (S2-10); (I-360) + (S3-1); (I-360) + (S3-2); (I-360) + (S3-3); (I-360) + (S3-4); (I-360) + (S3-5); (I-360) + (S3-6); (I-360) + (S3-7); (I-360) + (S3-8); (I-360) + (S3-9); (I-360) + (S3-10); (I-360) + (S3-11); (I-360) + (S4-1); (I-360) + (S4-2); (I-360) + (S4-3); (I-360) + (S4-4); (I-360) + (S4-5); (I-360) + (S7-1); (I-360) + (S11-1); (I-360) + (S11-2); (I-360) + (S11-3); (I-360) + (S12-1); (I-360) + (S13-1); (I-360) + (S13-2); (I-360) + (S13-3); (I-360) + (S13-4): (I-360) + (S13-5); (I-360) + (S13-6); (I-360) + (S13-7); (I-360) + (S13-8); (I-360) + (S13-9); (I-360) + (S14-1)
(I-361) + (S1-1); (I-361) + (S1-2); (I-361) + (S1-3); (I-361) + (S1-4); (I-361) + (S1-5); (I-361) + (S1-6); (I-361) + (S1-7); (I-361) + (S1-8); (I-361) + (S1-9); (I-361) + (S1-10); (I-361) + (S1-11); (I-361) + (S1-12); (I-361) + (S1-13); (I-361) + (S2-1); (I-361) + (S2-2); (I-361) + (S2-3); (I-361) + (S2-4); (I-361) + (S2-5); (I-361) + (S2-6); (I-361) + (S2-7); (I-361) + (S2-8); (I-361) + (S2-9); (I-361) + (S2-10); (I-361) + (S3-1); (I-361) + (S3-2); (I-361) + (S3-3); (I-361) + (S3-4); (I-361) + (S3-5); (I-361) + (S3-6); (I-361) + (S3-7); (I-361) + (S3-8); (I-361) + (S3-9); (I-361) + (S3-10); (I-361) + (S3-11); (I-361) + (S4-1); (I-361) + (S4-2); (I-361) + (S4-3); (I-361) + (S4-4); (I-361) + (S4-5); (I-361) + (S7-1); (I-361) + (S11-1); (I-361) + (S11-2); (I-361) + (S11-3); (I-361) + (S12-1); (I-361) + (S13-1); (I-361) + (S13-2); (I-361) + (S13-3); (I-361) + (S13-4): (I-361) + (S13-5); (I-361) + (S13-6); (I-361) + (S13-7); (I-361) + (S13-8); (I-361) + (S13-9); (I-361) + (S14-1)
(I-362) + (S1-1); (I-362) + (S1-2); (I-362) + (S1-3); (I-362) + (S1-4); (I-362) + (S1-5); (I-362) + (S1-6); (I-362) + (S1-7); (I-362) + (S1-8); (I-362) + (S1-9); (I-362) + (S1-10); (I-362) + (S1-11); (I-362) + (S1-12); (I-362) + (S1-13); (I-362) + (S2-1); (I-362) + (S2-2); (I-362) + (S2-3); (I-362) + (S2-4); (I-362) + (S2-5); (I-362) + (S2-6); (I-362) + (S2-7); (I-362) + (S2-8); (I-362) + (S2-9); (I-362) + (S2-10); (I-362) + (S3-1); (I-362) + (S3-2); (I-362) + (S3-3); (I-362) + (S3-4); (I-362) + (S3-5); (I-362) + (S3-6); (I-362) + (S3-7); (I-362) + (S3-8); (I-362) + (S3-9); (I-362) + (S3-10); (I-362) + (S3-11); (I-362) + (S4-1); (I-362) + (S4-2); (I-362) + (S4-3); (I-362) + (S4-4); (I-362) + (S4-5); (I-362) + (S7-1); (I-362) + (S11-1); (I-362) + (S11-2); (I-362) + (S11-3); (I-362) + (S12-1); (I-362) + (S13-1); (I-362) + (S13-2); (I-362) + (S13-3); (I-362) + (S13-4): (I-362) + (S13-5); (I-362) + (S13-6); (I-362) + (S13-7); (I-362) + (S13-8); (I-362) + (S13-9); (I-362) + (S14-1)
(I-363) + (S1-1); (I-363) + (S1-2); (I-363) + (S1-3); (I-363) + (S1-4); (I-363) + (S1-5); (I-363) + (S1-6); (I-363) + (S1-7); (I-363) + (S1-8); (I-363) + (S1-9); (I-363) + (S1-10); (I-363) + (S1-11); (I-363) + (S1-12); (I-363) + (S1-13); (I-363) + (S2-1); (I-363) + (S2-2); (I-363) + (S2-3); (I-363) + (S2-4); (I-363) + (S2-5); (I-363) + (S2-6); (I-363) + (S2-7); (I-363) + (S2-8); (I-363) + (S2-9); (I-363) + (S2-10); (I-363) + (S3-1); (I-363) + (S3-2); (I-363) + (S3-3); (I-363) + (S3-4); (I-363) + (S3-5); (I-363) + (S3-6); (I-363) + (S3-7); (I-363) + (S3-8); (I-363) + (S3-9); (I-363) + (S3-10); (I-363) + (S3-11); (I-363) + (S4-1); (I-363) + (S4-2); (I-363) + (S4-3); (I-363) + (S4-4); (I-363) + (S4-5); (I-363) + (S7-1); (I-363) + (S11-1); (I-363) + (S11-2); (I-363) + (S11-3); (I-363) + (S12-1); (I-363) + (S13-1); (I-363) + (S13-2); (I-363) + (S13-3); (I-363) + (S13-4): (I-363) + (S13-5); (I-363) + (S13-6); (I-363) + (S13-7); (I-363) + (S13-8); (I-363) + (S13-9); (I-363) + (S14-1)
(I-364) + (S1-1); (I-364) + (S1-2); (I-364) + (S1-3); (I-364) + (S1-4); (I-364) + (S1-5); (I-364) + (S1-6); (I-364) + (S1-7); (I-364) + (S1-8); (I-364) + (S1-9); (I-364) + (S1-10); (I-364) + (S1-11); (I-364) + (S1-12); (I-364) + (S1-13); (I-364) + (S2-1); (I-364) + (S2-2); (I-364) + (S2-3); (I-364) + (S2-4); (I-364) + (S2-5); (I-364) + (S2-6); (I-364) + (S2-7); (I-364) + (S2-8); (I-364) + (S2-9); (I-364) + (S2-10); (I-364) + (S3-1); (I-364) + (S3-2); (I-364) + (S3-3); (I-364) + (S3-4); (I-364) + (S3-5); (I-364) + (S3-6); (I-364) + (S3-7); (I-364) + (S3-8); (I-364) + (S3-9); (I-364) + (S3-10); (I-364) + (S3-11); (I-364) + (S4-1); (I-364) + (S4-2); (I-364) + (S4-3); (I-364) + (S4-4); (I-364) + (S4-5); (I-364) + (S7-1); (I-364) + (S11-1); (I-364) + (S11-2); (I-364) + (S11-3); (I-364) + (S12-1); (I-364) + (S13-1); (I-364) + (S13-2); (I-364) + (S13-3); (I-364) + (S13-4): (I-364) + (S13-5); (I-364) + (S13-6); (I-364) + (S13-7); (I-364) + (S13-8); (I-364) + (S13-9); (I-364) + (S14-1)
(I-365) + (S1-1); (I-365) + (S1-2); (I-365) + (S1-3); (I-365) + (S1-4); (I-365) + (S1-5); (I-365) + (S1-6); (I-365) + (S1-7); (I-365) + (S1-8); (I-365) + (S1-9); (I-365) + (S1-10); (I-365) + (S1-11); (I-365) + (S1-12); (I-365) + (S1-13); (I-365) + (S2-1); (I-365) + (S2-2); (I-365) + (S2-3); (I-365) + (S2-4); (I-365) + (S2-5); (I-365) + (S2-6); (I-365) + (S2-7); (I-365) + (S2-8); (I-365) + (S2-9); (I-365) + (S2-10); (I-365) + (S3-1); (I-365) + (S3-2); (I-365) + (S3-3); (I-365) + (S3-4); (I-365) + (S3-5); (I-365) + (S3-6); (I-365) + (S3-7); (I-365) + (S3-8); (I-365) + (S3-9); (I-365) + (S3-10); (I-365) + (S3-11); (I-365) + (S4-1); (I-365) + (S4-2); (I-365) + (S4-3); (I-365) + (S4-4); (I-365) + (S4-5); (I-365) + (S7-1); (I-365) + (S11-1); (I-365) + (S11-2); (I-365) + (S11-3); (I-365) + (S12-1); (I-365) + (S13-1); (I-365) + (S13-2); (I-365) + (S13-3); (I-365) + (S13-4): (I-365) + (S13-5); (I-365) + (S13-6); (I-365) + (S13-7); (I-365) + (S13-8); (I-365) + (S13-9); (I-365) + (S14-1)
(I-366) + (S1-1); (I-366) + (S1-2); (I-366) + (S1-3); (I-366) + (S1-4); (I-366) + (S1-5); (I-366) + (S1-6); (I-366) + (S1-7); (I-366) + (S1-8); (I-366) + (S1-9); (I-366) + (S1-10); (I-366) + (S1-11); (I-366) + (S1-12); (I-366) + (S1-13); (I-366) + (S2-1); (I-366) + (S2-2); (I-366) + (S2-3); (I-366) + (S2-4); (I-366) + (S2-5); (I-366) + (S2-6); (I-366) + (S2-7); (I-366) + (S2-8); (I-366) + (S2-9); (I-366) + (S2-10); (I-366) + (S3-1); (I-366) + (S3-2); (I-366) + (S3-3); (I-366) + (S3-4); (I-366) + (S3-5); (I-366) + (S3-6); (I-366) + (S3-7); (I-366) + (S3-8); (I-366) + (S3-9); (I-366) + (S3-10); (I-366) + (S3-11); (I-366) + (S4-1); (I-366) + (S4-2); (I-366) + (S4-3); (I-366) + (S4-4); (I-366) + (S4-5); (I-366) + (S7-1); (I-366) + (S11-1); (I-366) + (S11-2); (I-366) + (S11-3); (I-366) + (S12-1); (I-366) + (S13-1); (I-366) + (S13-2); (I-366) + (S13-3); (I-366) + (S13-4): (I-366) + (S13-5); (I-366) + (S13-6); (I-366) + (S13-7); (I-366) + (S13-8); (I-366) + (S13-9); (I-366) + (S14-1)
(I-367) + (S1-1); (I-367) + (S1-2); (I-367) + (S1-3); (I-367) + (S1-4); (I-367) + (S1-5); (I-367) + (S1-6); (I-367) + (S1-7); (I-367) + (S1-8); (I-367) + (S1-9); (I-367) + (S1-10); (I-367) + (S1-11); (I-367) + (S1-12); (I-367) + (S1-13); (I-367) + (S2-1); (I-367) + (S2-2); (I-367) + (S2-3); (I-367) + (S2-4); (I-367) + (S2-5); (I-367) + (S2-6); (I-367) + (S2-7); (I-367) + (S2-8); (I-367) + (S2-9); (I-367) + (S2-10); (I-367) + (S3-1); (I-367) + (S3-2); (I-367) + (S3-3); (I-367) + (S3-4); (I-367) + (S3-5); (I-367) + (S3-6); (I-367) + (S3-7); (I-367) + (S3-8); (I-367) + (S3-9); (I-367) + (S3-10); (I-367) + (S3-11); (I-367) + (S4-1); (I-367) + (S4-2); (I-367) + (S4-3); (I-367) + (S4-4); (I-367) + (S4-5); (I-367) + (S7-1); (I-367) + (S11-1); (I-367) + (S11-2); (I-367) + (S11-3); (I-367) + (S12-1); (I-367) + (S13-1); (I-367) + (S13-2); (I-367) + (S13-3); (I-367) + (S13-4): (I-367) + (S13-5); (I-367) + (S13-6); (I-367) + (S13-7); (I-367) + (S13-8); (I-367) + (S13-9); (I-367) + (S14-1)
(I-368) + (S1-1); (I-368) + (S1-2); (I-368) + (S1-3); (I-368) + (S1-4); (I-368) + (S1-5); (I-368) + (S1-6); (I-368) + (S1-7); (I-368) + (S1-8); (I-368) + (S1-9); (I-368) + (S1-10); (I-368) + (S1-11); (I-368) + (S1-12); (I-368) + (S1-13); (I-368) + (S2-1); (I-368) + (S2-2); (I-368) + (S2-3); (I-368) + (S2-4); (I-368) + (S2-5); (I-368) + (S2-6); (I-368) + (S2-7); (I-368) + (S2-8); (I-368) + (S2-9); (I-368) + (S2-10); (I-368) + (S3-1); (I-368) + (S3-2); (I-368) + (S3-3); (I-368) + (S3-4); (I-368) + (S3-5); (I-368) + (S3-6); (I-368) + (S3-7); (I-368) + (S3-8); (I-368) + (S3-9); (I-368) + (S3-10); (I-368) + (S3-11); (I-368) + (S4-1); (I-368) + (S4-2); (I-368) + (S4-3); (I-368) + (S4-4); (I-368) + (S4-5); (I-368) + (S7-1); (I-368) + (S11-1); (I-368) + (S11-2); (I-368) + (S11-3); (I-368) + (S12-1); (I-368) + (S13-1); (I-368) + (S13-2); (I-368) + (S13-3); (I-368) + (S13-4): (I-368) + (S13-5); (I-368) + (S13-6); (I-368) + (S13-7); (I-368) + (S13-8); (I-368) + (S13-9); (I-368) + (S14-1)
(I-369) + (S1-1); (I-369) + (S1-2); (I-369) + (S1-3); (I-369) + (S1-4); (I-369) + (S1-5); (I-369) + (S1-6); (I-369) + (S1-7); (I-369) + (S1-8); (I-369) + (S1-9); (I-369) + (S1-10); (I-369) + (S1-11); (I-369) + (S1-12); (I-369) + (S1-13); (I-369) + (S2-1); (I-369) + (S2-2); (I-369) + (S2-3); (I-369) + (S2-4); (I-369) + (S2-5); (I-369) + (S2-6); (I-369) + (S2-7); (I-369) + (S2-8); (I-369) + (S2-9); (I-369) + (S2-10); (I-369) + (S3-1); (I-369) + (S3-2); (I-369) + (S3-3); (I-369) + (S3-4); (I-369) + (S3-5); (I-369) + (S3-6); (I-369) + (S3-7); (I-369) + (S3-8); (I-369) + (S3-9); (I-369) + (S3-10); (I-369) + (S3-11); (I-369) + (S4-1); (I-369) + (S4-2); (I-369) + (S4-3); (I-369) + (S4-4); (I-369) + (S4-5); (I-369) + (S7-1); (I-369) + (S11-1); (I-369) + (S11-2); (I-369) + (S11-3); (I-369) + (S12-1); (I-369) + (S13-1); (I-369) + (S13-2); (I-369) + (S13-3); (I-369) + (S13-4): (I-369) + (S13-5); (I-369) + (S13-6); (I-369) + (S13-7); (I-369) + (S13-8); (I-369) + (S13-9); (I-369) + (S14-1)
(I-370) + (S1-1); (I-370) + (S1-2); (I-370) + (S1-3); (I-370) + (S1-4); (I-370) + (S1-5); (I-370) + (S1-6); (I-370) + (S1-7); (I-370) + (S1-8); (I-370) + (S1-9); (I-370) + (S1-10); (I-370) + (S1-11); (I-370) + (S1-12); (I-370) + (S1-13); (I-370) + (S2-1); (I-370) + (S2-2); (I-370) + (S2-3); (I-370) + (S2-4); (I-370) + (S2-5); (I-370) + (S2-6); (I-370) + (S2-7); (I-370) + (S2-8); (I-370) + (S2-9); (I-370) + (S2-10); (I-370) + (S3-1); (I-370) + (S3-2); (I-370) + (S3-3); (I-370) + (S3-4); (I-370) + (S3-5); (I-370) + (S3-6); (I-370) + (S3-7); (I-370) + (S3-8); (I-370) + (S3-9); (I-370) + (S3-10); (I-370) + (S3-11); (I-370) + (S4-1); (I-370) + (S4-2); (I-370) + (S4-3); (I-370) + (S4-4); (I-370) + (S4-5); (I-370) + (S7-1); (I-370) + (S11-1); (I-370) + (S11-2); (I-370) + (S11-3); (I-370) + (S12-1); (I-370) + (S13-1); (I-370) + (S13-2); (I-370) + (S13-3); (I-370) + (S13-4): (I-370) + (S13-5); (I-370) + (S13-6); (I-370) + (S13-7); (I-370) + (S13-8); (I-370) + (S13-9); (I-370) + (S14-1)
(I-371) + (S1-1); (I-371) + (S1-2); (I-371) + (S1-3); (I-371) + (S1-4); (I-371) + (S1-5); (I-371) + (S1-6); (I-371) + (S1-7); (I-371) + (S1-8); (I-371) + (S1-9); (I-371) + (S1-10); (I-371) + (S1-11); (I-371) + (S1-12); (I-371) + (S1-13); (I-371) + (S2-1); (I-371) + (S2-2); (I-371) + (S2-3); (I-371) + (S2-4); (I-371) + (S2-5); (I-371) + (S2-6); (I-371) + (S2-7); (I-371) + (S2-8); (I-371) + (S2-9); (I-371) + (S2-10); (I-371) + (S3-1); (I-371) + (S3-2); (I-371) + (S3-3); (I-371) + (S3-4); (I-371) + (S3-5); (I-371) + (S3-6); (I-371) + (S3-7); (I-371) + (S3-8); (I-371) + (S3-9); (I-371) + (S3-10); (I-371) + (S3-11); (I-371) + (S4-1); (I-371) + (S4-2); (I-371) + (S4-3); (I-371) + (S4-4); (I-371) + (S4-5); (I-371) + (S7-1); (I-371) + (S11-1); (I-371) + (S11-2); (I-371) + (S11-3); (I-371) + (S12-1); (I-371) + (S13-1); (I-371) + (S13-2); (I-371) + (S13-3); (I-371) + (S13-4): (I-371) + (S13-5); (I-371) + (S13-6); (I-371) + (S13-7); (I-371) + (S13-8); (I-371) + (S13-9); (I-371) + (S14-1)
(I-372) + (S1-1); (I-372) + (S1-2); (I-372) + (S1-3); (I-372) + (S1-4); (I-372) + (S1-5); (I-372) + (S1-6); (I-372) + (S1-7); (I-372) + (S1-8); (I-372) + (S1-9); (I-372) + (S1-10); (I-372) + (S1-11); (I-372) + (S1-12); (I-372) + (S1-13); (I-372) + (S2-1); (I-372) + (S2-2); (I-372) + (S2-3); (I-372) + (S2-4); (I-372) + (S2-5); (I-372) + (S2-6); (I-372) + (S2-7); (I-372) + (S2-8); (I-372) + (S2-9); (I-372) + (S2-10); (I-372) + (S3-1); (I-372) + (S3-2); (I-372) + (S3-3); (I-372) + (S3-4); (I-372) + (S3-5); (I-372) + (S3-6); (I-372) + (S3-7); (I-372) + (S3-8); (I-372) + (S3-9); (I-372) + (S3-10); (I-372) + (S3-11); (I-372) + (S4-1); (I-372) + (S4-2); (I-372) + (S4-3); (I-372) + (S4-4); (I-372) + (S4-5); (I-372) + (S7-1); (I-372) + (S11-1); (I-372) + (S11-2); (I-372) + (S11-3); (I-372) + (S12-1); (I-372) + (S13-1); (I-372) + (S13-2); (I-372) + (S13-3); (I-372) + (S13-4): (I-372) + (S13-5); (I-372) + (S13-6); (I-372) + (S13-7); (I-372) + (S13-8); (I-372) + (S13-9); (I-372) + (S14-1)
(I-372) + (S1-1); (I-372) + (S1-2); (I-372) + (S1-3); (I-372) + (S1-4); (I-372) + (S1-5); (I-372) + (S1-6); (I-372) + (S1-7); (I-372) + (S1-8); (I-372) + (S1-9); (I-372) + (S1-10); (I-372) + (S1-11); (I-372) + (S1-12); (I-372) + (S1-13); (I-372) + (S2-1); (I-372) + (S2-2); (I-372) + (S2-3); (I-372) + (S2-4); (I-372) + (S2-5); (I-372) + (S2-6); (I-372) + (S2-7); (I-372) + (S2-8); (I-372) + (S2-9); (I-372) + (S2-10); (I-372) + (S3-1); (I-372) + (S3-2); (I-372) + (S3-3); (I-372) + (S3-4); (I-372) + (S3-5); (I-372) + (S3-6); (I-372) + (S3-7); (I-372) + (S3-8); (I-372) + (S3-9); (I-372) + (S3-10); (I-372) + (S3-11); (I-372) + (S4-1); (I-372) + (S4-2); (I-372) + (S4-3); (I-372) + (S4-4); (I-372) + (S4-5); (I-372) + (S7-1); (I-372) + (S11-1); (I-372) + (S11-2); (I-372) + (S11-3); (I-372) + (S12-1); (I-372) + (S13-1); (I-372) + (S13-2); (I-372) + (S13-3); (I-372) + (S13-4): (I-372) + (S13-5); (I-372) + (S13-6); (I-372) + (S13-7); (I-372) + (S13-8); (I-372) + (S13-9); (I-372) + (S14-1)
(I-373) + (S1-1); (I-373) + (S1-2); (I-373) + (S1-3); (I-373) + (S1-4); (I-373) + (S1-5); (I-373) + (S1-6); (I-373) + (S1-7); (I-373) + (S1-8); (I-373) + (S1-9); (I-373) + (S1-10); (I-373) + (S1-11); (I-373) + (S1-12); (I-373) + (S1-13); (I-373) + (S2-1); (I-373) + (S2-2); (I-373) + (S2-3); (I-373) + (S2-4); (I-373) + (S2-5); (I-373) + (S2-6); (I-373) + (S2-7); (I-373) + (S2-8); (I-373) + (S2-9); (I-373) + (S2-10); (I-373) + (S3-1); (I-373) + (S3-2); (I-373) + (S3-3); (I-373) + (S3-4); (I-373) + (S3-5); (I-373) + (S3-6); (I-373) + (S3-7); (I-373) + (S3-8); (I-373) + (S3-9); (I-373) + (S3-10); (I-373) + (S3-11); (I-373) + (S4-1); (I-373) + (S4-2); (I-373) + (S4-3); (I-373) + (S4-4); (I-373) + (S4-5); (I-373) + (S7-1); (I-373) + (S11-1); (I-373) + (S11-2); (I-373) + (S11-3); (I-373) + (S12-1); (I-373) + (S13-1); (I-373) + (S13-2); (I-373) + (S13-3); (I-373) + (S13-4): (I-373) + (S13-5); (I-373) + (S13-6); (I-373) + (S13-7); (I-373) + (S13-8); (I-373) + (S13-9); (I-373) + (S14-1)
(I-374) + (S1-1); (I-374) + (S1-2); (I-374) + (S1-3); (I-374) + (S1-4); (I-374) + (S1-5); (I-374) + (S1-6); (I-374) + (S1-7); (I-374) + (S1-8); (I-374) + (S1-9); (I-374) + (S1-10); (I-374) + (S1-11); (I-374) + (SI-12); (I-374) + (S1-13); (I-374) + (S2-1); (I-374) + (S2-2); (I-374) + (S2-3); (I-374) + (S2-4); (I-374) + (S2-5); (I-374) + (S2-6); (I-374) + (S2-7); (I-374) + (S2-8); (I-374) + (S2-9); (I-374) + (S2-10); (I-374) + (S3-1); (I-374) + (S3-2); (I-374) + (S3-3); (I-374) + (S3-4); (I-374) + (S3-5); (I-374) + (S3-6); (I-374) + (S3-7); (I-374) + (S3-8); (I-374) + (S3-9); (I-374) + (S3-10); (I-374) + (S3-11); (I-374) + (S4-1); (I-374) + (S4-2); (I-374) + (S4-3); (I-374) + (S4-4); (I-374) + (S4-5); (I-374) + (S7-1); (I-374) + (S11-1); (I-374) + (S11-2); (I-374) + (S11-3); (I-374) + (S12-1); (I-374) + (S13-1); (I-374) + (S13-2); (I-374) + (S13-3); (I-374) + (S13-4): (I-374) + (S13-5); (I-374) + (S13-6); (I-374) + (S13-7); (I-374) + (S13-8), (I-374) + (S13-9); (I-374) + (S14-1)
(I-375) + (S1-1); (I-375) + (S1-2); (I-375) + (S1-3); (I-375) + (S1-4); (I-375) + (S1-5); (I-375) + (S1-6); (I-375) + (S1-7); (I-375) + (S1-8); (I-375) + (S1-9); (I-375) + (S1-10); (I-375) + (S1-11); (I-375) + (S1-12); (I-375) + (S1-13); (I-375) + (S2-1); (I-375) + (S2-2); (I-375) + (S2-3); (I-375) + (S2-4); (I-375) + (S2-5); (I-375) + (S2-6); (I-375) + (S2-7); (I-375) + (S2-8); (I-375) + (S2-9); (I-375) + (S2-10); (I-375) + (S3-1); (I-375) + (S3-2); (I-375) + (S3-3); (I-375) + (S3-4); (I-375) + (S3-5); (I-375) + (S3-6); (I-375) + (S3-7); (I-375) + (S3-8); (I-375) + (S3-9); (I-375) + (S3-10); (I-375) + (S3-11); (I-375) + (S4-1); (I-375) + (S4-2); (I-375) + (S4-3); (I-375) + (S4-4); (I-375) + (S4-5); (I-375) + (S7-1); (I-375) + (S11-1); (I-375) + (S11-2); (I-375) + (S11-3); (I-375) + (S12-1); (I-375) + (S13-1); (I-375) + (S13-2); (I-375) + (S13-3); (I-375) + (S13-4): (I-375) + (S13-5); (I-375) + (S13-6); (I-375) + (S13-7); (I-375) + (S13-8); (I-375) + (S13-9); (I-375) + (S14-1)
(I-376) + (S1-1); (I-376) + (S1-2); (I-376) + (S1-3); (I-376) + (S1-4); (I-376) + (S1-5); (I-376) + (S1-6); (I-376) + (S1-7); (I-376) + (S1-8); (I-376) + (S1-9); (I-376) + (S1-10); (I-376) + (S1-11); (I-376) + (S1-12); (I-376) + (S1-13); (I-376) + (S2-1); (I-376) + (S2-2); (I-376) + (S2-3); (I-376) + (S2-4); (I-376) + (S2-5); (I-376) + (S2-6); (I-376) + (S2-7); (I-376) + (S2-8); (I-376) + (S2-9); (I-376) + (S2-10); (I-376) + (S3-1); (I-376) + (S3-2); (I-376) + (S3-3); (I-376) + (S3-4); (I-376) + (S3-5); (I-376) + (S3-6); (I-376) + (S3-7); (I-376) + (S3-8); (I-376) + (S3-9); (I-376) + (S3-10); (I-376) + (S3-11); (I-376) + (S4-1); (I-376) + (S4-2); (I-376) + (S4-3); (I-376) + (S4-4); (I-376) + (S4-5); (I-376) + (S7-1); (I-376) + (S11-1); (I-376) + (S11-2); (I-376) + (S11-3); (I-376) + (S12-1); (I-376) + (S13-1); (I-376) + (S13-2); (I-376) + (S13-3); (I-376) + (S13-4): (I-376) + (S13-5); (I-376) + (S13-6); (I-376) + (S13-7); (I-376) + (S13-8); (I-376) + (S13-9); (I-376) + (S14-1)
(I-377) + (S1-1); (I-377) + (S1-2); (I-377) + (S1-3); (I-377) + (S1-4); (I-377) + (S1-5); (I-377) + (S1-6); (I-377) + (S1-7); (I-377) + (S1-8); (I-377) + (S1-9); (I-377) + (S1-10); (I-377) + (S1-11); (I-377) + (S1-12); (I-377) + (S1-13); (I-377) + (S2-1); (I-377) + (S2-2); (I-377) + (S2-3); (I-377) + (S2-4); (I-377) + (S2-5); (I-377) + (S2-6); (I-377) + (S2-7); (I-377) + (S2-8); (I-377) + (S2-9); (I-377) + (S2-10); (I-377) + (S3-1); (I-377) + (S3-2); (I-377) + (S3-3); (I-377) + (S3-4); (I-377) + (S3-5); (I-377) + (S3-6); (I-377) + (S3-7); (I-377) + (S3-8); (I-377) + (S3-9); (I-377) + (S3-10); (I-377) + (S3-11); (I-377) + (S4-1); (I-377) + (S4-2); (I-377) + (S4-3); (I-377) + (S4-4); (I-377) + (S4-5); (I-377) + (S7-1); (I-377) + (S11-1); (I-377) + (S11-2); (I-377) + (S11-3); (I-377) + (S12-1); (I-377) + (S13-1); (I-377) + (S13-2); (I-377) + (S13-3); (I-377) + (S13-4): (I-377) + (S13-5); (I-377) + (S13-6); (I-377) + (S13-7); (I-377) + (S13-8); (I-377) + (S13-9); (I-377) + (S14-1)
(I-378) + (S1-1); (I-378) + (S1-2); (I-378) + (S1-3); (I-378) + (S1-4); (I-378) + (S1-5); (I-378) + (S1-6); (I-378) + (S1-7); (I-378) + (S1-8); (I-378) + (S1-9); (I-378) + (S1-10); (I-378) + (S1-11); (I-378) + (S1-12); (I-378) + (S1-13); (I-378) + (S2-1); (I-378) + (S2-2); (I-378) + (S2-3); (I-378) + (S2-4); (I-378) + (S2-5); (I-378) + (S2-6); (I-378) + (S2-7); (I-378) + (S2-8); (I-378) + (S2-9); (I-378) + (S2-10); (I-378) + (S3-1); (I-378) + (S3-2); (I-378) + (S3-3); (I-378) + (S3-4); (I-378) + (S3-5); (I-378) + (S3-6); (I-378) + (S3-7); (I-378) + (S3-8); (I-378) + (S3-9); (I-378) + (S3-10); (I-378) + (S3-11); (I-378) + (S4-1); (I-378) + (S4-2); (I-378) + (S4-3); (I-378) + (S4-4); (I-378) + (S4-5); (I-378) + (S7-1); (I-378) + (S11-1); (I-378) + (S11-2); (I-378) + (S11-3); (I-378) + (S12-1); (I-378) + (S13-1); (I-378) + (S13-2); (I-378) + (S13-3); (I-378) + (S13-4): (I-378) + (S13-5); (I-378) + (S13-6); (I-378) + (S13-7); (I-378) + (S13-8); (I-378) + (S13-9); (I-378) + (S14-1)
(I-379) + (S1-1); (I-379) + (S1-2); (I-379) + (S1-3); (I-379) + (S1-4); (I-379) + (S1-5); (I-379) + (S1-6); (I-379) + (S1-7); (I-379) + (S1-8); (I-379) + (S1-9); (I-379) + (S1-10); (I-379) + (S1-11); (I-379) + (S1-12); (I-379) + (S1-13); (I-379) + (S2-1); (I-379) + (S2-2); (I-379) + (S2-3); (I-379) + (S2-4); (I-379) + (S2-5); (I-379) + (S2-6); (I-379) + (S2-7); (I-379) + (S2-8); (I-379) + (S2-9); (I-379) + (S2-10); (I-379) + (S3-1); (I-379) + (S3-2); (I-379) + (S3-3); (I-379) + (S3-4); (I-379) + (S3-5); (I-379) + (S3-6); (I-379) + (S3-7); (I-379) + (S3-8); (I-379) + (S3-9); (I-379) + (S3-10); (I-379) + (S3-11); (I-379) + (S4-1); (I-379) + (S4-2); (I-379) + (S4-3); (I-379) + (S4-4); (I-379) + (S4-5); (I-379) + (S7-1); (I-379) + (S11-1); (I-379) + (S11-2); (I-379) + (S11-3); (I-379) + (S12-1); (I-379) + (S13-1); (I-379) + (S13-2); (I-379) + (S13-3); (I-379) + (S13-4): (I-379) + (S13-5); (I-379) + (S13-6); (I-379) + (S13-7); (I-379) + (S13-8); (I-379) + (S13-9); (I-379) + (S14-1)
(I-380) + (S1-1); (I-380) + (S1-2); (I-380) + (S1-3); (I-380) + (S1-4); (I-380) + (S1-5); (I-380) + (S1-6); (I-380) + (S1-7); (I-380) + (S1-8); (I-380) + (S1-9); (I-380) + (S1-10); (I-380) + (S1-11); (I-380) + (S1-12); (I-380) + (S1-13); (I-380) + (S2-1); (I-380) + (S2-2); (I-380) + (S2-3); (I-380) + (S2-4); (I-380) + (S2-5); (I-380) + (S2-6); (I-380) + (S2-7); (I-380) + (S2-8); (I-380) + (S2-9); (I-380) + (S2-10); (I-380) + (S3-1); (I-380) + (S3-2); (I-380) + (S3-3); (I-380) + (S3-4); (I-380) + (S3-5); (I-380) + (S3-6); (I-380) + (S3-7); (I-380) + (S3-8); (I-380) + (S3-9); (I-380) + (S3-10); (I-380) + (S3-11); (I-380) + (S4-1); (I-380) + (S4-2); (I-380) + (S4-3); (I-380) + (S4-4); (I-380) + (S4-5); (I-380) + (S7-1); (I-380) + (S11-1); (I-380) + (S11-2); (I-380) + (S11-3); (I-380) + (S12-1); (I-380) + (S13-1); (I-380) + (S13-2); (I-380) + (S13-3); (I-380) + (S13-4): (I-380) + (S13-5); (I-380) + (S13-6); (I-380) + (S13-7); (I-380) + (S13-8); (I-380) + (S13-9); (I-380) + (S14-1)
(I-381) + (S1-1); (I-381) + (S1-2); (I-381) + (S1-3); (I-381) + (S1-4); (I-381) + (S1-5); (I-381) + (S1-6); (I-381) + (S1-7); (I-381) + (S1-8); (I-381) + (S1-9); (I-381) + (S1-10); (I-381) + (S1-11); (I-381) + (S1-12); (I-381) + (S1-13); (I-381) + (S2-1); (I-381) + (S2-2); (I-381) + (S2-3); (I-381) + (S2-4); (I-381) + (S2-5); (I-381) + (S2-6); (I-381) + (S2-7); (I-381) + (S2-8); (I-381) + (S2-9); (I-381) + (S2-10); (I-381) + (S3-1); (I-381) + (S3-2); (I-381) + (S3-3); (I-381) + (S3-4); (I-381) + (S3-5); (I-381) + (S3-6); (I-381) + (S3-7); (I-381) + (S3-8); (I-381) + (S3-9); (I-381) + (S3-10); (I-381) + (S3-11); (I-381) + (S4-1); (I-381) + (S4-2); (I-381) + (S4-3); (I-381) + (S4-4); (I-381) + (S4-5); (I-381) + (S7-1); (I-381) + (S11-1); (I-381) + (S11-2); (I-381) + (S11-3); (I-381) + (S12-1); (I-381) + (S13-1); (I-381) + (S13-2); (I-381) + (S13-3); (I-381) + (S13-4): (I-381) + (S13-5); (I-381) + (S13-6); (I-381) + (S13-7); (I-381) + (S13-8); (I-381) + (S13-9); (I-381) + (S14-1)
(I-382) + (S1-1); (I-382) + (S1-2); (I-382) + (S1-3); (I-382) + (S1-4); (I-382) + (S1-5); (I-382) + (S1-6); (I-382) + (S1-7); (I-382) + (S1-8); (I-382) + (S1-9); (I-382) + (S1-10); (I-382) + (S1-11); (I-382) + (S1-12); (I-382) + (S1-13); (I-382) + (S2-1); (I-382) + (S2-2); (I-382) + (S2-3); (I-382) + (S2-4); (I-382) + (S2-5); (I-382) + (S2-6); (I-382) + (S2-7); (I-382) + (S2-8); (I-382) + (S2-9); (I-382) + (S2-10); (I-382) + (S3-1); (I-382) + (S3-2); (I-382) + (S3-3); (I-382) + (S3-4); (I-382) + (S3-5); (I-382) + (S3-6); (I-382) + (S3-7); (I-382) + (S3-8); (I-382) + (S3-9); (I-382) + (S3-10); (I-382) + (S3-11); (I-382) + (S4-1); (I-382) + (S4-2); (I-382) + (S4-3); (I-382) + (S4-4); (I-382) + (S4-5); (I-382) + (S7-1); (I-382) + (S11-1); (I-382) + (S11-2); (I-382) + (S11-3); (I-382) + (S12-1); (I-382) + (S13-1); (I-382) + (S13-2); (I-382) + (S13-3); (I-382) + (S13-4): (I-382) + (S13-5); (I-382) + (S13-6); (I-382) + (S13-7); (I-382) + (S13-8); (I-382) + (S13-9); (I-382) + (S14-1)
(I-383) + (S1-1); (I-383) + (S1-2); (I-383) + (S1-3); (I-383) + (S1-4); (I-383) + (S1-5); (I-383) + (S1-6); (I-383) + (S1-7); (I-383) + (S1-8); (I-383) + (S1-9); (I-383) + (S1-10); (I-383) + (S1-11); (I-383) + (S1-12); (I-383) + (S1-13); (I-383) + (S2-1); (I-383) + (S2-2); (I-383) + (S2-3); (I-383) + (S2-4); (I-383) + (S2-5); (I-383) + (S2-6); (I-383) + (S2-7); (I-383) + (S2-8); (I-383) + (S2-9); (I-383) + (S2-10); (I-383) + (S3-1); (I-383) + (S3-2); (I-383) + (S3-3); (I-383) + (S3-4); (I-383) + (S3-5); (I-383) + (S3-6); (I-383) + (S3-7); (I-383) + (S3-8); (I-383) + (S3-9); (I-383) + (S3-10); (I-383) + (S3-11); (I-383) + (S4-1); (I-383) + (S4-2); (I-383) + (S4-3); (I-383) + (S4-4); (I-383) + (S4-5); (I-383) + (S7-1); (I-383) + (S11-1); (I-383) + (S11-2); (I-383) + (S11-3); (I-383) + (S12-1); (I-383) + (S13-1); (I-383) + (S13-2); (I-383) + (S13-3); (I-383) + (S13-4): (I-383) + (S13-5); (I-383) + (S13-6); (I-383) + (S13-7); (I-383) + (S13-8); (I-383) + (S13-9); (I-383) + (S14-1)
(I-384) + (S1-1); (I-384) + (S1-2); (I-384) + (S1-3); (I-384) + (S1-4); (I-384) + (S1-5); (I-384) + (S1-6); (I-384) + (S1-7); (I-384) + (S1-8); (I-384) + (S1-9); (I-384) + (S1-10); (I-384) + (S1-11); (I-384) + (S1-12); (I-384) + (S1-13); (I-384) + (S2-1); (I-384) + (S2-2); (I-384) + (S2-3); (I-384) + (S2-4); (I-384) + (S2-5); (I-384) + (S2-6); (I-384) + (S2-7); (I-384) + (S2-8); (I-384) + (S2-9); (I-384) + (S2-10); (I-384) + (S3-1); (I-384) + (S3-2); (I-384) + (S3-3); (I-384) + (S3-4); (I-384) + (S3-5); (I-384) + (S3-6); (I-384) + (S3-7); (I-384) + (S3-8); (I-384) + (S3-9); (I-384) + (S3-10); (I-384) + (S3-11); (I-384) + (S4-1); (I-384) + (S4-2); (I-384) + (S4-3); (I-384) + (S4-4); (I-384) + (S4-5); (I-384) + (S7-1); (I-384) + (S11-1); (I-384) + (S11-2); (I-384) + (S11-3); (I-384) + (S12-1); (I-384) + (S13-1); (I-384) + (S13-2); (I-384) + (S13-3); (I-384) + (S13-4): (I-384) + (S13-5); (I-384) + (S13-6); (I-384) + (S13-7); (I-384) + (S13-8); (I-384) + (S13-9); (I-384) + (S14-1)
(I-385) + (S1-1); (I-385) + (S1-2); (I-385) + (S1-3); (I-385) + (S1-4); (I-385) + (S1-5); (I-385) + (S1-6); (I-385) + (S1-7); (I-385) + (S1-8); (I-385) + (S1-9); (I-385) + (S1-10); (I-385) + (S1-11); (I-385) + (S1-12); (I-385) + (S1-13); (I-385) + (S2-1); (I-385) + (S2-2); (I-385) + (S2-3); (I-385) + (S2-4); (I-385) + (S2-5); (I-385) + (S2-6); (I-385) + (S2-7); (I-385) + (S2-8); (I-385) + (S2-9); (I-385) + (S2-10); (I-385) + (S3-1); (I-385) + (S3-2); (I-385) + (S3-3); (I-385) + (S3-4); (I-385) + (S3-5); (I-385) + (S3-6); (I-385) + (S3-7); (I-385) + (S3-8); (I-385) + (S3-9); (I-385) + (S3-10); (I-385) + (S3-11); (I-385) + (S4-1); (I-385) + (S4-2); (I-385) + (S4-3); (I-385) + (S4-4); (I-385) + (S4-5); (I-385) + (S7-1); (I-385) + (S11-1); (I-385) + (S11-2); (I-385) + (S11-3); (I-385) + (S12-1); (I-385) + (S13-1); (I-385) + (S13-2); (I-385) + (S13-3); (I-385) + (S13-4): (I-385) + (S13-5); (I-385) + (S13-6); (I-385) + (S13-7); (I-385) + (S13-8); (I-385) + (S13-9); (I-385) + (S14-1)
(I-386) + (S1-1); (I-386) + (S1-2); (I-386) + (S1-3); (I-386) + (S1-4); (I-386) + (S1-5); (I-386) + (S1-6); (I-386) + (S1-7); (I-386) + (S1-8); (I-386) + (S1-9); (I-386) + (S1-10); (I-386) + (S1-11); (I-386) + (S1-12); (I-386) + (S1-13); (I-386) + (S2-1); (I-386) + (S2-2); (I-386) + (S2-3); (I-386) + (S2-4); (I-386) + (S2-5); (I-386) + (S2-6); (I-386) + (S2-7); (I-386) + (S2-8); (I-386) + (S2-9); (I-386) + (S2-10); (I-386) + (S3-1); (I-386) + (S3-2); (I-386) + (S3-3); (I-386) + (S3-4); (I-386) + (S3-5); (I-386) + (S3-6); (I-386) + (S3-7); (I-386) + (S3-8); (I-386) + (S3-9); (I-386) + (S3-10); (I-386) + (S3-11); (I-386) + (S4-1); (I-386) + (S4-2); (I-386) + (S4-3); (I-386) + (S4-4); (I-386) + (S4-5); (I-386) + (S7-1); (I-386) + (S11-1); (I-386) + (S11-2); (I-386) + (S11-3); (I-386) + (S12-1); (I-386) + (S13-1); (I-386) + (S13-2); (I-386) + (S13-3); (I-386) + (S13-4): (I-386) + (S13-5); (I-386) + (S13-6); (I-386) + (S13-7); (I-386) + (S13-8); (I-386) + (S13-9); (I-386) + (S14-1)
(I-387) + (S1-1); (I-387) + (S1-2); (I-387) + (S1-3); (I-387) + (S1-4); (I-387) + (S1-5); (I-387) + (S1-6); (I-387) + (S1-7); (I-387) + (S1-8); (I-387) + (S1-9); (I-387) + (S1-10); (I-387) + (S1-11); (I-387) + (S1-12); (I-387) + (S1-13); (I-387) + (S2-1); (I-387) + (S2-2); (I-387) + (S2-3); (I-387) + (S2-4); (I-387) + (S2-5); (I-387) + (S2-6); (I-387) + (S2-7); (I-387) + (S2-8); (I-387) + (S2-9); (I-387) + (S2-10); (I-387) + (S3-1); (I-387) + (S3-2); (I-387) + (S3-3); (I-387) + (S3-4); (I-387) + (S3-5); (I-387) + (S3-6); (I-387) + (S3-7); (I-387) + (S3-8); (I-387) + (S3-9); (I-387) + (S3-10); (I-387) + (S3-11); (I-387) + (S4-1); (I-387) + (S4-2); (I-387) + (S4-3); (I-387) + (S4-4); (I-387) + (S4-5); (I-387) + (S7-1); (I-387) + (S11-1), (I-387) + (S11-2); (I-387) + (S11-3); (I-387) + (S12-1); (I-387) + (S13-1); (I-387) + (S13-2); (I-387) + (S13-3); (I-387) + (S13-4): (I-387) + (S13-5); (I-387) + (S13-6); (I-387) + (S13-7); (I-387) + (S13-8); (I-387) + (S13-9); (I-387) + (S14-1)
(I-388) + (S1-1); (I-388) + (S1-2); (I-388) + (S1-3); (I-388) + (S1-4); (I-388) + (S1-5); (I-388) + (S1-6); (I-388) + (S1-7); (I-388) + (S1-8); (I-388) + (S1-9); (I-388) + (S1-10); (I-388) + (S1-11); (I-388) + (S1-12); (I-388) + (S1-13); (I-388) + (S2-1); (I-388) + (S2-2); (I-388) + (S2-3); (I-388) + (S2-4); (I-388) + (S2-5); (I-388) + (S2-6); (I-388) + (S2-7); (I-388) + (S2-8); (I-388) + (S2-9); (I-388) + (S2-10); (I-388) + (S3-1); (I-388) + (S3-2); (I-388) + (S3-3); (I-388) + (S3-4); (I-388) + (S3-5); (I-388) + (S3-6); (I-388) + (S3-7); (I-388) + (S3-8); (I-388) + (S3-9); (I-388) + (S3-10); (I-388) + (S3-11); (I-388) + (S4-1); (I-388) + (S4-2); (I-388) + (S4-3); (I-388) + (S4-4); (I-388) + (S4-5); (I-388) + (S7-1); (I-388) + (S11-1); (I-388) + (S11-2); (I-388) + (S11-3); (I-388) + (S12-1); (I-388) + (S13-1); (I-388) + (S13-2); (I-388) + (S13-3); (I-388) + (S13-4): (I-388) + (S13-5); (I-388) + (S13-6); (I-388) + (S13-7); (I-388) + (S13-8); (I-388) + (S13-9); (I-388) + (S14-1)
(I-389) + (S1-1); (I-389) + (S1-2); (I-389) + (S1-3); (I-389) + (S1-4); (I-389) + (S1-5); (I-389) + (S1-6); (I-389) + (S1-7); (I-389) + (S1-8); (I-389) + (S1-9); (I-389) + (S1-10); (I-389) + (S1-11); (I-389) + (S1-12); (I-389) + (S1-13); (I-389) + (S2-1); (I-389) + (S2-2); (I-389) + (S2-3); (I-389) + (S2-4); (I-389) + (S2-5); (I-389) + (S2-6); (I-389) + (S2-7); (I-389) + (S2-8); (I-389) + (S2-9); (I-389) + (S2-10); (I-389) + (S3-1); (I-389) + (S3-2); (I-389) + (S3-3); (I-389) + (S3-4); (I-389) + (S3-5); (I-389) + (S3-6); (I-389) + (S3-7); (I-389) + (S3-8); (I-389) + (S3-9); (I-389) + (S3-10); (I-389) + (S3-11); (I-389) + (S4-1); (I-389) + (S4-2); (I-389) + (S4-3); (I-389) + (S4-4); (I-389) + (S4-5); (I-389) + (S7-1); (I-389) + (S11-1); (I-389) + (S11-2); (I-389) + (S11-3); (I-389) + (S12-1); (I-389) + (S13-1); (I-389) + (S13-2); (I-389) + (S13-3); (I-389) + (S13-4): (I-389) + (S13-5); (I-389) + (S13-6); (I-389) + (S13-7); (I-389) + (S13-8); (I-389) + (S13-9); (I-389) + (S14-1)
(I-390) + (S1-1); (I-390) + (S1-2); (I-390) + (S1-3); (I-390) + (S1-4); (I-390) + (S1-5); (I-390) + (S1-6); (I-390) + (S1-7); (I-390) + (S1-8); (I-390) + (S1-9); (I-390) + (S1-10); (I-390) + (S1-11); (I-390) + (S1-12); (I-390) + (S1-13); (I-390) + (S2-1); (I-390) + (S2-2); (I-390) + (S2-3); (I-390) + (S2-4); (I-390) + (S2-5); (I-390) + (S2-6); (I-390) + (S2-7); (I-390) + (S2-8); (I-390) + (S2-9); (I-390) + (S2-10); (I-390) + (S3-1); (I-390) + (S3-2); (I-390) + (S3-3); (I-390) + (S3-4); (I-390) + (S3-5); (I-390) + (S3-6); (I-390) + (S3-7); (I-390) + (S3-8); (I-390) + (S3-9); (I-390) + (S3-10); (I-390) + (S3-11); (I-390) + (S4-1); (I-390) + (S4-2); (I-390) + (S4-3); (I-390) + (S4-4); (I-390) + (S4-5); (I-390) + (S7-1); (I-390) + (S11-1); (I-390) + (S11-2); (I-390) + (S11-3); (I-390) + (S12-1); (I-390) + (S13-1); (I-390) + (S13-2); (I-390) + (S13-3); (I-390) + (S13-4): (I-390) + (S13-5); (I-390) + (S13-6); (I-390) + (S13-7); (I-390) + (S13-8); (I-390) + (S13-9); (I-390) + (S14-1)
(I-391) + (S1-1); (I-391) + (S1-2); (I-391) + (S1-3); (I-391) + (S1-4); (I-391) + (S1-5); (I-391) + (S1-6); (I-391) + (S1-7); (I-391) + (S1-8); (I-391) + (S1-9); (I-391) + (S1-10); (I-391) + (S1-11); (I-391) + (S1-12); (I-391) + (S1-13); (I-391) + (S2-1); (I-391) + (S2-2); (I-391) + (S2-3); (I-391) + (S2-4); (I-391) + (S2-5); (I-391) + (S2-6); (I-391) + (S2-7); (I-391) + (S2-8); (I-391) + (S2-9); (I-391) + (S2-10); (I-391) + (S3-1); (I-391) + (S3-2); (I-391) + (S3-3); (I-391) + (S3-4); (I-391) + (S3-5); (I-391) + (S3-6); (I-391) + (S3-7); (I-391) + (S3-8); (I-391) + (S3-9); (I-391) + (S3-10); (I-391) + (S3-11); (I-391) + (S4-1); (I-391) + (S4-2); (I-391) + (S4-3); (I-391) + (S4-4); (I-391) + (S4-5); (I-391) + (S7-1); (I-391) + (S11-1); (I-391) + (S11-2); (I-391) + (S11-3); (I-391) + (S12-1); (I-391) + (S13-1); (I-391) + (S13-2); (I-391) + (S13-3); (I-391) + (S13-4): (I-391) + (S13-5); (I-391) + (S13-6); (I-391) + (S13-7); (I-391) + (S13-8); (I-391) + (S13-9); (I-391) + (S14-1)
(I-392) + (S1-1); (I-392) + (S1-2); (I-392) + (S1-3); (I-392) + (S1-4); (I-392) + (S1-5); (I-392) + (S1-6); (I-392) + (S1-7); (I-392) + (S1-8); (I-392) + (S1-9); (I-392) + (S1-10); (I-392) + (S1-11); (I-392) + (S1-12); (I-392) + (S1-13); (I-392) + (S2-1); (I-392) + (S2-2); (I-392) + (S2-3); (I-392) + (S2-4); (I-392) + (S2-5); (I-392) + (S2-6); (I-392) + (S2-7); (I-392) + (S2-8); (I-392) + (S2-9); (I-392) + (S2-10); (I-392) + (S3-1); (I-392) + (S3-2); (I-392) + (S3-3); (I-392) + (S3-4); (I-392) + (S3-5); (I-392) + (S3-6); (I-392) + (S3-7); (I-392) + (S3-8); (I-392) + (S3-9); (I-392) + (S3-10); (I-392) + (S3-11); (I-392) + (S4-1); (I-392) + (S4-2); (I-392) + (S4-3); (I-392) + (S4-4); (I-392) + (S4-5); (I-392) + (S7-1); (I-392) + (S11-1); (I-392) + (S11-2); (I-392) + (S11-3); (I-392) + (S12-1); (I-392) + (S13-1); (I-392) + (S13-2); (I-392) + (S13-3); (I-392) + (S13-4): (I-392) + (S13-5); (I-392) + (S13-6); (I-392) + (S13-7); (I-392) + (S13-8); (I-392) + (S13-9); (I-392) + (S14-1)
(I-393) + (S1-1); (I-393) + (S1-2); (I-393) + (S1-3); (I-393) + (S1-4); (I-393) + (S1-5); (I-393) + (S1-6); (I-393) + (S1-7); (I-393) + (S1-8); (I-393) + (S1-9); (I-393) + (S1-10); (I-393) + (S1-11); (I-393) + (S1-12); (I-393) + (S1-13); (I-393) + (S2-1); (I-393) + (S2-2); (I-393) + (S2-3); (I-393) + (S2-4); (I-393) + (S2-5); (I-393) + (S2-6); (I-393) + (S2-7); (I-393) + (S2-8); (I-393) + (S2-9); (I-393) + (S2-10); (I-393) + (S3-1); (I-393) + (S3-2); (I-393) + (S3-3); (I-393) + (S3-4); (I-393) + (S3-5); (I-393) + (S3-6); (I-393) + (S3-7); (I-393) + (S3-8); (I-393) + (S3-9); (I-393) + (S3-10); (I-393) + (S3-11); (I-393) + (S4-1); (I-393) + (S4-2); (I-393) + (S4-3); (I-393) + (S4-4); (I-393) + (S4-5); (I-393) + (S7-1); (I-393) + (S11-1); (I-393) + (S11-2); (I-393) + (S11-3); (I-393) + (S12-1); (I-393) + (S13-1); (I-393) + (S13-2); (I-393) + (S13-3); (I-393) + (S13-4): (I-393) + (S13-5); (I-393) + (S13-6); (I-393) + (S13-7); (I-393) + (S13-8); (I-393) + (S13-9); (I-393) + (S14-1)
(I-394) + (S1-1); (I-394) + (S1-2); (I-394) + (S1-3); (I-394) + (S1-4); (I-394) + (S1-5); (I-394) + (S1-6); (I-394) + (S1-7); (I-394) + (S1-8); (I-394) + (S1-9); (I-394) + (S1-10); (I-394) + (S1-11); (I-394) + (S1-12); (I-394) + (S1-13); (I-394) + (S2-1); (I-394) + (S2-2); (I-394) + (S2-3); (I-394) + (S2-4); (I-394) + (S2-5); (I-394) + (S2-6); (I-394) + (S2-7); (I-394) + (S2-8); (I-394) + (S2-9); (I-394) + (S2-10); (I-394) + (S3-1); (I-394) + (S3-2); (I-394) + (S3-3); (I-394) + (S3-4); (I-394) + (S3-5); (I-394) + (S3-6); (I-394) + (S3-7); (I-394) + (S3-8); (I-394) + (S3-9); (I-394) + (S3-10); (I-394) + (S3-11); (I-394) + (S4-1); (I-394) + (S4-2); (I-394) + (S4-3); (I-394) + (S4-4); (I-394) + (S4-5); (I-394) + (S7-1); (I-394) + (S11-1); (I-394) + (S11-2); (I-394) + (S11-3); (I-394) + (S12-1); (I-394) + (S13-1); (I-394) + (S13-2); (I-394) + (S13-3); (I-394) + (S13-4): (I-394) + (S13-5); (I-394) + (S13-6); (I-394) + (S13-7); (I-394) + (S13-8); (I-394) + (S13-9); (I-394) + (S14-1)
(I-395) + (S1-1); (I-395) + (S1-2); (I-395) + (S1-3); (I-395) + (S1-4); (I-395) + (S1-5); (I-395) + (S1-6); (I-395) + (S1-7); (I-395) + (S1-8); (I-395) + (S1-9); (I-395) + (S1-10); (I-395) + (S1-11); (I-395) + (S1-12); (I-395) + (S1-13); (I-395) + (S2-1); (I-395) + (S2-2); (I-395) + (S2-3); (I-395) + (S2-4); (I-395) + (S2-5); (I-395) + (S2-6); (I-395) + (S2-7); (I-395) + (S2-8); (I-395) + (S2-9); (I-395) + (S2-10); (I-395) + (S3-1); (I-395) + (S3-2); (I-395) + (S3-3); (I-395) + (S3-4); (I-395) + (S3-5); (I-395) + (S3-6); (I-395) + (S3-7); (I-395) + (S3-8); (I-395) + (S3-9); (I-395) + (S3-10); (I-395) + (S3-11); (I-395) + (S4-1); (I-395) + (S4-2); (I-395) + (S4-3); (I-395) + (S4-4); (I-395) + (S4-5); (I-395) + (S7-1); (I-395) + (S11-1); (I-395) + (S11-2); (I-395) + (S11-3); (I-395) + (S12-1); (I-395) + (S13-1); (I-395) + (S13-2); (I-395) + (S13-3); (I-395) + (S13-4): (I-395) + (S13-5); (I-395) + (S13-6); (I-395) + (S13-7); (I-395) + (S13-8); (I-395) + (S13-9); (I-395) + (S14-1)
(I-396) + (S1-1); (I-396) + (S1-2); (I-396) + (S1-3); (I-396) + (S1-4); (I-396) + (S1-5); (I-396) + (S1-6); (I-396) + (S1-7); (I-396) + (S1-8); (I-396) + (S1-9); (I-396) + (S1-10); (I-396) + (S1-11); (I-396) + (S1-12); (I-396) + (S1-13); (I-396) + (S2-1); (I-396) + (S2-2); (I-396) + (S2-3); (I-396) + (S2-4); (I-396) + (S2-5); (I-396) + (S2-6); (I-396) + (S2-7); (I-396) + (S2-8); (I-396) + (S2-9); (I-396) + (S2-10); (I-396) + (S3-1); (I-396) + (S3-2); (I-396) + (S3-3); (I-396) + (S3-4); (I-396) + (S3-5); (I-396) + (S3-6); (I-396) + (S3-7); (I-396) + (S3-8); (I-396) + (S3-9); (I-396) + (S3-10); (I-396) + (S3-11); (I-396) + (S4-1); (I-396) + (S4-2); (I-396) + (S4-3); (I-396) + (S4-4); (I-396) + (S4-5); (I-396) + (S7-1); (I-396) + (S11-1); (I-396) + (S11-2); (I-396) + (S11-3); (I-396) + (S12-1); (I-396) + (S13-1); (I-396) + (S13-2); (I-396) + (S13-3); (I-396) + (S13-4): (I-396) + (S13-5); (I-396) + (S13-6); (I-396) + (S13-7); (I-396) + (S13-8); (I-396) + (S13-9); (I-396) + (S14-1)
(I-397) + (S1-1); (I-397) + (S1-2); (I-397) + (S1-3); (I-397) + (S1-4); (I-397) + (S1-5); (I-397) + (S1-6); (I-397) + (S1-7); (I-397) + (S1-8); (I-397) + (S1-9); (I-397) + (S1-10); (I-397) + (S1-11); (I-397) + (S1-12); (I-397) + (S1-13); (I-397) + (S2-1); (I-397) + (S2-2); (I-397) + (S2-3); (I-397) + (S2-4); (I-397) + (S2-5); (I-397) + (S2-6); (I-397) + (S2-7); (I-397) + (S2-8); (I-397) + (S2-9); (I-397) + (S2-10); (I-397) + (S3-1); (I-397) + (S3-2); (I-397) + (S3-3); (I-397) + (S3-4); (I-397) + (S3-5); (I-397) + (S3-6); (I-397) + (S3-7); (I-397) + (S3-8); (I-397) + (S3-9); (I-397) + (S3-10); (I-397) + (S3-11); (I-397) + (S4-1); (I-397) + (S4-2); (I-397) + (S4-3); (I-397) + (S4-4); (I-397) + (S4-5); (I-397) + (S7-1); (I-397) + (S11-1); (I-397) + (S11-2); (I-397) + (S11-3); (I-397) + (S12-1); (I-397) + (S13-1); (I-397) + (S13-2); (I-397) + (S13-3); (I-397) + (S13-4): (I-397) + (S13-5); (I-397) + (S13-6); (I-397) + (S13-7); (I-397) + (S13-8); (I-397) + (S13-9); (I-397) + (S14-1)
(I-398) + (S1-1); (I-398) + (S1-2); (I-398) + (S1-3); (I-398) + (S1-4); (I-398) + (S1-5); (I-398) + (S1-6); (I-398) + (S1-7); (I-398) + (S1-8); (I-398) + (S1-9); (I-398) + (S1-10); (I-398) + (S1-11); (I-398) + (S1-12); (I-398) + (S1-13); (I-398) + (S2-1); (I-398) + (S2-2); (I-398) + (S2-3); (I-398) + (S2-4); (I-398) + (S2-5); (I-398) + (S2-6); (I-398) + (S2-7); (I-398) + (S2-8); (I-398) + (S2-9); (I-398) + (S2-10); (I-398) + (S3-1); (I-398) + (S3-2); (I-398) + (S3-3); (I-398) + (S3-4); (I-398) + (S3-5); (I-398) + (S3-6); (I-398) + (S3-7); (I-398) + (S3-8); (I-398) + (S3-9); (I-398) + (S3-10); (I-398) + (S3-11); (I-398) + (S4-1); (I-398) + (S4-2); (I-398) + (S4-3); (I-398) + (S4-4); (I-398) + (S4-5); (I-398) + (S7-1); (I-398) + (S11-1); (I-398) + (S11-2); (I-398) + (S11-3); (I-398) + (S12-1); (I-398) + (S13-1); (I-398) + (S13-2); (I-398) + (S13-3); (I-398) + (S13-4): (I-398) + (S13-5); (I-398) + (S13-6); (I-398) + (S13-7); (I-398) + (S13-8); (I-398) + (S13-9); (I-398) + (S14-1)
(I-399) + (S1-1); (I-399) + (S1-2); (I-399) + (S1-3); (I-399) + (S1-4); (I-399) + (S1-5); (I-399) + (S1-6); (I-399) + (S1-7); (I-399) + (S1-8); (I-399) + (S1-9); (I-399) + (S1-10); (I-399) + (S1-11); (I-399) + (S1-12); (I-399) + (S1-13); (I-399) + (S2-1); (I-399) + (S2-2); (I-399) + (S2-3); (I-399) + (S2-4); (I-399) + (S2-5); (I-399) + (S2-6); (I-399) + (S2-7); (I-399) + (S2-8); (I-399) + (S2-9); (I-399) + (S2-10); (I-399) + (S3-1); (I-399) + (S3-2); (I-399) + (S3-3); (I-399) + (S3-4); (I-399) + (S3-5); (I-399) + (S3-6); (I-399) + (S3-7); (I-399) + (S3-8); (I-399) + (S3-9); (I-399) + (S3-10); (I-399) + (S3-11); (I-399) + (S4-1); (I-399) + (S4-2); (I-399) + (S4-3); (I-399) + (S4-4); (I-399) + (S4-5); (I-399) + (S7-1); (I-399) + (S11-1); (I-399) + (S11-2); (I-399) + (S11-3); (I-399) + (S12-1); (I-399) + (S13-1); (I-399) + (S13-2); (I-399) + (S13-3); (I-399) + (S13-4): (I-399) + (S13-5); (I-399) + (S13-6); (I-399) + (S13-7); (I-399) + (S13-8); (I-399) + (S13-9); (I-399) + (S14-1)
(I-400) + (S1-1); (I-400) + (S1-2); (I-400) + (S1-3); (I-400) + (S1-4); (I-400) + (S1-5); (I-400) + (S1-6); (I-400) + (S1-7); (I-400) + (S1-8); (I-400) + (S1-9); (I-400) + (S1-10); (I-400) + (S1-11); (I-400) + (S1-12); (I-400) + (S1-13); (I-400) + (S2-1); (I-400) + (S2-2); (I-400) + (S2-3); (I-400) + (S2-4); (I-400) + (S2-5); (I-400) + (S2-6); (I-400) + (S2-7); (I-400) + (S2-8); (I-400) + (S2-9); (I-400) + (S2-10); (I-400) + (S3-1); (I-400) + (S3-2); (I-400) + (S3-3); (I-400) + (S3-4); (I-400) + (S3-5); (I-400) + (S3-6); (I-400) + (S3-7); (I-400) + (S3-8); (I-400) + (S3-9); (I-400) + (S3-10); (I-400) + (S3-11); (I-400) + (S4-1); (I-400) + (S4-2); (I-400) + (S4-3); (I-400) + (S4-4); (I-400) + (S4-5); (I-400) + (S7-1); (I-400) + (S11-1); (I-400) + (S11-2); (I-400) + (S11-3); (I-400) + (S12-1); (I-400) + (S13-1); (I-400) + (S13-2); (I-400) + (S13-3); (I-400) + (S13-4): (I-400) + (S13-5); (I-400) + (S13-6); (I-400) + (S13-7); (I-400) + (S13-8); (I-400) + (S13-9); (I-400) + (S14-1)
(I-401) + (S1-1); (I-401) + (S1-2); (I-401) + (S1-3); (I-401) + (S1-4); (I-401) + (S1-5); (I-401) + (S1-6); (I-401) + (S1-7); (I-401) + (S1-8); (I-401) + (S1-9); (I-401) + (S1-10); (I-401) + (S1-11); (I-401) + (S1-12); (I-401) + (S1-13); (I-401) + (S2-1); (I-401) + (S2-2); (I-401) + (S2-3); (I-401) + (S2-4); (I-401) + (S2-5); (I-401) + (S2-6); (I-401) + (S2-7); (I-401) + (S2-8); (I-401) + (S2-9); (I-401) + (S2-10); (I-401) + (S3-1); (I-401) + (S3-2); (I-401) + (S3-3); (I-401) + (S3-4); (I-401) + (S3-5); (I-401) + (S3-6); (I-401) + (S3-7); (I-401) + (S3-8); (I-401) + (S3-9); (I-401) + (S3-10); (I-401) + (S3-11); (I-401) + (S4-1); (I-401) + (S4-2); (I-401) + (S4-3); (I-401) + (S4-4); (I-401) + (S4-5); (I-401) + (S7-1); (I-401) + (S11-1); (I-401) + (S11-2); (I-401) + (S11-3); (I-401) + (S12-1); (I-401) + (S13-1); (I-401) + (S13-2); (I-401) + (S13-3); (I-401) + (S13-4): (I-401) + (S13-5); (I-401) + (S13-6); (I-401) + (S13-7); (I-401) + (S13-8); (I-401) + (S13-9); (I-401) + (S14-1)
(I-402) + (S1-1); (I-402) + (S1-2); (I-402) + (S1-3); (I-402) + (S1-4); (I-402) + (S1-5); (I-402) + (S1-6); (I-402) + (S1-7); (I-402) + (S1-8); (I-402) + (S1-9); (I-402) + (S1-10); (I-402) + (S1-11); (I-402) + (S1-12); (I-402) + (S1-13); (I-402) + (S2-1); (I-402) + (S2-2); (I-402) + (S2-3); (I-402) + (S2-4); (I-402) + (S2-5); (I-402) + (S2-6); (I-402) + (S2-7); (I-402) + (S2-8); (I-402) + (S2-9); (I-402) + (S2-10); (I-402) + (S3-1); (I-402) + (S3-2); (I-402) + (S3-3); (I-402) + (S3-4); (I-402) + (S3-5); (I-402) + (S3-6); (I-402) + (S3-7); (I-402) + (S3-8); (I-402) + (S3-9); (I-402) + (S3-10); (I-402) + (S3-11); (I-402) + (S4-1); (I-402) + (S4-2); (I-402) + (S4-3); (I-402) + (S4-4); (I-402) + (S4-5); (I-402) + (S7-1); (I-402) + (S11-1); (I-402) + (S11-2); (I-402) + (S11-3); (I-402) + (S12-1); (I-402) + (S13-1); (I-402) + (S13-2); (I-402) + (S13-3); (I-402) + (S13-4): (I-402) + (S13-5); (I-402) + (S13-6); (I-402) + (S13-7); (I-402) + (S13-8); (I-402) + (S13-9); (I-402) + (S14-1)
(I-403) + (S1-1); (I-403) + (S1-2); (I-403) + (S1-3); (I-403) + (S1-4); (I-403) + (S1-5); (I-403) + (S1-6); (I-403) + (S1-7); (I-403) + (S1-8); (I-403) + (S1-9); (I-403) + (S1-10); (I-403) + (S1-11); (I-403) + (S1-12); (I-403) + (S1-13); (I-403) + (S2-1); (I-403) + (S2-2); (I-403) + (S2-3); (I-403) + (S2-4); (I-403) + (S2-5); (I-403) + (S2-6); (I-403) + (S2-7); (I-403) + (S2-8); (I-403) + (S2-9); (I-403) + (S2-10); (I-403) + (S3-1); (I-403) + (S3-2); (I-403) + (S3-3); (I-403) + (S3-4); (I-403) + (S3-5); (I-403) + (S3-6); (I-403) + (S3-7); (I-403) + (S3-8); (I-403) + (S3-9); (I-403) + (S3-10); (I-403) + (S3-11); (I-403) + (S4-1); (I-403) + (S4-2); (I-403) + (S4-3); (I-403) + (S4-4); (I-403) + (S4-5); (I-403) + (S7-1); (I-403) + (S11-1); (I-403) + (S11-2); (I-403) + (S11-3); (I-403) + (S12-1); (I-403) + (S13-1); (I-403) + (S13-2); (I-403) + (S13-3); (I-403) + (S13-4): (I-403) + (S13-5); (I-403) + (S13-6); (I-403) + (S13-7); (I-403) + (S13-8); (I-403) + (S13-9); (I-403) + (S14-1)
(I-404) + (S1-1); (I-404) + (S1-2); (I-404) + (S1-3); (I-404) + (S1-4); (I-404) + (S1-5); (I-404) + (S1-6); (I-404) + (S1-7); (I-404) + (S1-8); (I-404) + (S1-9); (I-404) + (S1-10); (I-404) + (S1-11); (I-404) + (S1-12); (I-404) + (S1-13); (I-404) + (S2-1); (I-404) + (S2-2); (I-404) + (S2-3); (I-404) + (S2-4); (I-404) + (S2-5); (I-404) + (S2-6); (I-404) + (S2-7); (I-404) + (S2-8); (I-404) + (S2-9); (I-404) + (S2-10); (I-404) + (S3-1); (I-404) + (S3-2); (I-404) + (S3-3); (I-404) + (S3-4); (I-404) + (S3-5); (I-404) + (S3-6); (I-404) + (S3-7); (I-404) + (S3-8); (I-404) + (S3-9); (I-404) + (S3-10); (I-404) + (S3-11); (I-404) + (S4-1); (I-404) + (S4-2); (I-404) + (S4-3); (I-404) + (S4-4); (I-404) + (S4-5); (I-404) + (S7-1); (I-404) + (S11-1); (I-404) + (S11-2), (I-404) + (S11-3); (I-404) + (S12-1); (I-404) + (S13-1); (I-404) + (S13-2); (I-404) + (S13-3); (I-404) + (S13-4): (I-404) + (S13-5); (I-404) + (S13-6); (I-404) + (S13-7); (I-404) + (S13-8); (I-404) + (S13-9); (I-404) + (S14-1)
(I-405) + (S1-1); (I-405) + (S1-2); (I-405) + (S1-3); (I-405) + (S1-4); (I-405) + (S1-5); (I-405) + (S1-6); (I-405) + (S1-7); (I-405) + (S1-8): (I-405) + (S1-9); (I-405) + (S1-10); (I-405) + (S1-11); (I-405) + (S1-12); (I-405) + (S1-13); (I-405) + (S2-1); (I-405) + (S2-2); (I-405) + (S2-3); (I-405) + (S2-4); (I-405) + (S2-5); (I-405) + (S2-6); (I-405) + (S2-7); (I-405) + (S2-8); (I-405) + (S2-9); (I-405) + (S2-10); (I-405) + (S3-1); (I-405) + (S3-2); (I-405) + (S3-3); (I-405) + (S3-4); (I-405) + (S3-5); (I-405) + (S3-6); (I-405) + (S3-7); (I-405) + (S3-8); (I-405) + (S3-9); (I-405) + (S3-10); (I-405) + (S3-11); (I-405) + (S4-1); (I-405) + (S4-2); (I-405) + (S4-3); (I-405) + (S4-4); (I-405) + (S4-5); (I-405) + (S7-1); (I-405) + (S11-1); (I-405) + (S11-2); (I-405) + (S11-3); (I-405) + (S12-1); (I-405) + (S13-1); (I-405) + (S13-2); (I-405) + (S13-3); (I-405) + (S13-4): (I-405) + (S13-5); (I-405) + (S13-6); (I-405) + (S13-7); (I-405) + (S13-8); (I-405) + (S13-9); (I-405) + (S14-1)
(I-406) + (S1-1); (I-406) + (S1-2); (I-406) + (S1-3); (I-406) + (S1-4); (I-406) + (S1-5); (I-406) + (S1-6); (I-406) + (S1-7); (I-406) + (S1-8); (I-406) + (S1-9); (I-406) + (S1-10); (I-406) + (S1-11); (I-406) + (S1-12); (I-406) + (S1-13); (I-406) + (S2-1); (I-406) + (S2-2); (I-406) + (S2-3); (I-406) + (S2-4); (I-406) + (S2-5); (I-406) + (S2-6); (I-406) + (S2-7); (I-406) + (S2-8); (I-406) + (S2-9); (I-406) + (S2-10); (I-406) + (S3-1); (I-406) + (S3-2); (I-406) + (S3-3); (I-406) + (S3-4); (I-406) + (S3-5); (I-406) + (S3-6); (I-406) + (S3-7); (I-406) + (S3-8); (I-406) + (S3-9); (I-406) + (S3-10); (I-406) + (S3-11); (I-406) + (S4-1); (I-406) + (S4-2); (I-406) + (S4-3); (I-406) + (S4-4); (I-406) + (S4-5); (I-406) + (S7-1); (I-406) + (S11-1); (I-406) + (S11-2); (I-406) + (S11-3); (I-406) + (S12-1); (I-406) + (S13-1); (I-406) + (S13-2); (I-406) + (S13-3); (I-406) + (S13-4): (I-406) + (S13-5); (I-406) + (S13-6); (I-406) + (S13-7); (I-406) + (S13-8); (I-406) + (S13-9); (I-406) + (S14-1)

Im Rahmen der vorliegenden Erfindung sind insbesondere Kombinationen der Verbindungen der allgemeinen Formel (I) mit den folgenden Safenern bevorzugt:
Daimuron (S14-1), Benoxacor (S3-4), Furilazol [(S3-10) bzw. (S3-11)], Fluxofenim (S11-2), Fenchlorazol(-ethylester) (S1-7), Mefenpyr-diethyl (S1-1), Cloquintocet-mexyl (S2-1), Isoxadifen-ethyl (S1-11), Cyprosulfamide (S4-1), Flurazole (S13-3), Oxabetrinil (S11-1), Dichlormid (S3-1) und Dietholate (S13-8).

Im Rahmen der vorliegenden Erfindung sind noch bevorzugter Kombinationen der Verbindungen der allgemeinen Formel (I) mit den folgenden Safenern bevorzugt:
Mefenpyr-diethyl (S1-1), Isoxadifen-ethyl (S1-11), Cyprosulfamide (S4-1), Fenchlorazol-ethylester (S1-7), Benoxacor (S3-4), Cloquintocet-mexyl (S2-1), Fluxofenim (S11-2) und Furilazol [(S3-10) bzw. (S3-11)].

Bevorzugt sind Herbizid-Safener-Kombinationen, enthaltend (A) eine herbizid wirksame Menge an einer oder mehrerer Verbindungen der Formel (I) oder deren Salzen, und (B) eine antidotisch-wirksame Menge an einem oder mehreren Safenern.

Herbizid wirksame Menge bedeutet im Sinne der Erfindung eine Menge an einem oder mehreren Herbiziden, die geeignet ist, den Pflanzenwuchs negativ zu beeinflussen. Antidotisch wirksame Menge bedeutet im Sinne der Erfindung eine Menge an einem oder mehreren Safenern, die geeignet ist, die phytotoxische Wirkung von Pflanzenschutzmittelwirkstoffen (z.B. von Herbiziden) an Kulturpflanzen zu reduzieren.

Die Safener (B) eignen sich zur Reduktion phytotoxischer Effekte, die beim Einsatz von Herbiziden der allgemeinen Formel (I) in Nutzpflanzenkulturen auftreten können, ohne die Wirksamkeit dieser herbiziden Wirkstoffe gegen Schadpflanzen wesentlich zu beeinträchtigen. Hierdurch kann das Einsatzgebiet herkömmlicher Pflanzenschutzmittel ganz erheblich erweitert z.B. auf Kulturen, in denen bisher ein Einsatz der Herbizide nicht möglich oder nur beschränkt möglich war.

Die benötigten Aufwandmengen der Safener können je nach Indikation und verwendetem herbiziden Wirkstoff innerhalb weiter Grenzen schwanken und sind in der Regel im Bereich von 0,001 bis 5 kg, vorzugsweise 0,005 bis 2,5 kg Wirkstoff je Hektar.

Die herbiziden Wirkstoffe der allgemeinen Formel (I) (A) und die Safener (B) können zusammen (z.B. als fertige Formulierung oder im Tank-mix-Verfahren) oder in beliebiger Reihenfolge nacheinander ausgebracht werden, z.B. durch Sprüh-, Gieß- und Spritzanwendung oder durch Granulatstreuung. Das Gewichtsverhältnis Herbizid der allgemeinen Formel (I) (A) : Safener (B) kann innerhalb weiter Grenzen variieren und liegt vorzugsweise im Bereich von 1:10000 bis 10000:1, insbesondere von 1:1000 bis 1000:1. Die jeweils optimalen Mengen an der allgemeinen Formel (I) (A) und Safener (B) sind vom Typ des verwendeten Herbizids und des verwendeten Safeners sowie von der Art und dem Entwicklungsstadium des zu behandelnden Pflanzenbestandes abhängig und lassen sich von Fall zu Fall durch einfache, routinemäßige Vorversuche ermitteln.

Die in der erfindungsgemäßen Herbizid-Safener-Kombination enthaltenen Safener (B) können je nach ihren Eigenschaften zur Vorbehandlung des Saatgutes der Kulturpflanze (z.B. zur Beizung des Saatguts) verwendet werden oder vor der Saat in die Saatfurchen eingebracht oder zusammen mit dem Herbizid vor oder nach dem Auflaufen der Pflanzen angewendet werden. Vorauflaufbehandlung schließt sowohl die Behandlung der Anbaufläche (einschließlich eventuell auf der Anbaufläche befindlichen Wassers, z.B. bei Reisapplikationen) vor der Aussaat als auch die Behandlung der angesäten, aber noch nicht bewachsenen Anbauflächen ein. Bevorzugt ist die gemeinsame Anwendung mit dem Herbizid. Hierzu können Tankmischungen oder Fertigformulierungen eingesetzt werden.

In einer bevorzugten Ausführungsform werden das Saatgut (z.B. Körner, Samen oder vegetative Vermehrungsorgane wie Knollen oder Sprossteile mit Knospen) oder Setzlinge mit den Safenern (B), gegebenenfalls in Kombination mit anderen agrochemischen Wirkstoffen, vorbehandelt. Zur Vorbehandlung des Saatguts können die Wirkstoffe z.B. durch Beizung an das Saatgut gebracht oder die Wirkstoffe und das Saatgut können in Wasser oder andere Lösungsmittel gegeben, und die Wirkstoffe z.B. durch Anlagerung oder Diffusion im Tauchverfahren oder durch Quellen oder Vorkeimen aufgenommen werden. Zur Vorbehandlung von Setzlingen können die jungen Pflanzen z.B. durch Spritzen, Tauchen oder Gießen mit den Safenern, gegebenenfalls in Kombination mit anderen agrochemischen Wirkstoffen, in Kontakt gebracht und anschließend verpflanzt und gegebenenfalls mit den Herbiziden (A) nachbehandelt werden.

Die Saatgut- oder Setzlingsbehandlung kann mit den Safenern (B) alleine oder gemeinsam mit anderen agrochemischen Wirkstoffen - wie Fungiziden, Insektiziden oder Mitteln zur Pflanzenstärkung, Düngung oder zur Beschleunigung der Quell- und Keimungsvorgänge - erfolgen. Dabei können die Safener nach der Vorbehandlungsanwendung anschließend nochmals vor, nach oder gemeinsam mit einem oder mehreren Herbiziden der Formel (I) eventuell auch in Kombination mit anderen bekannten Herbiziden angewandt werden. Durch die Vorbehandlung des Saatguts oder der Setzlinge kann eine verbesserte Langzeitwirkung der Safener erzielt werden.

Gegenstand der vorliegenden Erfindung ist somit weiterhin ein Verfahren zur Bekämpfung von unerwünschten Pflanzen in Pflanzenkulturen, das dadurch gekennzeichnet ist, dass die Komponenten (A) und (B) der erfindungsgemäßen Herbizid-Safener-Kombination auf die Pflanzen (z.B. Schadpflanzen wie mono- oder dikotyle Unkräuter oder unerwünschte Kulturpflanzen), das Saatgut (z.B. Körner, Samen oder vegetative Vermehrungsorgane wie Knollen oder Sprossteile mit Knospen) oder die Fläche, auf der die Pflanzen wachsen (z.B. die Anbaufläche), ausgebracht werden, z.B. gemeinsam oder getrennt. Dabei können einer oder mehrere Safener (B), vorzugsweise eine oder mehrere, insbesondere eine, Verbindung der Gruppen (S1) bis (S14) vor, nach oder gleichzeitig mit dem oder den Herbizid(en) der allgemeinen Formel (I) (A) auf die Pflanzen, das Saatgut oder die Fläche, auf der die Pflanzen wachsen (z.B. die Anbaufläche), appliziert werden. In einer bevorzugten Ausführungsform werden die Safener (B) zur Saatgutbehandlung eingesetzt.

Unter unerwünschten Pflanzen sind alle Pflanzen zu verstehen, die an Orten wachsen, wo sie unerwünscht sind. Dies können z.B. Schadpflanzen (z.B. mono- oder dikotyle Unkräuter oder unerwünschte Kulturpflanzen) sein, z.B. auch solche, die gegen bestimmte herbizide Wirkstoffe wie Glyphosate, Atrazin, Glufosinate oder Imidazolinon-Herbizide resistent sind.

Monokotyle Unkräuter entstammen z.B. den Gattungen Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Sphenoclea, Dactyloctenium, Agrostis, Alopecurus, Apera. Dikotyle Unkräuter entstammen z.B. den Gattungen Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea, Trifolium, Ranunculus, Taraxacum, Euphorbia.

Bevorzugt wird in dem erfindungsgemäßen Verfahren eine wirksame Menge der Komponenten (A) und (B) zur Bekämpfung von Schadpflanzen angewendet in Pflanzenkulturen, beispielsweise in wirtschaftlich bedeutenden Ackerbaukulturen z.B. monokotylen Ackerbaukulturen wie Getreide (z.B. Weizen, Gerste, Roggen, Hafer), Reis, Mais, Hirse, oder dikotylen Ackerbaukulturen wie Zuckerrübe, Raps, Baumwolle, Sonnenblumen und Leguminosen z.B. der Gattungen Glycine (z.B. Glycine max. wie nicht-transgene Glycine max. (z.B. konventionelle Sorten wie STS-Sorten) oder transgene Glycine max. (z.B. RR-Soja oder LL-Soja) und deren Kreuzungen), Phaseolus, Pisum, Vicia und Arachis, oder Gemüsekulturen aus verschiedenen botanischen Gruppen wie Kartoffel, Lauch, Kohl, Karotte, Tomate, Zwiebel, sowie Dauer- und Plantagenkulturen wie Kern- und Steinobst, Beerenobst, Wein, Hevea, Bananen, Zuckerrohr, Kaffee, Tee, Citrus, Nussplantagen, Rasen, Palmenkulturen und Forstkulturen.

Gegenstand der Erfindung ist auch die Verwendung der erfindungsgemäßen Herbizid-Safener-Kombinationen zur Bekämpfung von unerwünschtem Pflanzenwuchs, vorzugsweise in Pflanzenkulturen.

Die erfindungsgemäßen Herbizid-Safener-Kombinationen können nach bekannten Verfahren z.B. als Mischformulierungen der Einzelkomponenten, gegebenenfalls mit weiteren Wirkstoffen, Zusatzstoffen und/oder üblichen Formulierungshilfsmitteln hergestellt werden, die dann in üblicher Weise mit Wasser verdünnt zur Anwendung gebracht werden, oder als sogenannte Tankmischungen durch gemeinsame Verdünnung der getrennt formulierten oder partiell getrennt formulierten Einzelkomponenten mit Wasser hergestellt werden. Ebenfalls möglich ist die zeitlich versetzte Anwendung (Splitapplikation) der getrennt formulierten oder partiell getrennt formulierten Einzelkomponenten. Möglich ist auch die Anwendung der Einzelkomponenten oder der Herbizid-Safener-Kombinationen in mehreren Portionen (Sequenzanwendung), z. B. nach Anwendungen im Vorauflauf, gefolgt von Nachauflauf-Applikationen oder nach frühen Nachauflaufanwendungen, gefolgt von Applikationen im mittleren oder späten Nachauflauf. Bevorzugt ist dabei die gemeinsame oder die zeitnahe Anwendung der Wirkstoffe der jeweiligen Kombination.

Die erfindungsgemäße Herbizid-Safener-Kombination kann auch zur Bekämpfung von Schadpflanzen in Kulturen von bekannten oder noch zu entwickelnden gentechnisch veränderten Pflanzen eingesetzt werden.

Die transgenen Pflanzen zeichnen sich in der Regel durch besondere vorteilhafte Eigenschaften aus, beispielsweise durch Resistenzen gegenüber bestimmten Pestiziden, vor allem bestimmten Herbiziden, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung des Ernteguts bekannt. Weitere besondere Eigenschaften können in einer Toleranz oder Resistenz gegen abiotische Stressoren z. B. Hitze, Kälte, Trockenheit, Salz und ultraviolette Strahlung liegen.

Bevorzugt ist die Anwendung der erfindungsgemäßen Herbizid-Safener-Kombinationen oder deren Salze in wirtschaftlich bedeutenden transgenen Kulturen von Nutz-und Zierpflanzen, z. B. von Getreide wie Weizen, Gerste, Roggen, Hafer, Hirse, Reis, Maniok und Mais oder auch Kulturen von Zuckerrübe, Baumwolle, Soja, Raps, Kartoffel, Tomate, Erbse und anderen Gemüsesorten.
Vorzugsweise können die Verbindungen der Formel (I) als Herbizide in Nutzpflanzenkulturen eingesetzt werden, welche gegenüber den phytotoxischen Wirkungen der Herbizide resistent sind bzw. gentechnisch resistent gemacht worden sind.

Herkömmliche Wege zur Herstellung neuer Pflanzen, die im Vergleich zu bisher vorkommenden Pflanzen modifizierte Eigenschaften aufweisen, bestehen beispielsweise in klassischen Züchtungsverfahren und der Erzeugung von Mutanten. Alternativ können neue Pflanzen mit veränderten Eigenschaften mit Hilfe gentechnischer Verfahren erzeugt werden (siehe z. B. EP-A-0221044, EP-A-0131624). Beschrieben wurden beispielsweise in mehreren Fällen
- gentechnische Veränderungen von Kulturpflanzen zwecks Modifikation der in den Pflanzen synthetisierten Stärke (z. B. WO 92/11376, WO 92/14827, WO 91/19806),
- transgene Kulturpflanzen, welche gegen bestimmte Herbizide vom Typ Glufosinate (vgl. z. B. EP-A-0242236, EP-A-242246) oder Glyphosate (WO 92/00377) oder der Sulfonylharnstoffe (EP-A-0257993, US-A-5013659) resistent sind,
- transgene Kulturpflanzen, beispielsweise Baumwolle, mit der Fähigkeit Bacillus thuringiensis-Toxine (Bt-Toxine) zu produzieren, welche die Pflanzen gegen bestimmte Schädlinge resistent machen (EP-A-0142924, EP-A-0193259).
- transgene Kulturpflanzen mit modifizierter Fettsäurezusammensetzung (WO 91/13972).
- gentechnisch veränderte Kulturpflanzen mit neuen Inhalts- oder Sekundärstoffen z. B. neuen Phytoalexinen, die eine erhöhte Krankheitsresistenz verursachen (EPA 309862, EPA0464461)
- gentechnisch veränderte Pflanzen mit reduzierter Photorespiration, die höhere Erträge und höhere Stresstoleranz aufweisen (EPA 0305398).
- Transgene Kulturpflanzen, die pharmazeutisch oder diagnostisch wichtige Proteine produzieren ("molecular pharming")
- transgene Kulturpflanzen, die sich durch höhere Erträge oder bessere Qualitat auszeichnen
- transgene Kulturpflanzen die sich durch eine Kombinationen z. B. der o. g. neuen Eigenschaften auszeichnen ("gene stacking")

Zahlreiche molekularbiologische Techniken, mit denen neue transgene Pflanzen mit veränderten Eigenschaften hergestellt werden können, sind im Prinzip bekannt; siehe z. B.I. Potrykus und G. Spangenberg (eds.) Gene Transfer to Plants, Springer Lab Manual (1995), Springer Verlag Berlin, Heidelberg. oder Christou, "Trends in Plant Science" 1 (1996) 423-431).

Für derartige gentechnische Manipulationen können Nucleinsäuremoleküle in Plasmide eingebracht werden, die eine Mutagenese oder eine Sequenzveränderung durch Rekombination von DNA-Sequenzen erlauben. Mit Hilfe von Standardverfahren können z. B. Basenaustausche vorgenommen, Teilsequenzen entfernt oder natürliche oder synthetische Sequenzen hinzugefügt werden. Für die Verbindung der DNA-Fragmente untereinander können an die Fragmente Adaptoren oder Linker angesetzt werden, siehe z. B. Sambrook et al., 1989, Molecular Cloning, A Laboratory Manual, 2. Aufl. Cold Spring Harbor Laboratory Press, Cold Spring Harbor, NY; oder Winnacker "Gene und Klone", VCH Weinheim 2. Auflage 1996

Die Herstellung von Pflanzenzellen mit einer verringerten Aktivität eines Genprodukts kann beispielsweise erzielt werden durch die Expression mindestens einer entsprechenden antisense-RNA, einer sense-RNA zur Erzielung eines Cosuppressionseffektes oder die Expression mindestens eines entsprechend konstruierten Ribozyms, das spezifisch Transkripte des obengenannten Genprodukts spaltet.

Hierzu können zum einen DNA-Moleküle verwendet werden, die die gesamte codierende Sequenz eines Genprodukts einschließlich eventuell vorhandener flankierender Sequenzen umfassen, als auch DNA-Moleküle, die nur Teile der codierenden Sequenz umfassen, wobei diese Teile lang genug sein müssen, um in den Zellen einen antisense-Effekt zu bewirken. Möglich ist auch die Verwendung von DNA-Sequenzen, die einen hohen Grad an Homologie zu den codiereden Sequenzen eines Genprodukts aufweisen, aber nicht vollkommen identisch sind.

Bei der Expression von Nucleinsäuremolekülen in Pflanzen kann das synthetisierte Protein in jedem beliebigen Kompartiment der pflanzlichen Zelle lokalisiert sein. Um aber die Lokalisation in einem bestimmten Kompartiment zu erreichen, kann z. B. die codierende Region mit DNA-Sequenzen verknüpft werden, die die Lokalisierung in einem bestimmten Kompartiment gewährleisten. Derartige Sequenzen sind dem Fachmann bekannt (siehe beispielsweise Braun et al., EMBO J. 11 (1992), 3219-3227; Wolter et al., Proc. Natl. Acad. Sci. USA 85 (1988), 846-850; Sonnewald et al., Plant J. 1 (1991), 95-106). Die Expression der Nukleinsäuremoleküle kann auch in den Organellen der Pflanzenzellen stattfinden.

Die transgenen Pflanzenzellen können nach bekannten Techniken zu ganzen Pflanzen regeneriert werden. Bei den transgenen Pflanzen kann es sich prinzipiell um Pflanzen jeder beliebigen Pflanzenspezies handeln, d.h., sowohl monokotyle als auch dikotyle Pflanzen.

So sind transgene Pflanzen erhältlich, die veränderte Eigenschaften durch Überexpression, Suppression oder Inhibierung homologer (= natürlicher) Gene oder Gensequenzen oder Expression heterologer (= fremder) Gene oder Gensequenzen aufweisen.

Vorzugsweise können die erfindungsgemäßen Herbizid-Safener-Kombinationen in transgenen Kulturen eingesetzt werden, welche gegen Wuchsstoffe, wie z. B. Dicamba oder gegen Herbizide, die essentielle Pflanzenenzyme, z. B. Acetolactatsynthasen (ALS), EPSP Synthasen, Glutaminsynthasen (GS) oder Hydroxyphenylpyruvat Dioxygenasen (HPPD) hemmen, respektive gegen Herbizide aus der Gruppe der Sulfonylharnstoffe, der Glyphosate, Glufosinate oder Benzoylisoxazole und analogen Wirkstoffe, resistent sind.

Bei der Anwendung der erfindungsgemäßen Herbizid-Safener-Kombinationen in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, beispielsweise ein verändertes oder speziell erweitertes Unkrautspektrum, das bekämpft werden kann, veränderte Aufwandmengen, die für die Applikation eingesetzt werden können, vorzugsweise gute Kombinierbarkeit mit den Herbiziden, gegenüber denen die transgene Kultur resistent ist, sowie Beeinflussung von Wuchs und Ertrag der transgenen Kulturpflanzen.

Gegenstand der Erfindung ist deshalb auch die Verwendung der erfindungsgemäßen Herbizid-Safener-Kombinationen zur Bekämpfung von Schadpflanzen in transgenen Kulturpflanzen.

Bevorzugt ist die Anwendung der erfindungsgemäßen Kombinationen in wirtschaftlich bedeutenden transgenen Kulturen von Nutz- und Zierpflanzen, z. B. von Getreide (z.B. Weizen, Gerste, Roggen, Hafer), Hirse, Reis, Maniok und Mais oder auch Kulturen von Zuckerrübe, Baumwolle, Soja, Raps, Kartoffel, Tomate, Erbse und anderen Gemüsekulturen.

Gegenstand der Erfindung ist deshalb auch die Verwendung der erfindungsgemäßen Herbizid-Safener-Kombinationen zur Bekämpfung von Schadpflanzen in transgenen Kulturpflanzen oder Kulturpflanzen, die Toleranz durch Selektionszüchtung aufweisen.

Die Herbizide (A) und die Safener (B) können gemeinsam oder getrennt in übliche Formulierungen z.B. zur Sprüh-, Gieß-, Spritz- und Saatgutbeizanwendung übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen. Die Formulierungen können die üblichen Hilfs- und Zusatzstoffe enthalten.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel könne z.B. auch organische Lösungsmittel als Hilfslösungsmittel verwendet werden. Als flüssige Lösungsmittel kommen im wesentlichen infrage: Aromaten, wie Xylol, Toluol, Alkylnaphthaline, chlorierte Aromaten oder chlorierte aliphatische Kohlenwasserstoffe, wie Chlorbenzole, Chlorethylene, oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone, wie Aceton, Methylethylketon, Methylisobutylketon oder Cyclohexanon, stark polare Lösungsmittel, wie Dimethylformamid oder Dimethylsulfoxid, sowie Wasser.

Als feste Trägerstoffe kommen in Frage: z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen infrage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel kommen infrage: z.B. nicht ionogene und anionische Emulgatoren, wie Polyoxyethylen-Fettsäureester, Polyoxyethylen-Fettalkohol-Ether, z.B. Alkylarylpolyglykolether, Alkylsulfonate, Alkylsulfate, Arylsulfonate sowie Eiweißhydrolysate; als Dispergiermittel kommen infrage: z.B. Ligninsulfitablaugen und Methylcellulose.

Es können in den Formulierungen Haftmittel wie Carboxymethylcellulose, natürliche und synthetische, pulverige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 Gew.-%.

Die Herbizide (A) und die Safener (B) können als solche oder in ihren Formulierungen auch in Mischung mit anderen agrochemischen Wirkstoffen, wie bekannten Herbiziden, zur Bekämpfung von unerwünschtem Pflanzenwuchs, z.B. zur Unkrautbekämpfung oder zur Bekämpfung von unerwünschten Kulturpflanzen Verwendung finden, wobei z.B. Fertigformulierungen oder Tankmischungen möglich sind.

Auch Mischungen mit anderen bekannten Wirkstoffen wie Fungiziden, Insektiziden, Akariziden, Nematiziden, Schutzstoffen gegen Vogelfraß, Pflanzennährstoffen und Bodenstrukturverbesserungsmitteln sind möglich, ebenso mit im Pflanzenschutz üblichen Zusatzstoffen und Formulierungshilfsmitteln.

Die Herbizide (A) und die Safener (B) können als solche, in Form ihrer Formulierungen oder den daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht üblicherweise, z.B. durch Gießen, Spritzen, Sprühen, Streuen.

Die Wirkstoffe können auf die Pflanzen, Pflanzenteile, das Saatgut oder die Anbaufläche (Ackerboden) ausgebracht werden, vorzugsweise auf das Saatgut oder die grünen Pflanzen und Pflanzenteile und gegebenenfalls zusätzlich auf den Ackerboden. Eine Möglichkeit der Anwendung ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt und die erhaltene Spritzbrühe ausgebracht wird.

Eine gemeinsame Formulierung der erfindungsgemäßen Kombination an Wirkstoffen (A) und (B) hat den Vorteil der leichteren Anwendbarkeit, weil die Mengen der Komponenten bereits im optimalen Verhältnis zueinander eingestellt werden können. Außerdem können die Hilfsmittel in der Formulierung aufeinander optimal abgestimmt werden.

Als Kombinationspartner für die erfindungsgemäße Herbizid-Safener-Kombination in Mischungsformulierungen oder im Tank-Mix sind beispielsweise bekannte, vorzugsweise herbizide Wirkstoffe, die auf einer Inhibition von beispielsweise Acetolactat-Synthase, Acetyl-Coenzym-A-Carboxylase, PS I, PS II, HPPD, Phytoene-Desaturase, Protoporphyrinogen-Oxidase, Glutamine-Synthetase, Cellulose biosynthese, 5-Enolpyruvylshikimat-3-phosphat-Synthetase beruhen, einsetzbar. Solche Verbindungen und auch andere einsetzbare Verbindungen mit teilweise unbekanntem oder anderem Wirkungsmechanismus sind z.B. in Weed Research 26, 441-445 (1986), oder in dem Handbuch "The Pesticide Manual", 12. Auflage 2000, oder 13. Auflage 2003 oder 14. Auflage 2006/2007, oder in dem entsprechenden "e-Pesticide Manual", Version 4.1 (2007-08), jeweils herausgegeben vom British Crop Protection Council, (im Folgenden auch kurz "PM"), und dort zitierter Literatur beschrieben. Listen von "Common names" sind auch in "The Compendium of Pesticide Common Names" im Internet verfügbar. Als literaturbekannte Herbizide, die mit den erfindungsgemäßen Mischungen kombiniert werden können, sind z.B. folgende Wirkstoffe zu nennen (Anmerkung: Die Verbindungen sind entweder mit dem "common name" nach der International Organization for Standardization (ISO) oder mit dem chemischen Namen, ggf. zusammen mit einer üblichen Codenummer bezeichnet und umfassen stets sämtliche Anwendungsformen wie Säuren, Salze, Ester und Isomere wie Stereoisomere und optische Isomere. Dabei sind eine und zum Teil auch mehrere Anwendungsformen genannt):

2,4-D, Acetochlor, Acifluorfen, Acifluorfen-sodium, Aclonifen, Alachlor, Alloxydim, Alloxydim-sodium, Ametryn, Amicarbazone, Amidosulfuron, Aminopyralid, Amitrole, Anilofos, Asulam, Atrazine, Azafenidin, Azimsulfuron, Beflubutamid, Benazolin, Benazolin-ethyl, Benfuresate, Bensulfuron-methyl, Bentazone, Benzfendizone, Benzobicyclon, Benzofenap, Bifenox, Bilanafos, Bispyribac-natrium, Bromacil, Bromobutide, Bromofenoxim, Bromoxynil, Butachlor, Butafenacil, Butenachlor, Butralin, Butroxydim, Butylate, Cafenstrole, Carbetamide, Carfentrazone-ethyl, Chlomethoxyfen, Chloridazon, Chlorimuron-ethyl, Chlornitrofen, Chlortoluron, Chlorsulfuron, Cinidon-ethyl, Cinmethylin, Cinosulfuron, Clefoxydim, Clethodim, Clodinafop-propargyl, Clomazone, Clomeprop, Clopyralid, Cloransulam-methyl, Cumyluron, Cyanazine, Cyclosulfamuron, Cycloxydim, Cyhalofop-butyl, Desmedipham, Dicamba, Dichlobenil, Dichlorprop, Dichlorprop-P, Diclofop-methyl, Diclosulam, Difenzoquat, Diflufenican, Diflufenzopyr, Dikegulac-sodium, Dimefuron, Dimepiperate, Dimethachlor, Dimethametryn, Dimethenamid, Triaziflam, Diquatdibromide, Dithiopyr, Diuron, Dymron, EPTC, Esprocarb, Ethalfluralin, Ethametsulfuron-methyl, Ethofumesate, Ethoxyfen, Ethoxysulfuron, Etobenzanid, Fenoxaprop-ethyl, Fenoxaprop-P-ethyl, Fentrazamide, Flamprop-M-isopropyl, Flamprop-M-methyl, Flazasulfuron, Florasulam, Fluazifop, Fluazifop-butyl, Fluazifop-P-butyl, Fluazolate, Flucarbazone-sodium, Flucetosulfuron, Fluchloralin, Flufenacet, Flufenpyr, Flumetsulam, Flumiclorac-pentyl, Flumioxazin, Fluometuron, Fluorchloridone, Fluorglycofen-ethyl, Flupoxam, Flupyrsulfuron-methyl-sodium, Fluridone, Fluroxypyr, Fluroxypyr-butoxypropyl, Fluroxypyr-meptyl, Flurprimidol, Flurtamone, Fluthiacet-methyl, Fomesafen, Foramsulfuron, Glufosinate, Glufosinate-P, Glufosinate-ammonium, Glufosinate-P-ammonium, Glufosinate-P-sodium, Glyphosate, Halosulfuron-methyl, Haloxyfop, Haloxyfop-ethoxyethyl, Haloxyfopmethyl, Haloxyfop-P-methyl, Hexazinone, Imazamethabenz-methyl, Imazamox, Imazapic, Imazapyr, Imazaquin, Imazethapyr, Imazosulfuron, Indanofan, Indaziflam, Iodosulfuron-methyl-natrium, Ioxynil, Isoproturon, Isouron, Isoxaben, Isoxachlortole, Isoxaflutole, Ketospiradox, Lactofen, Lenacil, Linuron, MCPA, Mecoprop, Mecoprop-P, Mefenacet, Mesosulfuron-methyl, Mesotrione, Metamifop, Metamitron, Metazachlor, Methabenzthiazuron, Methiozolin, Methyldymron, Metobromuron, Metolachlor, Metosulam, Metoxuron, Metribuzin, Metsulfuron-methyl, Molinate, Monolinuron, Naproanilide, Napropamide, Neburon, Nicosulfuron, Norflurazon, Orbencarb, Oryzalin, Oxadiargyl, Oxadiazon, Oxasulfuron, Oxaziclomefone, Oxyfluorfen, Paraquat, Pelargonic acid, Pendimethalin, Pendralin, Penoxsulam, Pentoxazone, Pethoxamid, Phenmedipham, Picloram, Picolinafen, Pinoxaden, Piperophos, Pretilachlor, Primisulfuron-methyl, Profluazol, Profoxydim, Prometryn, Propachlor, Propanil, Propaquizafop, Propisochlor, Propoxycarbazone-sodium, Propyrisulfuron, Propyzamide, Prosulfocarb, Prosulfuron, Pyraclonil, Pyraflufenethyl, Pyrazolate, Pyrazosulfuron-ethyl, Pyrazoxyfen, Pyribenzoxim, Pyributicarb, Pyridafol, Pyridate, Pyriftalid, Pyriminobac-methyl, Pyrithiobac-sodium, Quinclorac, Quinmerac, Quinoclamine, Quizalofop-ethyl, Quizalofop-P-ethyl, Quizalofop-P-tefuryl, Rimsulfuron, Sethoxydim, Simazine, Simetryn, S-Metolachlor, Sulcotrione, Sulfentrazone, Sulfometuron-methyl, Sulfosate, Sulfosulfuron, Tebuthiuron, Tepraloxydim, Terbuthylazine, Terbutryn, Thenylchlor, Thiazopyr, Thifensulfuronmethyl, Thiobencarb, Tiocarbazil, Tralkoxydim, Triallate, Triasulfuron, Tribenuronmethyl, Triclopyr, Tridiphane, Trifloxysulfuron, Trifluralin, Triflusulfuron-Methyl-und Tritosulfuron.

Weitere mögliche Mischungspartner sind Pyroxasulfone, Pyroxsulam, Orthosulfamuron, Pyrimisulfan, Prohexadione-Calcium, Bencarbazone, SYN-523, IDH-100, SYP-249, Monosulfuron, Ipfencarbazone (HOK-201), Pyribambenz-Isopropyl, Tefuryltrione, Bencarbazone, Tembotrione, Pyrasulfotole und Thiencarbazone-Methyl.

Zur Anwendung werden die in handelsüblicher Form vorliegenden Formulierungen gegebenenfalls in üblicher Weise verdünnt, z.B. bei Spritzpulvern, emulgierbaren Konzentraten, Dispersionen und wasserdispergierbaren Granulaten mittels Wasser. Staubförmige Zubereitungen, Boden- bzw. Streugranulate sowie versprühbare Lösungen werden vor der Anwendung üblicherweise nicht mehr mit weiteren inerten Stoffen verdünnt.

## Patentansprüche

1. Zusammensetzung, enthaltend
(A) eine oder mehrere Verbindungen der Formel (I) oder deren Salze, 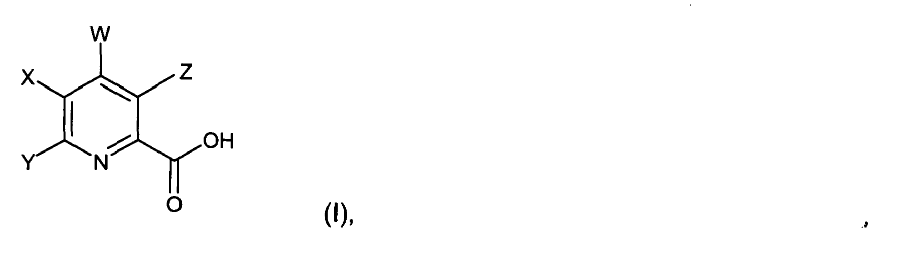 in welchen
X für Wasserstoff, Halogen, C₁-C₆-Alkyl, C₁-C₆-Alkoxy, C₁-C₆-Alkylthio, Aryloxy, Nitro, C₁-C₆-Haloalkyl, C₁-C₆-Haloalkoxy, Thiocyano oder Cyano steht;
Y für eine Aryl-Gruppe, ausgewählt aus einer Gruppe, bestehend aus Phenyl, Indanyl und Naphthyl. oder für eine Heteroaryl-Gruppe, ausgewählt aus der Gruppe 5- und 6-gliedriger heteroaromatischer Ringe, enthaltend ein oder mehrere Heteroatome, wobei die heteroaromatischen Ringe optional mit einem anderen aromatischen System annelliert sein können, steht; die Aryl-Gruppe oder die Heteroaryl-Gruppe kann unsubstituiert oder substituiert sein mit einem oder mehreren Substituenten aus einer Gruppe bestehend aus Halogen, Hydroxy, Nitro, Cyano, Aryloxy, Formyl, C₁-C₆-Alkyl, Cyclopropyl, C₂-C₆-Alkenyl, C₂-C₆-Alkinyl, C₁-C₆-Alkoxy, halogeniertes C₁-C₆-Alkyl, C₁-C₄-Alkoxy-substituiertes C₁-C₄-Alkyl, halogeniertes C₁-C₆-Alkoxy, C₁-C₄-Alkoxy-substituiertes C₁-C₄-Alkoxy, C₁-C₆-Acyl, fluoriertes Acetyl, fluoriertes Propionyl, wobei die beiden letztgenannten Gruppen jeweils mehrere Fluoratome im Alkylrest enthalten können, C₁-C₆-Alkylthio, C₁-C₆-Alkylsulfinyl, C₁-C₆-Alkylsulfonyl, halogeniertes C₁-C₆-Alkylthio, Aryl, Amino, C₁-C₄-Monoalkylamino, C₂-C₈-Dialkylamino, C₁-C₆-Alkylcarbonyloxy, C₁-C₆-Alkylcarbonylamino, (C=O)OH, C₁-C₆-Alkoxycarbonyl, (C=O)NH₂, C₁-C₆-Alkylaminocarbonyl, C₁-C₆-Dialkylaminocarbonyl, -CH₂CH₂O-, -CH₂CH₂CH₂O-, -OCH₂O-, -O(CH₂)₂O-;
Z für Halogen, C₁-C₆-Alkyl, C₁-C₆-Alkoxy, C₁-C₆-Alkylthio, Aryloxy, Nitro, C₁-C₆-Haloalkyl, C₁-C₆-Haloalkoxy, Thiocyano oder Cyano steht;
W für NO₂, N₃, NR¹R² N=CR³R⁴ oder NHN=CR³R⁴ steht;
R¹ und R² unabhängig voneinander für Wasserstoff, C₁-C₆-Alkyl, C₃-C₆-Alkenyl, C₃-C₆-Alkinyl, Aryl, Heteroaryl, Hydroxy, C₁-C₆-Alkoxy, Amino, C₁-C₆-Acyl, C₁-C₆-Alkoxycarbonyl, C₁-C₆-Alkylaminocarbonyl, C₁-C₆-Alkylsulfonyl, C₁-C₆-Trialkylsilyl oder C₁-C₆-Dialkylphosphonyl stehen; oder
R¹ und R² zusammen mit N für einen fünf- oder sechsgliedrigen gesättigten oder ungesättigten Ring, der optional zusätzlich O-, S- oder N-Heteroatome enthalten kann, stehen;
R³ und R⁴ unabhängig voneinander für Wasserstoff, C₁-C₆-Alkyl, C₃-C₆-Alkenyl, C₃-C₆-Alkinyl, Aryl oder Heteroaryl stehen; oder
R³ und R⁴ zusammen mit =C für einen fünf- oder sechsgliedrigen gesättigten Ring stehen;
oder herbizid-aktive Derivate der Carbonsäure-Gruppe,
sowie
(B) einen oder mehrere Safener, ausgewählt aus der Gruppe, bestehend aus
S1) Verbindungen aus der Gruppe heterocyclischer Carbonsäurederivate:
S1^{a}) Verbindungen vom Typ der Dichlorphenylpyrazolin-3-carbonsäure (S1^{a}), vorzugsweise Verbindungen wie
1-(2,4-Dichlorphenyl)-5-(ethoxycarbonyl)-5-methyl-2-pyrazolin-3-carbonsäure, 1-(2,4-Dichlorphenyl)-5-(ethoxycarbonyl)-5-methyl-2-pyrazolin-3-carbonsäureethylester (S1-1) ("Mefenpyr-diethyl"), und verwandte Verbindungen, wie sie in der WO-A-91/07874 beschrieben sind;
S1^{b}) Derivate der Dichlorphenylpyrazolcarbonsäure (S1^{b}), vorzugsweise
Verbindungen wie 1-(2,4-Dichlorphenyl)-5-methylpyrazol-3-carbonsäureethylester (S1-2),
1-(2,4-Dichlorphenyl)-5-isopropylpyrazol-3-carbonsäureethylester (S1-3),
1-(2,4-Dichlorphenyl)-5-(1,1 1-dimethyl-ethyl)pyrazol-3-carbonsäureethylester (S1-4) und verwandte Verbindungen, wie sie in EP-A-333 131 und EP-A-269 806 beschrieben sind;
S1^{c}) Derivate der 1,5-Diphenylpyrazol-3-carbonsäure (S1^{c}), vorzugsweise Verbindungen wie
1-(2,4-Dichlorphenyl)-5-phenylpyrazol-3-carbonsäureethylester (S1-5),
1-(2-Chlorphenyl)-5-phenylpyrazol-3-carbonsäuremethylester (S1-6)
und verwandte Verbindungen wie sie beispielsweise in der EP-A-268554 beschrieben sind;
S1^{d}) Verbindungen vom Typ der Triazolcarbonsäuren (S1^{d}), vorzugsweise Verbindungen wie Fenchlorazol(-ethylester), d.h.
1-(2,4-Dichlorphenyl)-5-trichlormethyl-(1H)-1,2,4-triazol-3-carbonsäure-ethylester (S1-7), und verwandte Verbindungen, wie sie in EP-A-174 562 und EP-A-346 620 beschrieben sind;
S1^{e}) V erbindungen vom Typ der 5-Benzyl- oder 5-Phenyl-2-isoxazolin-3-carbonsäure, oder der 5,5-Diphenyl-2-isoxazolin-3-carbonsäure(S1^{e}), vorzugsweise Verbindungen wie 5-(2,4-Dichlorbenzyl)-2-isoxazolin-3-carbonsäureethylester (S1-8) oder 5-Phenyl-2-isoxazolin-3-carbonsäureethylester (S1-9) und verwandte Verbindungen, wie sie in WO-A-91/08202 beschrieben sind, bzw. 5,5-Diphenyl-2-isoxazolincarbonsäure (S1-10) oder 5,5-Diphenyl-2-isoxazolincarbonsäureethylester (S1-11) ("Isoxadifen-ethyl") oder -n-propylester (S1-12) oder der 5-(4-Fluorphenyl)-5-phenyl-2-isoxazolin-3-carbonsäureethylester (S1-13), wie sie in der Patentanmeldung WO-A-95/07897 beschrieben sind.
S2) Verbindungen aus der Gruppe der 8-Chinolinyloxyderivate (S2):
S2^{a}) Verbindungen vom Typ der 8-Chinolinoxyessigsäure (S2^{a}),
vorzugsweise (5-Chlor-8-chinolinoxy)essigsäure-(1-methylhexyl)-ester ("Cloquintocet-mexyl") (S2-1),
(5-Chlor-8-chinolinoxy)essigsäure-(1,3-dimethyl-but-1-yl)-ester (S2-2),
(5-Chlor-8-chinolinoxy)essigsäure-4-allyl-oxy-butylester (S2-3),
(5-Chlor-8-chinolinoxy)essigsäure-1-allyloxy-prop-2-ylester (S2-4),
(5-Chlor-8-chinolinoxy)essigsäureethylester (S2-5),
(5-Chlor-8-chinolinoxy)essigsäuremethylester (S2-6),
(5-Chlor-8-chinolinoxy)essigsäureallylester (S2-7),
(5-Chlor-8-chinolinoxy)essigsäure-2-(2-propyliden-iminoxy)-1-ethyleste r (S2-8), (5-Chlor-8-chinolinoxy)essigsäure-2-oxo-prop-1-ylester (S2-9)
und verwandte Verbindungen, wie sie in EP-A-86 750, EP-A-94 349
und EP-A-191 736 oder EP-A-0 492 366 beschrieben sind, sowie (5-Chlor-8-chinolinoxy)essigsäure (S2-10), deren Hydrate und Salze, beispielsweise deren Lithium-, Natrium- Kalium-, Kalzium-, Magnesium-, Aluminium-, Eisen-, Ammonium-, quartäre Ammonium-, Sulfonium-, oder Phosphoniumsalze wie sie in der WO-A-2002/34048 beschrieben sind;
S2^{b}) Verbindungen vom Typ der (5-Chlor-8-chinolinoxy)malonsäure (S2^{b}), vorzugsweise Verbindungen wie (5-Chlor-8-chinolinoxy)malonsäurediethylester, (5-Chlor-8-chinolinoxy)malonsäurediallylester, (5-Chlor-8-chinolinoxy)malonsäure-methyl-ethylester und verwandte Verbindungen, wie sie in EP-A-0 582 198 beschrieben sind.
S3) Wirkstoffe vom Typ der Dichloracetamide (S3), die häufig als Vorauflaufsafener (bodenwirksame Safener) angewendet werden, wie z. B.
"Dichlormid" (N,N-Diallyl-2,2-dichloracetamid) (S3-1),
"R-29148" (3-Dichloracetyl-2,2,5-trimethyl-1,3-oxazolidin) der Firma Stauffer (S3-2),
"R-28725" (3-Dichloracetyl-2,2,-dimethyl-1,3-oxazolidin) der Firma Stauffer (S3-3),
"Benoxacor" (4-Dichloracetyl-3,4-dihydro-3-methyl-2H-1,4-benzoxazin) (S3-4),
"PPG-1292" (N-Allyl-N-[(1,3-dioxolan-2-yl)-methyl]-dichloracetamid) der Firma PPG Industries (S3-5),
"DKA-24" (N-Allyl-N-[(allylaminocarbonyl)methyl]-dichloracetamid) der Firma Sagro-Chem (S3-6),
"AD-67" oder "MON 4660" (3-Dichloracetyl-1-oxa-3-aza-spiro[4,5]decan) der Firma Nitrokemia bzw. Monsanto (S3-7),
"TI-35" (1-Dichloracetyl-azepan) der Firma TRI-Chemical RT (S3-8),
"Diclonon" (Dicyclonon) (synonym: "BAS145138" oder "LAB145138") (RS)-1-Dichloracetyl-3,3,8a-trimethylperhydropyrrolo[1,2-a]pyrimidin-6-on der Firma BASF (S3-9),
"Furilazol" oder "MON 13900" ((RS)-3-Dichloracetyl-5-(2-furyl)-2,2-dimethyloxazolidin) (S3-10), sowie dessen (R)-Isomer (S3-11).
S4) Verbindungen aus der Klasse der Acylsulfonamide (S4):
S4^{a}) N-Acylsulfonamide der Formel (S4^{a}) und deren Salze wie sie in der WO-A-97/45016 beschrieben sind, 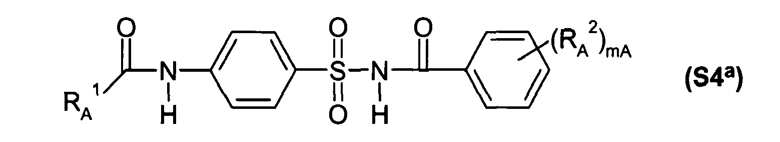 worin
R_{A}¹ (C₁-C₆)Alkyl, (C₃-C₆)Cycloalkyl, wobei die 2 letztgenannten Reste durch V_{A} Substituenten aus der Gruppe Halogen, (C₁-C₄)Alkoxy, (C₁-C₆)Haloalkoxy und (C₁-C₄)Alkylthio und im Falle cyclischer Reste auch durch (C₁-C₄)Alkyl und (C₁-C₄)Haloalkyl substituiert sind;
R_{A}² Halogen, (C₁-C₄)Alkyl, (C₁-C₄)Alkoxy, CF_{3;}
m_{A} 1 oder 2;
V_{A} ist 0, 1, 2 oder 3 bedeuten;
S4^{b}) Verbindungen vom Typ der 4-(Benzoylsulfamoyl)benzamide der Formel (S4^{b}) und deren Salze, wie sie in der WO-A-99/16744 beschrieben sind, 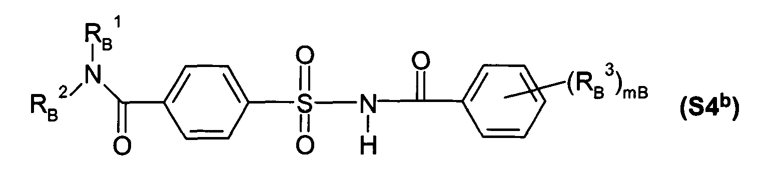 worin
R_{B}¹, R_{B}² unabhängig voneinander Wasserstoff, (C₁-C₆)Alkyl, (C₃-C₆)Cycloalkyl, (C₃-C₆)Alkenyl, (C₃-C₆)Alkinyl,
R_{B}³ Halogen, (C₁-C₄)Alkyl, (C₁-C₄)Haloalkyl oder (C₁-C₄)Alkoxy und
m_{B} 1 oder 2 bedeuten,
z.B. solche worin
R_{B}¹ = Cyclopropyl, R_{B}² = Wasserstoff und (R_{B}³) = 2-OMe ist (S4-1, "Cyprosulfamide"),
R_{B}¹ = Cyclopropyl, R_{B}² = Wasserstoff und (R_{B}³) = 5-Cl-2-OMe ist (S4-2),
R_{B}¹ = Ethyl, R_{B}² = Wasserstoff und (R_{B}³) = 2-OMe ist (S4-3),
R_{B}¹ = Isopropyl, R_{B}² = Wasserstoff und (R_{B}³) = 5-CI-2-OMe ist (S4-4) und
R_{B}¹ = Isopropyl, R_{B}² = Wasserstoff und (R_{B}³) = 2-OMe ist (S4-5).
S4^{c}) Verbindungen aus der Klasse der Benzoylsulfamoylphenylharnstoffe der Formel (S4^{c}), wie sie in der EP-A-365484 beschrieben sind 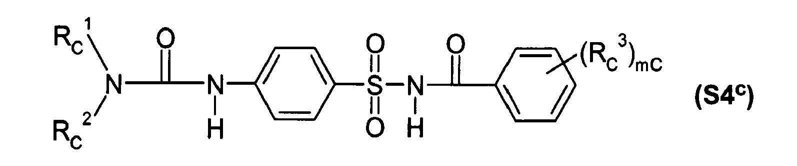 worin
R_{C}¹, R_{C}² unabhängig voneinander Wasserstoff, (C₁-C₈)Alkyl, (C₃-C₈)Cycloalkyl, (C₃-C₆)Alkenyl, (C₃-C₆)Alkinyl,
R_{C}³ Halogen, (C₁-C₄)Alkyl, (C₁-C₄)Alkoxy, CF₃
m_{C} 1 oder 2 bedeuten;
beispielsweise
1-[4-(N-2-Methoxybenzoylsulfamoyl)phenyl]-3-methylharnstoff,
1-[4-(N-2-Methoxybenzoylsulfamoyl)phenyl]-3,3-dimethylharnstoff,
1-[4-(N-4,5-Dimethylbenzoylsulfamoyl)phenyl]-3-methylharnstoff.
S5) Wirkstoffe aus der Klasse der Hydroxyaromaten und der aromatischaliphatischen Carbonsäurederivate (S5), z.B. 3,4,5-Triacetoxybenzoesäureethylester, 3,5-Dimethoxy-4-hydroxybenzoesäure, 3,5-Dihydroxybenzoesäure, 4-Hydroxysalicylsäure, 4-Fluorsalicyclsäure, 2-Hydroxyzimtsäure, 2,4-Dichlorzimtsäure, wie sie in der WO-A-2004/084631, WO-A-2005/015994, WO-A-2005/016001 beschrieben sind.
S6) Wirkstoffe aus der Klasse der 1,2-Dihydrochinoxalin-2-one (S6), z.B. 1-Methyl-3-(2-thienyl)-1,2-dihydrochinoxalin-2-on, 1-Methyl-3-(2-thienyl)-1,2-dihydrochinoxalin-2-thion, 1-(2-Aminoethyl)-3-(2-thienyl)-1,2-dihydro-chinoxalin-2-on-hydrochlorid, 1-(2-Methylsulfonylaminoethyl)-3-(2-thienyl)-1,2-dihydro-chinoxalin-2-on, wie sie in der WO-A-2005/112630 beschrieben sind.
S7) Verbindungen aus der Klasse der Diphenylmethoxyessigsäurederivate (S7), z.B. Diphenylmethoxyessigsäuremethylester (CAS-Reg.Nr. 41858-19-9) (S7-1), Diphenylmethoxyessigsäureethylester oder Diphenylmethoxyessigsäure wie sie in der WO-A-98/38856 beschrieben sind.
S8) Verbindungen der Formel (S8),wie sie in der WO-A-98/27049 beschrieben sind 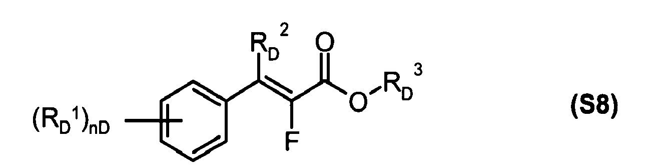 worin die Symbole und Indizes folgende Bedeutungen haben:
R_{D}¹ ist Halogen, (C₁-C₄)Alkyl, (C₁-C₄)Haloalkyl, (C₁-C₄)Alkoxy, (C₁-C₄)Haloalkoxy,
R_{D}² ist Wasserstoff oder (C₁-C₄)Alkyl
R_{D}³ ist Wasserstoff, (C₁-C₈)Alkyl, (C₂-C₄)Alkenyl, (C₂-C₄)Alkinyl, oder Aryl, wobei jeder der vorgenannten C-haltigen Reste unsubstituiert oder durch einen oder mehrere, vorzugsweise bis zu drei gleiche oder verschiedene Reste aus der Gruppe, bestehend aus Halogen und Alkoxy substituiert ist; oder deren Salze
n_{D} ist eine ganze Zahl von 0 bis 2.
S9) Wirkstoffe aus der Klasse der 3-(5-Tetrazolylcarbonyl)-2-chinolone (S9), z.B.
1,2-Dihydro-4-hydroxy-1-ethyl-3-(5-tetrazolylcarbonyl)-2-chinolon (CAS-Regno: 219479-18-2), 1,2-Dihydro-4-hydroxy-1-methyl-3-(5-tetrazolyl-carbonyl)-2-chinolon (CAS-Reg.Nr. 95855-00-8), wie sie in der WO-A-1999/000020 beschrieben sind.
S10) Verbindungen der Formeln (S10^{a}) oder (S10^{b})
wie sie in der WO-A-2007/023719 und WO-A-2007/023764 beschrieben sind 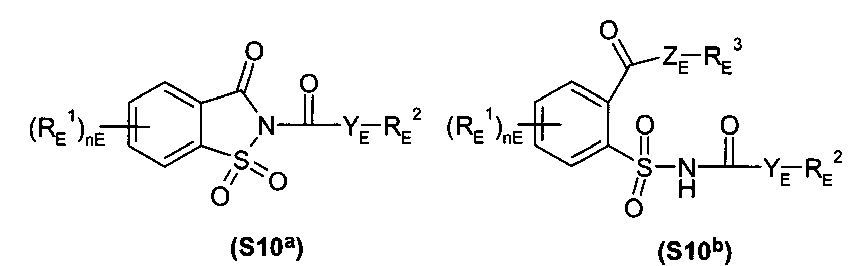 worin
R_{E}¹ Halogen, (C₁-C₄)Alkyl, Methoxy, Nitro, Cyano, CF₃, OCF₃
Y_{E}, Z_{E} unabhängig voneinander O oder S,
n_{E} eine ganze Zahl von 0 bis 4,
R_{E}² (C₁-C₁₆)Alkyl, (C₂-C₆)Alkenyl, (C₃-C₆)Cycloalkyl, Aryl; Benzyl, Halogenbenzyl,
R_{E}³ Wasserstoff oder (C₁-C₆)Alkyl bedeuten.
S11) Wirkstoffe vom Typ der Oxyimino-Verbindungen (S11), die als Saatbeizmittel bekannt sind, wie z. B.
"Oxabetrinil" ((Z)-1,3-Dioxolan-2-ylmethoxyimino(phenyl)acetonitril) (S11-1), das als Saatbeiz-Safener für Hirse gegen Schäden von Metolachlor bekannt ist,
"Fluxofenim" (1-(4-Chlorphenyl)-2,2,2-trifluor-1-ethanon-O-(1,3-dioxolan-2-ylmethyl)-oxim) (S11-2), das als Saatbeiz-Safener für Hirse gegen Schäden von Metolachlor bekannt ist, und
"Cyometrinil" oder "CGA-43089" ((Z)-Cyanomethoxy-imino(phenyl)acetonitril) (S11-3), das als Saatbeiz-Safener für Hirse gegen Schäden von Metolachlor bekannt ist.
S12) Wirkstoffe aus der Klasse der Isothiochromanone (S12), wie z.B. Methyl-[(3-oxo-1H-2-benzothiopyran-4(3H)-yliden)methoxy]acetate (CAS-Reg.Nr. 205121-04-6) (S12-1) und verwandte Verbindungen aus WO-A-1998/13361.
S13) Eine oder mehrere Verbindungen aus Gruppe (S13):
"Naphthalic anhydrid" (1,8-Naphthalindicarbonsäureanhydrid) (S13-1), das als Saatbeiz-Safener für Mais gegen Schäden von Thiocarbamatherbiziden bekannt ist,
"Fenclorim" (4,6-Dichlor-2-phenylpyrimidin) (S13-2), das als Safener für Pretilachlor in gesätem Reis bekannt ist,
"Flurazole" (Benzyl-2-chlor-4-trifluormethyl-1,3-thiazol-5-carboxylat) (S13-3), das als Saatbeiz-Safener für Hirse gegen Schäden von Alachlor und Metolachlor bekannt ist,
"CL 304415" (CAS-Reg.Nr. 31541-57-8)
(4-Carboxy-3,4-dihydro-2H-1-benzopyran-4-essigsäure) (S13-4) der Firma American Cyanamid, das als Safener für Mais gegen Schäden von Imidazolinonen bekannt ist,
"MG 191" (CAS-Reg.Nr. 96420-72-3) (2-Dichlormethyl-2-methyl-1,3-dioxolan) (S13-5) der Firma Nitrokemia, das als Safener für Mais bekannt ist,
"MG-838" (CAS-Reg.Nr. 133993-74-5)
(2-propenyl 1-oxa-4-azaspiro[4.5]decane-4-carbodithioate) (S13-6) der Firma Nitrokemia
"Disulfoton" (O,O-Diethyl S-2-ethylthioethyl phosphordithioat) (S13-7),
"Dietholate" (O,O-Diethyl-O-phenylphosphorotioat) (S13-8),
"Mephenate" (4-Chlorphenyl-methylcarbamat) (S13-9).
S14) Wirkstoffe, die neben einer herbiziden Wirkung gegen Schadpflanzen auch Safenerwirkung an Kulturpflanzen wie Reis aufweisen, wie z. B. "Dimepiperate" oder "MY-93" (S-1-Methyl-1-phenylethyl-piperidin-1-carbothioat), das als Safener für Reis gegen Schäden des Herbizids Molinate bekannt ist,
"Daimuron" oder "SK 23" (1-(1-Methyl-1-phenylethyl)-3-p-tolylharnstoff), das als Safener für Reis gegen Schäden des Herbizids Imazosulfuron bekannt ist (S14-1),
"Cumyluron" = "JC-940" (3-(2-Chlorphenylmethyl)-1-(1-methyl-1-phenyl-ethyl)hamstoff, siehe JP-A-60087254), das als Safener für Reis gegen Schäden einiger Herbizide bekannt ist,
"Methoxyphenon" oder "NK 049" (3,3'-Dimethyl-4-methoxybenzophenon), das als Safener für Reis gegen Schäden einiger Herbizide bekannt ist,
"CSB" (1-Brom-4-(chlormethylsulfonyl)benzol) von Kumiai, (CAS-Reg.Nr. 54091-06-4), das als Safener gegen Schäden einiger Herbizide in Reis bekannt ist.

2. Zusammensetzung nach Anspruch 1, **dadurch gekennzeichnet, dass** in der Verbindung der allgemeinen Formel (I)
X für Wasserstoff oder Fluor steht.

3. Zusammensetzung nach Anspruch 1 oder 2, **dadurch gekennzeichnet, dass** in der Verbindung der allgemeinen Formel (I)
Y für eine Phenyl-Gruppe oder für eine Pyridinyl-, Benzofuranyl-, Benzothienyl-, Thienyl- oder Thiazolylgruppe steht, wobei die Phenyl-Gruppe oder die Heteroaryl-Gruppe substituiert sein kann mit einem oder mehreren Substituenten, ausgewählt aus der Gruppe, bestehend aus Halogen, C₁-C₂-Alkyl, C₁-C₂-Alkoxy, C₁-C₂-Halogenalkyl und C₁-C₂-Halogenalkoxy steht.

4. Zusammensetzung nach einem der Ansprüche 1 bis 3, **dadurch gekennzeichnet, dass** in der Verbindung der allgemeinen Formel (I)
Z für Halogen steht.

5. Zusammensetzung nach einem der Ansprüche 1 bis 4, **dadurch gekennzeichnet, dass** in der Verbindung der allgemeinen Formel (I)
W für NH₂ oder N(R¹)(R²)
steht, wobei
R¹ und R², jeweils unabhängig voneinander, für C₁-C₆-Alkyl stehen.

6. Zusammensetzung nach einem der Ansprüche 1 bis 5, **dadurch gekennzeichnet, dass** der Safener ausgewählt ist aus der Gruppe, bestehend aus Daimuron (S14-1), Benoxacor (S3-4), Furilazol [(S3-10) bzw. (S3-11)]. Fluxofenim (S11-2), Fenchlorazol(-ethylester) (S1-7), Mefenpyr-diethyl (S1-1), Cloquintocet-mexyl (S2-1), Isoxadifen-ethyl (S1-11), Cyprosulfamide (S4-1), Flurazole (S13-3), Oxabetrinil (S11-1), Dichlormid (S3-1) und Dietholate (S13-8).

7. Zusammensetzung nach einem der Ansprüche 1 bis 6, **dadurch gekennzeichnet, dass** der Safener ausgewählt ist aus der Gruppe, bestehend aus Mefenpyr-diethyl (S1-1), lsoxadifen-ethyl (S1-11), Cyprosulfamide (S4-1), Fenchlorazol-ethylester (S1-7), Benoxacor (S3-4), Cloquintocet-mexyl (S2-1), Fluxofenim (S11-2) und Furilazol [(S3-10) bzw. (S3-11)].

8. Verfahren zur Bekämpfung von unerwünschten Pflanzen, vorzugsweise in Pflanzenkulturen, worin die Verbindung der allgemeinen Formel (I) und mindestens eine Verbindung aus der Gruppe (B) gemäß einem der Ansprüche 1 bis 7, gemeinsam oder getrennt appliziert werden, vorzugsweise auf die Pflanzen, das Saatgut oder die Fläche, auf der die Pflanzen wachsen.

9. Verfahren gemäß Anspruch 8, **dadurch gekennzeichnet, dass** die Pflanzenkulturen aus der Gruppe der Ackerbaukulturen, Gemüsekulturen oder Dauer- und Plantagenkulturen stammen.

10. Verfahren gemäß Anspruch 8 oder 9, **dadurch gekennzeichnet, dass** die Pflanzenkulturen transgen sind oder Toleranz durch Selektionszüchtung aufweisen.

11. Verwendung einer Zusammensetzung gemäß einem der Ansprüche 1 bis 7 zur Bekämpfung von Schadpflanzen, vorzugsweise in Pflanzenkulturen.
